(19) Europäisches Patentamt
European Patent Office
Office européen des brevets

(11) EP 3 345 939 B1

(12) **EUROPEAN PATENT SPECIFICATION**

(45) Date of publication and mention of the grant of the patent:
**14.10.2020 Bulletin 2020/42**

(21) Application number: **16841297.1**

(22) Date of filing: **14.07.2016**

(51) Int Cl.:
*C08F 20/18* (2006.01) *C09K 19/02* (2006.01)
*G02B 5/30* (2006.01) *C09K 19/04* (2006.01)
*C09K 19/38* (2006.01) *C09K 19/54* (2006.01)

(86) International application number:
**PCT/JP2016/070828**

(87) International publication number:
**WO 2017/038265 (09.03.2017 Gazette 2017/10)**

(54) **POWDER MIXTURE**

PULVERMISCHUNG

MÉLANGE DE POUDRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2015 JP 2015171977**

(43) Date of publication of application:
**11.07.2018 Bulletin 2018/28**

(73) Proprietor: **DIC Corporation**
**Tokyo 174-8520 (JP)**

(72) Inventors:
- **HATSUSAKA Kazuaki**
  **Kitaadachi-gun**
  **Saitama 362-8577 (JP)**
- **KUWANA Yasuhiro**
  **Kitaadachi-gun**
  **Saitama 362-8577 (JP)**
- **ENDO Kouichi**
  **Kitaadachi-gun**
  **Saitama 362-8577 (JP)**
- **ISHII Toru**
  **Kitaadachi-gun**
  **Saitama 362-8577 (JP)**
- **YAMAMOTO Mika**
  **Kitaadachi-gun**
  **Saitama 362-8577 (JP)**

(74) Representative: **Adam, Holger et al**
**Kraus & Weisert**
**Patentanwälte PartGmbB**
**Thomas-Wimmer-Ring 15**
**80539 München (DE)**

(56) References cited:
**EP-A1- 1 760 068**
**WO-A1-2008/007650**
**WO-A1-2014/169984**
**WO-A1-2014/192627**
**WO-A1-2015/045441**
**WO-A1-2016/114252**
**WO-A1-2016/114253**
**JP-A- 2009 001 802**
**JP-A- 2011 508 048**
**JP-A- 2013 527 259**
**JP-A- 2014 520 196**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 345 939 B1

## Description

### Technical Field

The present invention relates to a powder mixture used for a nematic liquid crystal composition containing a polymerizable liquid crystal compound and a solution composition containing a polymerizable liquid crystal compound, the compositions being used as constituent components of an optically anisotropic body such as a compensation film, a retardation film, a brightness enhancement film, an antireflective film, a polarizing film, a lens, or a prism of display devices such as a liquid crystal display, an organic EL display, or a quantum dot display, or a security marking, or a laser-induced emission member.

### Background Art

Compositions containing a polymerizable liquid crystal compound having a polymerizable functional group (polymerizable liquid crystal compositions) are useful as constituent components of optically anisotropic bodies, and are used, for various liquid crystal displays, as optically anisotropic bodies, such as, a compensation film, a retardation film, a brightness enhancement film, an antireflective film, or a polarizing film. In general, such an optically anisotropic body is obtained in the following manner: a solution composition containing a polymerizable liquid crystal composition dissolved in an organic solvent is applied to a substrate, dried to remove the organic solvent, and subsequently irradiated with an active energy ray or further heated to cure the polymerizable liquid crystal composition.

For example, Patent Literature 1 discloses a solution composition for forming a liquid crystal layer, the composition containing a liquid crystal compound having two or more polymerizable functional groups in a single molecule and having a refractive index anisotropy of 0.2 or more, a solvent having a cyclic ketone structure, a medium having a cyclic ether structure, and an antioxidant that evaporates at temperatures lower than the N-I temperature of the liquid crystal compound. However, such a solution composition prepared by dissolving a polymerizable liquid crystal composition in an organic solvent has risks such as ignition of the organic solvent, and a high probability of occurrence of fire. For this reason, the "transport containers", "loading method", "transport method", "storage site", "storage amount", and the like need to conform to laws of individual nations. There is another problem in terms of the composition of the solution: during transport or storage of the composition in the state of a solution, precipitation of the solute from the solvent, leakage of the solution, or evaporation of the solvent makes it difficult to maintain the composition of the solution, which has been problematic.

On the other hand, a composition that contains no organic solvent but is in a fluid nematic liquid crystal state may be used to form an optical film. For example, Patent Literature 2 discloses, as a method for preparing a homogeneous liquid mixture, a method for preparing a homogeneous liquid mixture of at least two organic substances, wherein at least one of substances involved is solid at room temperature, and the substances are vigorously mixed at room temperature lower than the melting point of at least one of the substances present, to thereby liquefy and homogenize the substances being mixed. Patent Literature 3 discloses, as a method for producing a liquid crystal composition, a method for producing a liquid crystal composition in a liquid crystal state: two or more liquid crystal compounds at least one of which has a melting point higher than 40°C are stirred at a stirring initiation temperature of 40°C or lower without applying external heating or dissolution in an organic solvent.

However, when the above-described related art (Patent Literature 2) is applied to a composition containing a polymerizable liquid crystal compound having a polymerizable functional group, namely, a polymerizable liquid crystal composition, the following problem is caused: the polymerizable liquid crystal compound has a higher viscosity than nematic liquid crystal used for ordinary liquid crystal displays, and hence is not easily taken out from containers and is difficult to handle; and, when a phase transition of the compound from nematic liquid crystal to crystals, the whole composition turns into solid without fluidity within containers, and cannot be taken out from the containers.

### Citation List

#### Patent Literature

PTL 1: Japanese Unexamined Patent Application Publication No. 2011-158671
PTL 2: Japanese Unexamined Patent Application Publication No. 2009-061451
PTL 3: Japanese Unexamined Patent Application Publication No. 2009-001802

JP 2009 001802 A discloses a method for producing a liquid crystal composition, comprising stirring at least

one liquid crystal compound having a melting point of more than 40°C at a temperature at the start of stirring at 40°C or less and heating from outside.

WO 2014/169984 A1 discloses a layer or article comprising cholesteric polymer particles which show selective Bragg reflection of light, and which are obtainable by heterogeneous polymerization of a composition comprising at least one reactive mesogen and at least one chiral additive, or by heterogeneous polymerization of at least one chiral reactive mesogen.

JP 2013 527259 A relates to polymerisable compounds, to processes and intermediates for the preparation thereof, to the use thereof for optical, electro-optical and electronic purposes, in particular in liquid-crystal (LC) media and LC displays having a polymer-stabilised blue phase, and in LC media for LC displays of the PS or PSA type (polymer sustained or polymer sustained alignment), and to LC media and LC displays comprising these compounds.

WO 2014/192627 A1 discloses a liquid crystal composition containing an achiral component T containing at least one specific compound and a chiral agent, and exhibiting an optically isotropic liquid crystal phase.

JP 2011 508048 A discloses a small scale functional material, comprising a particle having a cross-linked polymer domain with a volume mean diameter of 5 nm to 175 nm; and a material functionally responsive to an externally applied field dispersed throughout the particle and being present from about 6 percent by weight to about 60 percent by weight.

WO 2008/007650 A1 discloses a hydrazine storage resin characterized by having a hydrazine leaving group capable of releasing hydrazine.

JP 2014 520196 A discloses an aqueous dispersion of epoxy resin and a redispersible epoxy polymer powder containing particles of 50-90 weight-percent epoxy resin with 10-50 weight-percent alkali soluble shell around the particles and 2-25 weight-percent dispersing aid, with weight-percent based on total combined weight of epoxy resin, alkali soluble polymer shell and dispersing aid.

WO 2015/045441 A1 discloses a liquid crystal display device comprising a first substrate; a second substrate; a liquid crystal composition layer sandwiched between the first substrate and the second substrate; a color filter including a black matrix and at least RGB three color pixel portions; wherein the liquid crystal composition layer comprises a pixel electrode and a common electrode, wherein the liquid crystal composition layer is represented by a specific formula.

WO 2016/114252 A1 relates to a polymerizable composition that contains a predetermined polymerizable compound and a fluorine-based surfactant having, intramolecularly, a pentaerythritol skeleton or a dipentaerythritol skeleton.

WO 2016/114253 A1 relates to a polymerizable composition that contains a) a polymerizable compound having one or more polymerizable groups and satisfying formula (I): Re(450 nm)/Re(550 nm)<1.0; b) at least one photopolymerization initiator selected from the group consisting of alkylphenone compounds, acylphosphine oxide compounds, and oxime ester compounds; and c) a polymerization inhibitor.

EP 1 760 068 A1 relates to a specific compound satisfying the properties required for an optical anisotropic material and an optical element and having high durability against blue laser light, a liquid crystal composition containing the compound, an optical anisotropic material obtained by polymerizing the liquid crystal composition, and an optical element.

## Summary of Invention

### Technical Problem

An object of the present invention is to provide a powder mixture containing a polymerizable liquid crystal compound, the powder mixture having a low risk of occurrence of fire due to the flammability of solvent, causing no changes in the appearance due to, for example, precipitation or crystallization of the solute during storage at low temperatures, causing no changes in the composition due to evaporation of solvent during long-term storage or leakage of solvent during long-term storage or transportation, being not viscous and having fluidity unlike nematic liquid crystal compositions, and being easily handled. Another object is to provide a nematic liquid crystal composition, a solution composition, cured products, optical films, and display devices that employ the above-described powder mixture.

### Solution to Problem

In order to achieve the above-described objects, the present invention focuses on a powder mixture containing a polymerizable liquid crystal compound that does not require the use of an organic solvent and that does not have a nematic liquid crystal composition. Thus, the present invention has been provided.

Specifically, the present invention provides a powder mixture including two or more polymerizable liquid crystal compounds in powder being solid under atmospheric pressure at 30°C or less and each having at least one polymerizable functional group, wherein a content of the two or more polymerizable liquid crystal compounds is 70 mass% or more;

wherein the two or more polymerizable liquid crystal compounds are each represented by a general formula (I) and/or selected from compounds represented by general formulas (1) to (7)

$$P^1\text{-}(Sp^1\text{-}X^1)_{q1}\text{-}MG\text{-}R^2 \qquad \text{(I)}$$

(where $P^1$ represents a polymerizable functional group,
$Sp^1$ represents an alkylene group having 1 to 18 carbon atoms, hydrogen atoms in the alkylene group may be substituted by at least one halogen atom or CN, a single $CH_2$ group or two or more non-adjacent $CH_2$ groups in the alkylene group may each be independently substituted by -O-, -COO-, -OCO-, or -OCO-O-,
$X^1$ represents -O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$,-CH=CH-, -N=N-, -CH=N-N=CH-, -CF=CF-, -C≡C-, or a single bond (provided that $P^1$-$Sp^1$ and $Sp^1$-$X^1$ do not include direct bonds between hetero atoms),
q1 represents 0 or 1,
MG represents a mesogenic group, and
$R^2$ represents a hydrogen atom, a halogen atom, a cyano group, or a linear or branched alkyl group having 1 to 12 carbon atoms, the alkyl group may be linear or branched, a single $-CH_2-$ or two or more non-adjacent $-CH_2-$ of the alkyl group may each be independently substituted by -O-, -S-, -CO-, -COO-, -OCO-, -CO-S-, -S-CO-, -O-CO-O-, -CO-NH-, -NH-CO-,-CH=CH-COO-, -CH=CH-OCO-, -COO-CH=CH-, -OCO-CH=CH-, -CH=CH-,-CF=CF-, or -C≡C-, or $R^2$ represents a group represented by a general formula (I-a)

$$\mathbf{-(X^2\text{-}Sp^2)_{q2}\text{-}P^2} \qquad \textbf{(I-a)}$$

(where $P^2$ represents a reactive functional group,
$Sp^2$ represents the same as that defined as $Sp^1$,
$X^2$ represents the same as that defined as $X^1$ (provided that $P^2$-$Sp^2$ and $Sp^2$-$X^2$ do not include direct bonds between hetero atoms), and
$q^2$ represents 0 or 1))

$$P^{11}\!-\!\left(S^{11}\!-\!X^{11}\right)_{m11}\!MG^{11}\!-\!R^{11} \qquad (1)$$

$$P^{21}\!-\!\left(S^{21}\!-\!X^{21}\right)_{m2}\!MG^{21}\!-\!\left(X^{22}\!-\!S^{22}\right)_{n2}\!P^{22} \qquad (2)$$

$$\begin{matrix}P^{31}\\ P^{41}\end{matrix}\!\!>\!\left(S^{31}\!-\!X^{31}\right)_{m3}\!MG^{31}\!-\!R^{31} \qquad (3)$$

$$\begin{matrix} & P^{43}\!-\!\left(S^{43}\!-\!X^{43}\right)_{l4} & \\ & | & \\ P^{41}\!-\!\left(S^{41}\!-\!X^{41}\right)_{m4} & MG^{41} & \!-\!\left(X^{42}\!-\!S^{42}\right)_{n4}\!P^{42}\end{matrix} \qquad (4)$$

$$\begin{matrix}P^{53}\\ P^{51}\end{matrix}\!\!>\!\left(S^{51}\!-\!X^{51}\right)_{m5}\!MG^{51}\!-\!\left(X^{52}\!-\!S^{52}\right)_{n5}\!P^{52} \qquad (5)$$

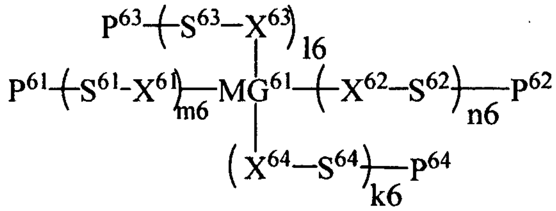

(6)

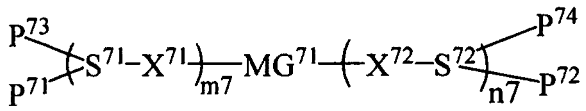

(7)

(in the general formulas (1) to (7), $P^{11}$ to $P^{74}$ represent a polymerizable group; $S^{11}$ to $S^{72}$ represent a spacer group or a single bond, where a plurality of each of $S^{11}$ to $S^{72}$ are present, the plurality of each of $S^{11}$ to $S^{72}$ may be the same or different; $X^{11}$ to $X^{72}$ represent -O-, -S-, $-OCH_2-$, $-CH_2O-$, -CO-, -COO-, -OCO-, -CO-S-, -S-CO-, -O-CO-O-, -CO-NH-, -NH-CO-,$-SCH_2-$, $-CH_2S-$, $-CF_2O-$, $-OCF_2-$, $-CF_2S-$, $-SCF_2-$, -CH=CH-COO-,-CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, -C≡C-, or a single bond, where a plurality of each of $X^{11}$ to $X^{72}$ are present, the plurality of each of $X^{11}$ to $X^{72}$ may be the same or different (provided that each P-(S-X)- bond does not include -O-O-) ; $MG^{11}$ to $MG^{71}$ each independently represent a formula (a),

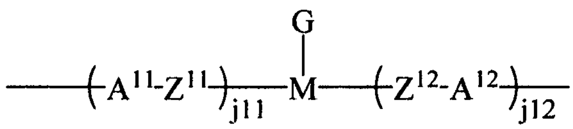

(a)

(where $A^{11}$ and $A^{12}$ each independently represent a 1,4-phenylene group, a 1,4-cyclohexylene group, a pyridine-2,5-diyl group, a pyrimidine-2,5-diyl group, a naphthalene-2,6-diyl group, a naphthalene-1,4-diyl group, a tetrahydronaphthalene-2,6-diyl group, a decahydronaphthalene-2,6-diyl group, or a 1,3-dioxane-2,5-diyl group; $A^{11}$ and $A^{12}$ each may be unsubstituted or may be substituted by at least one $L^1$; when a plurality of each of $A^{11}$ and/or $A^{12}$ are present, the plurality of each of $A^{11}$ and/or $A^{12}$ may be the same or different,

$Z^{11}$ and $Z^{12}$ each independently represent -O-, -S-, $-OCH_2-$, $-CH_2O-$, $-CH_2CH_2-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$,$-SCF_2-$, -CH=CH-COO-, -CH=CH-OCO-, -COO-CH=CH-, -OCO-CH=CH-,$-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-, -N=CH-, -CH=N-N=CH-, -CF=CF-, -C=C-, or a single bond; when a plurality of each of $Z^{11}$ and/or $Z^{12}$ are present, the plurality of each of $Z^{11}$ and/or $Z^{12}$ may be the same or different,

M represents a group selected from the following formula (M-1) to formula (M-11)

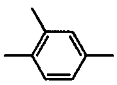

(M-1)

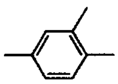

(M-2)

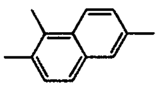

(M-3)

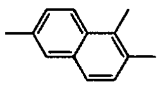

(M-4)

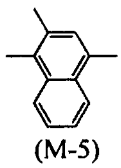

(M-5)

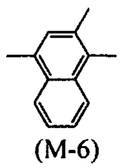

(M-6)

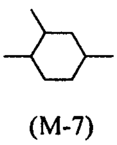

(M-7)

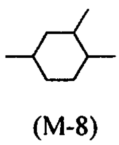

(M-8)

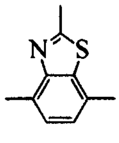

(M-9)

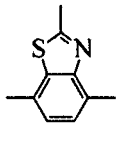

(M-10)

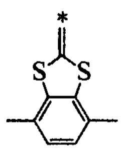

(M-11)

M may be unsubstituted or may be substituted by at least one $L^1$,

G represents the following formula (G-1) to formula (G-6)

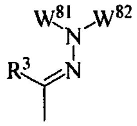 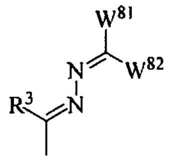 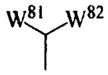 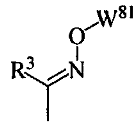 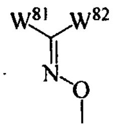 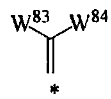

(G-1) (G-2) (G-3) (G-4) (G-5) (G-6)

(where $R^3$ represents a hydrogen atom or an alkyl group having 1 to 20 carbon atoms; the alkyl group may be linear or branched; any hydrogen atom in the alkyl group may be substituted by a fluorine atom; a single $-CH_2-$ or two or more non-adjacent $-CH_2-$ in the alkyl group may each be independently substituted by -O-, -S-, -CO-, -COO-, -OCO-, -CO-S-, -S-CO-, -O-CO-O-, -CO-NH-, -NH-CO-, or -C=C-,

$W^{81}$ represents a group having at least one aromatic group and having 5 to 30 carbon atoms, and the group may be unsubstituted or substituted by at least one $L^1$,

$W^{82}$ represents a hydrogen atom or a linear or branched alkyl group having 1 to 20 carbon atoms in which a single - $CH_2-$ or two or more non-adjacent $-CH_2-$ may each be independently substituted by -O-, -S-, -CO-, -COO-, -OCO-, - CO-S-, -S-CO-, -O-CO-O-, -CO-NH-, -NH-CO-, -CH=CH-COO-,-CH=CH-OCO-, -COO-CH=CH-, -OCO-CH=CH-, -CH=CH-, -CF=CF-, or-C≡C-, and any hydrogen atom in the alkyl group may be substituted by a fluorine atom; alternatively, $W^{82}$ may represent a group having at least one aromatic group and having 2 to 30 carbon atoms; alternatively, $W^{82}$ may represent a group represented by $P^W-(Sp^W-X^W)_{kW}-$, where $P^W$ represents a polymerizable group, preferred polymerizable groups are the same as preferred polymerizable groups for $P^{11}$ to $P^{74}$ below, where $Sp^W$ represents a spacer group or a single bond, preferred spacer groups are the same as preferred spacer groups for $S^{11}$ to $S^{72}$ below, when a plurality of $Sp^W$ are present, the plurality of $Sp^W$ may be the same or different, where $X^W$ represents -O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-,$-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, -C≡C-, or a single bond, when a plurality of $X^W$ are present, the plurality of $X^W$ may be the same or different (provided that $P^W-(Sp^W-X^W)_{kW}-$ does not include -O-O- bond), where kW represents an integer of 0 to 10, and $W^{81}$ and $W^{82}$ may be linked together to form the same ring structure,

$W^{83}$ and $W^{84}$ each independently represent a halogen atom, a cyano group, a hydroxy group, a nitro group, a carboxyl group, a carbamoyloxy group, an amino group, a sulfamoyl group, a group having at least one aromatic group and having 5 to 30 carbon atoms, an alkyl group having 1 to 20 carbon atoms, a cycloalkyl group having 3 to 20 carbon atoms, an alkenyl group having 2 to 20 carbon atoms, a cycloalkenyl group having 3 to 20 carbon atoms, an alkoxy group having 1 to 20 carbon atoms, an acyloxy group having 2 to 20 carbon atoms, or an alkylcarbonyloxy group having 2 to 20 carbon atoms; a single $-CH_2-$ or two or more non-adjacent $-CH_2-$ in the alkyl group, cycloalkyl group, alkenyl group, cycloalkenyl group, alkoxy group, acyloxy group, and alkylcarbonyloxy group may each be independently substituted by -O-, -S-, -CO-, -COO-, -OCO-,-CO-S-, -S-CO-, -O-CO-O-, -CO-NH-, -NH-CO-, or -C=C-; when M above is selected from the formula (M-1) to the formula (M-10), G is selected from the formula (G-1) to the formula (G-5); when M represents the formula (M-11), G represents the formula (G-6),

$L^1$ represents a fluorine atom, a chlorine atom, a bromine atom, an iodine atom, a pentafluorosulfuranyl group, a nitro group, an isocyano group, an amino group, a hydroxyl group, a mercapto group, a methylamino group, a dimethylamino group, a diethylamino group, a diisopropylamino group, a trimethylsilyl group, a dimethylsilyl group, a thioisocyano group, or an alkyl group having 1 to 20 carbon atoms; the alkyl group may be linear or branched, any hydrogen atom may be substituted by a fluorine atom; a single $-CH_2-$ or two or more non-adjacent $-CH_2-$ in the alkyl group may each be independently substituted by a group selected from -O-, -S-, -CO-, -COO-, -OCO-, -COS-, -S-CO-, -O-CO-O-, -CO-NH-, -NH-CO-, -CH=CH-COO-, -CH=CH-OCO-, -COO-CH=CH-, -OCO-CH=CH-, -CH=CH-, -CF=CF-, and -C=C-; when the compound includes a plurality of $L^1$, the plurality of $L^1$ may be the same or different,

j11 represents an integer of 1 to 5; j12 represents an integer of 1 to 5; and j11 + j12 represents an integer of 2 to 5.), $R^{11}$ and $R^{31}$ represent a hydrogen atom, a fluorine atom, a chlorine atom, a bromine atom, an iodine atom, a pentafluorosulfuranyl group, a cyano group, a nitro group, an isocyano group, a thioisocyano group, or an alkyl group having 1 to 20 carbon atoms; the alkyl group may be linear or branched; any hydrogen atom in the alkyl group may be substituted by a fluorine atom; a single $-CH_2-$ or two or more non-adjacent $-CH_2-$ in the alkyl group may each be independently substituted by -O-, -S-, -CO-, -COO-, -OCO-, -CO-S-, -S-CO-, -O-CO-O-, -CO-NH-, -NH-CO-, or -C≡C-; m11 represents an integer of 0 to 8; and m2 to m7, n2 to n7, 14 to 16, and k6 each independently

represent an integer of 0 to 5); the present invention also provides cured products, optical films, and display devices that employ the above-described powder mixture.

Advantageous Effects of Invention

It has been found that a powder mixture containing a polymerizable liquid crystal compound according to the present invention contains no organic solvent, hence enables a reduction in the risk of occurrence of fire and causes no changes in the composition due to evaporation of solvent during transportation or storage. It has also been found that, unlike nematic liquid crystal, the powder mixture is not viscous and has a fluid characteristic of powder mixture even in a solid state, so that it is easily handled. In addition, thorough studies on properties of powder mixtures have revealed that, among powder mixtures, a powder mixture having a specific particle diameter according to the present invention particularly has excellent properties.

Specifically, a polymerizable liquid crystal compound used for a powder mixture according to the present invention is synthesized; and, when the compound is purified and crystallized from the solution, the particle diameter and the like are controlled, to thereby obtain a polymerizable liquid crystal compound having a target particle diameter and the like. The following has been found: a powder mixture containing a polymerizable liquid crystal compound having a particle diameter and the like within a preferred range enables generation of crystals in a short time, compared with the case of a larger particle diameter beyond the preferred range; when the powder mixture is subsequently dissolved in an organic solvent to prepare a solution composition, it exhibits high solubility in the organic solvent; and the powder mixture exhibits low adhesion, compared with the case of a smaller particle diameter than the particle diameter according to the present invention, and hence is excellent in terms of handleability, for example.

Description of Embodiments

Hereinafter, the best modes of powder mixtures according to the present invention will be described.

<Powder, powder mixture, particles, and crystallites>

(Powder)

The powder is defined as having intermediate properties between those of liquid and solid (Journal of the Japanese Society of Soil Physics, vol. 17, "Powder physics", SHIRAKI Yoichi). The powder is also defined as a substance that is recognized as powder with the naked eye, and that behaves like powder (HP of MicrotracBEL Corp.: http://www.microtracbel.com/tech/particle/theory02.html). The powder in the present invention is also defined the same as above.

For example, the mass of individual solids is powder. Here, the term "solid" refers to the solid among three states of matter, which include gas, liquid, and solid; the solid may be crystalline or non-crystalline; the solid may be amorphous; and substances belong to solid unless they have liquid form exhibiting continuous fluidity. For example, a liquid phase exhibiting continuous fluidity, nematic liquid crystal does not belong to the solid in the present invention; however, substances such as finely ground wax and discotic liquid crystal, which are soft, becomes sticky under pressure, but, without application of an external force, have shapes similar to those of ordinary powder belong to the solid in the present invention. The powder in the present invention can be limited to powders that are the mass of solids under conditions of specific pressures and specific temperatures. Specifically, the powders are preferably the mass of solids under atmospheric pressure at 100°C or less, 80°C or less, 60°C or less, 50°C or less, 40°C or less, 35°C or less, 30°C or less, 25°C or less, and are solid under atmospheric pressure at, at least, 30°C or less.

(Powder mixture)

A powder mixture according to the present invention contains two or more polymerizable liquid crystal compounds in powder that are solid under atmospheric pressure at 30°C or less and each have at least one polymerizable functional group, wherein the content of the two or more polymerizable liquid crystal compounds is 70 mass% or more, wherein the two or more polymerizable liquid crystal compounds are as defined in the claims.

Incidentally, in order to adjust refractive index anisotropy, preferred is use of two or more powders composed of a polymerizable liquid crystal compound having at least one polymerizable functional group.

In the present invention, a powder mixture that contains two or more powders, in other words, the mass of two or more solid species, is referred to as the "powder mixture". The powder mixture may be a mixture of two or more powders composed of a polymerizable liquid crystal compound having at least one polymerizable functional group, or may be a mixture of a powder composed of a polymerizable liquid crystal compound having at least one polymerizable functional group and an additive powder, or may be a combination of a plurality of the foregoing. In the powder mixture,

two or more different powders may be homogeneously dispersed or may be present in an inhomogeneous state.

Even when two or more different solid species contained in a powder mixture are in contact with each other to cause depression of melting point so that the mixture partially exhibits nematic liquid crystal or smectic liquid crystal, as long as the powder mixture still contains solid having a specific volume or more and is recognized as powder by the naked eye, the mixture is regarded as the powder mixture in the present invention on the basis of the above-described definition of powder. In addition, even when a small amount of a liquid additive is added to a powder mixture that is powder under atmospheric pressure at 30°C or less and that contains two or more polymerizable liquid crystal compounds each having at least one polymerizable functional group, as long as the powder mixture still contains solid having a specific volume or more and is recognized as powder by the naked eye, the mixture is regarded as the powder mixture in the present invention. Specifically, even when such depression of melting point or a liquid additive turns a portion of a powder mixture into non-solid, a powder mixture having a solid content of 80 vol% or more can be regarded as the powder mixture in the present invention; more preferably, the solid content is 85 vol% or more, 90 vol% or more, still more preferably 95 vol% or more.

(Particles)

In the present invention, the term "powder" means the mass of individual solids, and each one of the solids constituting the mass is referred to as "particle". A single particle independently present is referred to as a primary particle. A plurality of particles that are aggregated is referred to as a secondary particle. The particle diameter can be adjusted by using, for example, synthesis conditions of a chemical reaction, conditions of precipitation (= crystallization) from the solution after the synthesis, or solvent evaporation conditions. The particle diameter can also be adjusted by, for example, performing a pulverization process to make the particle size uniform, or by turning particles associated or aggregated at a high degree to particles at a low degree, or by decreasing the primary particle diameter.

(Crystallites)

When solids forming particles have a crystalline structure, the largest mass regarded as a single crystal is referred to as a "crystallite". A single particle may be constituted by a single crystallite, in other words, a particle formed of a single crystal. Alternatively, a single particle may be constituted by a plurality of crystallites (in the present invention, when a solid is ' constituted by a plurality of crystallites, the largest crystallite is simply referred to as a "crystallite"). Incidentally, the presence of crystallites can be determined on the basis of X-ray diffraction. When crystallites are present, the periodic structure of crystallites causes an X-ray diffraction phenomenon. The X-ray used for the measurement is preferably $K_\alpha$ radiation included in characteristic X-rays obtained by applying an accelerated electron flow to metal; and the $K_\alpha$ radiation is preferably FeK$\alpha$ radiation ($\lambda$ = 1.08 Å) or CuK$\alpha$ ($\lambda$ = 1.54 Å). In a polymerizable liquid crystal compound that is solid under atmospheric pressure at 30°C or less and has at least one polymerizable functional group, the compound being an essential component of a powder mixture according to the present invention, the solids are also individually constituted by crystallites, and adjustment of the size of crystallites enables adjustments of the cumulative distribution of particles and the bulk density.

<Various measurement methods>

(Particle diameter measurement method)

The particle diameter of a powder mixture according to the present invention can be measured by a publicly known method. Specifically, a single value representing the size of a single particle occupying a three-dimensional space is referred to as a "representative particle diameter"; the average of the representative particle diameters of a particle group (= powder) including particles having different representative particle diameters is referred to as a "mean particle diameter"; and the distribution indicating the range of representative particle diameters of the powder is referred to as a "particle diameter distribution or particle size distribution". Examples of the mean particle diameter include number mean diameter, surface mean diameter, volume mean diameter, harmonic mean diameter, mean surface diameter, mean volume diameter, geometric mean diameter, number median diameter, mass median diameter, and volume median diameter. Regarding the particle diameter distribution, an optical microscope and visual inspection may be employed to measure representative particle diameters and the particle diameter distribution.

The particle diameter of a powder mixture according to the present invention is preferably a light scattering equivalent diameter determined by a light scattering method. The measurement method is preferably a laser diffraction-scattering method. Regarding the measurement scale, a device that enables measurements over the range of nanometers to millimeters is preferably employed.

The particle diameter can be measured as any one particle diameter of geometric diameter, scattering coefficient

equivalent diameter, light scattering equivalent diameter, volume equivalent diameter, Stokes diameter, ultrasonic attenuation equivalent diameter, X-ray scattering method equivalent diameter, diffusion coefficient equivalent diameter, electrical mobility equivalent diameter, and diffusion coefficient equivalent diameter. The particle diameter of a powder mixture according to the present invention is preferably measured by, among light scattering methods, a method referred to as a dynamic light scattering method.

The dynamic light scattering method is used to measure the particle diameter: particles dispersed in a solution are irradiated with a laser beam, and the scattering light is observed with a photon detector and analyzed to thereby measure the particle diameter. The equipment of measuring particle diameter is bundled with analysis software for particle diameter measurement; and this software can be used to determine the particle diameter. The solvent used in the measurement is preferably a solvent in which a powder mixture according to the present invention does not dissolve; in particular, preferably used is a solvent in which a liquid crystal compound having at least one polymerizable functional group does not dissolve. Specifically, the solvent is preferably, water, methanol, ethanol, isopropyl alcohol, hexane, or a mixture of the foregoing, particularly preferably a solvent mixture of water and methanol or hexane.

A particle diameter at 50% of the cumulative particle diameter distribution is referred to as $D_{50}$ (median diameter). Regarding the particle diameter in the present invention, $D_{50}$ is preferably 1.0 μm to 900 μm, preferably 3.0 μm to 700 μm, preferably 5.0 μm to 500 μm, particularly preferably 10 μm to 300 μm.

In addition, more preferably, the particle diameter $D_{50}$ satisfies such a condition, and a particle diameter $D_{90}$ value at 90% of the cumulative particle diameter distribution is preferably 5 mm or less and the $D_{50}$ value is preferably 1 μm or more; preferably, the $D_{90}$ value is 3 mm or less and the $D_{50}$ value is 5 um or more; preferably the $D_{90}$ value is 2 mm or less and the $D_{50}$ value is 10 μm or more; particularly preferably, the $D_{90}$ value is 1 mm or less and the $D_{50}$ value is 20 μm or more.

In a powder mixture according to the present invention, the cumulative particle diameter distribution preferably satisfies such a range because the powder mixture has high solubility in solvents and high meltability under heating, is easily handled due to low probability of raising of powder during handling of the powder mixture, and is less likely to adhere to containers. When the cumulative particle diameter distribution of the powder mixture has values more than those described above, an increase is caused in the time taken for large particles to dissolve in the solvent and the time taken for large particles to melt under heating, hence, decrease is caused in the solubility in the solvent and the meltability under heating. On the other hand, when the cumulative particle diameter distribution of the powder mixture has values less than those described above, improvement is achieved in the solubility in the solvent and the meltability under heating; however, the powder mixture is less easily handled due to high probability of raising of powder during handling of the powder mixture, and tends to be electrically charged and easily enters even fine cracks; hence the powder mixture exhibits high adhesion to containers and is less likely to be taken out from containers.

The particle diameter of a powder mixture according to the present invention may be measured without performing any pretreatment for the powder mixture. However, when the powder mixture has been stored for a certain period and powder agglomeration is caused to partially generate agglomerates, the agglomerates are preferably ground with an agate mortar before the measurement.

(Bulk density measurement method)

The bulk density of a powder mixture according to the present invention can be measured by a publicly known method, and is preferably measured by the bulk density or apparent density measurement method in JIS Standards, or by "Guide-line for description of the specification format concerning powder materials" in the standard provided by The Association of Powder Process Industry and Engineering, JAPAN. JIS Standards include measurement methods including the bulk density measurement method of test methods for pigments (JIS-K-5101), the bulk density measurement method of test methods for vinyl chloride resin (JIS-K-6720), the bulk density measurement method of test methods for metallic powders (JIS-Z-2504), the bulk density measurement method of test methods for activated carbon (JIS-K-1474), the bulk density measurement method of test methods for plastics (JIS-K-7365, JIS-K-6722), the bulk density measurement method of test methods of synthetic detergent (JIS-K-3362), the bulk density measurement method of test methods for alumina powder (JIS-R-9301), the bulk density measurement method of testing methods for polytetrafluoroethylene molding powder (JIS-K-6891), and the bulk density measurement method of testing methods for artificial abrasives (JIS-R-6130). The bulk density of a powder mixture according to the present invention is preferably determined in the following manner: the powder mixture is naturally dropped from a glass funnel to a graduated cylinder; tapping is then performed on a synthetic-resin-top laboratory table; and the weight of the sample charged is divided by its volume to calculate the bulk density (graduated cylinder method). In particular, the graduated cylinder preferably has a volume of 500 ml to 50 ml; the glass funnel preferably has a discharge port diameter of 2.0 cm to 1.0 cm; the tapping frequency is preferably 1 tap/s to 10 taps/s; and the time taken for 10 to 20 taps is preferably 10 minutes to 10 seconds.

The bulk density of a powder mixture according to the present invention, measured by the graduated cylinder method, is preferably 0.01 g/ml to 1.50 g/ml, more preferably 0.05 g/ml to 1.30 g/ml, particularly preferably 0.10 g/ml to

1.20 g/ml.

A powder mixture according to the present invention preferably has a bulk density in such a range because powder agglomeration and depression of melting point are suppressed and an increase in the filling efficiency is achieved. When the bulk density of the powder mixture is less than such a range, a decrease in the filling efficiency is caused. When the bulk density of the powder mixture is more than such a range, agglomeration tends to occur in the powder mixture, and contact in the powder mixture tends to cause depression of melting point.

(Crystallite measurement method)

The size of crystallites of the powder mixture can be measured by direct observation of particles with a transmission electron microscope (TEM), or crystallite diameter distribution measurement by X-ray diffractometry (XRD), or small-angle X-ray scattering (SAXS). The size of crystallites of a powder mixture according to the present invention is preferably determined by measuring powder X-ray diffraction. In the measurement of powder X-ray diffraction, the X-ray source employed is CuK$\alpha$ radiation at a wavelength of 1.54 Å, and the measurement is performed in a scanning range of $2\theta$ = 4 deg to 35 deg. From the half width of a diffraction peak obtained by the measurement of powder X-ray diffraction, calculation in terms of crystallites can be performed with the following Scherrer equation 1.

(Equation 1)

$$D = K\lambda/\beta\cos\theta$$

(D: crystallite diameter (Å), K: Scherrer constant, $\lambda$: X-ray wavelength (Å), $\beta$: diffraction line broadening (rad), $\theta$: half of diffraction angle $2\theta$ (rad))

Scherrer constant (K) used is preferably K = 0.94, 0.89, 0.90, 4/3, $8/3\pi$, particularly preferably K = 0.90.

When a plurality of peaks are detected by the X-ray diffraction measurement, a peak that has the maximum diffraction intensity is preferably used to calculate the crystallite size of a powder mixture according to the present invention.

The crystallite size of a powder mixture according to the present invention, measured by X-ray diffraction measurement, is preferably 5 nm to 500 nm, more preferably 10 nm to 300 nm, preferably 15 nm to 200 nm; in particular, the crystallites preferably have a size of 20 nm to 100 nm.

In a powder mixture according to the present invention, the crystallites preferably satisfy such a range because the powder mixture has high solubility in solvents and high meltability under heating, is easily handled due to low probability of raising of powder during handling of the powder mixture, and is less likely to adhere to containers. When the crystallites of the powder mixture are larger than those described above, an increase is caused in the time taken for large crystallites to dissolve in the solvent and the time taken for large crystallites to melt under heating, hence decrease is caused in the solubility in the solvent and the meltability under heating. On the other hand, when the crystallites of the powder mixture are smaller than those described above, improvement is achieved in the solubility in the solvent and the meltability under heating; however, the powder mixture is less easily handled due to high probability of raising of powder during handling of the powder mixture, and tends to be electrically charged and easily enters even fine cracks; hence the powder mixture exhibits high adhesion to containers and is less likely to be taken out from containers.

(Method for measuring residual solvent contained in powder mixture)

A powder according to the present invention is obtained by, for example, recrystallization or reprecipitation. Thus, the solvent having been used in the process of recrystallization, reprecipitation, or the like is contained in the powder. The moisture in the air is absorbed and contained in the powder. Such solvents contained in the powder are defined as residual solvent.

The method of measuring the residual solvent of the powder mixture may be a thermal vacuum method or a gravimetric method. The thermal vacuum method is performed in the following manner: a certain amount of the powder mixture weighed into an aluminum pan or the like is placed into a thermal vacuum desiccator, a vacuum desiccator, or the like; subsequently, a vacuum is created under heating at about 50°C to about 150°C, at about 10 to about 50 Pa, for about 1 to about 5 hours; and the change in the weight before and after creation of the vacuum under heating is determined to achieve the measurement. The gravimetric method is performed in the following manner: not in vacuum, a certain amount of the powder mixture weighed into an aluminum pan or the like is placed into a thermobalance; subsequently heating is performed at about 80°C to about 250°C for about 10 to about 60 minutes; and the change in the weight before and after the heating is determined to achieve the measurement. The residual solvent contained in a

powder mixture according to the present invention is preferably measured by the gravimetric method. In general, in the measurement of the residual solvent by the gravimetric method, 5 to 10 g of the powder mixture is heated at a predetermined temperature (about 150°C to about 180°C) and the resultant decrease in the weight is weighed to thereby determine the amount of the residual solvent.

The amount of residual solvent contained in a powder mixture according to the present invention, measured by the gravimetric method, is preferably 10,000 ppm or less, more preferably 8,000 ppm or less, particularly preferably 6,000 ppm or less. The lower limit of the amount of residual solvent is preferably zero; however, actually, 1 ppm or more of residual solvent is contained without problems.

In a powder mixture according to the present invention, the amount of residual solvent preferably satisfies such a range because the solvent less affects the state of powder, and the mixture is less likely to be electrically charged. On the other hand, when the amount of residual solvent in the powder mixture is larger than such a range, the solvent considerably affects dissolution of particles in solvents and transition temperature depression, and the state of powder is less likely to be maintained.

(Constituent components of powder mixture)

(Polymerizable liquid crystal compound)

A powder mixture according to the present invention contains two or more polymerizable liquid crystal compounds having at least one polymerizable functional group. The polymerizable liquid crystal compounds are in powder and are solid under atmospheric pressure at 30°C or less, because they are easily handled without special pressure and temperature conditions. In the present invention, the term "under atmospheric pressure" is intended to describe 800 hectopascals or more and 1100 hectopascals or less, more strictly, 950 hectopascals or more and 1050 hectopascals or less.

Such a polymerizable liquid crystal compound having at least one polymerizable functional group in the present invention is not particularly limited, provided that the two or more polymerizable liquid crystal compounds are each defined as in the claims, and may be selected from publicly known and commonly used compounds as long as the compound alone or in a composition containing another compound exhibits liquid crystallinity and the compound has at least one polymerizable functional group.

Examples include, as described in, for example, Handbook of Liquid Crystals (edited by D. Demus, J. W. Goodby, G. W. Gray, H. W. Spiess, and V. Vill, published by Wiley-VCH Verlag GmbH & Co. KGaA, 1998), Kikan kagaku sosetsu No. 22, CHEMISTRY OF LIQUID CRYSTAL (edited by The Chemical Society of Japan, 1994), Japanese Unexamined Patent Application Publication Nos. 7-294735, 8-3111, 8-29618, 11-80090, 11-116538, and 11-148079, rod-like polymerizable liquid crystal compounds including a rigid region that is constituted by a chain of a plurality of structures such as a 1,4-phenylene group or a 1,4-cyclohexylene group and that is referred to as mesogen, and a polymerizable functional group such as a vinyl group, an acryloyl group, or (meth)acryloyl group; and, as described in Japanese Unexamined Patent Application Publication Nos. 2004-2373 and 2004-99446, rod-like polymerizable liquid crystal compounds having a maleimide group, provided that the two or more polymerizable liquid crystal compounds are each defined as in the claims.

Specifically, the polymerizable liquid crystal compound having at least one polymerizable functional group is preferably a compound represented by a general formula (I) below. The compound represented by the general formula (I) below may be used for a powder mixture according to the present invention even when the compound alone does not exhibit liquid crystallinity as long as the compound in a composition containing another compound exhibits liquid crystallinity. More preferably, the compound represented by the general formula (I) alone exhibits liquid crystallinity, which enables a wider temperature range of a liquid crystal phase.

[Chem. 1]

$$P^1\text{-}(Sp^1\text{-}X^1)_{q1}\text{-}MG\text{-}R^2 \qquad (I)$$

In the formula, $P^1$ represents a polymerizable functional group,

$Sp^1$ represents an alkylene group having 1 to 18 carbon atoms; hydrogen atoms in the alkylene group may be substituted by at least one halogen atom or CN group; a single $CH_2$ group or two or more non-adjacent $CH_2$ group in the alkylene group may each be independently substituted by -0-, -COO-, -OCO-, or -OCO-O-,

$X^1$ represents -0-, -S-, $-OCH_2-$, $-CH_2O-$, -CO-, -COO-,-OCO-, -CO-S-, -S-CO-, -O-CO-O-, -CO-NH-, -NH-CO-, $-SCH_2-$,$-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$,$-CH_2CH_2-COO-$, $-CH_2CH_2-OCO-$, $-COO-CH_2-$, $-OCO-CH_2-$, $-CH_2-COO-$,$-CH_2-OCO-$, -CH=CH-, -N=N-, -CH=N-N=CH-, -CF=CF-, -C=C-, or a single bond (provided that $P^1$-$Sp^1$ and $Sp^1$-$X^1$ do not include direct bonds between hetero atoms. Incidentally, in the present invention, the term "hetero atoms" is intended to describe

atoms other than a carbon atom and a hydrogen atom; and the phrase "direct bond between hetero atoms" is intended to describe, for example, -0-0- bond.),

q1 represents 0 or 1,

MG represents a mesogenic group,

$R^2$ represents a hydrogen atom, a halogen atom (a fluorine atom, a chlorine atom, a bromine atom, or an iodine atom), a cyano group, or a linear or branched alkyl group having 1 to 12 carbon atoms, the alkyl group may be linear or branched, a single $-CH_2-$ or two or more non-adjacent $-CH_2-$in the alkyl group may each be independently substituted by -0-, -S-, -CO-, -COO-, -OCO-, -CO-S-, -S-CO-, -O-CO-O-, -CO-NH-, -NH-CO-, -CH=CH-COO-, -CH=CH-OCO-, -COO-CH=CH-, -OCO-CH=CH-, -CH=CH-, -CF=CF-, or -C≡C-; or $R^2$ is represented by a general formula (I-a)

[Chem. 2]

$$-(X^2\text{-}sp^2)_{q2}\text{-}P^2 \qquad \text{(I-a)}$$

(where $P^2$ represents a polymerizable functional group; $Sp^2$ represents the same as that defined in $Sp^1$; $X^2$ represents the same as that defined in $X^1$ (provided that $P^2$-$Sp^2$ and $Sp^2$-$X^2$ do not include direct bonds between hetero atoms), and

$q^2$ represents 0 or 1),

the mesogenic group represented by MG above is represented by a general formula (I-b)

[Chem. 3]

$$-(B1\text{-}Z1)_{r1}\text{-}B2\text{-}Z2\text{-}B3\text{-} \qquad \text{(I-b)}$$

(where B1, B2, and B3 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, and may have at least one substituent of F, Cl, $CF_3$, $OCF_3$, a CN group, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, an alkenoyloxy group having 2 to 8 carbon atoms, and/or a general formula (I-c)

[Chem. 4]

$$-(X^3)_{q4}\text{-}(Sp^3)_{q3}\text{-}P^3 \qquad \text{(I-c)}$$

(where $P^3$ represents a reactive functional group,

$Sp^3$ represents the same as that defined in $Sp^1$,

$X^3$ represents -0-, -COO-, -OCO-, $-OCH_2-$, $-CH_2O-$,$-CH_2CH_2OCO-$, $-COOCH_2CH_2-$, $-OCOCH_2CH_2-$, or a single bond; $q^3$ represents 0 or 1; and $q^4$ represents 0 or 1 (provided that $P^3$-$Sp^3$ and $Sp^3$-$X^3$ do not include direct bonds between hetero atoms)),

Z1 and Z2 each independently represent -COO-, -OCO-,$-CH_2\ CH_2-$, $-OCH_2-$, $-CH_2O-$, -CH=CH-, -C≡C-, -CH=CH-COO-,-OCOCH=CH-, $-CH_2CH_2COO-$, $-CH_2CH_2OCO-$, $-COOCH_2CH_2-$, $-OCOCH_2CH_2-$, -C=N-, -N=C-, -CONH-, -NHCO-, $-C(CF_3)_2-$, an alkyl group that has 2 to 10 carbon atoms and may have a halogen atom and, or a single bond, r1 represents 0, 1, 2, or 3, and, when a plurality of B1's and a plurality of Z1's are present, B1's may be the same or different, and Z1's may be the same or different.).

$P^1$, $P^2$, and $P^3$ above preferably each independently represent a substituent selected from polymerizable groups represented by the following Formula (P-2-1) to Formula (P-2-20).

[Chem. 5]

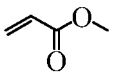 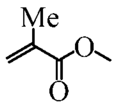 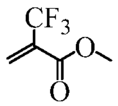 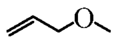 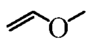 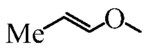 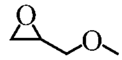

(P-2-1) (P-2-2) (P-2-3) (P-2-4) (P-2-5) (P-2-6) (P-2-7)

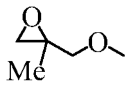 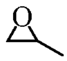 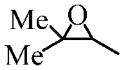 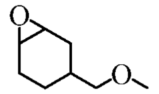 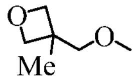 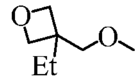

(P-2-8) (P-2-9) (P-2-10) (P-2-11) (P-2-12) (P-2-13)

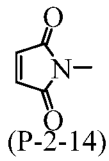 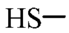 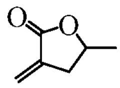 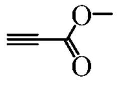 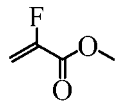 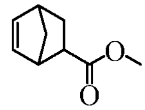

(P-2-14) (P-2-15) (P-2-16) (P-2-17) (P-2-18) (P-2-19)

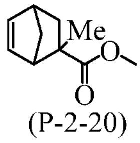

(P-2-20)

Among these polymerizable functional groups, from the viewpoint of enhancing polymerizability, preferred are Formulas (P-2-1), (P-2-2), (P-2-7), (P-2-12), and (P-2-13), more preferred are Formulas (P-2-1) and (P-2-2).

$Sp^1$ to $Sp^3$ above preferably each independently represent an alkylene group having 1 to 15 carbon atoms; a single-$CH_2$- or two or more non-adjacent -$CH_2$- in the alkylene group may each be independently substituted by -0-, -COO-, -OCO-, or -OCO-O-; and, one or two or more hydrogen atoms of the alkylene group may be substituted by halogen atoms (fluorine atoms, chlorine atoms, bromine atoms, or iodine atoms) or CN groups. More preferably, $Sp^1$ to $Sp^3$ each independently represent an alkylene group having 1 to 12 carbon atoms; and, a single -$CH_2$- or two or more non-adjacent -$CH_2$- in the alkylene group may each be independently substituted by -0-, -COO-, -OCO-, or -OCO-O-.

$X^1$ to $X^3$ above preferably each independently represent-0-, -$OCH_2$-, -$CH_2O$-, -CO-, -COO-, -OCO-, -O-CO-O-, -CO-NH-,-NH-CO-, -$CF_2O$-, -$OCF_2$-, -CH=CH-COO-, -CH=CH-OCO-, -COO-CH=CH-, -OCO-CH=CH-, -COO-$CH_2CH_2$-, -OCO-$CH_2CH_2$-, -$CH_2CH_2$-COO-, -$CH_2CH_2$-OCO-, -COO-$CH_2$-, -OCO-$CH_2$-, -$CH_2$-COO-, -$CH_2$-OCO-, -CH=CH-,-N=N-, -CH=N-N=CH-, -CF=CF-, -C=C-, or a single bond; more preferably, $X^1$ to $X^3$ each independently represent -0-, -$OCH_2$-, -$CH_2O$-, -CO-, -COO-, -OCO-, -O-CO-O-, -$CF_2O$-, -$OCF_2$-, -CH=CH-COO-, -CH=CH-OCO-, -COO-CH=CH-, -OCO-CH=CH-, -COO-$CH_2CH_2$-,-OCO-$CH_2CH_2$-, -$CH_2CH_2$-COO-, -$CH_2CH_2$-OCO-, -COO-$CH_2$-, -OCO-$CH_2$-, -$CH_2$-COO-, -$CH_2$-OCO-, -CH=CH-, -CF=CF-, -C=C-, or a single bond.

(Monofunctional polymerizable liquid crystal compound)

Among the compounds represented by the general formula (I), preferred is a monofunctional polymerizable liquid crystal compound having a single polymerizable functional group in a molecule that is a compound represented by the following general formula (1-2-1).

[Chem. 6]

$$P^1\text{-}(Sp^1\text{-}X^1)_{q1}\text{-}MG\text{-}R^{211} \qquad \text{(I-2-1)}$$

In the formula, $P^1$, $Sp^1$, $X^1$, and q1 each represent the same as that defined in the general formula (I); preferred groups of $P^1$, $Sp^1$, and $X^1$ are also intended to be the same as above,

$R^{211}$ represents a hydrogen atom, a halogen atom (a fluorine atom, a chlorine atom, a bromine atom, or an iodine atom), a cyano group, a linear or branched alkyl group having 1 to 12 carbon atoms or a linear or branched alkenyl group having 1 to 12 carbon atoms in which a single -$CH_2$- or two or more non-adjacent -$CH_2$- may each be independently substituted by -0-, -S-, -CO-, -COO-, -OCO-, -CO-S-, -S-CO-, -O-CO-O-, -CO-NH-, -NH-CO-, -NH-, -N($CH_3$)-, -CH=CH-COO-,-CH=CH-OCO-, -COO-CH=CH-, -OCO-CH=CH-, -CH=CH-, -CF=CF-, or-C≡C-; one or two or more hydrogen atoms in the alkyl group or the alkenyl group may be substituted by halogen atoms or cyano groups, and, when a plurality

of the hydrogen atoms are substituted, the substitution may be the same or different.

MG represents a mesogenic group and is represented by a general formula (I-b)

[Chem. 7]

$$-(B1\text{-}Z1)_{r1}\text{-}B2\text{-}Z2\text{-}B3\text{-} \qquad \text{(I-b)}$$

(in the formula, B1, B2, and B3 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, and may have at least one substituent of F, Cl, $CF_3$, $OCF_3$, a CN group, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and/or an alkenoyloxy group having 2 to 8 carbon atoms; in particular, preferably B1, B2, and B3 each independently represent a 1,4-phenylene group, a 1,4-cyclohexylene group, or a 2,6-naphthylene group that may have such a substituent.

Z1 and Z2 each independently represent -COO-, -OCO-,$-CH_2CH_2-$, $-OCH_2-$, $-CH_2O-$, -CH=CH-, -C≡C-, -CH=CHCOO-,-OCOCH=CH-, $-CH_2CH_2COO-$, $-CH_2CH_2OCO-$, $-COOCH_2CH_2-$, $-OCOCH_2CH_2-$, -C=N-, -N=C-, -CONH-, -NHCO-, $-C(CF_3)_2-$, an alkyl group that has 2 to 10 carbon atoms and that may have a halogen atom (a fluorine atom, a chlorine atom, a bromine atom, or an iodine atom), or a single bond, and preferably Z1 and Z2 each independently represent -COO-, -OCO-, $-CH_2CH_2-$, $-OCH_2-$,$-CH_2O-$, -CH=CH-, -C≡C-, -CH=CHCOO-, -OCOCH=CH-, $-CH_2CH_2COO-$,$-CH_2CH_2OCO-$, $-COOCH_2CH_2-$, $-OCOCH_2CH_2-$, or a single bond. r1 represents 0, 1, 2, or 3, and, when a plurality of B1's and a plurality of Z1's are present, B1's may be the same or different and Z1's may be the same or different.).

More preferably, $R^{211}$ represents a hydrogen atom, a halogen atom (a fluorine atom, a chlorine atom, a bromine atom, or an iodine atom), a cyano group, a linear or branched alkyl group having 1 to 8 carbon atoms, or a linear or branched alkenyl group having 1 to 8 carbon atoms; a single $-CH_2-$ or two or more non-adjacent $-CH_2-$ in the alkyl group and the alkenyl group may each be independently substituted by -0-, -CO-, -COO-, -OCO-, -O-CO-O-, -CH=CH-COO-, -CH=CH-OCO-, -COO-CH=CH-, -OCO-CH=CH-, -CH=CH-, or-C≡C-; one or two or more hydrogen atoms of the alkyl group and the alkenyl group may each be independently substituted by halogen atoms (fluorine atoms, chlorine atoms, bromine atoms, or iodine atoms) or cyano groups, and, when a plurality of the hydrogen atoms are substituted, the substitution may be the same or different.

Examples of the general formula (1-2-1) include compounds represented by the following general formulas (I-2-1-1) to (1-2-1-4); however, the examples are not limited to the following general formulas.

[Chem. 8]

$$P^1\text{-}(Sp^1\text{-}X^1)_{q1}\text{-}B2\text{-}Z2\text{-}B3\text{-}R^{211} \qquad \text{(I-2-1-1)}$$

$$P^1\text{-}(Sp^1\text{-}X^1)_{q1}\text{-}B11\text{-}Z11\text{-}B2\text{-}Z2\text{-}B3\text{-}R^{211} \qquad \text{(I-2-1-2)}$$

$$P^1\text{-}(Sp^1\text{-}X^1)_{q1}\text{-}B11\text{-}Z11\text{-}B12\text{-}Z12\text{-}B2\text{-}Z2\text{-}B3\text{-}R^{211} \qquad \text{(I-2-1-3)}$$

$$P^1\text{-}(Sp^1\text{-}X^1)_{q1}\text{-}B11\text{-}Z11\text{-}B12\text{-}Z12\text{-}B13\text{-}Z13\text{-}B2\text{-}Z2\text{-}B3\text{-}R^{211} \qquad \text{(I-2-1-4)}$$

In the formulas, $P^1$, $Sp^1$, $X^1$, and q1 each represent the same as that defined in the general formula (I); preferred groups of $P^1$, $Sp^1$, and $X^1$ are also intended to be the same as above,

B11, B12, B13, B2, and B3 represent the same as those defined as B1 to B3 in the general formula (I-b), and may be the same or different,

Z11, Z12, Z13, and Z2 represent the same as those defined as Z1 to Z3 in the general formula (I-b), and may be the same or different,

$R^{211}$ represents a hydrogen atom, a halogen atom, a cyano group, a linear or branched alkyl group having 1 to 12 carbon atoms or a linear or branched alkenyl group having 1 to 12 carbon atoms in which a single $-CH_2-$ or two or more non-adjacent $-CH_2-$ may each be independently substituted by -0-, -S-, -CO-, -COO-, -OCO-, -CO-S-, -S-CO-, -O-CO-O-, -CO-NH-, -NH-CO-, -NH-, $-N(CH_3)-$, -CH=CH-COO-, -CH=CH-OCO-,-COO-CH=CH-, -OCO-CH=CH-, -CH=CH-,

-CF=CF-, or -C≡C-; one or two or more hydrogen atoms in the alkyl group or the alkenyl group may be substituted by halogen atoms or cyano groups, and, when a plurality of the hydrogen atoms are substituted, the substitution may be the same or different.

Examples of the compounds represented by the general formulas (1-2-1-1) to (1-2-1-4) include compounds represented by the following formula (1-2-1-1-1) to formula (1-2-1-1-30); however, the examples are not limited to these compounds.

[Chem. 9]

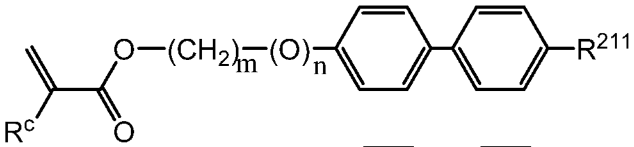

(I-2-1-1-1)

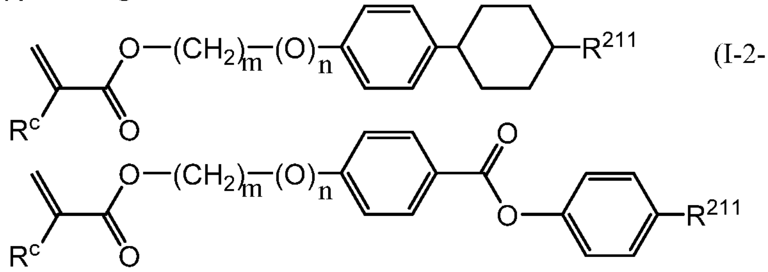

(I-2-1-1-2)

(I-2-1-1-3)

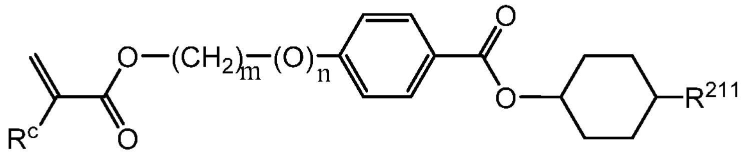

(I-2-1-1-4)

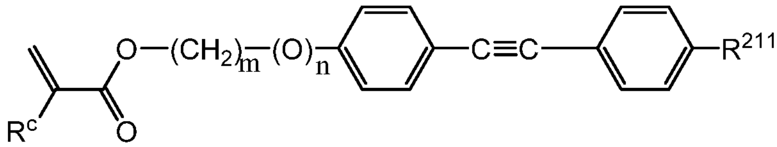

(I-2-1-1-5)

[Chem. 10]

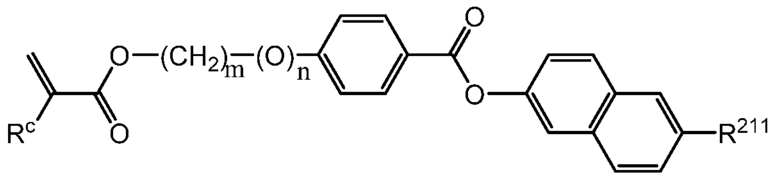

(I-2-1-1-6)

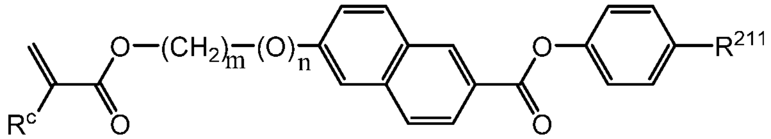

(I-2-1-1-7)

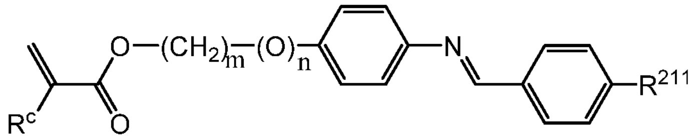

(I-2-1-1-8)

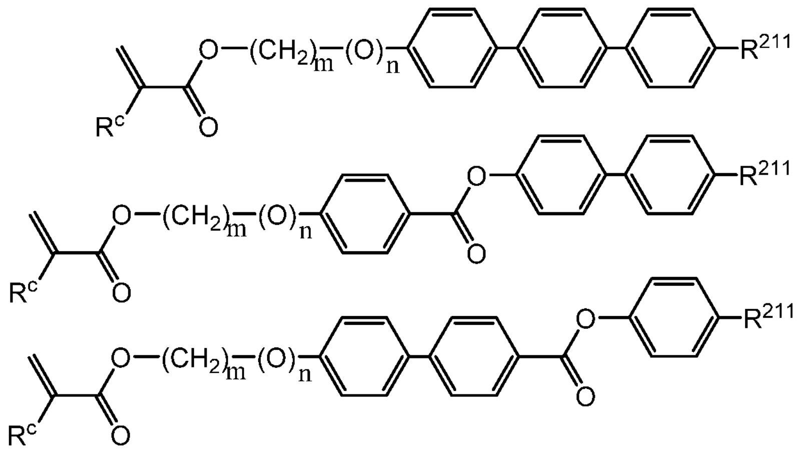

(I-2-1-1-9)

(I-2-1-1-10)

(I-2-1-1-11)

[Chem. 11]

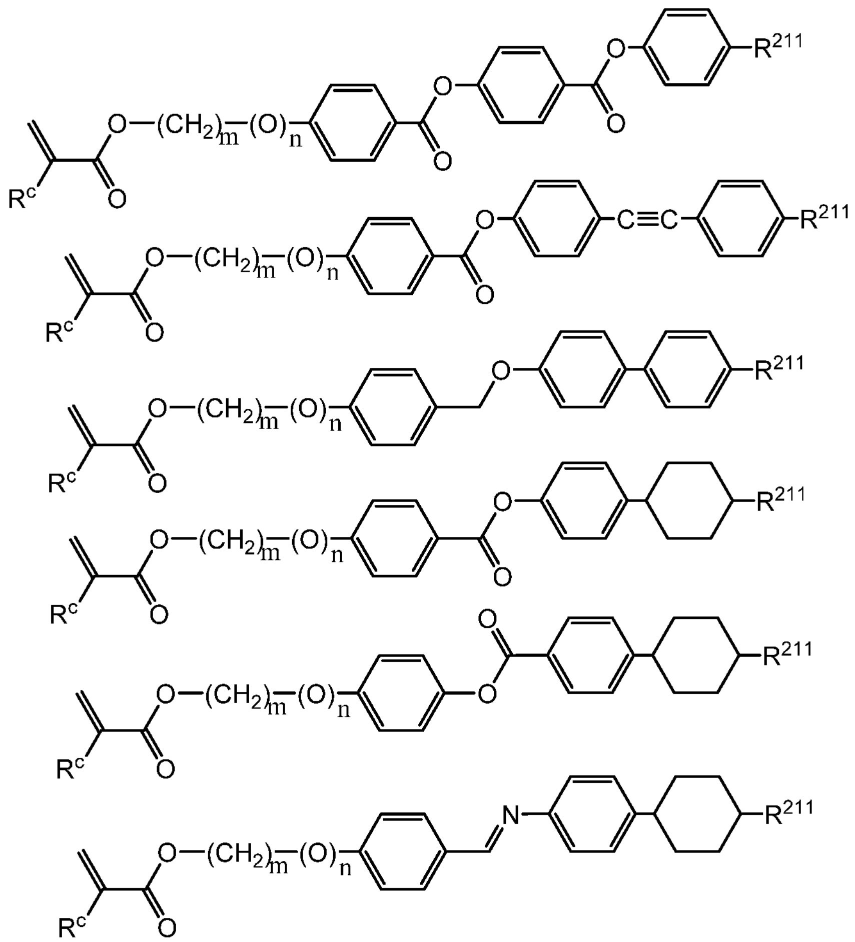

(I-2-1-1-12)

(I-2-1-1-13)

(I-2-1-1-14)

(I-2-1-1-15)

(I-2-1-1-16)

(I-2-1-1-17)

[Chem. 12]

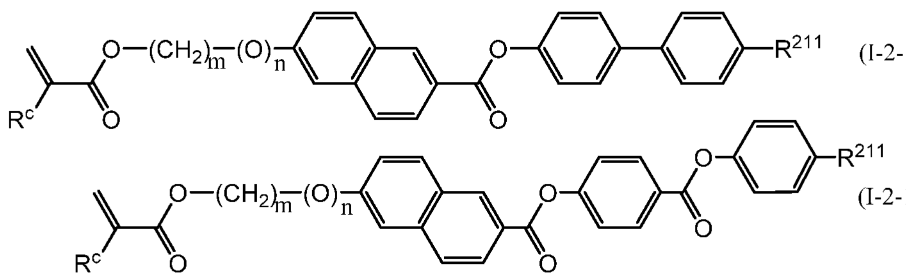

(I-2-1-1-18)

(I-2-1-1-19)

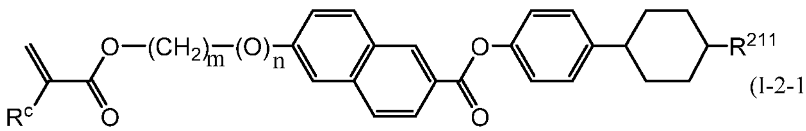

(I-2-1-1-20)

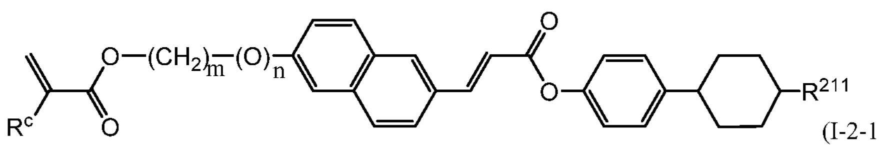

(I-2-1-1-21)

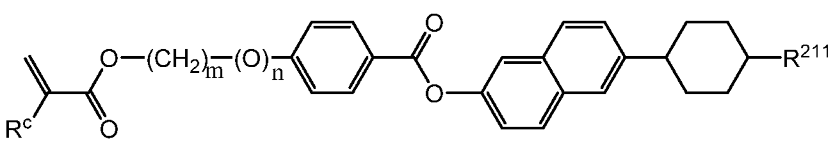

(I-2-1-1-22)

[Chem. 13]

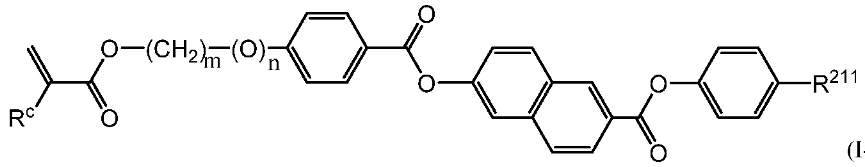

(I-2-1-1-23)

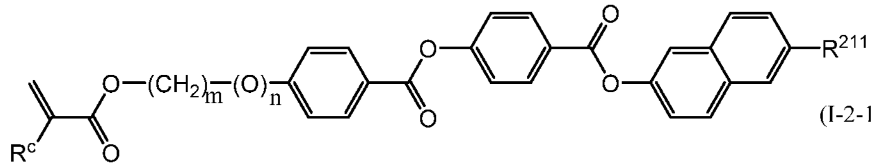

(I-2-1-1-24)

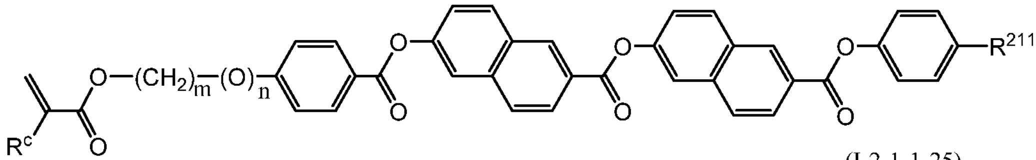

(I-2-1-1-25)

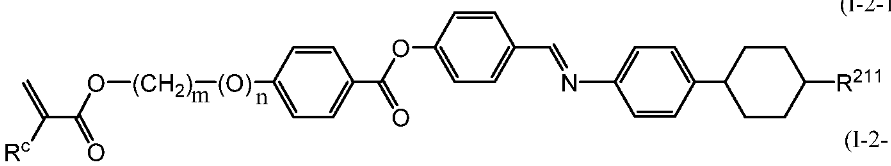

(I-2-1-1-26)

[Chem. 14]

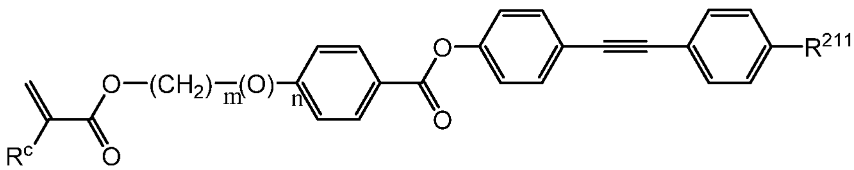

(I-2-1-1-27)

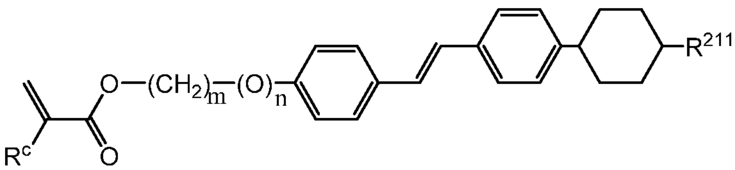

(I-2-1-1-28)

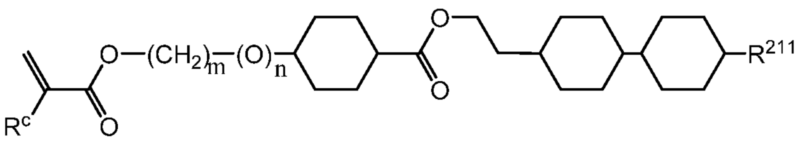

(I-2-1-1-29)

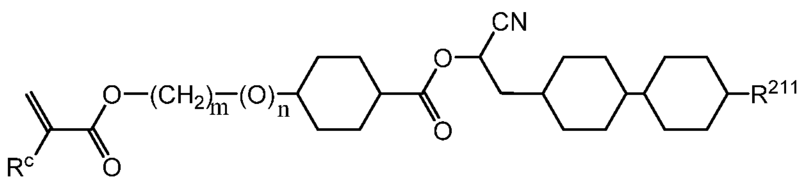

(I-2-1-1-30)

In the formulas, $R^c$ represents a hydrogen atom or a methyl group; m represents an integer of 0 to 18; n represents 0 or 1; $R^{211}$ represents the same as that defined in the general formulas (1-2-1-1) to (1-2-1-4); preferably $R^{211}$ represents a hydrogen atom, a halogen atom, a cyano group, a linear alkyl group having 1 to 15 carbon atoms or a linear alkenyl group having 1 to 15 carbon atoms in which a single $-CH_2-$ or two or more non-adjacent $-CH_2-$ may be substituted by -0-, -CO-, -COO-, or -OCO-, and one or two or more hydrogen atoms in the alkyl group or the alkenyl group may be substituted by halogen atoms, cyano groups, or t-butyl groups, where the halogen atoms are preferably

F atoms; the cyclic groups may have at least one substituent of F, Cl, $CF_3$, $OCF_3$, a CN group, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and an alkenoyloxy group having 2 to 8 carbon atoms; and cyclic CH may be substituted by N.

(Bifunctional polymerizable liquid crystal compound)

Among the compounds represented by the general formula (I), preferred is a bifunctional polymerizable liquid crystal compound having two polymerizable functional groups in a molecule that is a compound represented by the following general formula (1-2-2).

[Chem. 15]

$$\mathbf{P^1\text{-}(Sp^1\text{-}X^1)_{q1}\text{-}MG\text{-}(X^2\text{-}Sp^2)_{q2}\text{-}P^2 \qquad (I\text{-}2\text{-}2)}$$

In the formula, $P^1$, $Sp^1$, $X^1$, q1, $X^2$, $Sp^2$, q2, and $P^2$ each represent the same as that defined in the general formula (I) and the general formula (I-a); and preferred groups of $P^1$, $Sp^1$, $X^1$, $X^2$, $Sp^2$, and $P^2$ are also intended to be the same as above.

MG represents a mesogenic group, and is represented by a general formula (I-b)

[Chem. 16]

$$\mathbf{\text{-}(B1\text{-}Z1)_{r1}\text{-}B2\text{-}Z2\text{-}B3\text{-} \qquad (I\text{-}b)}$$

(where B1, B2, and B3 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group; and may have at least one substituent of F, Cl, $CF_3$, $OCF_3$, a CN group, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and/or an alkenoyloxy group having 2 to 8 carbon atoms; in particular, preferably B1, B2, and B3 each independently represent a 1,4-phenylene group, a 1,4-cyclohexylene group, or a 2,6-naphthylene group that may have such a substituent.

Z1 and Z2 each independently represent -COO-, -OCO-,$-CH_2CH_2-$, $-OCH_2-$, $-CH_2O-$, -CH=CH-, -C≡C-, -CH=CHCOO-,-OCOCH=CH-, $-CH_2CH_2COO-$, $-CH_2CH_2OCO-$, $-COOCH_2CH_2-$, $-OCOCH_2CH_2-$, -C=N-, -N=C-, -CONH-, -NHCO-, $-C(CF_3)_2-$, an alkyl group that has 2 to 10 carbon atoms and that may have a halogen atom (a fluorine atom, a chlorine atom, a bromine atom, or an iodine atom), or a single bond, and preferably Z1 and Z2 each independently represent -COO-, -OCO-, $-CH_2CH_2-$, $-OCH_2-$,$-CH_2O-$, -CH=CH-, -C≡C-, -CH=CHCOO-, -OCOCH=CH-, $-CH_2CH_2COO-$,$-CH_2CH_2OCO-$, $-COOCH_2CH_2-$, $-OCOCH_2CH_2-$, or a single bond. r1 represents 0, 1, 2, or 3, and, when a plurality of B1's and a plurality of Z1's are present, B1's may be the same or different and Z1's may be the same or different.).

Examples of the general formula (1-2-2) include compounds represented by the following general formulas (I-2-2-1) to (1-2-2-4); however, the examples are not limited to the following general formulas.

[Chem. 17]

$$\mathbf{P^1\text{-}(Sp^1\text{-}X^1)_{q1}\text{-}B2\text{-}Z2\text{-}B3\text{-}(X^2\text{-}Sp^2)_{q2}\text{-}P^2 \qquad (I\text{-}2\text{-}2\text{-}1)}$$

$$\mathbf{P^1\text{-}(Sp^1\text{-}X1)_{q1}\text{-}B11\text{-}Z11\text{-}B2\text{-}Z2\text{-}B3\text{-}(X^2\text{-}Sp^2)_{q2}\text{-}P^2 \qquad (I\text{-}2\text{-}2\text{-}2)}$$

$$\mathbf{P^1\text{-}(Sp^1\text{-}X1)_{q1}\text{-}B11\text{-}Z11\text{-}B12\text{-}Z12\text{-}B2\text{-}Z2\text{-}B3\text{-}(X^2\text{-}Sp^2)_{q2}\text{-}P^2 \qquad (I\text{-}2\text{-}2\text{-}3)}$$

$$\mathbf{P^1\text{-}(Sp^1\text{-}X^1)_{q1}\text{-}B11\text{-}Z11\text{-}B12\text{-}Z12\text{-}B13\text{-}Z13\text{-}B2\text{-}Z2\text{-}B3\text{-}(X^2\text{-}Sp^2)_{q2}\text{-}P^2 \qquad (I\text{-}2\text{-}2\text{-}4)}$$

In the formulas, $P^1$, $Sp^1$, $X^1$, q1, $X^2$, $Sp^2$, q2, and $P^2$ each represent the same as that defined in the general

formula (I) and the general formula (I-a); and preferred groups of $P^1$, $Sp^1$, $X^1$, $X^2$, $Sp^2$, and $P^2$ are also intended to be the same as above,

B11, B12, B13, B2, and B3 represent the same as those defined as B1 to B3 in the general formula (I-b), and may be the same or different, and

Z11, Z12, Z13, and Z2 represent the same as those defined as Z1 to Z3 in the general formula (I-b), and may be the same or different.

Among the compounds represented by the general formulas (1-2-2-1) to (1-2-2-4), the compounds represented by the general formulas (1-2-2-2) to (1-2-2-4), which have three or more ring structures in a compound, are preferably used because the finally obtained optically anisotropic body has high orientability and high curability; in particular, preferred are use of the compound represented by the general formula (1-2-2-1), which has two ring structures in the compound, or use of the compound represented by the general formula (1-2-2-2), which has three ring structures in the compound.

Examples of the compounds represented by the general formulas (1-2-2-1) to (1-2-2-4) include compounds represented by the following formula (1-2-2-1-1) to formula (1-2-2-1-22); however, the examples are not limited to these compounds.

[Chem. 18]

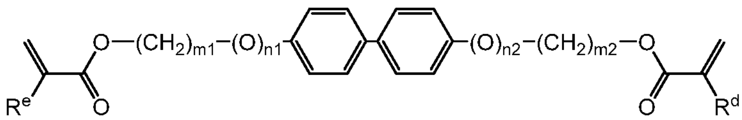

(I-2-2-1-1)

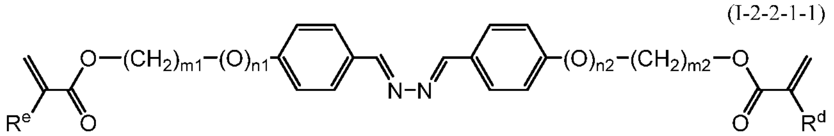

(I-2-2-1-2)

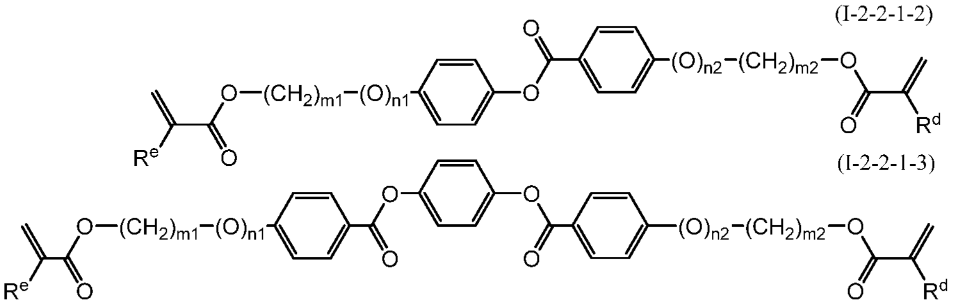

(I-2-2-1-3)

(I-2-2-1-4)

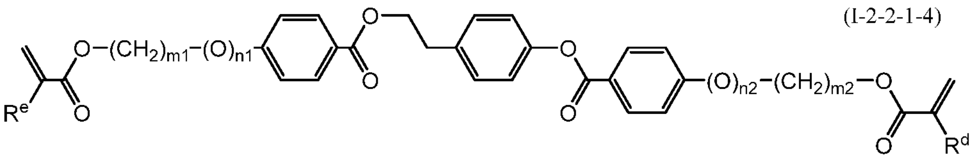

(I-2-2-1-5)

[Chem. 19]

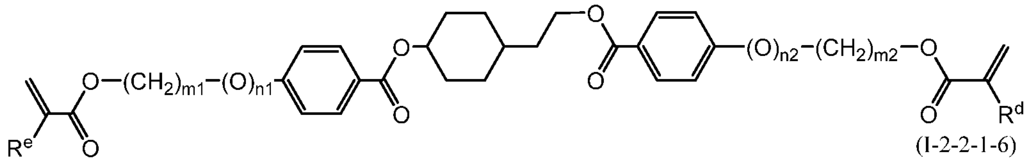

(I-2-2-1-6)

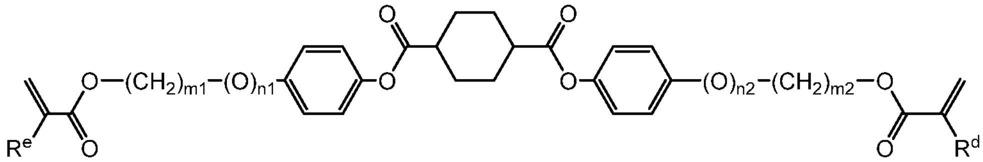

(I-2-2-1-7)

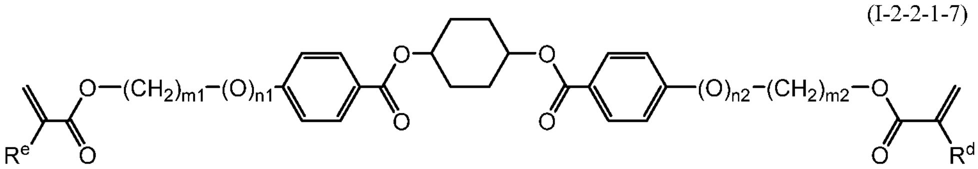

(I-2-2-1-8)

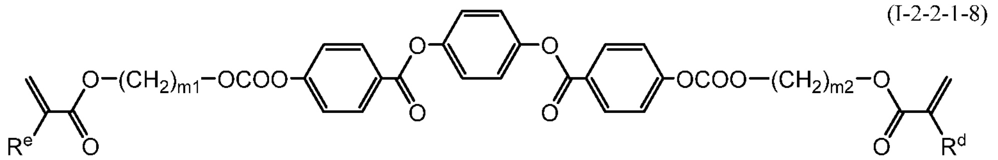

(I-2-2-1-9)

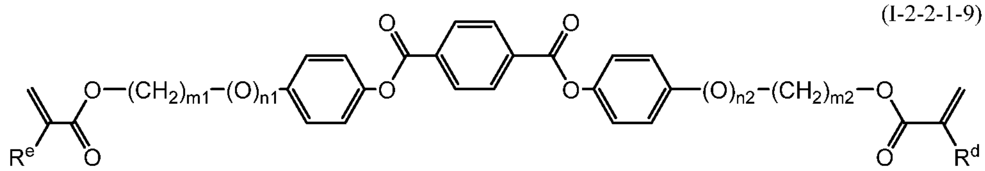

(I-2-2-1-10)

[Chem. 20]

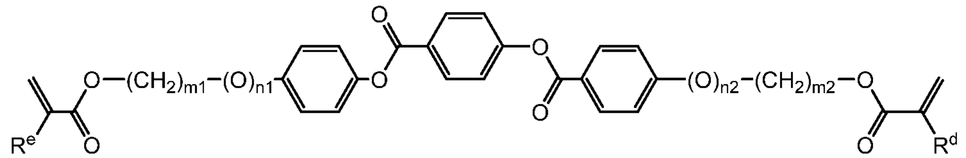

(I-2-2-1-11)

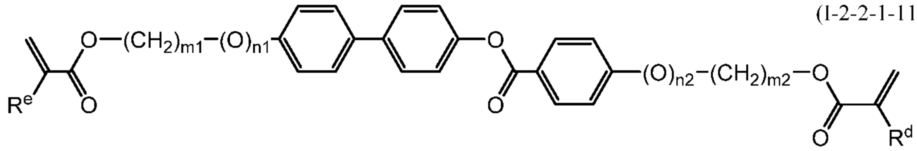

(I-2-2-1-12)

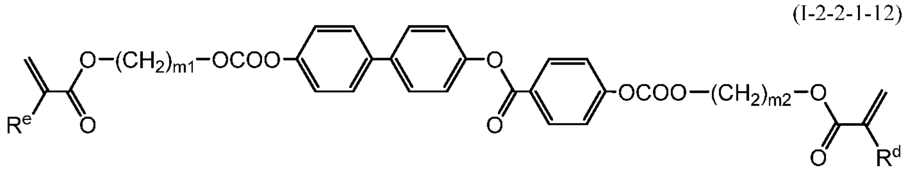

(I-2-2-1-13)

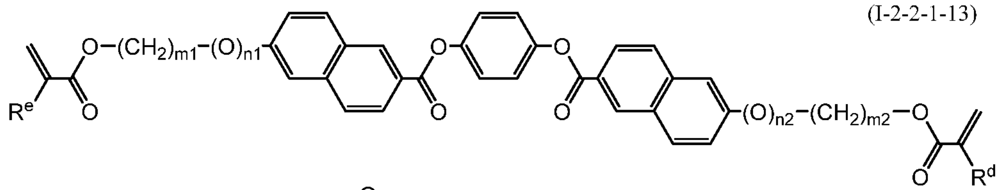

(I-2-2-1-14)

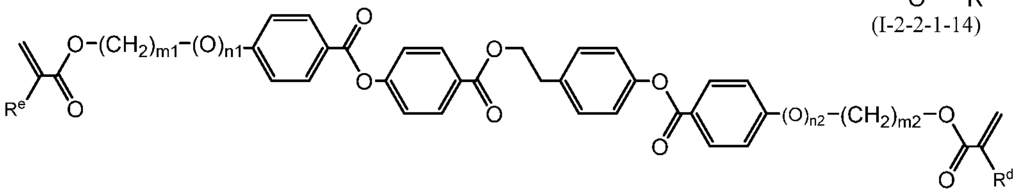

(I-2-2-1-15)

[Chem. 21]

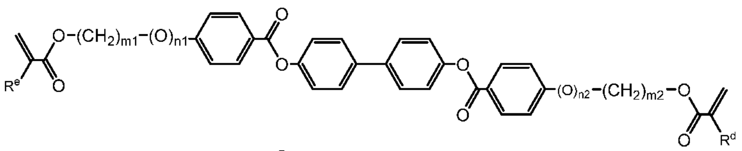

(I-2-2-1-16)

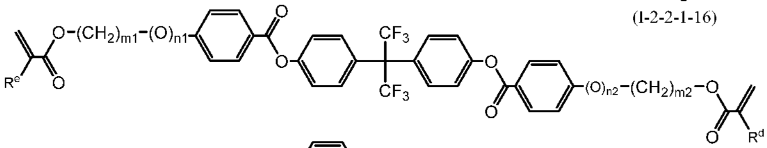

(I-2-2-1-17)

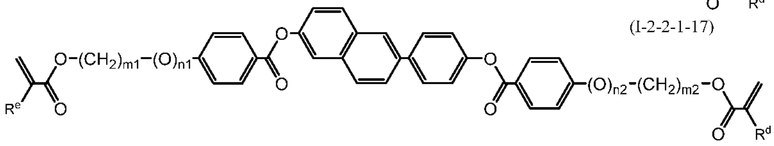

(I-2-2-1-18)

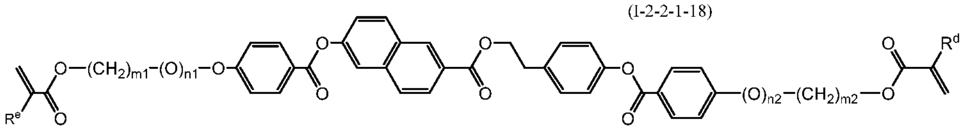

(I-2-2-1-19)

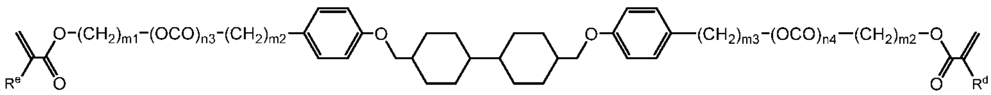

(I-2-2-1-20)

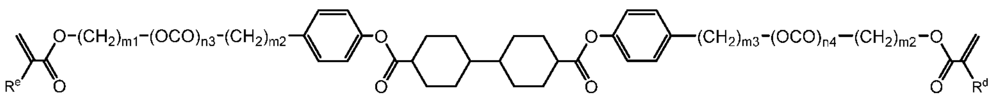

(I-2-2-1-21)

[Chem. 22]

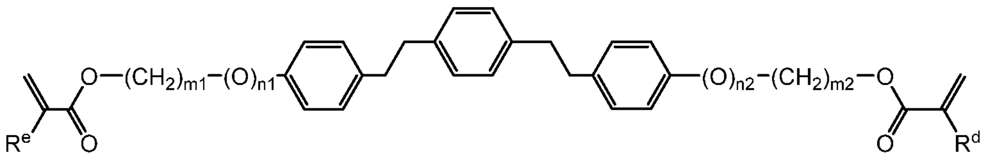

(I-2-2-1-22)

In the formulas, $R^d$ and $R^e$ each independently represent a hydrogen atom or a methyl group, and the cyclic groups may have at least one substituent of F, Cl, $CF_3$, $OCF_3$, a CN group, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and an alkenoyloxy group having 2 to 8 carbon atoms.

m1 and m2 each independently represent an integer of 0 to 18; and n1, n2, n3, and n4 each independently represent 0 or 1.

(Polyfunctional polymerizable liquid crystal compound)

A polyfunctional polymerizable liquid crystal compound having three or more polymerizable functional groups is preferably a compound having three polymerizable functional groups. Among the compounds represented by the general formula (I), the polyfunctional polymerizable liquid crystal compound having three polymerizable functional groups in a molecule is preferably a compound represented by the following general formula (1-2-3).

[Chem. 23]

$$P^1\text{-}(Sp^1\text{-}X^1)_{q1}\text{-}MG(\text{-}(X^3)_{q4}\text{-}(Sp^3)_{q3}\text{-}P^3)\text{-}(X^2\text{-}Sp^2)_{q2}\text{-}P^2 \qquad (I\text{-}2\text{-}3)$$

In the formula, $P^1$, $Sp^1$, $X^1$, q1, $X^2$, $Sp^2$, q2, $P^2$, $X^3$, q4, $Sp^3$, q3, and $P^3$ represent the same as those defined in the general formula (I), the general formula (I-a), and the general formula (I-c); and preferred groups of $P^1$, $Sp^1$, $X^1$, $X^2$, $Sp^2$, $P^2$, $X^3$, $Sp^3$, and $P^3$ are also intended to be the same as above.

MG represents a mesogenic group, and is represented by a general formula (I-b)

[Chem. 24]

$$\textbf{-(B1-Z1)}_{\textbf{r1}}\textbf{-B2-Z2-B3-} \qquad \textbf{(I-b)}$$

(where B1, B2, and B3 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group; and may have at least one substituent of F, Cl, $CF_3$, $OCF_3$, a CN group, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and/or an alkenoyloxy group having 2 to 8 carbon atoms; in particular, preferably B1, B2, and B3 each independently represent a 1,4-phenylene group, a 1,4-cyclohexylene group, or a 2,6-naphthylene group that may have such a substituent.

Z1 and Z2 each independently represent -COO-, -OCO-,$-CH_2CH_2-$, $-OCH_2-$, $-CH_2O-$, -CH=CH-, -C≡C-, -CH=CHCOO-,-OCOCH=CH-, $-CH_2CH_2COO-$, $-CH_2CH_2OCO-$, $-COOCH_2CH_2-$, $-OCOCH_2CH_2-$, -C=N-, -N=C-, -CONH-, -NHCO-, $-C(CF_3)_2-$, an alkyl group that has 2 to 10 carbon atoms and that may have a halogen atom (a fluorine atom, a chlorine atom, a bromine atom, or an iodine atom), or a single bond, and preferably Z1 and Z2 each independently represent -COO-, -OCO-, $-CH_2CH_2-$, $-OCH_2-$,$-CH_2O-$, -CH=CH-, -C≡C-, -CH=CHCOO-, -OCOCH=CH-, $-CH_2CH_2COO-$,$-CH_2CH_2OCO-$, $-COOCH_2CH_2-$, $-OCOCH_2CH_2-$, or a single bond. r1 represents 0, 1, 2, or 3, and, when a plurality of B1's and a plurality of Z1's are present, B1's may be the same or different and Z1's may be the same or different.).

Examples of the general formula (1-2-3) include compounds represented by the following general formulas (I-2-3-1) to (1-2-3-8); however, the examples are not limited to the following general formulas.

[Chem. 25]

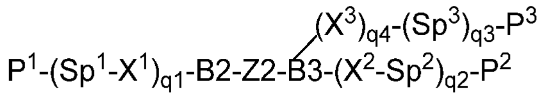

(I-2-3-1)

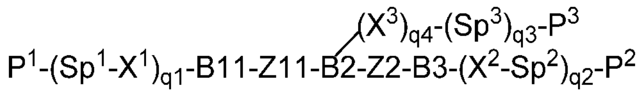

(I-2-3-2)

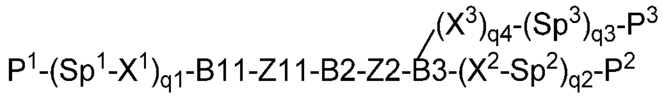

(I-2-3-3)

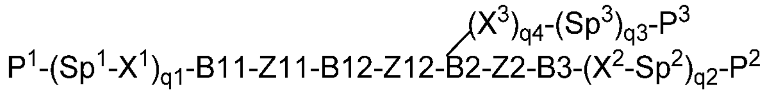

(I-2-3-4)

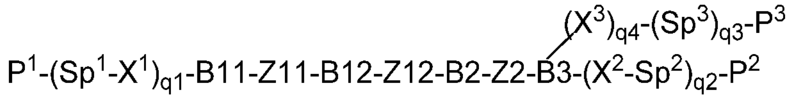

(I-2-3-5)

[Chem. 26]

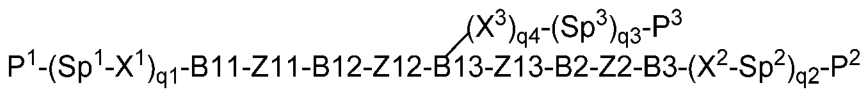

(I-2-3-6)

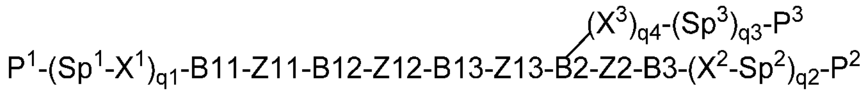

(I-2-3-7)

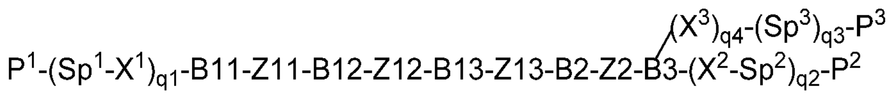

(I-2-3-8)

In the formulas, $P^2$, $S^1$, $X^1$, q1, MG, $X^2$, $S^2$, q2, $P^3$, $X^3$, q4, $S^3$, q3, and $P^4$ each represent the same as those defined in the general formula (I), the general formula (I-a), and the general formula (I-c); and preferred groups of $P^1$, $Sp^1$, $X^1$, $X^2$, $Sp^2$, $P^2$, $X^3$, $Sp^3$, and $P^3$ are also intended to be the same as above,
B11, B12, B13, B2, and B3 represent the same as those defined as B1 to B3 in the general formula (I-b), and may be the same or different,
Z11, Z12, Z13, and Z2 represent the same as those defined as Z1 to Z3 in the general formula (I-b), and may be the same or different.

Examples of the compounds represented by the general formulas (1-2-3-1) to (1-2-3-8) include compounds represented by the following formula (1-2-3-1-1) to formula (1-2-3-1-6); however, the examples are not limited to these compounds.

[Chem. 27]

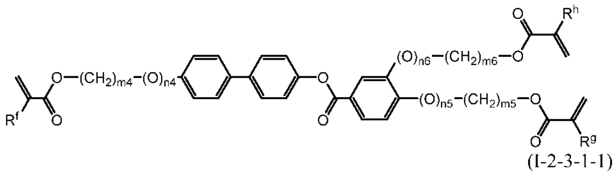

(I-2-3-1-1)

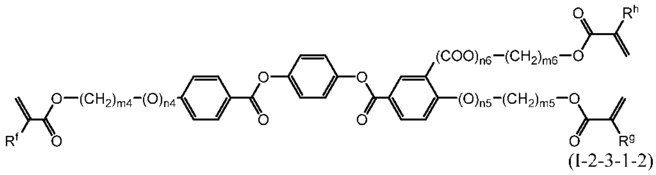

(I-2-3-1-2)

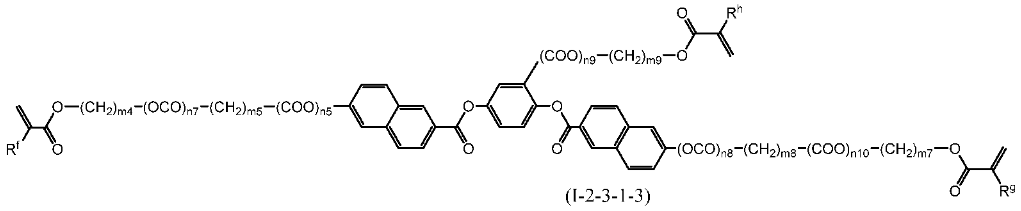

(I-2-3-1-3)

[Chem. 28]

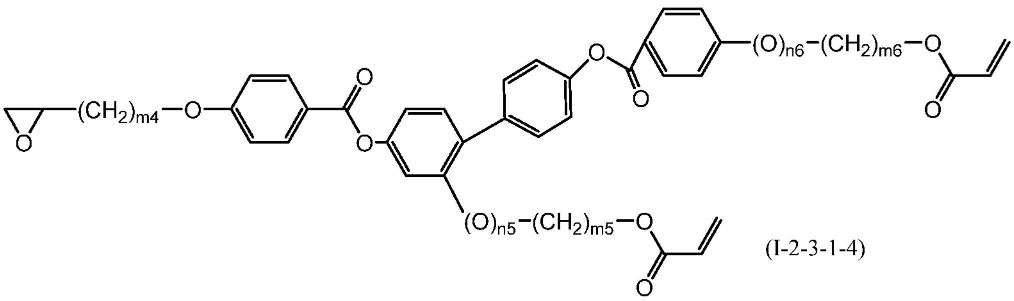

(I-2-3-1-4)

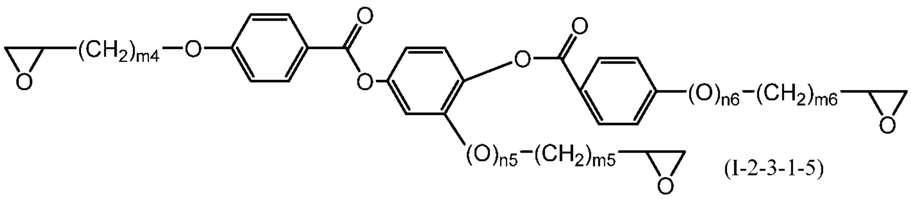

(I-2-3-1-5)

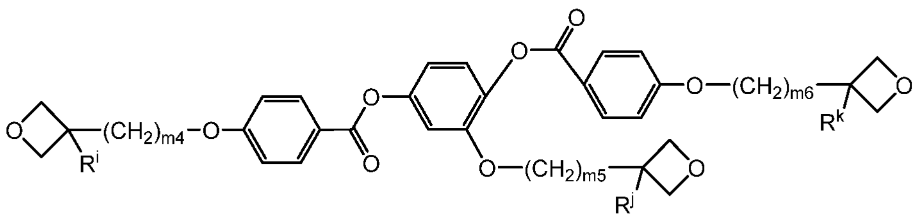

(I-2-3-1-6)

In the formulas, $R^f$, $R^g$, and $R^h$ each independently represent a hydrogen atom or a methyl group; $R^i$, $R^j$, and $R^k$ each independently represent a hydrogen atom, a halogen atom, an alkyl group having 1 to 6 carbon atoms, an alkoxy group having 1 to 6 carbon atoms, or a cyano group; when the groups represent an alkyl group having 1 to 6 carbon atoms, or an alkoxy group having 1 to 6 carbon atoms, the groups may be wholly unsubstituted, or may be substituted by one or two or more halogen atoms; and the cyclic groups may have at least one substituent of F, Cl, $CF_3$, $OCF_3$, a CN group, an alkyl group having 1 to 8 carbon atoms, an alkoxy group having 1 to 8 carbon atoms, an alkanoyl group having 1 to 8 carbon atoms, an alkanoyloxy group having 1 to 8 carbon atoms, an alkoxycarbonyl group having 1 to 8 carbon atoms, an alkenyl group having 2 to 8 carbon atoms, an alkenyloxy group having 2 to 8 carbon atoms, an alkenoyl group having 2 to 8 carbon atoms, and an alkenoyloxy group having 2 to 8 carbon atoms.

m4 to m9 each independently represent an integer of 0 to 18; n4 to n9 each independently represent 0 or 1.

(Combined use of plurality of polymerizable liquid crystal compounds)

A powder mixture according to the present invention may be used as a mixture of a plurality of powders composed of the above-described polymerizable liquid crystal compounds.

Regarding a powder composed of a liquid crystal compound having a single polymerizable functional group in a molecule, no such powders may be used, or one or two or more such powders may be used; when such a powder is used, 1 to 10 powders are preferably used, more preferably 2 to 5 powders. Regarding a powder composed of a liquid crystal compound having two polymerizable functional groups, no such powders may be used, or one or two or more such powders may be used; when such a powder is used, 1 to 10 powders are preferably used, more preferably 2 to 5 powders. Regarding a powder composed of a polyfunctional polymerizable liquid crystal compound having three or more polymerizable functional groups, no such powders may be used, or one or two or more such powders may be used; when such a powder is used, 1 to 5 powders may be used, more preferably 1 to 2 powders.

The powder mixture may be prepared with only two or more powders composed of a bifunctional polymerizable liquid crystal compound. However, the powder mixture is preferably prepared with a combination of at least one powder composed of a monofunctional polymerizable liquid crystal compound and at least one powder composed of a bifunctional polymerizable liquid crystal compound and/or a tri- or higher functional polyfunctional polymerizable liquid crystal compound because the resultant powder mixture has enhanced curability, and exhibits high adhesion to a substrate. More preferably, the powder mixture is prepared with a combination of at least one powder composed of a monofunctional polymerizable liquid crystal compound and at least one powder composed of a bifunctional polymerizable liquid crystal compound because suppression of curing shrinkage and adhesion are both achieved.

In particular, when a powder mixture according to the present invention is used to form an optically anisotropic body, in order to further enhance curability, a powder composed of a bifunctional polymerizable liquid crystal compound is preferably used that is a powder composed of a compound selected from (II-2-2-2) to (II-2-2-4) above; alternatively, in the case of a combined use of a powder composed of a monofunctional polymerizable liquid crystal compound and a powder composed of a bifunctional polymerizable liquid crystal compound, the powder mixture is particularly preferably a combination of a powder composed of the compound represented by (II-2-1-1) or (II-2-1-2) above and a powder composed of the compound represented by (II-2-2-2) or (II-2-2-3) above.

Among powders composed of a monofunctional polymerizable liquid crystal compound, preferably used is a powder composed of a compound selected from (II-2-1-1), (II-2-1-3), (II-2-1-5), (II-2-1-9), (II-2-1-10), (II-2-1-11), (11-2-1-12), (II-2-1-15), (11-2-1-23), (II-2-1-27), (II-2-1-28), (11-2-1-29), and (II-2-1-30).

Among powders composed of a bifunctional polymerizable liquid crystal compound, preferably used is a powder composed of a compound selected from (11-2-2-1-1), (II-2-2-1-4), (II-2-2-1-4), (II-2-2-1-5), (II-2-2-1-6), (II-2-2-1-12), (II-2-2-1-15), and (11-2-2-1-22).

Among powders composed of a trifunctional polymerizable liquid crystal compound, preferably used is a powder composed of a compound selected from (II-2-3-1), (II-2-3-2), and (II-2-3-3).

The total amount of the powder composed of a monofunctional polymerizable liquid crystal compound and the powder composed of a bifunctional polymerizable liquid crystal compound is preferably set to, relative to the total amount of powders composed of polymerizable liquid crystal compounds used, 70 mass% to 100 mass%, particularly preferably 80 mass% to 100 mass%.

The total amount of powders composed of a monofunctional polymerizable liquid crystal compound contained is preferably, relative to the total amount of the powders composed of a monofunctional polymerizable liquid crystal compound, powders composed of a bifunctional polymerizable liquid crystal compound, and powders composed of a polyfunctional polymerizable liquid crystal compound, 0 to 90 mass%, more preferably 0 to 85 mass%, particularly preferably 0 to 80 mass%. When the orientability of the finally obtained optically anisotropic body is a priority, the lower limit is preferably set to 5 mass% or more, more preferably set to 10 mass% or more. When the hardness of the coated film of the finally obtained optically anisotropic body is a priority, the upper limit is preferably set to 80 mass% or less, more preferably 70 mass% or less.

The total amount of powders composed of a bifunctional polymerizable liquid crystal compound contained is preferably, relative to the total amount of powders composed of a monofunctional polymerizable liquid crystal compound, powders composed of a bifunctional polymerizable liquid crystal compound, and powders composed of a polyfunctional polymerizable liquid crystal compound, 10 to 100 mass%, more preferably 15 to 85 mass%, particularly preferably 20 to 80 mass%. When the hardness of the coated film of the finally obtained optically anisotropic body is a priority, the lower limit is preferably set to 30 mass% or more, more preferably set to 50 mass% or more. When the orientability of the finally obtained optically anisotropic body is a priority, the upper limit is preferably set to 85 mass% or less, more preferably 80 mass% or less.

The total amount of powders composed of a polyfunctional polymerizable liquid crystal compound contained is preferably, relative to the total amount of powders composed of a monofunctional polymerizable liquid crystal compound, powders composed of a bifunctional polymerizable liquid crystal compound, and powders composed of a polyfunctional polymerizable liquid crystal compound, 0 to 80 mass%, more preferably 0 to 60 mass%, particularly preferably

0 to 40 mass%. When the rigidity of the finally obtained optically anisotropic body is a priority, the lower limit is preferably set to 10 mass% or more, more preferably set to 20 mass% or more, particularly preferably set to 30 mass% or more. On the other hand, when the curing shrinkage of the finally obtained optically anisotropic body is a priority, the upper limit is preferably set to 50 mass% or less, more preferably set to 35 mass% or less, particularly preferably set to 20 mass% or less, 10 mass% or less, 5 mass% or less, or 2 mass% or less.

(Normal dispersion polymerizable liquid crystal compound and reverse dispersion polymerizable liquid crystal compound)

A powder composed of a polymerizable liquid crystal compound according to the present invention may be a powder composed of a normal dispersion polymerizable liquid crystal compound having optical properties in which the birefringence is lower on the long wavelength side than on the short wavelength side in the visible light region, and/or a powder composed of a reverse dispersion polymerizable liquid crystal compound having optical properties in which the birefringence is higher on the long wavelength side than on the short wavelength side in the visible light region.

Here, the normal dispersion polymerizable liquid crystal compound is preferably a polymerizable liquid crystal compound that satisfies Formula (A), and the reverse dispersion polymerizable liquid crystal compound is preferably a polymerizable liquid crystal compound that satisfies Formula (B)

$$Re(450\ nm)/Re(550\ nm) > 1.0 \quad (A)$$

$$Re(450\ nm)/Re(550\ nm) < 1.0 \quad (B)$$

(where Re(450 nm) represents an in-plane retardation at a wavelength of 450 nm of a polymerizable liquid crystal compound in which molecules are oriented on a substrate such that the long axis direction of molecules is substantially parallel to the substrate, and Re(550 nm) represents an in-plane retardation at a wavelength of 550 nm of a polymerizable liquid crystal compound in which molecules are oriented on a substrate such that the long axis direction of molecules is substantially parallel to the substrate). The normal dispersion polymerizable liquid crystal compound corresponds to the above-described monofunctional polymerizable liquid crystal compound, bifunctional polymerizable liquid crystal compound, and polyfunctional polymerizable liquid crystal compound.

(Reverse dispersion polymerizable liquid crystal compound)

A powder mixture according to the present invention may include a powder composed of a reverse dispersion polymerizable liquid crystal compound having at least one polymerizable functional group. The reverse dispersion polymerizable liquid crystal compound may be a publicly known and commonly used compound; the guideline of designing the molecule is that compounds having positive and negative molecular polarizabilities are preferably provided as a mixture, the compound having a positive molecular polarizability preferably has a rod-like molecular shape, and the compound having a negative molecular polarizability preferably has a disc-like molecular shape. In the reverse dispersion polymerizable liquid crystal compound having at least one polymerizable functional group, a mixture of molecular structures of positive and negative molecular polarizabilities is provided preferably by a branched mesogen in the center portion of the molecule; the number of branching is preferably one or two; in particular, the molecular shape preferably has a single branched structure from the mesogen because both of reverse dispersion and a nematic liquid crystal phase tend to be achieved. Specifically, such compounds exhibiting reverse dispersion preferably have structures represented by the following general formulas (1) to (7).

[Chem. 29]

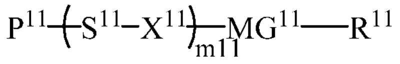
(1)

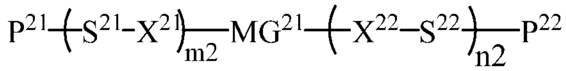
(2)

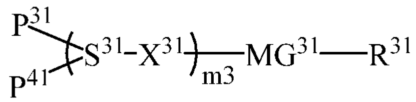
(3)

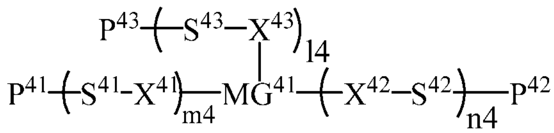
(4)

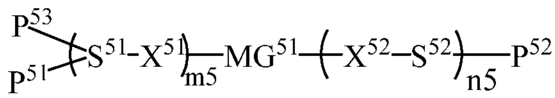
(5)

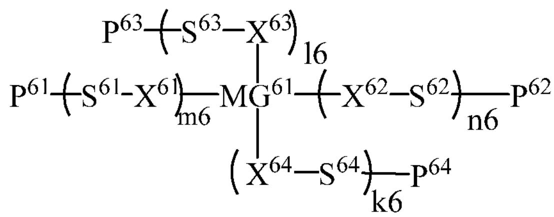
(6)

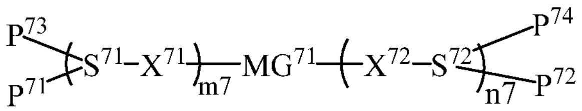
(7)

In the general formulas (1) to (7), $P^{11}$ to $P^{74}$ represent a polymerizable group; $S^{11}$ to $S^{72}$ represent a spacer group or a single bond, where a plurality of each of $S^{11}$ to $S^{72}$ are present, they may be the same or different; $X^{11}$ to $X^{72}$ represent -O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$,$-CF_2O-$, $-OCF_2-$, $-CF_2S-$, $-SCF_2-$, -CH=CH-COO-, -CH=CH-OCO-,-COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, -C≡C-, or a single bond, where a plurality of each of $X^{11}$ to $X^{72}$ are present, they may be the same or different (provided that each P-(S-X)- bond does not include -O-O-) ; $MG^{11}$ to $MG^{71}$ each independently represent a formula (a),

[Chem. 30]

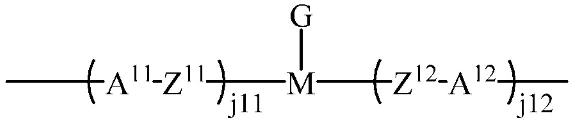
(a)

(where $A^{11}$ and $A^{12}$ each independently represent a 1,4-phenylene group, a 1,4-cyclohexylene group, a pyridine-2,5-diyl group, a pyrimidine-2,5-diyl group, a naphthalene-2,6-diyl group, a naphthalene-1,4-diyl group, a tetrahydronaphthalene-2,6-diyl group, a decahydronaphthalene-2,6-diyl group, or a 1,3-dioxane-2,5-diyl group; such a group may be unsubstituted or may be substituted by at least one $L^1$; when a plurality of each of $A^{11}$ and/or $A^{12}$ are present, they may be the same or different,

$Z^{11}$ and $Z^{12}$ each independently represent -O-, -S-, $-OCH_2-$, $-CH_2O-$, $-CH_2CH_2-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-, -N=CH-, -CH=N-N=CH-, -CF=CF-, -C≡C-, or a single bond; when a plurality of each of $Z^{11}$ and/or $Z^{12}$ are present, they may be the same or different,
M represents a group selected from the following formula (M-1) to formula (M-11)

[Chem. 31]

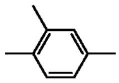
(M-1)

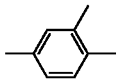
(M-2)

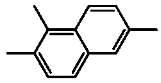
(M-3)

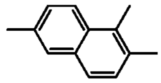
(M-4)

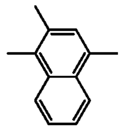
(M-5)

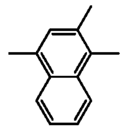
(M-6)

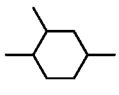
(M-7)

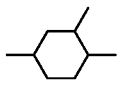
(M-8)

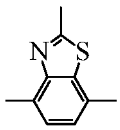
(M-9)

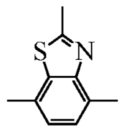
(M-10)

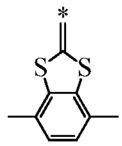
(M-11)

such a group may be unsubstituted or may be substituted by at least one $L^1$,
G represents the following formula (G-1) to formula (G-6)

[Chem. 32]

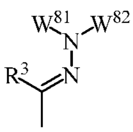
(G-1)

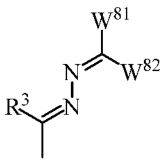
(G-2)

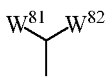
(G-3)

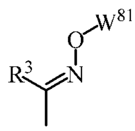
(G-4)

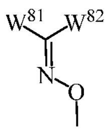
(G-5)

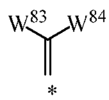
(G-6)

(where $R^3$ represents a hydrogen atom or an alkyl group having 1 to 20 carbon atoms; the alkyl group may be linear or branched; any hydrogen atom in the alkyl group may be substituted by a fluorine atom; a single $-CH_2-$ or two or more non-adjacent $-CH_2-$ in the alkyl group may each be independently substituted by -O-, -S-, -CO-, -COO-, -OCO-,-CO-S-, -S-CO-, -O-CO-O-, -CO-NH-, -NH-CO-, or -C≡C-,
$W^{81}$ represents a group having at least one aromatic group and having 5 to 30 carbon atoms, and the group may be unsubstituted or substituted by at least one $L^1$,
$W^{82}$ represents a hydrogen atom or a linear or branched alkyl group having 1 to 20 carbon atoms in which a single-$CH_2-$ or two or more non-adjacent $-CH_2-$ may each be independently substituted by -O-, -S-, -CO-, -COO-, -OCO-,-CO-S-, -S-CO-, -O-CO-O-, -CO-NH-, -NH-CO-, -CH=CH-COO-,-CH=CH-OCO-, -COO-CH=CH-, -OCO-CH=CH-, -CH=CH-, -CF=CF-, or-C≡C-, and any hydrogen atom in the alkyl group may be substituted by a fluorine atom; alternatively, $W^{82}$ may represent a group having at least one aromatic group and having 2 to 30 carbon atoms; alternatively, $W^{82}$ may represent a group represented by $P^W-(Sp^W-X^W)_{kW}-$, where $P^W$ represents a polymerizable group, preferred polymerizable groups are the same as preferred polymerizable groups for $P^{11}$ to $P^{74}$ below, where $Sp^W$ represents a spacer group or a single bond, preferred spacer groups are the same as preferred spacer groups for $S^{11}$ to $S^{72}$ below, when a plurality of $Sp^W$ are present, they may be the same or different, where $X^W$ represents -O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$,$-CF_2O-$, $-OCF_2-$, $-CF_2S-$, $-SCF_2-$, -CH=CH-COO-, -CH=CH-OCO-,-COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, -C≡C-, or a single bond, when a plurality of $X^W$ are present, they may be the same or different (provided that $P^W-(Sp^W-X^W)_{kW}-$ does not include -O-O- bond), where kW represents an integer of 0 to 10, and $W^{81}$ and $W^{82}$ may be linked together to form the same ring structure,
$W^{83}$ and $W^{84}$ each independently represent a halogen atom, a cyano group, a hydroxy group, a nitro group, a

carboxyl group, a carbamoyloxy group, an amino group, a sulfamoyl group, a group having at least one aromatic group and having 5 to 30 carbon atoms, an alkyl group having 1 to 20 carbon atoms, a cycloalkyl group having 3 to 20 carbon atoms, an alkenyl group having 2 to 20 carbon atoms, a cycloalkenyl group having 3 to 20 carbon atoms, an alkoxy group having 1 to 20 carbon atoms, an acyloxy group having 2 to 20 carbon atoms, or an alkylcarbonyloxy group having 2 to 20 carbon atoms; a single $-CH_2-$ or two or more non-adjacent $-CH_2-$ in the alkyl group, cycloalkyl group, alkenyl group, cycloalkenyl group, alkoxy group, acyloxy group, and alkylcarbonyloxy group may each be independently substituted by -O-, -S-, -CO-, -COO-, -OCO-, -CO-S-, -S-CO-, -O-CO-O-,-CO-NH-, -NH-CO-, or -C≡C-; however, when M above is selected from the formula (M-1) to the formula (M-10), G is selected from the formula (G-1) to the formula (G-5); when M represents the formula (M-11), G represents the formula (G-6),
$L^1$ represents a fluorine atom, a chlorine atom, a bromine atom, an iodine atom, a pentafluorosulfuranyl group, a nitro group, an isocyano group, an amino group, a hydroxyl group, a mercapto group, a methylamino group, a dimethylamino group, a diethylamino group, a diisopropylamino group, a trimethylsilyl group, a dimethylsilyl group, a thioisocyano group, or an alkyl group having 1 to 20 carbon atoms; the alkyl group may be linear or branched, any hydrogen atom may be substituted by a fluorine atom; a single $-CH_2-$ or two or more non-adjacent - $CH_2-$ in the alkyl group may each be independently substituted by a group selected from -O-, -S-, -CO-, -COO-, -OCO-, -CO-S-, -S-CO-, -O-CO-O-, -CO-NH-, -NH-CO-, -CH=CH-COO-, -CH=CH-OCO-, -COO-CH=CH-, -OCO-CH=CH-, -CH=CH-,-CF=CF-, and -C≡C-; when the compound includes a plurality of $L^1$, they may be the same or different,
j11 represents an integer of 1 to 5; j12 represents an integer of 1 to 5; and j11 + j12 represents an integer of 2 to 5.), $R^{11}$ and $R^{31}$ represent a hydrogen atom, a fluorine atom, a chlorine atom, a bromine atom, an iodine atom, a pentafluorosulfuranyl group, a cyano group, a nitro group, an isocyano group, a thioisocyano group, or an alkyl group having 1 to 20 carbon atoms; the alkyl group may be linear or branched; any hydrogen atom in the alkyl group may be substituted by a fluorine atom; a single $-CH_2-$ or two or more non-adjacent $-CH_2-$ in the alkyl group may each be independently substituted by -O-, -S-, -CO-, -COO-, -OCO-,-CO-S-, -S-CO-, -O-CO-O-, -CO-NH-, -NH-CO-, or -C≡C-; m11 represents an integer of 0 to 8; and m2 to m7, n2 to n7, 14 to 16, and k6 each independently represent an integer of 0 to 5.

In the general formula (1) to general formula (7), the polymerizable groups $P^{11}$ to $P^{74}$ preferably represent groups selected from the following formula (P-1) to formula (P-20).

[Chem. 33]

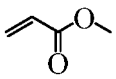
(P-1)

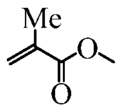
(P-2)

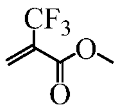
(P-3)

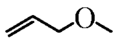
(P-4)

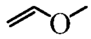
(P-5)

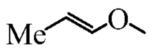
(P-6)

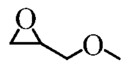
(P-7)

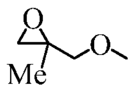
(P-8)

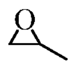
(P-9)

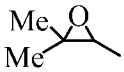
(P-10)

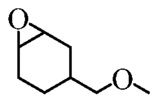
(P-11)

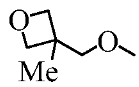
(P-12)

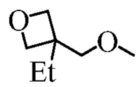
(P-13)

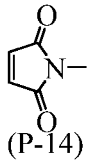
(P-14)

HS—
(P-15)

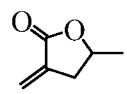
(P-16)

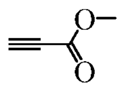
(P-17)

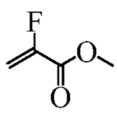
(P-18)

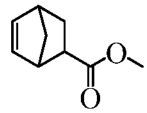
(P-19)

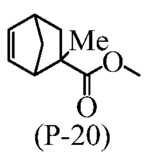
(P-20)

These polymerizable groups are polymerized by radical polymerization, radical addition polymerization, cationic

polymerization, and anionic polymerization. In particular, when the polymerization method is ultraviolet polymerization, preferred is the formula (P-1), formula (P-2), formula (P-3), formula (P-4), formula (P-5), formula (P-7), formula (P-11), formula (P-13), formula (P-15), or formula (P-18); more preferred is the formula (P-1), formula (P-2), formula (P-7), formula (P-11), or formula (P-13); still more preferred is the formula (P-1), formula (P-2), or the formula (P-3); particularly preferred is the formula (P-1) or formula (P-2).

In the general formula (1) to general formula (7), $S^{11}$ to $S^{72}$ represent a spacer group or a single bond; when there are a plurality of each of $S^{11}$ to $S^{72}$, they may be the same or different. The spacer group preferably represents an alkylene group having 1 to 20 carbon atoms in which a single $-CH_2-$ or two or more non-adjacent $-CH_2-$ may each be independently substituted by -O-, -COO-, -OCO-, -OCO-O-,-CO-NH-, -NH-CO-, -CH=CH-, -C≡C-, or the following formula (S-1).

[Chem. 34]

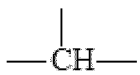

(S-1)

From the viewpoint of high availability of raw materials and ease of synthesis, more preferably, when a plurality of each of $S^{11}$ to $S^{72}$ are present, they may be the same or different and may each independently represent a single bond or an alkylene group having 1 to 10 carbon atoms in which a single $-CH_2-$ or two or more non-adjacent $-CH_2-$ may each be independently substituted by -O-, -COO-, or -OCO-; still more preferably, $S^{11}$ to $S^{72}$ each independently represent an alkylene group having 1 to 10 carbon atoms or a single bond; particularly preferably, when a plurality of each of $S^{11}$ to $S^{72}$ are present, they may be the same or different, and each independently represent an alkylene group having 1 to 8 carbon atoms.

In the general formula (1) to general formula (7), $X^{11}$ to $X^{72}$ represent -O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$,$-CF_2O-$, $-OCF_2-$, $-CF_2S-$, $-SCF_2-$, -CH=CH-COO-, -CH=CH-OCO-,-COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, -C≡C-, or a single bond; when a plurality of each of $X^{11}$ to $X^{72}$ are present, they may be the same or different (provided that P-(S-X)-bond does not include -O-O-). From the viewpoint of high availability of raw materials and ease of synthesis, when a plurality of each of $X^{11}$ to $X^{72}$ are present, they may be the same or different, and they preferably each independently represent -O-, -S-, $-OCH_2-$, $-CH_2O-$, -COO-, -OCO-, -CO-S-, -S-CO-, -O-CO-O-, -CO-NH-, -NH-CO-, $-COO-CH_2CH_2-$, $-OCO-CH_2CH_2-$, $-CH_2CH_2-COO-$, $-CH_2CH_2-OCO-$, or a single bond; more preferably each independently represent -O-, $-OCH_2-$, $-CH_2O-$, -COO-,-OCO-, $-COO-CH_2CH_2-$, $-OCO-CH_2CH_2-$, $-CH_2CH_2-COO-$, $-CH_2CH_2-OCO-$, or a single bond; particularly preferably, when a plurality of each of $X^{11}$ to $X^{72}$ are present, they may be the same or different, and each independently represent -O-, -COO-,-OCO-, or a single bond.

In the general formula (1) to general formula (7), $A^{11}$ and $A^{12}$ each independently represent a 1,4-phenylene group, a 1,4-cyclohexylene group, a pyridine-2,5-diyl group, a pyrimidine-2,5-diyl group, a naphthalene-2,6-diyl group, a naphthalene-1,4-diyl group, a tetrahydronaphthalene-2,6-diyl group, a decahydronaphthalene-2,6-diyl group, or a 1,3-dioxane-2,5-diyl group; such a group may be unsubstituted or may be substituted by at least one L; when a plurality of each of $A^{11}$ and/or $A^{12}$ are present, they may be the same or different. From the viewpoint of high availability of raw materials and ease of synthesis, $A^{11}$ and $A^{12}$ preferably each independently represent a 1,4-phenylene group, a 1,4-cyclohexylene group, or a naphthalene-2,6-diyl that may be unsubstituted or may be substituted by at least one $L^1$; more preferably, each independently represent a group selected from the following formula (A-1) to formula (A-11)

[Chem. 35]

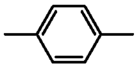
(A-1)
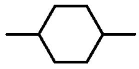
(A-2)
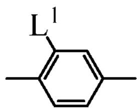
(A-3)
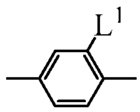
(A-4)
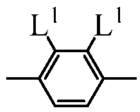
(A-5)
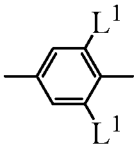
(A-6)
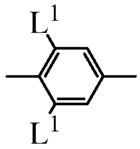
(A-7)
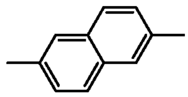
(A-8)
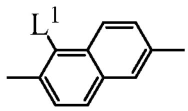
(A-9)
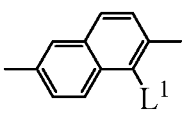
(A-10)
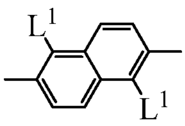
(A-11)

still more preferably, each independently represent a group selected from the formula (A-1) to formula (A-8); particularly preferably, each independently represent a group selected from the formula (A-1) to formula (A-4).

In the general formula (1) to general formula (7), $Z^{11}$ and $Z^{12}$ each independently represent -O-, -S-, -$OCH_2$-, -$CH_2O$-, -$CH_2CH_2$-, -CO-, -COO-, -OCO-, -CO-S-, -S-CO-, -O-CO-O-, -CO-NH-, -NH-CO-, -OCO-NH-, -NH-COO-, -NH-CO-NH-, -NH-O-, -O-NH-, -$SCH_2$-, -$CH_2S$-, -$CF_2O$-, -$OCF_2$-, -$CF_2S$-, -$SCF_2$-, -CH=CH-COO-,-CH=CH-OCO-, -COO-CH=CH-, -OCO-CH=CH-, -COO-$CH_2CH_2$-, -OCO-$CH_2CH_2$-, -$CH_2CH_2$-COO-, -$CH_2CH_2$-OCO-, -COO-$CH_2$-, -OCO-$CH_2$-,-$CH_2$-COO-, -$CH_2$-OCO-, -CH=CH-, -N=N-, -CH=N-, -N=CH-, -CH=N-N=CH-, -CF=CF-, -C≡C-, or a single bond; when a plurality of each of $Z^{11}$ and/or $Z^{12}$ are present, they may be the same or different. From the viewpoint of liquid crystallinity of the compound, high availability of raw materials, and ease of synthesis, $Z^{11}$ and $Z^{12}$ preferably each independently represent a single bond, -$OCH_2$-, -$CH_2O$-, -COO-, -OCO-, -$CF_2O$-, -$OCF_2$-, -$CH_2CH_2$-, -$CF_2CF_2$-, -CH=CH-COO-, -CH=CH-OCO-, -COO-CH=CH-, -OCO-CH=CH-, -COO-$CH_2CH_2$-, -OCO-$CH_2CH_2$-, -$CH_2CH_2$-COO-, -$CH_2CH_2$-OCO-, -CH=CH-, -CF=CF-, -C≡C-, or a single bond; more preferably, each independently represent -$OCH_2$-, -$CH_2O$-,-$CH_2CH_2$-, -COO-, -OCO-, -COO-$CH_2CH_2$-, -OCO-$CH_2CH_2$-, -$CH_2CH_2$-COO-, -$CH_2CH_2$-OCO-, -CH=CH-, -C≡C-, or a single bond; still more preferably, each independently represent -$CH_2CH_2$-, -COO-,-OCO-, -COO-$CH_2CH_2$-, -OCO-$CH_2CH_2$-, -$CH_2CH_2$-COO-, -$CH_2CH_2$-OCO-, or a single bond; particularly preferably, each independently represent -$CH_2CH_2$-, -COO-, -OCO-, or a single bond.

In the general formula (1) to general formula (7), M represents a group selected from the following formula (M-1) to formula (M-11)

[Chem. 36]

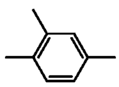
(M-1)
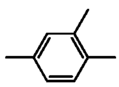
(M-2)
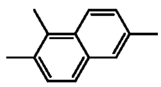
(M-3)
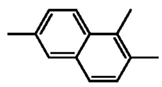
(M-4)
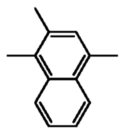
(M-5)
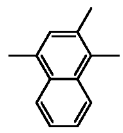
(M-6)
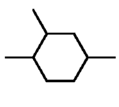
(M-7)
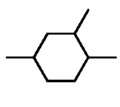
(M-8)
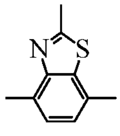
(M-9)
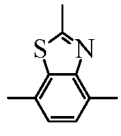
(M-10)
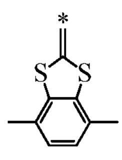
(M-11)

and such a group may be unsubstituted or may be substituted by at least one $L^1$. From the viewpoint of high availability of raw materials and ease of synthesis, M's preferably each independently represent a group selected from the formula (M-1) or formula (M-2) that may be unsubstituted or may be substituted by at least one $L^1$, and the formula (M-3) to formula (M-6) that are unsubstituted; more preferably, represent a group selected from the formula (M-1) or formula (M-2) that may be unsubstituted or may be substituted by at least one $L^1$; particularly preferably, a group selected from the formula (M-1) or formula (M-2) that are unsubstituted.

In the general formula (1) to general formula (7), $R^{11}$ and $R^{31}$ represent a hydrogen atom, a fluorine atom, a chlorine atom, a bromine atom, an iodine atom, a pentafluorosulfuranyl group, a cyano group, a nitro group, an isocyano group, a thioisocyano group, or a linear or branched alkyl group having 1 to 20 carbon atoms in which a single $-CH_2-$ or two or more non-adjacent $-CH_2-$ may each be independently substituted by -O-, -S-, -CO-, -COO-, -OCO-,-CO-S-, -S-CO-, -O-CO-O-, -CO-NH-, -NH-CO-, or -C≡C-; any hydrogen atom in the alkyl group may be substituted by a fluorine atom. From the viewpoint of liquid crystallinity and ease of synthesis, $R^1$ preferably represents a hydrogen atom, a fluorine atom, a chlorine atom, a cyano group, or a linear or branched alkyl group having 1 to 12 carbon atoms in which a single $-CH_2-$ or two or more non-adjacent $-CH_2-$ may each be independently substituted by -O-, -COO-, -OCO-, or-O-CO-O-; more preferably, represents a hydrogen atom, a fluorine atom, a chlorine atom, a cyano group, or a linear alkyl group or a linear alkoxy group having 1 to 12 carbon atoms; particularly preferably, a linear alkyl group or a linear alkoxy group having 1 to 12 carbon atoms.

In the general formula (1) to general formula (7), G represents a group selected from the formula (G-1) to formula (G-6).

[Chem. 37]

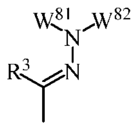
(G-1)

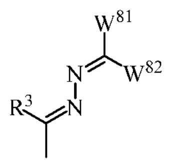
(G-2)

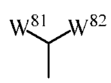
(G-3)

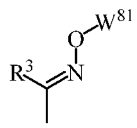
(G-4)

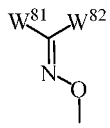
(G-5)

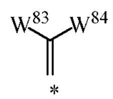
(G-6)

In the formulas, $R^3$ represents a hydrogen atom or an alkyl group having 1 to 20 carbon atoms; the alkyl group may be linear or branched; any hydrogen atom in the alkyl group may be substituted by a fluorine atom; a single $-CH_2-$ or two or more non-adjacent $-CH_2-$ in the alkyl group may each be independently substituted by -O-, -S-, -CO-, -COO-, -OCO-,-CO-S-, -S-CO-, -O-CO-O-, -CO-NH-, -NH-CO-, or -C≡C-,

$W^{81}$ represents a group having at least one aromatic group and having 5 to 30 carbon atoms, and the group may be unsubstituted or may be substituted by at least one $L^1$,

$W^{82}$ represents a hydrogen atom or a linear or branched alkyl group having 1 to 20 carbon atoms in which a single-$CH_2$- or two or more non-adjacent $-CH_2-$ may each be independently substituted by -O-, -S-, -CO-, -COO-, -OCO-,-CO-S-, -S-CO-, -O-CO-O-, -CO-NH-, -NH-CO-, -CH=CH-COO-,-CH=CH-OCO-, -COO-CH=CH-, -OCO-CH=CH-, -CH=CH-, -CF=CF-, or-C≡C-; and any hydrogen atom in the alkyl group may be substituted by a fluorine atom. Alternatively, $W^{82}$ may represent a group having at least one aromatic group and having 2 to 30 carbon atoms. Alternatively, $W^{82}$ may represent a group represented by $P^W-(Sp^W-X^W)_{kW}-$, where $P^W$ represents a polymerizable group, preferred polymerizable groups are the same as preferred polymerizable groups for $P^{11}$ to $P^{74}$ below; $Sp^W$ represents a spacer group or a single bond, preferred spacer groups are the same as preferred spacer groups for $S^{11}$ to $S^{72}$ below, and, when a plurality of $Sp^W$ are present, they may be the same or different; $X^W$ represents-O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$,$-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-,-CH=N-N=CH-, -CF=CF-, -C≡C-, or a single bond, and when a plurality of $X^W$ are present, they may be the same or different (provided that $P^W-(Sp^W-X^W)_{kw}-$ does not include -O-O-bond); kW represents an integer of 0 to 10; and $W^{81}$ and $W^{82}$ may together form a ring structure.

The aromatic group in $W^{81}$ may be an aromatic hydrocarbon group or a heteroaromatic group, or may include both of these groups. Such aromatic groups may be linked via a single bond or a linkage group (-OCO-, -COO-, -CO-, or -O-), or may form a condensed ring. $W^{81}$ may include, in addition to an aromatic group, an acyclic structure and/or a cyclic structure other than aromatic groups. From the viewpoint of high availability of raw materials and ease of synthesis, such aromatic groups included in $W^{81}$ are preferably groups represented by the following formula (W-1) to formula (W-19) that may be unsubstituted or may be substituted by at least one $L^1$

[Chem. 38]

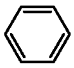
(W-1)
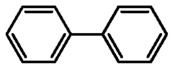
(W-2)
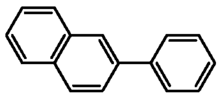
(W-3)
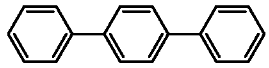
(W-4)
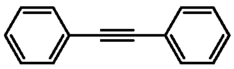
(W-5)
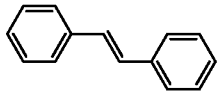
(W-6)
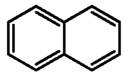
(W-7)
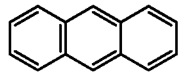
(W-8)
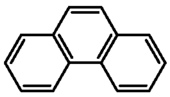
(W-9)
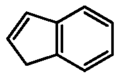
(W-10)
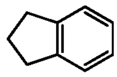
(W-11)
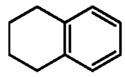
(W-12)
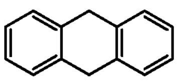
(W-13)
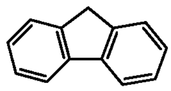
(W-14)
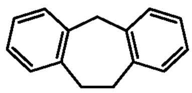
(W-15)
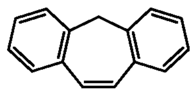
(W-16)
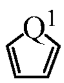
(W-17)
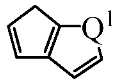
(W-18)
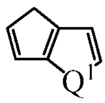
(W-19)

(in the formulas, such groups may have, at any position, the point of attachment; two or more aromatic groups selected from these groups may be linked together via a single bond to form a group; $Q^1$ represents -O-, -S-, -$NR^5$-(where $R^5$ represents a hydrogen atom or an alkyl group having 1 to 8 carbon atoms), or -CO-. In such aromatic groups, -CH= may each be independently substituted by -N=, and -$CH_2$- may each be independently substituted by -O-, -S-, -$NR^4$- (where $R^4$ represents a hydrogen atom or an alkyl group having 1 to 8 carbon atoms), or -CO-, provided that no -O-O- bond is included). The groups represented by the formula (W-1) are preferably groups selected from those represented by the following formula (W-1-1) to formula (W-1-8) that may be unsubstituted or may be substituted by at least one $L^2$

[Chem. 39]

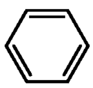
(W-1-1)
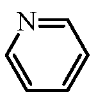
(W-1-2)
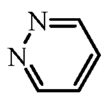
(W-1-3)
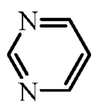
(W-1-4)
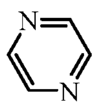
(W-1-5)
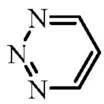
(W-1-6)
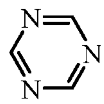
(W-1-7)
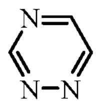
(W-1-8)

(in the formulas, such groups may have, at any position, the point of attachment). The groups represented by the formula (W-7) are preferably groups selected from those represented by the following formula (W-7-1) to formula (W-7-7) that may be unsubstituted or may be substituted by at least one $L^1$

[Chem. 40]

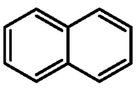 (W-7-1) 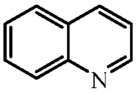 (W-7-2) 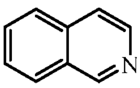 (W-7-3) 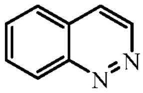 (W-7-4) 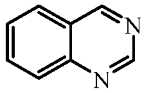 (W-7-5)

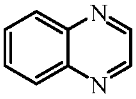 (W-7-6) 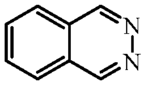 (W-7-7)

(in the formulas, such groups may have, at any position, the point of attachment). The groups represented by the formula (W-10) are preferably groups selected from those represented by the following formula (W-10-1) to formula (W-10-8) that may be unsubstituted or may be substituted by at least one $L^1$

[Chem. 41]

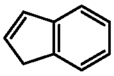 (W-10-1) 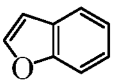 (W-10-2) 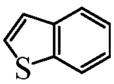 (W-10-3) 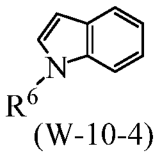 (W-10-4) 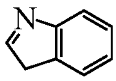 (W-10-5)

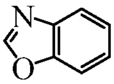 (W-10-6) 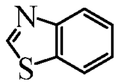 (W-10-7) 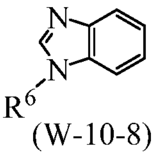 (W-10-8)

(in the formulas, such groups may have, at any position, the point of attachment, and $R^6$ represents a hydrogen atom or an alkyl group having 1 to 8 carbon atoms). The groups represented by the formula (W-11) are preferably groups selected from those represented by the following formula (W-11-1) to formula (W-11-13) that may be unsubstituted or may be substituted by at least one $L^1$

[Chem. 42]

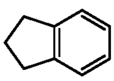 (W-11-1) 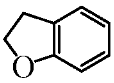 (W-11-2) 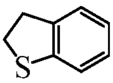 (W-11-3) 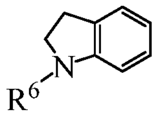 (W-11-4) 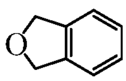 (W-11-5)

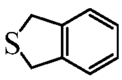 (W-11-6) 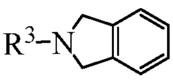 (W-11-7) 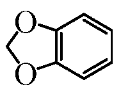 (W-11-8) 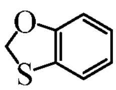 (W-11-9) 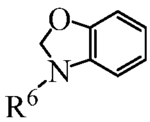 (W-11-10)

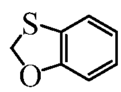 (W-11-11) 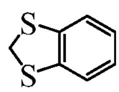 (W-11-12) 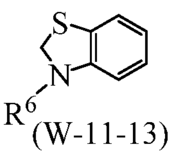 (W-11-13)

(in the formulas, such groups may have, at any position, the point of attachment, and $R^6$ represents a hydrogen atom or an alkyl group having 1 to 8 carbon atoms). The groups represented by the formula (W-12) are preferably groups selected from those represented by the following formula (W-12-1) to formula (W-12-19) that may be unsubstituted or may be substituted by at least one $L^1$

[Chem. 43]

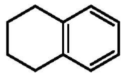
(W-12-1)
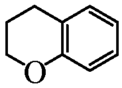
(W-12-2)
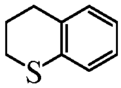
(W-12-3)
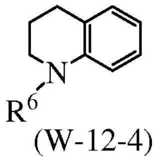
(W-12-4)
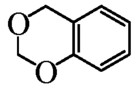
(W-12-5)
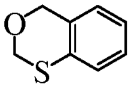
(W-12-6)
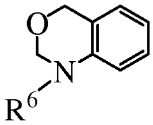
(W-12-7)
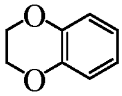
(W-12-8)
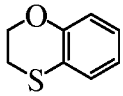
(W-12-9)
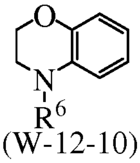
(W-12-10)
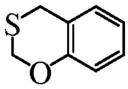
(W-12-11)
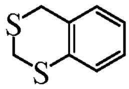
(W-12-12)
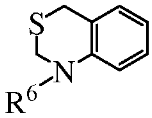
(W-12-13)
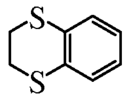
(W-12-14)
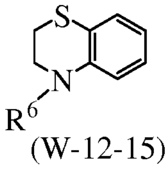
(W-12-15)
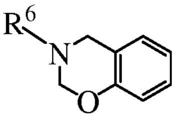
(W-12-16)
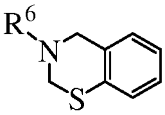
(W-12-17)
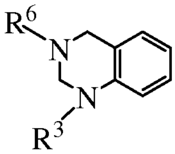
(W-12-18)
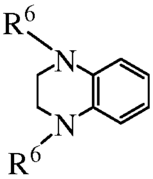
(W-12-19)

(in the formulas, such groups may have, at any position, the point of attachment; $R^6$ represents a hydrogen atom or an alkyl group having 1 to 8 carbon atoms; when a plurality of $R^6$'s are present, they may be the same or different). The groups represented by the formula (W-13) are preferably groups selected from those represented by the following formula (W-13-1) to formula (W-13-10) that may be unsubstituted or may be substituted by at least one $L^1$

[Chem. 44]

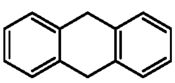
(W-13-1)
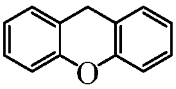
(W-13-2)
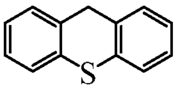
(W-13-3)
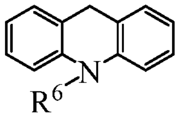
(W-13-4)
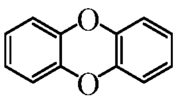
(W-13-5)
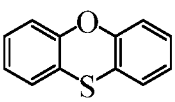
(W-13-6)
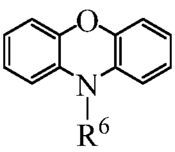
(W-13-7)
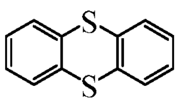
(W-13-8)
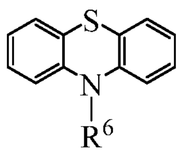
(W-13-9)
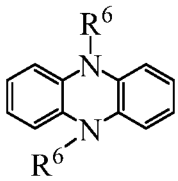
(W-13-10)

(in the formulas, such groups may have, at any position, the point of attachment; $R^6$ represents a hydrogen atom or an alkyl group having 1 to 8 carbon atoms; when a plurality of $R^6$'s are present, they may be the same or different). The groups represented by the formula (W-14) are preferably groups selected from those represented by the following formula (W-14-1) to formula (W-14-4) that may be unsubstituted or may be substituted by at least one $L^1$

[Chem. 45]

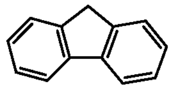
(W-14-1)
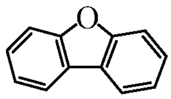
(W-14-2)
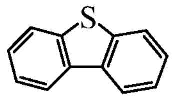
(W-14-3)
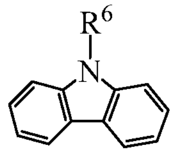
(W-14-4)

(in the formulas, such groups may have, at any position, the point of attachment, and $R^6$ represents a hydrogen atom or an alkyl group having 1 to 8 carbon atoms). The groups represented by the formula (W-15) are preferably groups selected from those represented by the following formula (W-15-1) to formula (W-15-18) that may be unsubstituted or may be substituted by at least one $L^1$

[Chem. 46]

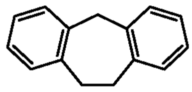
(W-15-1)
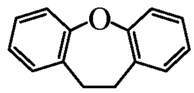
(W-15-2)
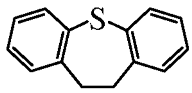
(W-15-3)
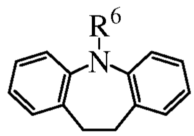
(W-15-4)
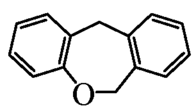
(W-15-5)
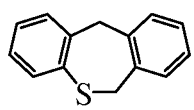
(W-15-6)
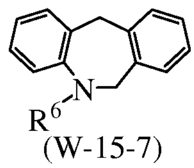
(W-15-7)
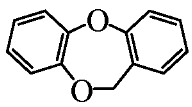
(W-15-8)
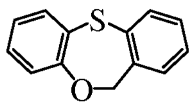
(W-15-11)
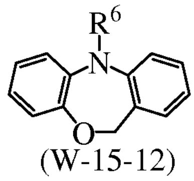
(W-15-12)
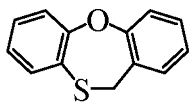
(W-15-13)
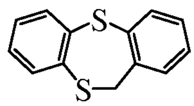
(W-15-14)
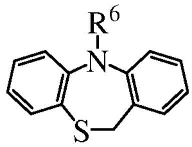
(W-15-15)
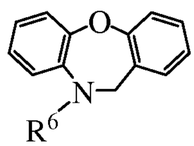
(W-15-16)
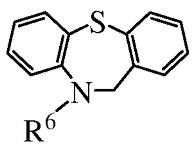
(W-15-17)
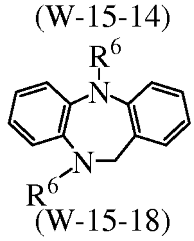
(W-15-18)

(in the formulas, such groups may have, at any position, the point of attachment, $R^6$ represents a hydrogen atom or an alkyl group having 1 to 8 carbon atoms). The groups represented by the formula (W-16) are preferably groups selected from those represented by the following formula (W-16-1) to formula (W-16-4) that may be unsubstituted or may be substituted by at least one $L^1$

[Chem. 47]

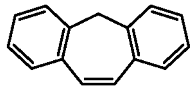
(W-16-1)
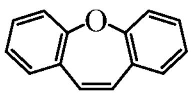
(W-16-2)
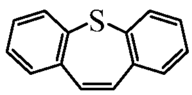
(W-16-3)
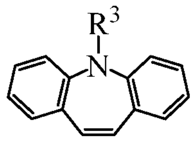
(W-16-4)

(in the formulas, such groups may have, at any position, the point of attachment, $R^6$ represents a hydrogen atom or an alkyl group having 1 to 8 carbon atoms). The groups represented by the formula (W-17) are preferably groups

selected from those represented by the following formula (W-17-1) to formula (W-17-6) that may be unsubstituted or may be substituted by at least one $L^1$

[Chem. 48]

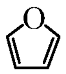 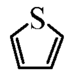 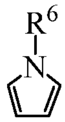 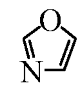 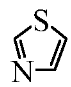 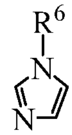

(W-17-1) (W-17-2) (W-17-3) (W-17-4) (W-17-5) (W-17-6)

(in the formulas, such groups may have, at any position, the point of attachment, $R^6$ represents a hydrogen atom or an alkyl group having 1 to 8 carbon atoms). The groups represented by the formula (W-18) are preferably groups selected from those represented by the following formula (W-18-1) to formula (W-18-6) that may be unsubstituted or may be substituted by at least one $L^1$

[Chem. 49]

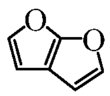 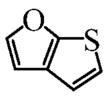 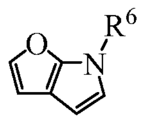 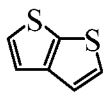 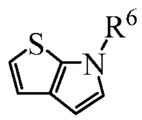 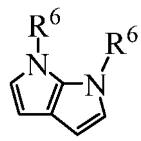

(W-18-1) (W-18-2) (W-18-3) (W-18-4) (W-18-5) (W-18-6)

(in the formulas, such groups may have, at any position, the point of attachment; $R^6$ represents a hydrogen atom or an alkyl group having 1 to 8 carbon atoms; when a plurality of $R^6$'s are present, they may be the same or different). The groups represented by the formula (W-19) are preferably groups selected from those represented by the following formula (W-19-1) to formula (W-19-9) that may be unsubstituted or may be substituted by at least one $L^1$

[Chem. 50]

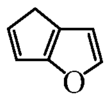 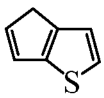 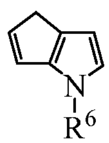 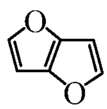 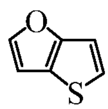 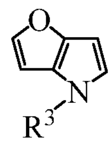

(W-19-1) (W-19-2) (W-19-3) (W-19-4) (W-19-5) (W-19-6)

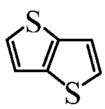 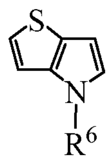 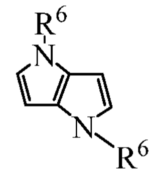

(W-19-7) (W-19-8) (W-19-9)

(in the formulas, such groups may have, at any position, the point of attachment; $R^6$ represents a hydrogen atom or an alkyl group having 1 to 8 carbon atoms; when a plurality of $R^6$'s are present, they may be the same or different). More preferably, the aromatic group included in $W^{81}$ is a group selected from the groups represented by the formula (W-1-1), formula (W-7-1), formula (W-7-2), formula (W-7-7), formula (W-8), formula (W-10-6), formula (W-10-7), formula (W-10-8), formula (W-11-8), formula (W-11-9), formula (W-11-10), formula (W-11-11), formula (W-11-12), and formula (W-11-13) that may be unsubstituted or may be substituted by at least one $L^1$; particularly preferably, the aromatic group included in $W^{81}$ is a group selected from the groups represented by the formula (W-1-1), formula (W-7-1), formula (W-7-2), formula (W-7-7), formula (W-10-6), formula (W-10-7), and formula (W-10-8) that may be unsubstituted or may

be substituted by at least one $L^1$. In particular, $W^{81}$ preferably represents a group selected from the groups represented by the following formula (W-a-1) to formula (W-a-6)

[Chem. 51]

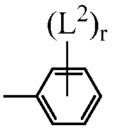
(W-a-1)

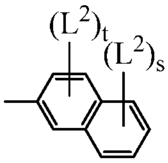
(W-a-2)

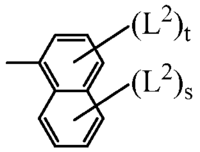
(W-a-3)

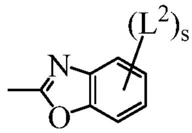
(W-a-4)

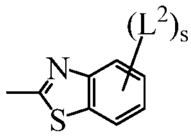
(W-a-5)

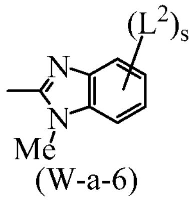
(W-a-6)

(in the formulas, r represents an integer of 0 to 5; s represents an integer of 0 to 4; and t represents an integer of 0 to 3).

More preferably, from the viewpoint of high availability of raw materials and ease of synthesis, $W^{82}$ represents a hydrogen atom, a linear or branched alkyl group having 1 to 20 carbon atoms in which any hydrogen atom in the group may be substituted by a fluorine atom, and a single $-CH_2-$ or two or more non-adjacent $-CH_2-$ may each be independently substituted by -O-, -CO-, -COO-, -OCO-, -O-COO-, -CH=CH-COO-, -CH=CH-OCO-, -COO-CH=CH-, -OCO-CH=CH-, -CH=CH-, -CF=CF-, or -C≡C-, or a group represented by $P^W-(Sp^W-X^W)_{kW}-$; still more preferably, $W^{82}$ represents a hydrogen atom, a linear or branched alkyl group having 1 to 20 carbon atoms in which any hydrogen atom in the group may be substituted by a fluorine atom, and a single $-CH_2-$ or two or more non-adjacent $-CH_2-$may each be independently substituted by -O-, -CO-, -COO-, or -OCO-, or a group represented by $P^W-(Sp^W-X^W)_{kw}-$; even more preferably, $W^{82}$ represents a hydrogen atom, a linear alkyl group having 1 to 12 carbon atoms in which a single $-CH_2-$ or two or more non-adjacent $-CH_2-$ may each be independently substituted by -O-, or a group represented by $P^W-(Sp^W-X^W)_{kW}-$.

When $W^{82}$ represents a group having at least one aromatic group and having 2 to 30 carbon atoms, $W^{82}$ preferably represents a group selected from the groups represented by the formula (W-1) to formula (W-18). In this case, more preferred structures are the same as above.

When $W^{82}$ represents a group represented by $P^W-(Sp^W-X^W)_{kW}-$, preferred structures of the groups represented by $P^W$, $Sp^W$, and $X^W$ are the same as the above-described preferred structures of the groups represented by $P^{11}$ to $P^{74}$, $S^{11}$ to $S^{72}$, and $X^{11}$ to $X^{72}$. In addition, kW preferably represents an integer of 0 to 3, more preferably 0 or 1.

When $W^{81}$ and $W^{82}$ together form a ring structure, the cyclic group represented by $-NW^{81}W^{82}$ is preferably a group selected from the groups represented by the following formula (W-b-1) to formula (W-b-42) that may be unsubstituted or may be substituted by at least one $L^1$

[Chem. 52]

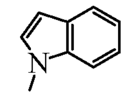
(W-b-1)
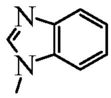
(W-b-2)
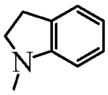
(W-b-3)
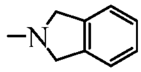
(W-b-4)
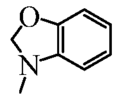
(W-b-5)
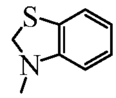
(W-b-6)
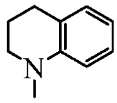
(W-b-7)
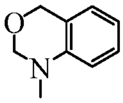
(W-b-8)
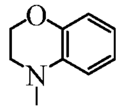
(W-b-9)
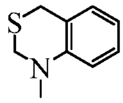
(W-b-9)
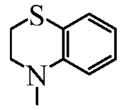
(W-b-10)
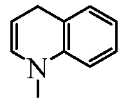
(W-b-11)
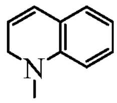
(W-b-11)
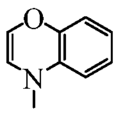
(W-b-12)
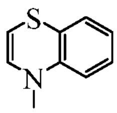
(W-b-13)
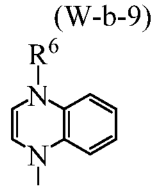
(W-b-14)
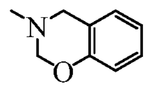
(W-b-15)
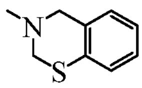
(W-b-16)
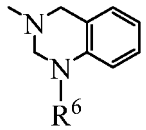
(W-b-17)
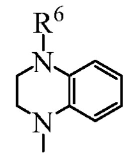
(W-b-18)
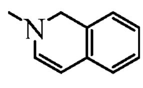
(W-b-19)

[Chem. 53]

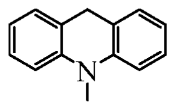
(W-b-20)
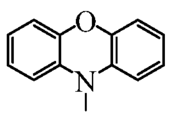
(W-b-21)
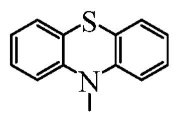
(W-b-22)
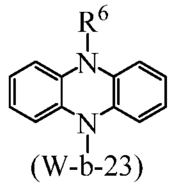
(W-b-23)
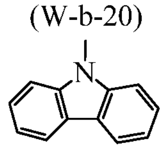
(W-b-24)
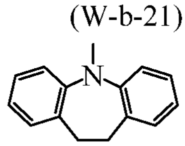
(W-b-25)
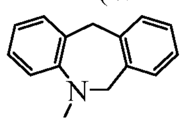
(W-b-26)
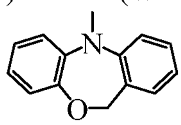
(W-b-27)
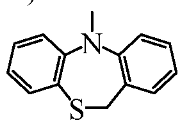
(W-b-28)
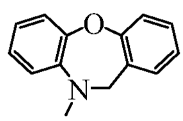
(W-b-29)
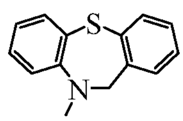
(W-b-30)
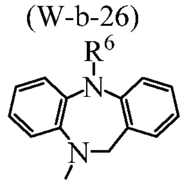
(W-b-31)
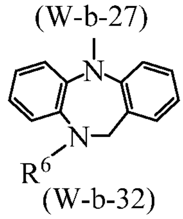
(W-b-32)
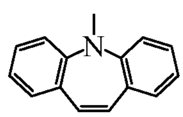
(W-b-33)
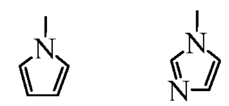
(W-b-34) (W-b-35)
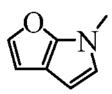
(W-b-36)
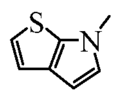
(W-b-37)
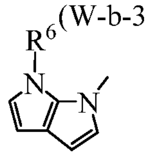
(W-b-38)
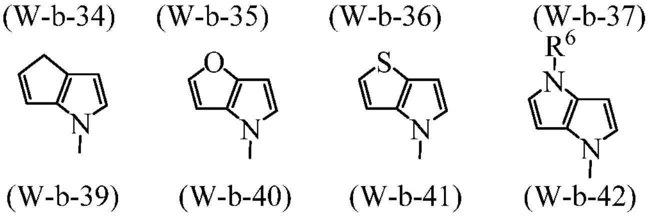
(W-b-39) (W-b-40) (W-b-41) (W-b-42)

(in the formulas, $R^6$ represents a hydrogen atom or an alkyl group having 1 to 8 carbon atoms); particularly

preferably, from the viewpoint of high availability of raw materials and ease of synthesis, the cyclic group represented by $-NW^{81}W^{82}$ is a group selected from the groups represented by the formula (W-b-20), formula (W-b-21), formula (W-b-22), formula (W-b-23), formula (W-b-24), formula (W-b-25), and formula (W-b-33) that may be unsubstituted or may be substituted by at least one $L^1$.

Another cyclic group represented by $=CW^{81}W^{82}$ is preferably a group selected from the groups represented by the following formula (W-c-1) to formula (W-c-81) that may be unsubstituted or may be substituted by at least one $L^1$

[Chem. 54]

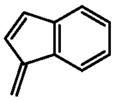
(W-c-1)
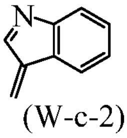
(W-c-2)
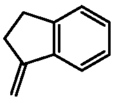
(W-c-3)
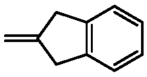
(W-c-4)
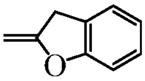
(W-c-5)
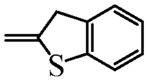
(W-c-6)

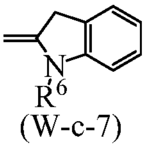
(W-c-7)
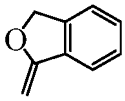
(W-c-8)
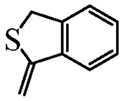
(W-c-9)
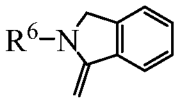
(W-c-9)
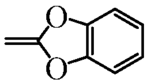
(W-c-10)
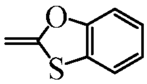
(W-c-11)

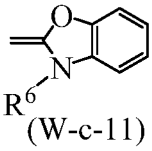
(W-c-11)
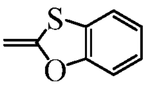
(W-c-12)
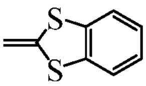
(W-c-13)
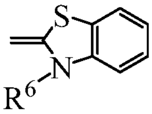
(W-c-14)
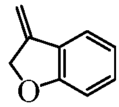
(W-c-15)
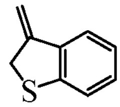
(W-c-16)

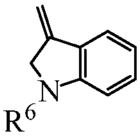
(W-c-17)
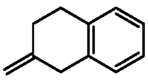
(W-c-18)
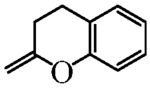
(W-c-19)
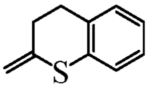
(W-c-20)
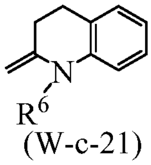
(W-c-21)
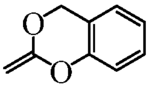
(W-c-22)

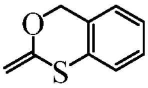
(W-c-23)
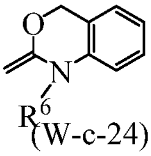
(W-c-24)
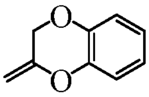
(W-c-25)
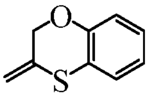
(W-c-26)
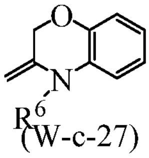
(W-c-27)
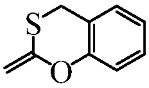
(W-c-28)

[Chem. 55]

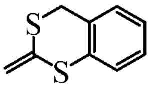
(W-c-29)
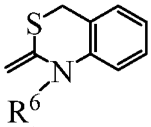
(W-c-30)
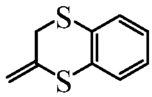
(W-c-31)
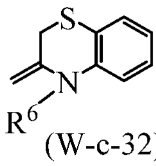
(W-c-32)
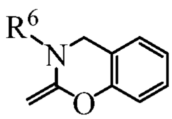
(W-c-33)
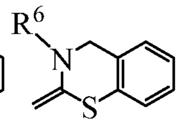
(W-c-34)

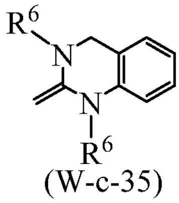
(W-c-35)
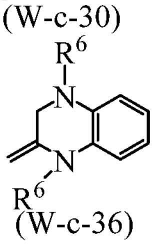
(W-c-36)
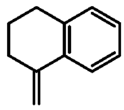
(W-c-37)
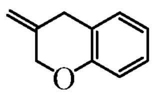
(W-c-38)
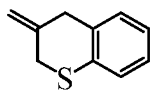
(W-c-39)
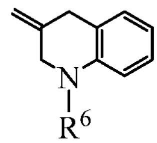
(W-c-40)

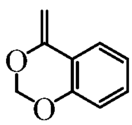
(W-c-41)
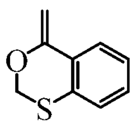
(W-c-42)
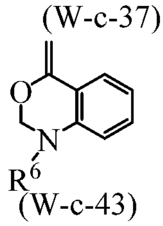
(W-c-43)
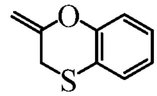
(W-c-44)
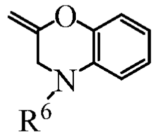
(W-c-45)
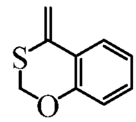
(W-c-46)

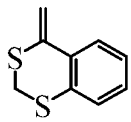
(W-c-47)
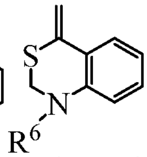
(W-c-48)
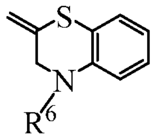
(W-c-49)
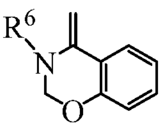
(W-c-50)
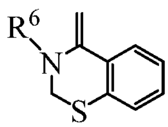
(W-c-51)
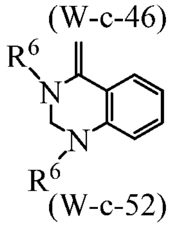
(W-c-52)

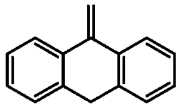
(W-c-53)
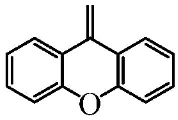
(W-c-54)
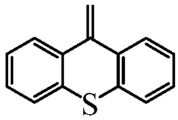
(W-c-55)
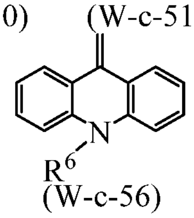
(W-c-56)
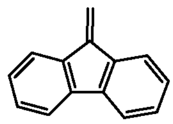
(W-c-57)

[Chem. 56]

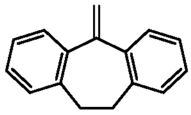 (W-c-58) 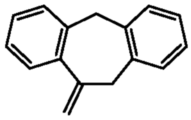 (W-c-59) 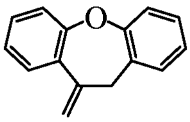 (W-c-60) 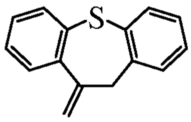 (W-c-61) 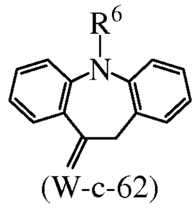 (W-c-62)

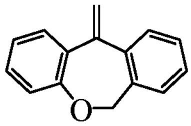 (W-c-63) 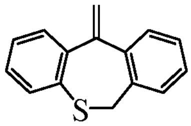 (W-c-64) 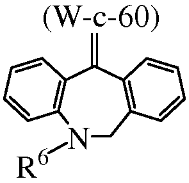 (W-c-65) 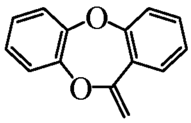 (W-c-66) 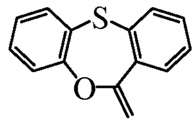 (W-c-67)

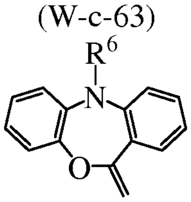 (W-c-68) 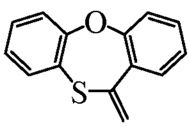 (W-c-69) 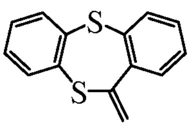 (W-c-70) 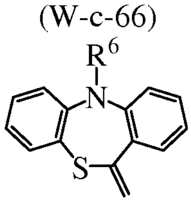 (W-c-71) 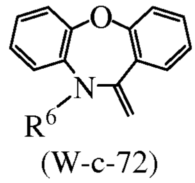 (W-c-72)

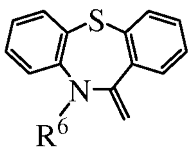 (W-c-73) 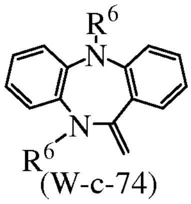 (W-c-74) 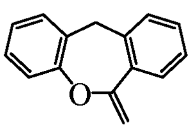 (W-c-75) 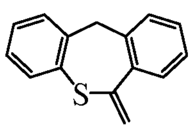 (W-c-76) 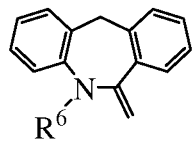 (W-c-77)

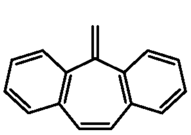 (W-c-78) 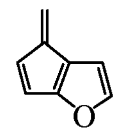 (W-c-79) 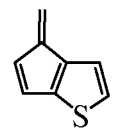 (W-c-80) 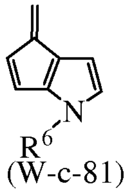 (W-c-81)

(in the formulas, $R^6$ represents a hydrogen atom or an alkyl group having 1 to 8 carbon atoms; when a plurality of $R^6$'s are present, they may be the same or different); particularly preferably, from the viewpoint of high availability of raw materials and ease of synthesis, the cyclic group represented by $=CW^{81}W^{82}$ is a group selected from the groups represented by the formula (W-c-11), formula (W-c-12), formula (W-c-13), formula (W-c-14), formula (W-c-53), formula (W-c-54), formula (W-c-55), formula (W-c-56), formula (W-c-57), and formula (W-c-78) that may be unsubstituted or may be substituted by at least one L.

The total number of $\pi$ electrons included in $W^{81}$ and $W^{82}$ is preferably 4 to 24 from the viewpoint of wavelength dispersibility, storage stability, liquid crystallinity, and ease of synthesis.

$W^{83}$ and $W^{84}$ each independently represent a halogen atom, a cyano group, a hydroxy group, a nitro group, a carboxyl group, a carbamoyloxy group, an amino group, a sulfamoyl group, a group having at least one aromatic group and having 5 to 30 carbon atoms, an alkyl group having 1 to 20 carbon atoms, a cycloalkyl group having 3 to 20 carbon atoms, an alkenyl group having 2 to 20 carbon atoms, a cycloalkenyl group having 3 to 20 carbon atoms, an alkoxy group having 1 to 20 carbon atoms, an acyloxy group having 2 to 20 carbon atoms, or an alkylcarbonyloxy group having 2 to 20 carbon atoms. In the alkyl group, cycloalkyl group, alkenyl group, cycloalkenyl group, alkoxy group, acyloxy group, and alkylcarbonyloxy group, a single $-CH_2-$ or two or more non-adjacent $-CH_2-$ may each be independently substituted by -O-, -S-, -CO-, -COO-, -OCO-, -CO-S-, -S-CO-, -O-CO-O-, -CO-NH-, -NH-CO-, or -C≡C-. More preferably, $W^{83}$ represents a group selected from a cyano group, a nitro group, a carboxyl group, an alkylcarbonyloxy group, an acyloxy group, an alkenyl group, and an alkyl group having 1 to 20 carbon atoms in which a single $-CH_2-$ or two or more non-adjacent $-CH_2-$ are each independently substituted by -O-, -S-, -CO-, -COO-, - OCO-, -CO-S-, -S-CO-, -O-CO-O-, -CO-NH-, -NH-CO-, or -C≡C-; particularly preferably, $W^{83}$ represents a group selected from a cyano group, a carboxyl group, an alkylcarbonyloxy group, an acyloxy group, an alkenyl group, and an alkyl group having 1 to 20 carbon atoms in which a single $-CH_2-$ or two or more non-adjacent $-CH_2-$ are each independently substituted by -CO-, -COO-, -OCO-, -O-CO-O-, -CO-NH-, -NH-CO-, or -C≡C-. More preferably, $W^{84}$ represents a group selected from a cyano group, a nitro group, a carboxyl group, an alkylcarbonyloxy group, an acyloxy group, an alkenyl group, and an alkyl group having 1 to 20 carbon atoms in which a single $-CH_2-$ or two or more non-adjacent $-CH_2-$ are each independently substituted by -O-,

-S-, -CO-, -COO-, - OCO-, -CO-S-, -S-CO-, -O-CO-O-, -CO-NH-, -NH-CO-, or -C≡C-; particularly preferably, $W^{84}$ represents a group selected from a cyano group, a carboxyl group, an alkylcarbonyloxy group, an acyloxy group, an alkenyl group, and an alkyl group having 1 to 20 carbon atoms in which a single $-CH_2-$ or two or more non-adjacent $-CH_2-$ are each independently substituted by -CO-, -COO-, -OCO-, -O-CO-O-, -CO-NH-, -NH-CO-, or -C≡C-.

$L^1$ represents a fluorine atom, a chlorine atom, a bromine atom, an iodine atom, a pentafluorosulfuranyl group, a nitro group, an isocyano group, an amino group, a hydroxyl group, a mercapto group, a methylamino group, a dimethylamino group, a diethylamino group, a diisopropylamino group, a trimethylsilyl group, a dimethylsilyl group, a thioisocyano group, or a linear or branched alkyl group having 1 to 20 carbon atoms in which a single $-CH_2-$ or two or more non-adjacent $-CH_2-$ may each be independently substituted by -O-, -S-, -CO-, -COO-, -OCO-, - CO-S-, -S-CO-, -O-CO-O-, -CO-NH-, -NH-CO-, -CH=CH-COO-, - CH=CH-OCO-, -COO-CH=CH-, -OCO-CH=CH-, -CH=CH-, -CF=CF-, or - C≡C-, and any hydrogen atom in the alkyl group may be substituted by a fluorine atom. From the viewpoint of liquid crystallinity and ease of synthesis, $L^1$ preferably represents a fluorine atom, a chlorine atom, a pentafluorosulfuranyl group, a nitro group, a methylamino group, a dimethylaminogroup, a diethylaminogroup, a diisopropylamino group, or a linear or branched alkyl group having 1 to 20 carbon atoms in which any hydrogen atom may be substituted by a fluorine atom, and a single $-CH_2-$ or two or more non-adjacent $-CH_2-$ may each be independently substituted by a group selected from -O-, -S-, -CO-, -COO-, -OCO-, -O-CO-O-, -CH=CH-, -CF=CF-, and -C≡C-; more preferably, $L^1$ represents a fluorine atom, a chlorine atom, or a linear or branched alkyl group having 1 to 12 carbon atoms in which any hydrogen atom may be substituted by a fluorine atom, and a single $-CH_2-$ or two or more non-adjacent $-CH_2-$ may each be independently substituted by a group selected from -O-, -COO-, and -OCO-; still more preferably, $L^1$ represents a fluorine atom, a chlorine atom, or an alkoxy group or an alkyl group being linear or branched and having 1 to 12 carbon atoms in which any hydrogen atom may be substituted by a fluorine atom; particularly preferably, $L^1$ represents a fluorine atom, a chlorine atom, or a linear alkoxy group or a linear alkyl group having 1 to 8 carbon atoms.

In the general formula (1) to general formula (7), substituents bonded to $MG^{11}$ to $MG^{71}$ are bonded to $A^{11}$ and/or $A^{12}$ in the general formula (a).

In the general formula (1), m11 represents an integer of 0 to 8; from the viewpoint of liquid crystallinity, high availability of raw materials, and ease of synthesis, m11 preferably represents an integer of 0 to 4, more preferably an integer of 0 to 2, still more preferably 0 or 1, particularly preferably 1.

In the general formula (2) to general formula (7), m2 to m7, n2 to n7, and 12 to 17 each independently represent an integer of 0 to 5; from the viewpoint of liquid crystallinity, high availability of raw materials, and ease of synthesis, preferably represent an integer of 0 to 4, more preferably an integer of 0 to 2, still more preferably 0 or 1, particularly preferably 1.

In the general formula (a), j11 and j12 each independently represent an integer of 1 to 5, and j11 + j12 represents an integer of 2 to 5. Preferably, from the viewpoint of liquid crystallinity, ease of synthesis, and storage stability, j11 and j12 each independently represent an integer of 1 to 4, more preferably an integer of 1 to 3, particularly preferably 1 or 2. Preferably, j11 + j12 represents an integer of 2 to 4. Examples of the reverse dispersion polymerizable liquid crystal compound include compounds represented by the following formula (8-1) to formula (8-31); however, the examples are not limited to these compounds.

[Chem. 57]

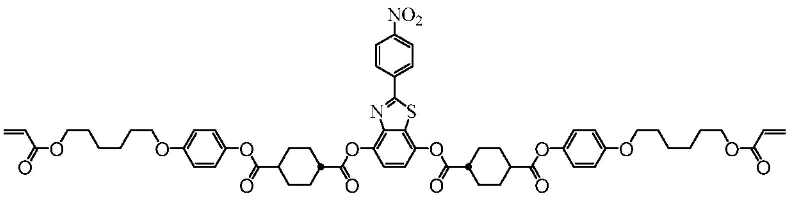

(8-1)

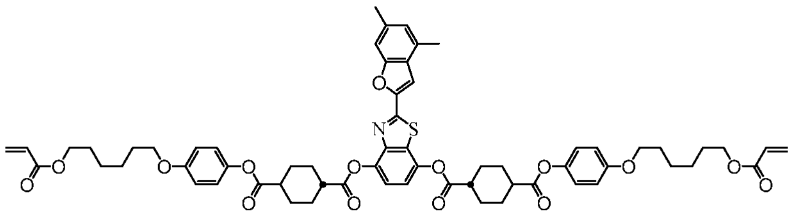

(8-2)

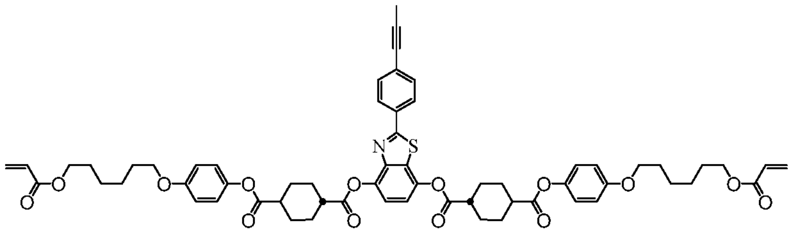

(8-3)

[Chem. 58]

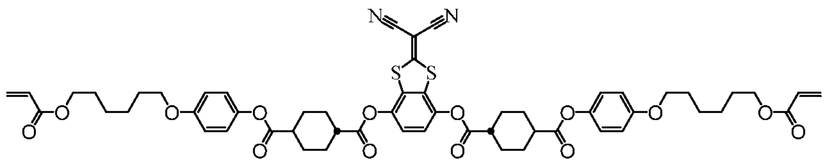

(8-4)

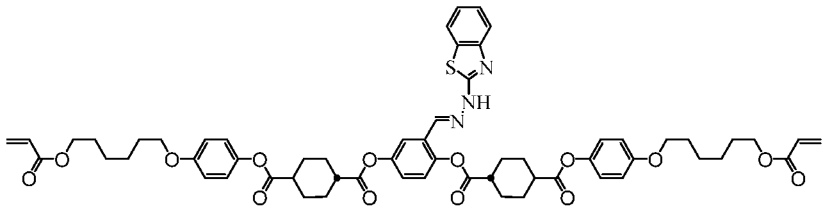

(8-5)

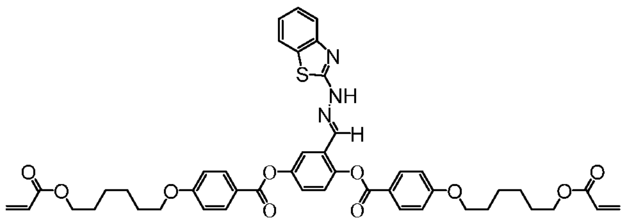

(8-6)

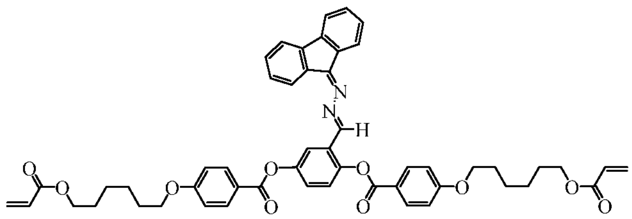

(8-7)

[Chem. 59]

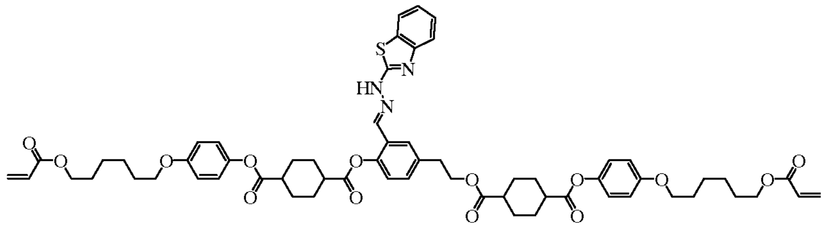

(8-8)

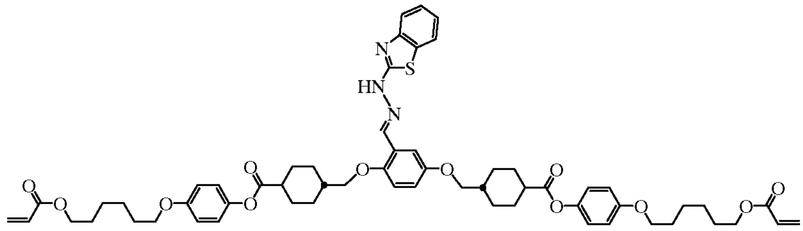

(8-9)

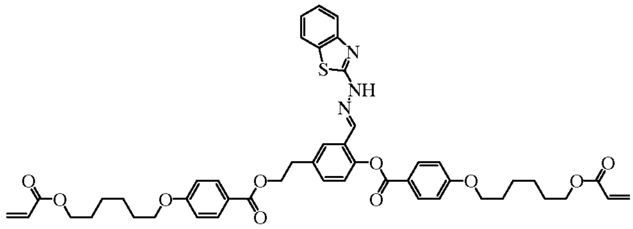

(8-10)

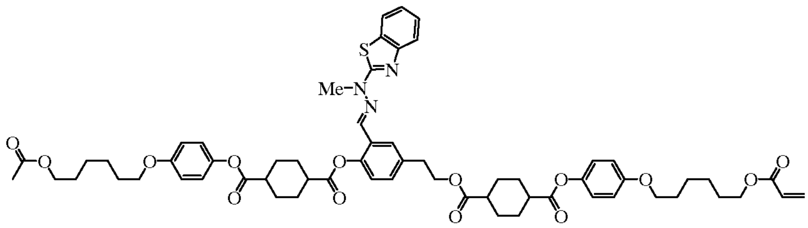

(8-11)

[Chem. 60]

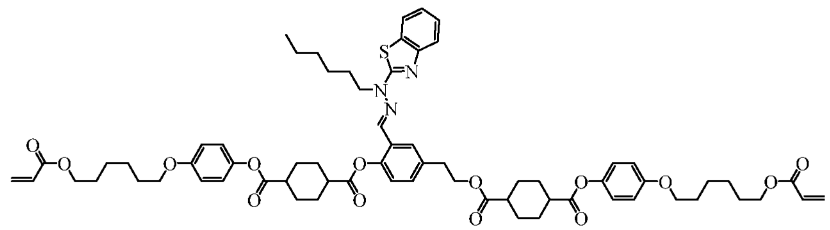

(8-12)

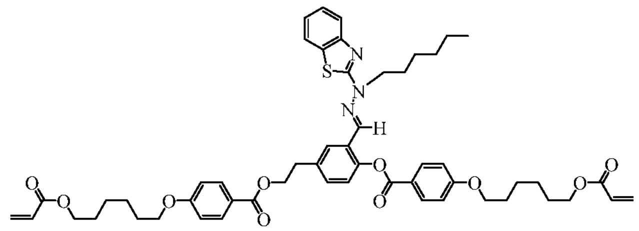

(8-13)

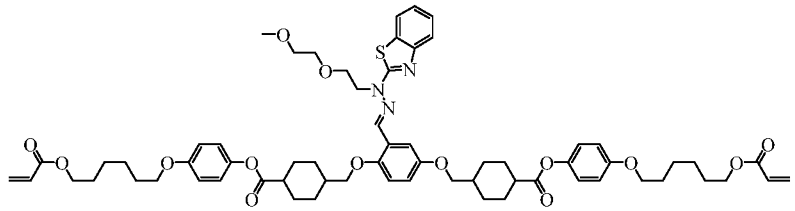

(8-14)

[Chem. 61]

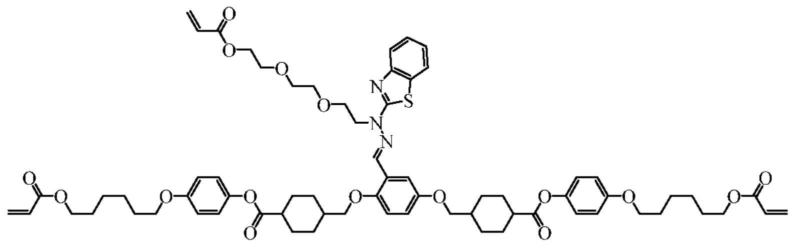

(8-15)

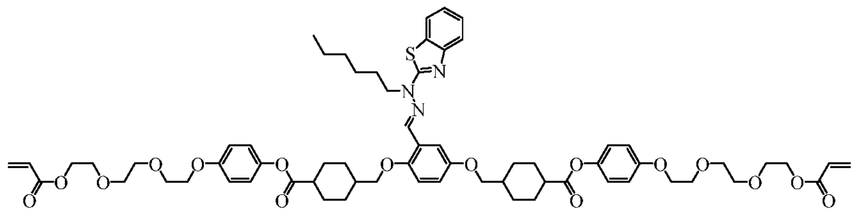

(8-16)

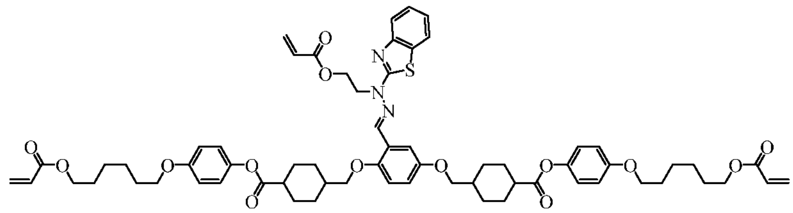

(8-17)

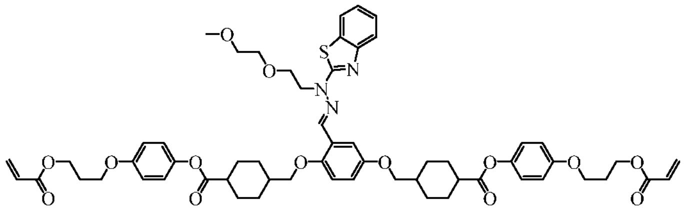

(8-18)

[Chem. 62]

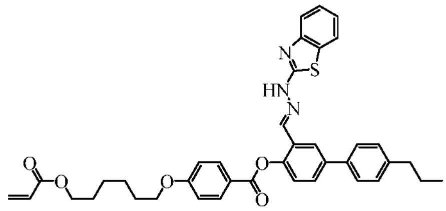

(8-19)

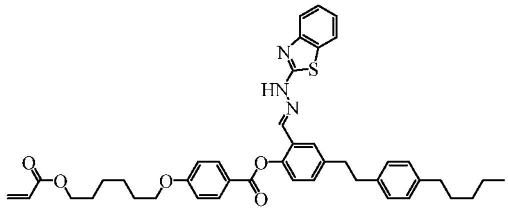

(8-20)

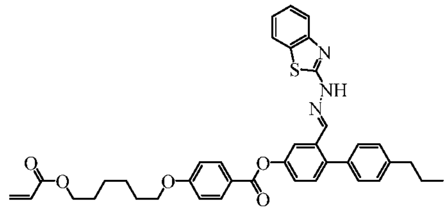

(8-21)

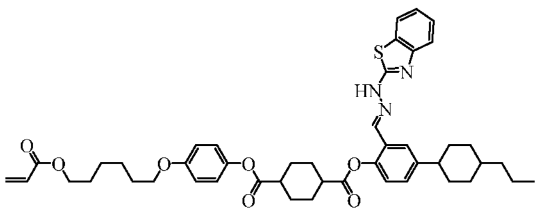

(8-22)

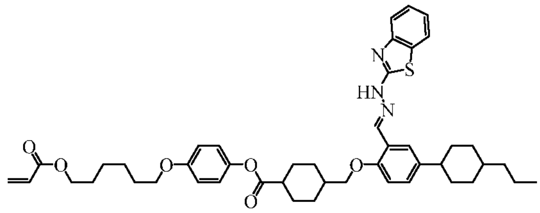

(8-23)

[Chem. 63]

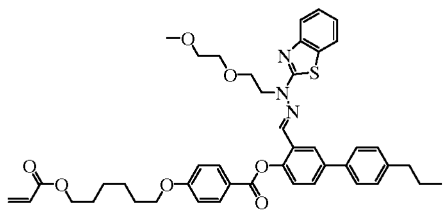

(8-24)

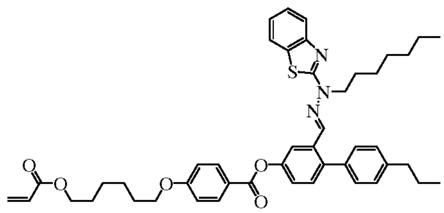

(8-25)

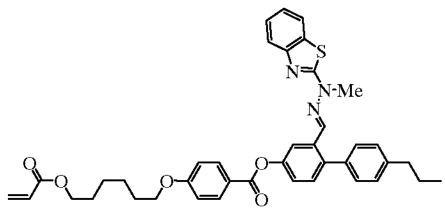

(8-26)

[Chem. 64]

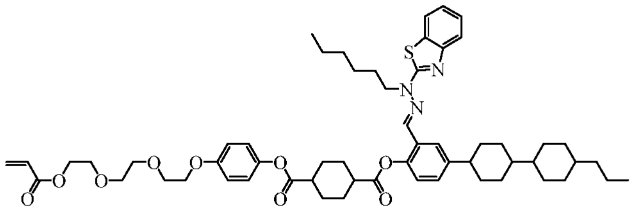

(8-27)

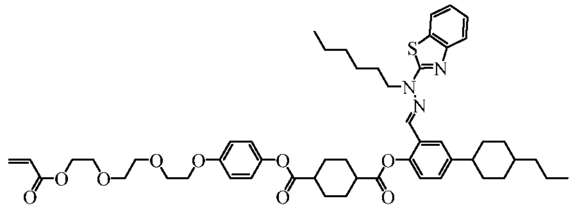

(8-28)

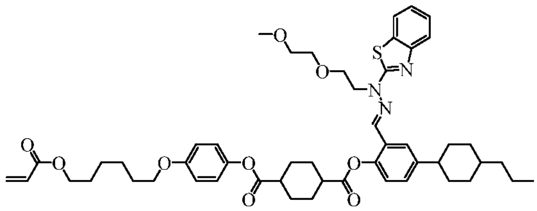

(8-29)

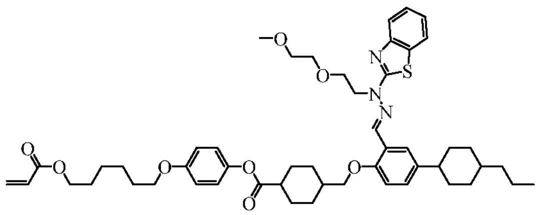

(8-30)

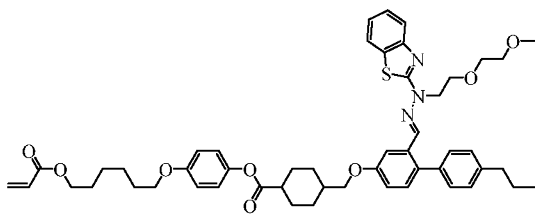

(8-31)

(Combined use of plurality of reverse dispersion polymerizable liquid crystal compounds)

The total content of powders composed of such a reverse dispersion polymerizable liquid crystal compound is, relative to the total amount of a powder composed of a normal dispersion polymerizable liquid crystal compound and the powders composed of a reverse dispersion polymerizable liquid crystal compound in the powder mixture, preferably 60 to 100 mass%, more preferably 65 to 98 mass%, particularly preferably 70 to 95 mass%.

(Control of particle diameter of powder composed of normal dispersion polymerizable liquid crystal compound and reverse dispersion polymerizable liquid crystal compound)

In the present invention, particularly preferably, a polymerizable liquid crystal compound having a polymerizable functional group is controlled in terms of particle diameter, bulk density, and crystallites. The methods for controlling the

particle diameter and the like may be publicly known and publicly used techniques. The present invention does not exclude the techniques of future-developed methods for obtaining particles satisfying the particle diameter range according to the present invention; however, in the present invention, particularly preferably, after the polymerizable liquid crystal compound is synthesized, the particle diameter is controlled during separation of the polymerizable liquid crystal compound from the organic solvent.

The method for separating the polymerizable liquid crystal compound from the organic solvent may be performed by using a single or combined use of phenomena including evaporation (natural drying), air blowing, reduction in pressure, heating, spraying, freezing, azeotropy, capillarity, recrystallization, and reprecipitation; polymerization due to such an isolation process is preferably prevented. In order to prevent polymerizable functional groups from reacting and polymerizing, after a polymerization inhibitor is added, a step of removing the organic solvent is preferably performed. The place for the work preferably has an air temperature of 40°C, 30°C, 25°C, 20°C, 15°C, or 10°C or less; preferably, the work is performed at an air temperature of 28°C, 25°C, 20°C, or 15°C or less; in order to maintain the work environment, the work is preferably performed in a site where an air-conditioning unit is provided. In order to avoid photopolymerization, direct sunlight is preferably avoided and UV-cut-off lighting is preferably used. When the organic solvent is removed by, for example, reduction in pressure to vacuum, it is preferably performed in an atmosphere where oxygen is present due to air bubbling, for example.

In order to more accurately control the particle diameter of a powder composed of a polymerizable liquid crystal compound, recrystallization or reprecipitation is preferably performed to remove the polymerizable liquid crystal compound from the organic solvent; more preferably, reprecipitation is performed. When recrystallization is performed, crystallization is preferably achieved in a short time; the recrystallization solvent is preferably cooled, and the cooling temperature is preferably 10°C or less, 5°C or less, 0°C or less, -5°C or less, or -10°C or less.

When reprecipitation is employed to obtain a powder composed of a polymerizable liquid crystal compound, the powder having a particle diameter satisfying a preferred particle diameter range according to the present invention, the following procedure is preferably performed: the polymerizable liquid crystal compound is dissolved in the high-solvency solvent; and then a low-solvency solvent is added to weaken the solvency to cause precipitation of the polymerizable liquid crystal compound. The amount of the high-solvency solvent used is preferably minimized; the amount of the solvent is preferably from the same weight as a solvent amount with which the saturated concentration is reached to 10 times the weight, preferably 5 times the weight; in particular, preferred is dissolution in the solvent having 2 to 3 times or less the weight. The low-solvency solvent is added preferably under stirring. The low-solvency solvent is preferably cooled to room temperature or less, preferably 25°C or less, 20°C or less, 10°C or less, 5°C or less, 0°C or less, -5°C or less, or -10°C or less.

Regarding the high-solvency organic solvent and the low-solvency solvent for a polymerizable liquid crystal compound according to the present invention, usable solvents are not limited, and may be publicly known organic solvents. A single organic solvent or two or more organic solvents in combination may be used.

Examples of the high-solvency organic solvent include ester solvents, amide solvents, ether solvents, aromatic hydrocarbon solvents, halogenated aromatic hydrocarbon solvents, halogenated aliphatic hydrocarbon solvents, alicyclic hydrocarbon solvents, ketone solvents, and acetate solvents.

Specifically, preferred examples are as follows: the ester solvents include ethyl acetate and γ-butyrolactone; the amide solvents include N-methyl-2-pyrrolidone and N,N-dimethylformamide; the ether solvents include tetrahydrofuran (THF); the aromatic hydrocarbon solvents include toluene and xylene; the halogenated aromatic hydrocarbon solvents include chlorobenzene; the halogenated aliphatic hydrocarbon solvents include chloroform and dichloromethane; the ketone solvents include acetone, methyl ethyl ketone, methyl isobutyl ketone, cyclohexanone, and cyclopentanone; the acetate solvents include ethylene glycol monomethyl ether acetate, propylene glycol monomethyl ether acetate, propylene glycol monoethyl ether acetate, methyl acetoacetate, and 1-methoxy-2-propyl acetate. In particular, preferred solvents have boiling points of 100°C or less. Preferred are ethyl acetate, toluene, chloroform, dichloromethane, acetone, methyl ethyl ketone, cyclohexanone, and cyclopentanone.

Examples of the low-solvency organic solvent include alcohol solvents and aliphatic hydrocarbon solvents.

The alcohol solvents preferably have a small number of carbon atoms. Specifically, preferred are methanol and ethanol. The aliphatic hydrocarbon solvents are preferably hexane and heptane. In particular, preferred are solvents having boiling points of 100°C or less.

In order to further control the particle diameter of a powder composed of a polymerizable liquid crystal compound, the solvent species are preferably selected. In particular, preferably, the polymerizable liquid crystal compound is dissolved in a halogenated aliphatic hydrocarbon solvent, preferably chloroform or dichloromethane; and then an alcohol solvent, preferably methanol or ethanol, or an aliphatic hydrocarbon solvent, preferably hexane or heptane, is added.

The precipitated particles are preferably separated by suction filtration or centrifugal filtration, particularly preferably by centrifugal filtration. The separated crystals are preferably subjected to driving off of the solvents by air blowing or by using an oven.

In a powder composed of a normal dispersion polymerizable liquid crystal compound and a powder composed

of a reverse dispersion polymerizable liquid crystal compound used in the present invention, preferred ranges of the particle diameter, the particle diameter distribution, bulk density, and crystallites of the powders respectively correspond to the above-described preferred ranges of the particle diameter, particle diameter distribution, bulk density, and crystallites of a powder mixture according to the present invention. In particular, the size of the crystallites of a powder composed of a normal dispersion polymerizable liquid crystal compound according to the present invention is preferably controlled to, when measured by X-ray diffractometry, 5 nm to 500 nm, more preferably 10 nm to 300 nm, still more preferably 15 nm to 200 nm, particularly preferably 20 nm to 100 nm, so that the powder has high solubility in solvents and high meltability under heating, is easily handled due to low probability of raising of the powder during handling of the powder mixture, and is less likely to adhere to containers. When the crystallites of the powder mixture are larger than the above-described values, an increase is caused in the time taken for large crystallites to dissolve in the solvent and the time taken for large crystallites to melt under heating, hence decrease is caused in the solubility in the solvent and the meltability under heating. On the other hand, when the crystallites of the powder mixture are smaller than the above-described values, improvement is achieved in the solubility in the solvent and the meltability under heating; however, the powder mixture is less easily handled due to high probability of raising of powder during handling of the powder mixture, and tends to be electrically charged and easily enters even fine cracks; hence the powder mixture exhibits high adhesion to containers and is less likely to be taken out from containers.

(Additive)

A powder mixture according to the present invention may include general-purpose additives for various purposes or for uniform application of a solution composition obtained by dissolving the powder mixture in an organic solvent or a nematic liquid crystal composition obtained by heating the powder mixture. For example, additives such as a polymerization initiator, a polymerization inhibitor, an antioxidant, a light stabilizer, a leveling agent, an orientation control agent, a chain transfer agent, an infrared absorbing agent, an antistatic agent, a dye, a filler, a curing agent, a chiral compound, a thixotropic agent, a non-liquid crystalline compound having a polymerizable group, another liquid crystal compound, and an orientation material may be added as long as the solid content of the powder mixture is not considerably decreased. Such additives may be added while a powder mixture according to the present invention is dissolved in an organic solvent to produce a solution composition, or while a powder mixture according to the present invention is heated to produce a nematic liquid crystal composition; when such an additive does not dissolve in the solvent, it may be dispersed in the organic solvent or the nematic liquid crystal composition. Incidentally, when the additive is in liquid form, a small amount of the additive is added to a powder mixture according to the present invention, which does not affect the solid content of the powder mixture according to the present invention.

In order to obtain optically anisotropic bodies such as optical films by polymerizing a composition including a powder mixture according to the present invention, a polymerization initiator that initiates the reaction of the polymerizable functional groups is preferably used. In order to suppress unintended reaction of the polymerizable liquid crystal compound during processes such as storage, dissolution, and heating, a polymerization inhibitor is preferably used.

In optically anisotropic bodies obtained by polymerizing a composition including a powder mixture according to the present invention, in order to prevent the optically anisotropic bodies from deteriorating due to oxygen, light, and heat, various stabilizing agents are preferably used. The causes of deterioration of such obtained optically anisotropic bodies are radicals and peroxides generated by oxygen, light, or heat. For this reason, in order to suppress deterioration of the obtained optically anisotropic bodies, additives that trap radicals and peroxides are preferred, and preferably used are an antioxidant, a light stabilizer, and a heat stabilizer. The antioxidant, the light stabilizer, and the heat stabilizer may be used alone; alternatively, such additives are preferably used in combination to thereby enhance the effect of preventing deterioration of obtained optically anisotropic bodies.

(Polymerization initiator)

(Photopolymerization initiator)

A powder mixture according to the present invention preferably contains a photopolymerization initiator. At least one photopolymerization initiator is preferably contained. Specific examples include products from BASF Japan Ltd. that are "IRGACURE 651", "IRGACURE 184", "IRGACURE 907", "IRGACURE 127", "IRGACURE 369", "IRGACURE 379", "IRGACURE 819", "IRGACURE 2959", "IRGACURE 1800", "IRGACURE 250", "IRGACURE 754", "IRGACURE 784", "IRGACURE OXE01", "IRGACURE OXE02", "IRGACURE OXE04", "Lucirin TPO", "DAROCUR 1173", "DAROCUR MBF", "DAROCUR 1116"; products from Lamberti S.p.A. that are "ESACURE 1001M", "ESACURE KIP150", "ESACURE ONE", "ESACURE EPA", "ESACURE A198", "ESACURE KIP160", "ESACURE A198", "ESACURE KIP IT", "ESACURE KTO46", "ESACURE TZT"; products from LAMBSON Limited that are "SpeedCure BEM", "SpeedCure BMS", "SpeedCure MBP", "SpeedCure PBZ", "SpeedCure ITX", "SpeedCure DETX", "SpeedCure EBD", "SpeedCure MBB", "Speed-

Cure BP"; products from Nippon Kayaku Co., Ltd. that are "KAYACURE DMBI", "KAYACURE DETX", "KAYACURE EPA"; a product from Nihon SiberHegner K.K. (DKSH Japan K.K. at present) that is "TAZ-A"; and products from ADEKA CORPORATION that are "ADEKA OPTOMER SP-152", "ADEKA OPTOMER SP-170", "ADEKA OPTOMER N-1414", "ADEKA OPTOMER N-1606", "ADEKA OPTOMER N-1717", and "ADEKA OPTOMER N-1919".

The amount of photopolymerization initiator used relative to the powder mixture is preferably 0.1 to 10 mass%, particularly preferably 0.5 to 7 mass%. Such photopolymerization initiators may be used alone or in combination of two or more thereof. In addition, a sensitizer may be added, for example.

(Thermal polymerization initiator)

A powder mixture according to the present invention may contain, in addition to the photopolymerization initiator, a thermal polymerization initiator. Specific examples include products from Wako Pure Chemical Industries, Ltd. that are "V-40" and "VF-096"; and products from Nippon Oil & Fats Co., Ltd. (NOF CORPORATION at present) that are "PERHEXYL D" and "PERHEXYL I". In addition, those publicly known and commonly used may be used, and examples include organic peroxides such as methylacetoacetate peroxide, cumene hydroperoxide, benzoyl peroxide, bis(4-t-butylcyclohexyl) peroxydicarbonate, t-butyl peroxybenzoate, methyl ethyl ketone peroxide, 1,1-bis(t-hexylperoxy)3,3,5-trimethylcyclohexane, p-pentahydro peroxide, t-butyl hydroperoxide, dicumyl peroxide, isobutyl peroxide, di(3-methyl-3-methoxy butyl) peroxydicarbonate, and 1,1-bis(t-butylperoxy)cyclohexane; azonitrile compounds such as 2,2'-azobisisobutyronitrile and 2,2'-azobis(2,4-dimethylvaleronitrile); azoamidine compounds such as 2,2'-azobis(2-methyl-N-phenylpropion-amidine)dihydrochloride; azoamide compounds such as 2,2' azobis{2-methyl-N-[1,1-bis(hydroxymethyl)-2-hydroxyethyl]propionamide}; and alkyl azo compounds such as 2,2' azobis(2,4,4-trimethylpentane).

The amount of thermal polymerization initiator used relative to the powder mixture is preferably 0.1 to 10 mass%, particularly preferably 0.5 to 5 mass%. Such thermal polymerization initiators may be used alone or in combination of two or more thereof.

(Polymerization inhibitor)

A powder mixture according to the present invention may contain a polymerization inhibitor as needed. The polymerization inhibitor used is not particularly limited and can be selected from publicly known and commonly used polymerization inhibitors. Such polymerization inhibitors are preferably used alone or in combination of two or more thereof.

The method of adding such a polymerization inhibitor is as follows: preferably, the polymerization inhibitor is separately added to the powder mixture; or, preferably, during purification of a polymerizable liquid crystal compound synthesized, recrystallization or reprecipitation is performed while the polymerization inhibitor is dissolved in a solution of the polymerizable liquid crystal compound, to thereby provide a powder composed of the polymerizable liquid crystal compound and the polymerization inhibitor; more preferably, both of these methods are performed to add the polymerizable functional group.

Preferred examples of the polymerization inhibitor include phenol-based compounds, quinone-based compounds, amine-based compounds, thioether-based compounds, and nitroso compounds. Examples of the phenol-based compounds include p-methoxyphenol (MEHQ), cresol, t-butylcatechol, 3.5-di-t-butyl-4-hydroxytoluene, 2.2'-methylenebis(4-methyl-6-t-butylphenol), 2.2'-methylenebis(4-ethyl-6-t-butylphenol), 4.4'-thiobis(3-methyl-6-t-butylphenol), 4-methoxy-1-naphthol, and 4,4'-dialkoxy-2,2'-bi-1-naphthol. Examples of the quinone-based compounds include hydroquinone, methylhydroquinone, tert-butylhydroquinone, p-benzoquinone, methyl-p-benzoquinone, tert-butyl-p-benzoquinone, 2,5-diphenylbenzoquinone, 2-hydroxy-1,4-naphthoquinone, 1,4-naphthoquinone, 2,3-dichloro-1,4-naphthoquinone, anthraquinone, diphenoquinone, compounds from Kawasaki Kasei Chemicals Ltd. that are Quino Power QS-10, Quino Power QS-20, Quino Power QS-30, Quino Power QS-40, and Quino Power QS-W10. Examples of the amine-based compounds include p-phenylenediamine, 4-aminodiphenylamine, N.N'-diphenyl-p-phenylenediamine, N-i-propyl-N'-phenyl-p-phenylenediamine, N-(1.3-dimethylbutyl)-N'-phenyl-p-phenylenediamine, N.N'-di-2-naphthyl-p-phenylenediamine, diphenylamine, N-phenyl-β-naphthylamine, 4.4'-dicumyl-diphenylamine, and 4.4'-dioctyldiphenylamine. Examples of the thioether-based compounds include phenothiazine and distearyl thiodipropionate. Examples of the nitroso-based compounds include N-nitrosodiphenylamine, N-nitrosophenylnaphthylamine, N-nitrosodinaphthylamine, p-nitrosophenol, nitrosobenzene, p-nitrosodiphenylamine, α-nitroso-β-naphthol, N, N-dimethyl p-nitrosoaniline, p-nitrosodiphenylamine, p-nitrosodimethylamine, p-nitroso-N,N-diethyl amine, N-nitrosoethanolamine, N-nitrosodi-n-butylamine, N-nitroso-N-n-butyl-4-butanol amine, N-nitroso-diisopropanolamine, N-nitroso-N-ethyl-4-butanolamine, 5-nitroso-8-hydroxyquinoline, N-nitrosomorpholine, N-nitroso-N-phenylhydroxylamine ammonium salt, nitrosobenzene, 2,4.6-tri-tert-butylnitrosobenzene, N-nitroso-N-methyl-p-toluenesulfonamide, N-nitroso-N-ethylurethane, N-nitroso-N-n-propylurethane, 1-nitroso-2-naphthol, 2-nitroso-1-naphthol, sodium 1-nitroso-2-naphthol-3,6-sulfonate, sodium 2-nitroso-1-naphthol-4-sulfonate, 2-nitroso-5-methylaminophenol hydrochloride, and 2-nitroso-5-methylaminophenol hydrochloride.

The amount of polymerization inhibitor added relative to the polymerizable liquid crystal compound contained in the powder mixture is preferably 10,000 ppm or less, preferably 7,000 ppm or less, particularly preferably 5,000 ppm or less.

During purification of a polymerizable liquid crystal compound synthesized, recrystallization or reprecipitation may be performed after dissolution of a polymerization inhibitor in a solution of the polymerizable liquid crystal compound. In this case, a large amount of polymerization inhibitor remains as an impurity in the solution, compared with the polymerization inhibitor incorporated, by recrystallization or reprecipitation, into the powder composed of the polymerizable liquid crystal compound. For this reason, a large amount of polymerization inhibitor is preferably added to the solution, compared with the case of direct addition to the powder mixture including the polymerizable liquid crystal compound. Specifically, preferably, 30,000 ppm or less of a polymerization inhibitor is added to the solution, and subsequently recrystallization or reprecipitation is performed; more preferably, 20,000 ppm or less of the polymerization inhibitor is added; particularly preferably, 10,000 ppm or less of the polymerization inhibitor is added. When the polymerization inhibitor is dissolved in the solution and subsequently recrystallization or reprecipitation is performed, the amount of the polymerization inhibitor incorporated into the powder composed of the polymerizable liquid crystal compound is preferably 3,000 ppm or less, preferably 2,000 ppm or less, particularly preferably 1,000 ppm or less.

(Antioxidant and light stabilizer)

A powder mixture according to the present invention may contain, as needed, an antioxidant or a light stabilizer, or both of an antioxidant and a light stabilizer.

Preferred examples of the antioxidant include phenol-based antioxidants, amine-based antioxidants, sulfur-based antioxidants, phosphorus-based antioxidants, and thioether-based antioxidants; and the examples also include heavy metal deactivators.

More specifically, examples of the phenol-based antioxidants include products from BASF that are pentaerythritoltetrakis[3-(3,5-di-tert-butyl-4-hydroxyphenyl)propionate "IRGANOX 1010", thiodiethylenebis[3-(3,5-di-tert-butyl-4-hydroxyphenyl)propionate "IRGANOX 1035", octadecyl-3-(3,5-di-tert-butyl-4-hydroxyphenyl)propionate "IRGANOX 1076", "IRGANOX 1098", "IRGANOX 1135", "IRGANOX 1330", "IRGANOX 1726", "IRGANOX 1424WL", 4,6-bis(octylthiomethyl)-o-cresol "IRGANOX 1520L", "IRGANOX 245", "IRGANOX 259", "IRGANOX 3114", "IRGANOX 3790", "IRGANOX 5057", "IRGANOX 565", "IRGAMOD 295"; products from ADEKA CORPORATION that are ADK STAB series "AO-20", "AO-30", "AO-40", "AO-50", "AO-50F", "AO-60", "AO-60G", "AO-80", and "AO-330"; products from Sumitomo Chemical Company, Limited that are "SUMILIZER BHT", "SUMILIZER BBM-S", "SUMILIZER GA-80", "SUMILIZER MDP-S", "SUMILIZER WX-R", and "SUMILIZER WX-RC". Examples of the amine-based antioxidants include products from BASF that are "IRGASTAB FS 301 FF", "IRGASTAB FS 110", "IRGASTAB FS 210 FF", and "IRGASTAB FS 410 FF". Examples of the sulfur-based antioxidants include products from Sumitomo Chemical Company, Limited that are "SUMILIZER TP-D" and "SUMILIZER MB". Examples of the phosphorus-based antioxidants include products from ADEKA CORPORATION that are "PEP-36", "PEP-36A", "HP-10", "2112", "2112RG", "PEP-8", "PEP-8W", "1178", "1500", "c", "135A", "3010", and "TPP". Examples of the thioether-based antioxidants include products from ADEKA CORPORATION that are "AO-412S" and "AO-503". The metal deactivators are preferably hydrazine-based compounds and amide-based compounds; specific examples include a product from BASF that is "IRGANOX MD 1024"; and products from ADEKA CORPORATION that are "CDA-1", "CDA-1M", "CDA-6", and "CDA-10".

Regarding the light stabilizer, in order to absorb light, ultraviolet absorbing agents are preferably used; in order to prevent chain autoxidation due to radicals, amine-based light stabilizers and phenol-based light stabilizers are preferably used; in order to decompose peroxides, sulfur-based light stabilizers, phosphorus-based stabilizers, and thioether-based light stabilizers are preferably used; in addition, the examples include heavy metal deactivators.

Preferred examples of the ultraviolet absorbing agents include benzotriazole-based compounds, triazine-based compounds, benzophenone-based compounds, and benzoate-based compounds. Examples of the benzotriazole-based compounds include products from BASF that are 2-(2-hydroxy-5-t-butylphenyl)-2H-benzotriazole "TINUVIN PS", "TINUVIN 99-2", "TINUVIN 384-2", 2-(2H-benzotriazol-2-yl)-4,6-bis(1-methyl-1-phenylethyl)phenol "TINUVIN 900", 2-(2H-benzotriazol-2-yl)-6-(1-methyl-1-phenylethyl)-4-(1,1,3,3-tetramethylbutyl)phenol "TINUVIN 928", "TINUVIN 1130", "TINUVIN 400", "TINUVIN 405", 2,4-bis[2-hydroxy-4-butoxyphenyl]-6-(2,4-dibutoxyphenyl)-1,3,5-triazine "TINUVIN 460", "INUVIN 470", "INUVIN 479", "TINUVIN P", "TINUVIN PFL", "TINUVIN 234", "TINUVIN 326", "TINUVIN 326FL", "TINUVIN 329", "TINUVIN 213", "TINUVIN 571"; products from ADEKA CORPORATION that are "ADK STAB LA-29", "ADK STAB LA-31", "ADK STAB LA-32RG", "ADK STAB LA-32G", "ADK STAB LA-32", and "ADK STAB LA-36". Examples of the triazine-based compounds include a product from BASF that is "TINUVIN 1577ED", and products from ADEKA CORPORATION that are "ADK STAB LA-46" and "ADK STAB LA-F70". Examples of the benzophenone-based compounds include products from BASF that are "CHIMASSORB 81" and "CHIMASSORB 81 FL" and a product from ADEKA CORPORATION that is "ADK STAB 1413". Examples of the benzoate-based compounds include a product from BASF that is "TINUVIN 120". The amine-based light stabilizers are preferably hindered amine-based light stabilizers (HALS);

specific examples include products from BASF that are "CHIMASSORB 2020 FDL", "CHIMASSORB 944FDL", "CHIMASSORB 622SF", "TINUVIN PA144", "TINUVIN 765", "TINUVIN 770 DF", "TINUVIN 111FDL", "TINUVIN 783 FDL", "TINUVIN 791 FB", "TINUVIN 123", "TINUVIN 144", "TINUVIN 292", "TINUVIN 5100", "TINUVIN 5050", "TINUVIN 5060", "TINUVIN 5151"; and products from ADEKA CORPORATION that are "ADK STAB LA-52", "ADK STAB LA-57", "ADK STAB LA-63P", "ADK STAB LA-68", "ADK STAB LA-72", "ADK STAB LA-77Y", "ADK STAB LA-77G", "ADK STAB LA-81", "ADK STAB LA-82", "ADK STAB LA-87", "ADK STAB LA-402AF", and "ADK STAB LA-502XP". The amount of an antioxidant and/or a light stabilizer added relative to the total amount of polymerizable liquid crystal compounds in the powder mixture is preferably 0.01 to 2.0 mass%, preferably 0.01 to 1.0 mass%, more preferably 0.05 to 1.0%.

(Surfactant)

A powder mixture according to the present invention may contain a surfactant as needed. Such a surfactant used is not particularly limited; however, in the case of forming thin films such as an optical film, the surfactant preferably enables adjustment of the surface tension of the coating film to thereby reduce film thickness unevenness, cissing, and pinholing, and to enhance leveling properties, wettability, recoatability, and defoamability. Examples of the surfactant include anionic surfactants, cationic surfactants, amphoteric surfactants, and nonionic surfactants.

Preferred examples of the anionic surfactants include alkyl carboxylates, alkyl phosphates, alkyl sulfonates, fluoroalkyl carboxylates, fluoroalkyl phosphates, fluoroalkyl sulfonates, phosphate derivatives, and amine-neutralized phosphates; specific examples include products from DIC Corporation that are "MEGAFACE F-114", "MEGAFACE F-410", "MEGAFACE F-510", "MEGAFACE F-511" and products from NEOS COMPANY LIMITED that are "FTERGENT 100", "FTERGENT 100C", "FTERGENT 110", "FTERGENT 150", and "FTERGENT 150CH".

Preferred examples of the cationic surfactants include alkyl ammonium salts and fluoroalkyl ammonium salts; specific examples include "FTERGENT 300", "FTERGENT 310", and "FTERGENT 320".

Preferred examples of the amphoteric surfactants include betaine derivatives; specific examples include a product from NEOS COMPANY LIMITED that is "FTERGENT 400SW".

Preferred examples of the nonionic surfactants include polyoxyethylene ether derivatives, polyoxypropylene derivatives, siloxane derivatives, siloxane copolymer derivatives, acrylic polymers, silicone-modified acrylate derivatives, vinyl polymers, fluoro-group-containing oligomers, and UV-reactive-group-containing oligomers; specific examples include products from NEOS COMPANY LIMITED that are "FTERGENT 212M", "FTERGENT 222F", "FTERGENT 208G", "FTERGENT 240G", "FTERGENT 220P", "FTERGENT 228P", "FTX-218", "FTERGENT 710FM", "FTERGENT 710FS", "FTERGENT 601AD", "FTERGENT 602A", and "FTERGENT 650A"; products from AGC SEIMI CHEMICAL CO., LTD. that are "SURFLON S-242", "SURFLON S-243", "SURFLON S-420", "SURFLON S-611", "SURFLON S-651", "SURFLON S-386"; products from OMNOVA SOLUTIONS that are "PF-636", "PF-6320", "PF-656", "PF-6520", "PF-652-NF", "PF-3320"; products from BYK Japan KK that are "BYK-300", "BYK-302", "BYK-306", "BYK-307", "BYK-310", "BYK-315", "BYK-320", "BYK-322", "BYK-323", "BYK-325", "BYK-330", "BYK-331", "BYK-333", "BYK-350", "BYK-354", "BYK-355", "BYK-356", "BYK-358N", "BYK-361N", "BYK-392", "BYK-Silclean3700", "BYK-UV3500", "BYK-UV3510", "BYK-UV3570"; products from Kusumoto Chemicals, Ltd. that are "DISPARLON 1930N", "DISPARLON 1931", "DISPARLON 1933", "DISPARLON 1711EF", "DISPARLON 1751N", "DISPARLON LS-009", "DISPARLON LS-001", "DISPARLON LS-050", "DISPARLON OX-880EF", "DISPARLON OX-881", "DISPARLON OX-883", "DISPARLON OX-77EF", "DISPARLON OX-710", "DISPARLON 1970", "DISPARLON 230", "DISPARLON LF-1980", "DISPARLON LF-1982", "DISPARLON LF-1084", "DISPARLON LHP-95", "DISPARLON OX-715", "DISPARLON 1922", "DISPARLON 1958", "DISPARLON P-410EF", "DISPARLON P-420", "DISPARLON P-425", "DISPARLON PD-7", "DISPARLON LHP-90", "DISPARLON LHP-96", DISPARLON LHP-91"; products from Kyoeisha Chemical Co., Ltd. that are "POLYFLOW KL-400X", "POLYFLOW KL-401", "POLYFLOW KL-403", "FIOWLEN AO-82", "FIOWLEN AO-98", "FIOWLEN AO-108", "POLYFLOW No. 7", "POLYFLOW No. 50E", "POLYFLOW No. 54N", "POLYFLOW No. 75", "POLYFLOW No. 77", "POLYFLOW No. 85", "POLYFLOW No. 85HF", "POLYFLOW No. 90D-50", "POLYFLOW No. 95", "POLYFLOW No. 99C", "FIOWLEN AC-530", "FIOWLEN AC-903", FIOWLEN AC-326F", "FIOWLEN AC-300", "FIOWLEN AC-324"; products from Evonik Industries that are "TEGO Twin4000", "TEGO Twin4100", "TEGO Wet270", "TEGO Rad2100", "TEGO Rad2011", "TEGO Rad2200N", "TEGO Rad2250", "TEGO Rad2300", "TEGO Rad2600", "TEGO Rad2650", "TEGO Flow 300", "TEGO Flow ZFS460", "TEGO Flow 425"; products from Dow Corning Toray Co., Ltd. that are "L-7001", "L-7002", "8032ADDITIVE", "57ADDTIVE", "L-7064", "FZ-2110", "FZ-2105", "67ADDTIVE", "8616ADDTIVE"; a product from DAIKIN INDUSTRIES, LTD. that is "UNIDYNE NS"; products from DIC Corporation that are "MEGAFACE F-444", "MEGAFACE F-477", "MEGAFACE F-553", "MEGAFACE F-554", "MEGAFACE F-556", "MEGAFACE F-557", "MEGAFACE F-560", "MEGAFACE F-563", "MEGAFACE F-568", "MEGAFACE RS-75", "MEGAFACE RS-76-E", "MEGAFACE RS-76-NS", "MEGAFACE RS-90"; and products from 3M Japan Limited that are "FC-4430" and "FC-4432".

The amount of surfactant added relative to the total amount of polymerizable liquid crystal compounds contained in the powder mixture is preferably 0.01 to 2 mass%, more preferably 0.05 to 0.5 mass%.

Use of such a surfactant enables, in the case where a composition including a powder mixture according to

the present invention is used to form an optically anisotropic body, an effective decrease in the air-interface tilt angle.

(Orientation control agent)

A powder mixture used in the present invention may contain an orientation control agent in order to control the orientation state of a liquid crystalline compound. The orientation control agent used may cause the liquid crystalline compound to be oriented substantially parallel to the substrate, substantially perpendicular to the substrate, or in a substantially hybrid state. A chiral compound added may cause substantially planar orientation. As described above, some surfactants may induce parallel orientation or planar orientation; however, the agent is not particularly limited as long as it induces such an orientation state, and can be selected from publicly known and commonly used agents.
Such an orientation control agent is, for example, a compound that provides an effect of effectively decreasing the air-interface tilt angle of an optically anisotropic body to be formed, that has a repeating unit represented by the following general formula (9), and that has a weight-average molecular weight of 100 or more and 1000000 or less.
[Chem. 65]

$$\left\{ R^{11}R^{12}\text{-}CR^{13}R^{14} \right\} \qquad (9)$$

(In the formula, $R^{11}$, $R^{12}$, $R^{13}$, and $R^{14}$ each independently represent a hydrogen atom, a halogen atom, or a hydrocarbon group having 1 to 20 carbon atoms where hydrogen atoms in the hydrocarbon group may be substituted by one or more halogen atoms.)
Other examples include fluoroalkyl group-modified rod-like liquid crystalline compounds, disc-like liquid crystalline compounds, and polymerizable compounds containing a long-chain aliphatic alkyl group that may have a branched structure.
Examples of a compound that provides the effect of effectively increasing the air-interface tilt angle of an optically anisotropic body to be formed, include cellulose nitrate, cellulose acetate, cellulose propionate, cellulose butyrate, heteroaromatic ring salt-modified rod-like liquid crystalline compounds, and cyano group- or cyano alkyl group-modified rod-like liquid crystalline compounds.

(Chain transfer agent)

A powder mixture according to the present invention may contain a chain transfer agent in order to further enhance adhesion of a polymer or an optically anisotropic body to a substrate. Examples of the chain transfer agent include aromatic hydrocarbons, halogenated hydrocarbons, mercaptan compounds (thiol compounds), sulfide compounds, aniline compounds, and acrolein derivatives.
Specifically, examples of the aromatic hydrocarbons include pentaphenylethane and α-methylstyrene dimer; examples of the halogenated hydrocarbons include chloroform, carbon tetrachloride, carbon tetrabromide, and bromotrichloromethane; examples of the mercaptan compounds (thiol compounds) include octyl mercaptan, n-butyl mercaptan, n-pentyl mercaptan, n-hexadecyl mercaptan, n-tetradecyl mercaptan, n-dodecyl mercaptan, t-tetradecyl mercaptan, t-dodecyl mercaptan, hexanedithiol, decanedithiol, 1,4-butanediol bisthiopropionate, 1,4-butanediol bisthioglycolate, ethylene glycol bisthioglycolate, ethylene glycol bisthiopropionate, trimethylolpropane tristhioglycolate, trimethylolpropane tristhiopropionate, trimethylolpropane tris(3-mercaptobutyrate), pentaerythritol tetrakisthioglycolate, pentaerythritol tetrakisthiopropionate, trimercaptopropionate tris(2-hydroxyethyl)isocyanurate, 1,4-dimethylmercaptobenzene, 2,4,6-trimercapto-s-triazine, and 2-(N,N-dibutylamino)-4,6-dimercapto-s-triazine; examples of the sulfide compounds include dimethylxanthogen disulfide, diethylxanthogen disulfide, diisopropylxanthogen disulfide, tetramethylthiuram disulfide, tetraethylthiuram disulfide, and tetrabutylthiuram disulfide; and examples of the aniline compounds include N,N-dimethylaniline and N,N-divinylaniline. Other examples include allyl alcohol, α-terpinen, γ-terpinen, dipentene, and terpineol. More preferred are 2,4-diphenyl-4-methyl-1-pentene and thiol compounds.
In addition, preferred are compounds represented by the following general formulas (10-1) to (10-12).

[Chem. 66]

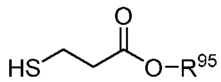

(10-1)

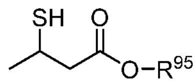

(10-2)

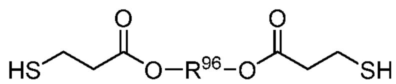

(10-3)

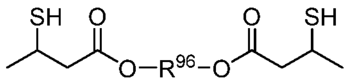

(10-4)

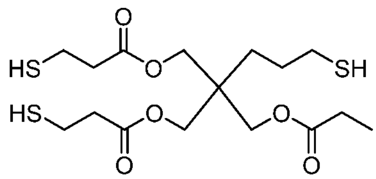

(10-5)

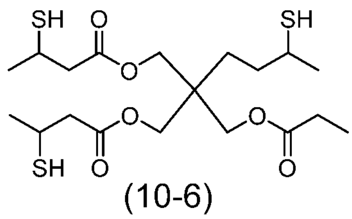

(10-6)

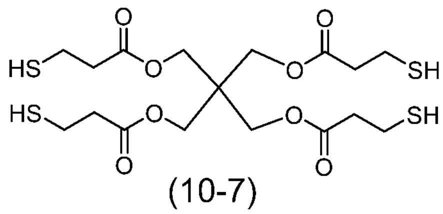

(10-7)

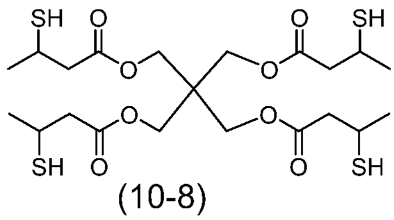

(10-8)

[Chem. 67]

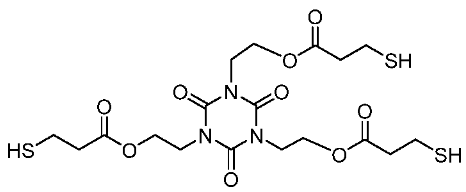

(10-9)

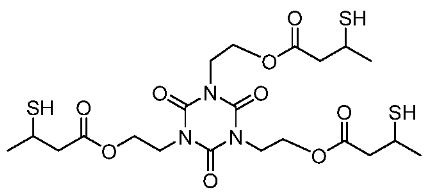

(10-10)

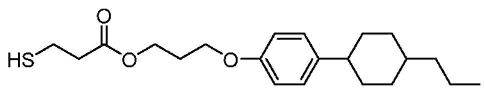

(10-11)

(10-12)

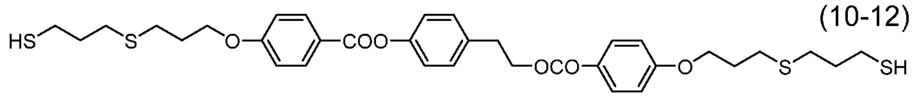

In the formulas, $R^{95}$ represents an alkyl group having 2 to 18 carbon atoms, the alkyl group may be a linear chain or a branched chain, and at least one methylene group in the alkyl group may be substituted by, as long as an oxygen atom and a sulfur atom do not directly bond together, an oxygen atom, a sulfur atom, -CO-, -OCO-, -COO-, or -CH=CH-; and $R^{96}$ represents an alkylene group having 2 to 18 carbon atoms, the at least one methylene group in the

alkylene group may be substituted by, as long as an oxygen atom and a sulfur atom do not directly bond together, an oxygen atom, a sulfur atom, -CO-, -OCO-, -COO-, or -CH=CH-.

The amount of chain transfer agent added, relative to the total amount of polymerizable liquid crystal compounds contained in the powder mixture, is preferably 0.5 to 10 mass%, more preferably 1.0 to 5.0 mass%.

Furthermore, in order to adjust physical properties, a powder composed of a liquid crystalline compound not having any polymerizable group or a polymerizable compound not having liquid crystallinity may be added as needed. The amount of such a compound added relative to the powder mixture is preferably 20 mass% or less, more preferably 10 mass% or less, still more preferably 5 mass% or less.

(Infrared absorbing agent)

A powder mixture according to the present invention may contain an infrared absorbing agent as needed. The infrared absorbing agent used is not particularly limited and a publicly known and commonly used agent can be contained as long as it does not cause degradation of orientability.

Examples of the infrared absorbing agent include cyanine compounds, phthalocyanine compounds, naphthoquinone compounds, dithiol compounds, diimmonium compounds, azo compounds, and aluminum salts. Specific examples include products from Nagase ChemteX Corporation that are diimmonium-salt-type "NIR-IM1" and aluminum-salt-type "NIR-AM1"; products from SHOWA DENKO K.K. that are "Karenz IR-T" and "Karenz IR-13F"; products from Yamamoto Chemicals, Inc. that are "YKR-2200" and "YKR-2100"; and products from INDECO that are "IRA908", "IRA931", "IRA955", and "IRA1034".

(Antistatic agent)

A powder mixture according to the present invention may contain an antistatic agent as needed. The antistatic agent used is not particularly limited and a publicly known and commonly used agent can be contained as long as it does not cause degradation of orientability. Examples of such antistatic agents include polymers having at least one sulfonate group species or phosphate group species in a molecule, compounds having a quaternary ammonium salt, and surfactants having a polymerizable group. In particular, preferred are anionic or nonionic surfactants having a polymerizable group. Specifically, among such surfactants having a polymerizable group, examples of the anionic surfactants include: alkyl ether-based surfactants such as products from Nippon Nyukazai Co., Ltd. that are "Antox SAD" and "Antox MS-2N", products from DAI-ICHI KOGYO SEIYAKU CO., LTD. that are "AQUALON KH-05", "AQUALON KH-10", "AQUALON KH-20", "AQUALON KH-0530", and "AQUALON KH-1025", products from ADEKA CORPORATION that are "ADEKA REASOAP SR-10N" and "ADEKA REASOAP SR-20N", and a product from Kao Corporation that is "LATEMUL PD-104"; sulfosuccinate-based surfactants such as "LATEMUL S-120", "LATEMUL S-120A", "LATEMUL S-180P", "LATEMUL S-180A", and a product from Sanyo Chemical Industries, Ltd. that is "ELEMINOL JS-2"; alkylphenyl ether- or alkylphenyl ester-based surfactants such as products from DAI-ICHI KOGYO SEIYAKU CO., LTD. that are "AQUALON H-2855A", "AQUALON H-3855B", "AQUALON H-3855C", "AQUALON H-3856", "AQUALON HS-05", "AQUALON HS-10", "AQUALON HS-20", "AQUALON HS-30", "AQUALON HS-1025", "AQUALON BC-05", "AQUALON BC-10", "AQUALON BC-20", "AQUALON BC-1025", "AQUALON BC-2020", and products from ADEKA CORPORATION that are "ADEKA REASOAP SDX-222", "ADEKA REASOAP SDX-223", "ADEKA REASOAP SDX-232", "ADEKA REASOAP SDX-233", "ADEKA REASOAP SDX-259", "ADEKA REASOAP SE-10N", "ADEKA REASOAP SE-20N"; (meth)acrylate sulfate-based surfactants such as products from Nippon Nyukazai Co., Ltd. that are "Antox MS-60" and "Antox MS-2N", and a product from Sanyo Chemical Industries, Ltd. that is "ELEMINOL RS-30"; and phosphate-based surfactants such as a product from DAI-ICHI KOGYO SEIYAKU CO., LTD. that is "H-3330P", and a product from ADEKA CORPORATION that is "ADEKA REASOAP PP-70".

Among the surfactants having a polymerizable group, examples of nonionic surfactants include: alkyl ether-based surfactants such as products from Nippon Nyukazai Co., Ltd. that are "Antox LMA-20", "Antox LMA-27", "Antox EMH-20", "Antox LMH-20, "Antox SMH-20", products from ADEKA CORPORATION that are "ADEKA REASOAP ER-10", "ADEKA REASOAP ER-20", "ADEKA REASOAP ER-30", "ADEKA REASOAP ER-40", products from Kao Corporation that are "LATEMUL PD-420", "LATEMUL PD-430", "LATEMUL PD-450"; alkylphenyl ether-based or alkylphenyl ester-based surfactants such as products from DAI-ICHI KOGYO SEIYAKU CO., LTD. that are "AQUALON RN-10", "AQUALON RN-20", "AQUALON RN-30", "AQUALON RN-50", "AQUALON RN-2025", products from ADEKA CORPORATION that are "ADEKA REASOAP NE-10", "ADEKA REASOAP NE-20", "ADEKA REASOAP NE-30", "ADEKA REASOAP NE-40"; and (meth)acrylate sulfate-based surfactants such as products from Nippon Nyukazai Co., Ltd. that are "RMA-564", "RMA-568", "RMA-1114", and products from 3M Japan Limited that are "Fluorad FC171", "Fluorad FC4430", and "Fluorad FC4432".

Other examples of the antistatic agent include polyethylene glycol(meth)acrylate, methoxypolyethylene glycol(meth)acrylate, ethoxypolyethylene glycol (meth)acrylate, propoxypolyethylene glycol(meth)acrylate, n-butoxypolyethylene glycol(meth)acrylate, n-pentaxypolyethylene glycol(meth)acrylate, phenoxypolyethylene glycol(meth)acrylate, polypropylene glycol(meth)acrylate, methoxypolypropylene glycol (meth)acrylate, ethoxypolypropylene glycol(meth)acrylate, propoxypolypropylene glycol(meth)acrylate, n-butoxypolypropylene glycol(meth)acrylate, n-pentaxypolypropylene glycol(meth)acrylate, phenoxypolypropylene glycol(meth)acrylate, polytetramethylene glycol(meth)acrylate, methoxypolytetramethylene glycol(meth)acrylate, phenoxytetraethylene glycol(meth)acrylate, hexaethylene glycol(meth)acrylate, and methoxyhexaethylene glycol (meth)acrylate.

Such antistatic agents may be used alone or in combination of two or more thereof. The amount of such an antistatic agent added relative to the total amount of polymerizable liquid crystal compounds contained in the powder mixture is preferably 0.001 to 10 wt%, more preferably 0.01 to 5 wt%.

(Dye)

A powder mixture according to the present invention may contain a dye as needed. The dye used is not particularly limited and a publicly known and commonly used dye can be contained as long as it does not cause degradation of orientability.

Examples of such dyes include dichroic dyes and fluorescent dyes. Examples of such dyes include polyazo dyes, anthraquinone dyes, cyanine dyes, phthalocyanine dyes, perylene dyes, perinone dyes, and squarylium dyes; from the viewpoint of addition, such dyes are preferably liquid crystalline dyes. Examples include dyes described in U.S. Patent No. 2,400,877, DreyerJ. F., Phys. and Colloid Chem., 1948, 52, 808., "The Fixing of MolecularOrientation", Dreyer J. F., Journal de Physique, 1969, 4, 114., "LightPolarization from Films of Lyotropic Nematic Liquid Crystals", J.Lydon, "Chromonics" in "Handbook of Liquid Crystals Vol. 2B: Low MolecularWeight Liquid Crystals II", D. Demus, J. Goodby, G. W. Gray, H. W. Spiessm, V. Vill ed, Willey-VCH, P. 981-1007(1998), Dichroic Dyes for Liquid Crystal Display A. V. IvashchenkoCRC Press, 1994, and "Novel Development of Functional Dye Market", Chapter 1, p. 1, 1994, published by CMC Publishing Co., Ltd.

Examples of the dichroic dye include the following formula (d-1) to formula (d-8).

[Chem. 68]

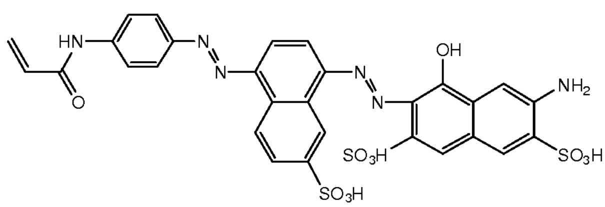

(d-1)

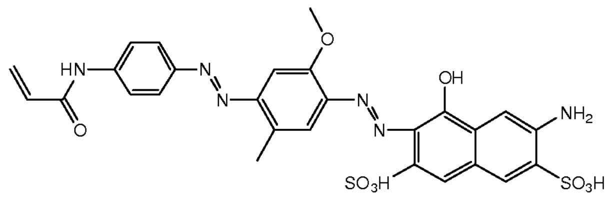

(d-2)

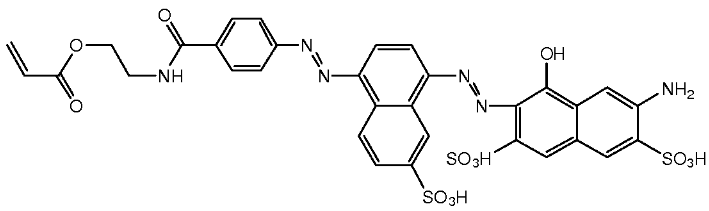

(d-3)

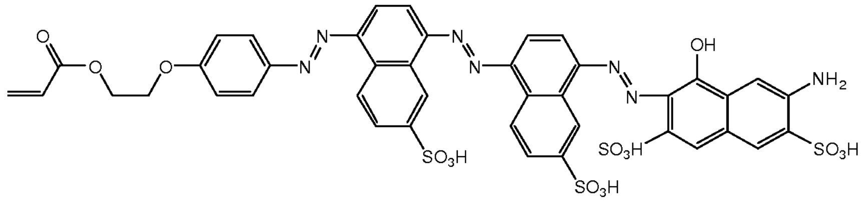

(d-4)

[Chem. 69]

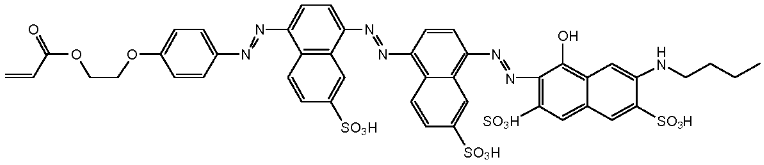

(d-5)

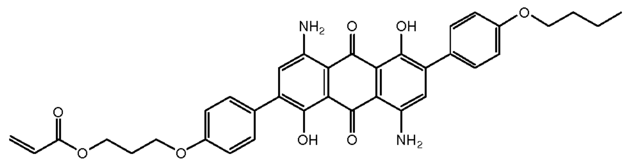

(d-6)

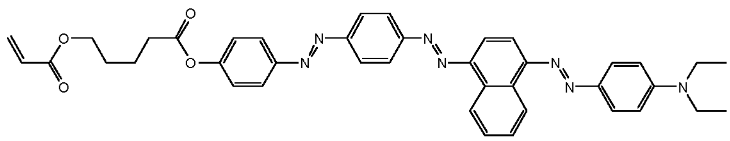

(d-7)

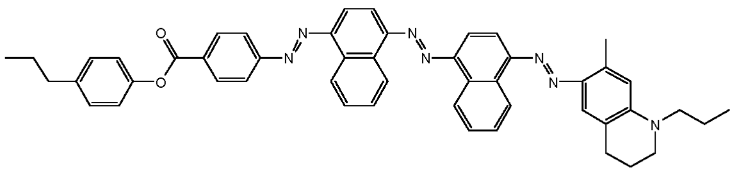

(d-8)

The amount of dye added, such as the dichroic dye, relative to the total amount of polymerizable liquid crystal compounds contained in the powder mixture is preferably 0.001 to 10 wt%, more preferably 0.01 to 5 wt%.

(Filler)

A powder mixture according to the present invention may contain filler as needed. The filler used is not particularly limited and a publicly known and commonly used filler can be contained as long as it does not cause degradation of the thermal conductivity of the obtained polymer. Specific examples include inorganic fillers such as alumina, titanium white, aluminum hydroxide, talc, clay, mica, barium titanate, zinc oxide, and glass fiber; metallic powders such as silver powder and copper powder; thermally conductive fillers such as aluminum nitride, boron nitride, silicon nitride, gallium nitride, silicon carbide, magnesia (aluminum oxide), alumina (aluminum oxide), crystalline silica (silicon oxide), fused silica (silicon oxide); and silver nanoparticles.

(Curing agent)

A powder mixture according to the present invention may further contain a curing agent. Specific examples include aliphatic polyamines such as diethylenetriamine and triethylenetetramine; and ketimine compounds including products from ADEKA CORPORATION such as EH-235R-2, and products from Mitsubishi Chemical Corporation such as jERCURE series H3 and H30.

The amount of such a curing agent used relative to the powder mixture is preferably 0.01 to 20 mass%, more preferably 0.05 to 15 mass%, particularly preferably 0.1 to 10 mass%. Such agents can be used alone or in combination of two or more thereof.

(Chiral compound)

A powder mixture according to the present invention may contain a powder composed of a polymerizable chiral compound.

A polymerizable chiral compound used in the present invention preferably has at least one polymerizable functional group. Examples of such a compound include: as described in, for example, Japanese Unexamined Patent Application Publication Nos. 11-193287 and 2001-158788, Japanese Unexamined Patent Application Publication (Translation of PCT Application) No. 2006-52669, Japanese Unexamined Patent Application Publication Nos. 2007-269639, 2007-269640, and 2009-84178, polymerizable chiral compounds that contain a chiral saccharide such as isosorbide,

isomannite, or glucosid, and that has a rigid region of a 1,4-phenylene group or a 1,4-cyclohexylene group, and a polymerizable functional group such as a vinyl group, an acryloyl group, a (meth)acryloyl group, or a maleimide group; as described in Japanese Unexamined Patent Application Publication No. 8-239666, polymerizable chiral compounds composed of terpenoid derivatives; as described in, for example, NATURE VOL35 p. 467 to 469 (published November 30, 1995) and NATURE VOL392 p. 476 to 479 (published April 2, 1998), polymerizable chiral compounds composed of a mesogenic group and a spacer having a chiral region; and, as described in Japanese Unexamined Patent Application Publication (Translation of PCT Application) No. 2004-504285 and Japanese Unexamined Patent Application Publication No. 2007-248945, polymerizable chiral compounds including a binaphthyl group. In particular, preferred are chiral compounds having high helical twisting power (HTP).

The amount of such a polymerizable chiral compound added needs to be appropriately adjusted in accordance with the helical twisting power of the compound; however, the amount relative to the polymerizable liquid crystal composition is preferably 0 to 25 mass%, more preferably 0 to 20 mass%, particularly preferably 0 to 15 mass%.

Examples of the general formulas of polymerizable chiral compounds include general formulas (13-1) to (13-4); however, the examples are not limited to the following general formulas.

[Chem. 70]

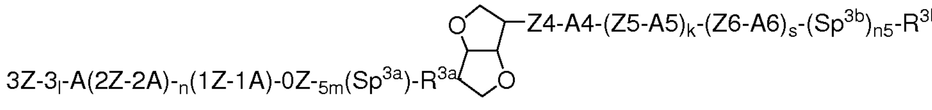
(13-1)

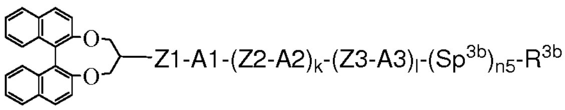
(13-2)

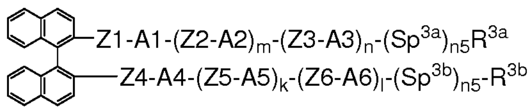
(13-3)

$R^{3a}\text{-}(Sp^{3a})_{m5}\text{-}Z0\text{-}(A1\text{-}Z1)_n\text{-}(A2\text{-}Z2)_l\text{-}A3\text{-}Z3\text{-}A4\text{-}Z4\text{-}A5\text{-}Z5\text{-}CH_2\underset{*}{C}H(R^{3a})R^{3b}$ (13-4)

In the formulas, $Sp^{3a}$ and $Sp^{3b}$ each independently represent an alkylene group having 0 to 18 carbon atoms; the alkylene group may be substituted by at least one halogen atom, CN group, or polymerizable-functional-group-containing alkyl group having 1 to 8 carbon atoms in which a single $CH_2$ group or two or more non-adjacent $CH_2$ groups may each be independently substituted by, as long as oxygen atoms are not directly bonded to each other, -O-, -S-, -NH-, -$N(CH_3)$-, -CO-, -COO-, -OCO-, -OCOO-, -SCO-, -COS-, or -C≡C-,
in the general formulas (13-1) to (13-4), A1, A2, A3, A4, and A5 each independently represent a 1,4-phenylene group, a 1,4-cyclohexylene group, a 1,4-cyclohexenyl group, a tetrahydropyran-2,5-diyl group, a 1,3-dioxane-2,5-diyl group, a tetrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group-, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group; n, 1, and k each independently represent 0 or 1 and satisfy $0 \leq n + 1 + k \leq 3$,
in the general formulas (13-1) to (13-4), Z0, Z1, Z2, Z3, Z4, Z5, and Z6 each independently represent -COO-, -OCO-, -$CH_2CH_2$-, -$OCH_2$-, -$CH_2O$-, -CH=CH-, -C≡C-, -CH=CHCOO-, - OCOCH=CH-, -$CH_2CH_2COO$-, -$CH_2CH_2OCO$-, -$COOCH_2CH_2$-, -$OCOCH_2CH_2$-, -CONH-, -NHCO-, an alkyl group that has 2 to 10 carbon atoms and may have a halogen atom, or a single bond,
n5 and m5 each independently represent 0 or 1,
$R^{3a}$ and $R^{3b}$ represent a hydrogen atom, a halogen atom, a cyano group, or an alkyl group having 1 to 18 carbon atoms in which the alkyl group may be substituted by at least one halogen atom or CN, and, in the group, a single $CH_2$ group or two or more non-adjacent $CH_2$ groups may each be independently substituted by, as long as oxygen atoms are not

directly bonded to each other, -O-, -S-, -NH-, -N($CH_3$)-, -CO-, -COO-, -OCO-, -OCOO-, -SCO-, -COS-, or -C≡C-, alternatively, $R^{3a}$ and $R^{3b}$ are represented by a general formula (13-a)

[Chem. 71]

$$-P^{3a} \qquad (13\text{-}a)$$

(in the formula, $P^{3a}$ represents a polymerizable functional group, $Sp^{3a}$ means the same as $Sp^1$.)

$P^{3a}$ preferably represents a substituent selected from polymerizable groups represented by the following formula (P-1) to formula (P-20).

[Chem. 72]

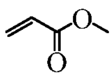
(P-1)

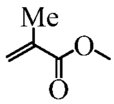
(P-2)

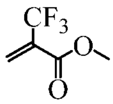
(P-3)

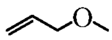
(P-4)

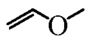
(P-5)

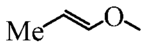
(P-6)

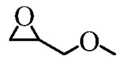
(P-7)

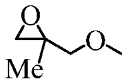
(P-8)

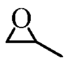
(P-9)

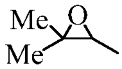
(P-10)

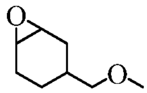
(P-11)

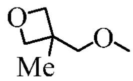
(P-12)

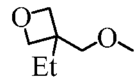
(P-13)

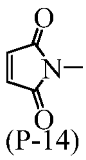
(P-14)

HS—
(P-15)

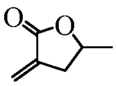
(P-16)

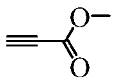
(P-17)

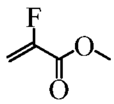
(P-18)

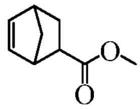
(P-19)

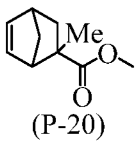
(P-20)

Among these polymerizable functional groups, from the viewpoint of enhancing polymerizability and storage stability, preferred are the formula (P-1), the formulas (P-2), (P-7), (P-12), and (P-13), more preferred are the formulas (P-1), (P-7), and (P-12).

Specific examples of the polymerizable chiral compound include compounds of Compounds (13-5) to (13-26); however, the examples are not limited to the following compounds.

[Chem. 73]

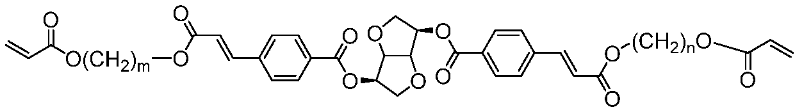

(13-5)

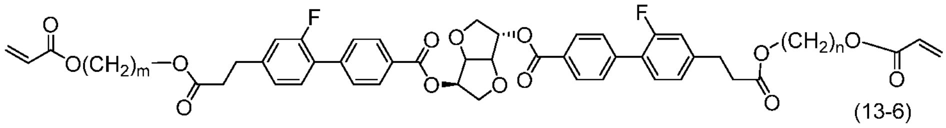

(13-6)

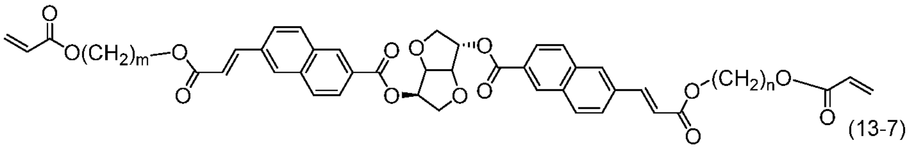

(13-7)

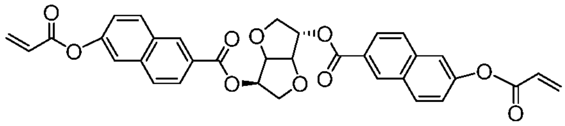

(13-8)

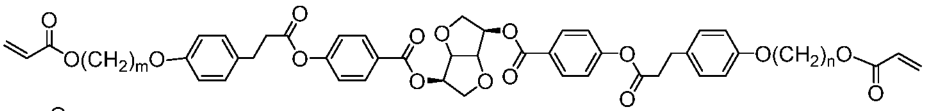

(13-9)

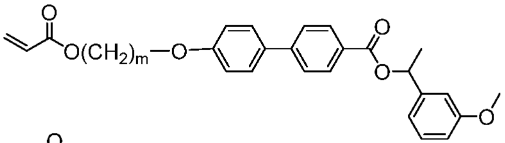

(13-10)

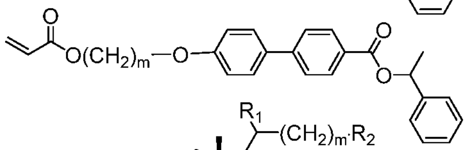

(13-11)

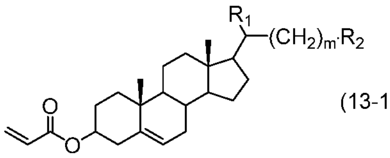

(13-12)

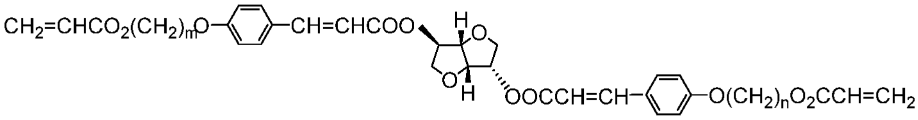

(13-13)

[Chem. 74]

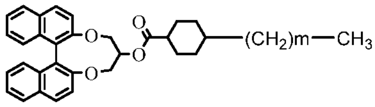

(13-14)

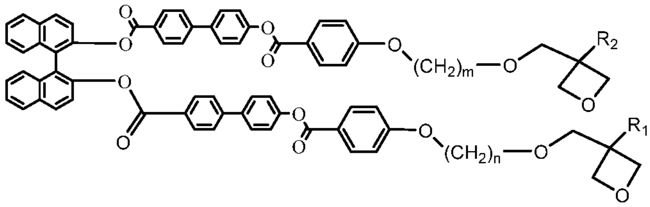

(13-15)

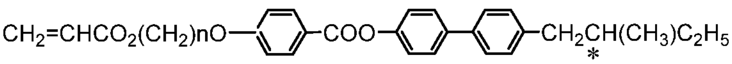

(13-16)

[Chem. 75]

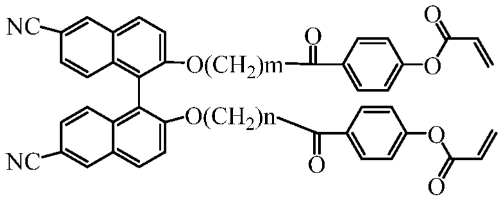

(13-17)

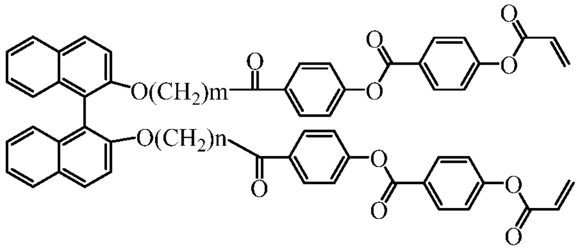

(13-18)

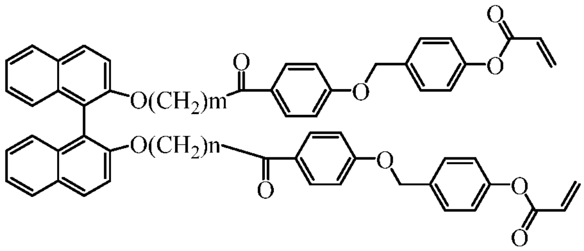

(13-19)

[Chem. 76]

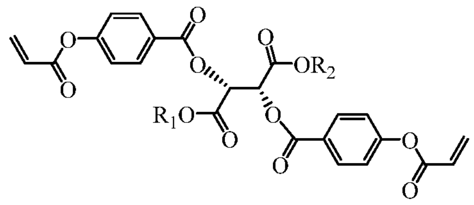

(13-20)

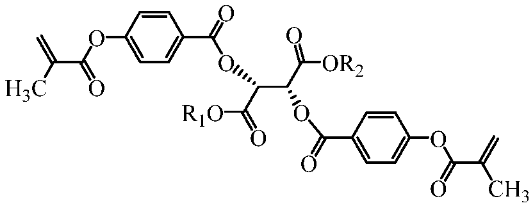

(13-21)

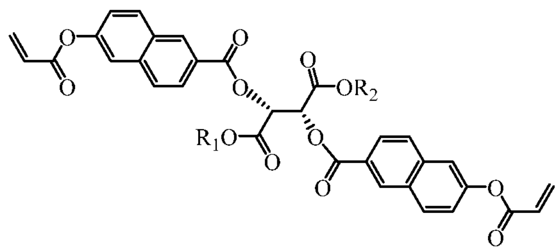

(13-22)

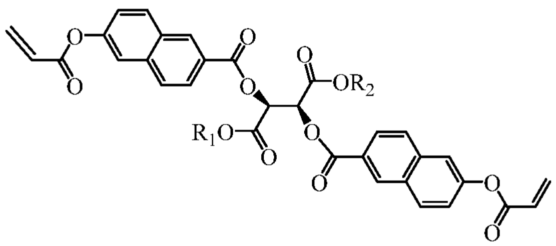

(13-23)

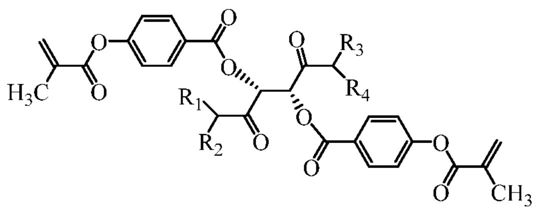

(13-24)

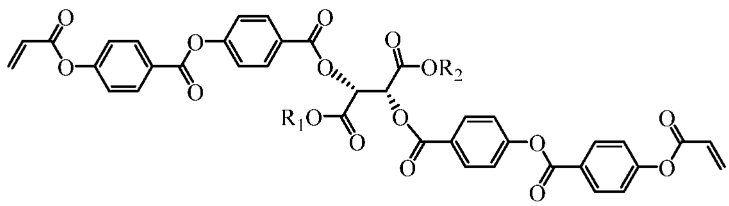

(13-25)

[Chem. 77]

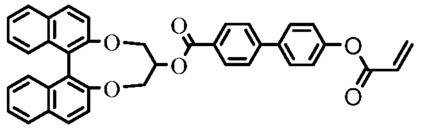

(13-26)

In the formulas, m, n, k, and 1 each independently represent an integer of 1 to 18; $R_1$ to $R_4$ each independently represent a hydrogen atom, an alkyl group having 1 to 6 carbon atoms, an alkoxy group having 1 to 6 carbon atoms, a

carboxy group, or a cyano group. When such a group represents an alkyl group having 1 to 6 carbon atoms or an alkoxy group having 1 to 6 carbon atoms, the group may be wholly unsubstituted, or may be substituted by one or two or more halogen atoms.

(Method of mixing additive)

A powder mixture according to the present invention may be mixed with powders composed of the above-described various additives. The mixing ratios of powders composed of such additives to the powder mixture preferably satisfy the above-described ranges. However, when additives are added during the production of a solution composition by dissolving a powder mixture according to the present invention in an organic solvent, or when additives are added during the production of a nematic liquid crystal composition by heating a powder mixture according to the present invention, the mixing ratios of powders composed of additives are not limited to the above-described ranges. When additives are liquid additives, they are preferably added during production of a solution composition in which a powder mixture according to the present invention is dissolved in an organic solvent, or preferably added during production of a nematic liquid crystal composition in which a powder mixture according to the present invention is heated. However, as described above, when at least a certain volume of solid remains in the powder mixture, small amounts of liquid additives can be added.

(Method for preparing powder mixture)

(Powder mixture prepared without stirring)

A powder mixture according to the present invention contains the above-described at least one polymerizable liquid crystal compound having at least one polymerizable functional group and being solid under atmospheric pressure at 30°C or less, and can be obtained by mixing with the above-described various additives as needed. Regarding the powder mixture to be obtained, powders are not necessarily stirred in order to achieve homogeneity, and the powders may be sequentially charged into a container to obtain the powder mixture. When the powder mixture is transferred into another container and used, small amounts of additives may adhere to the wall of the container and cannot be transferred. In order to prevent this, additives are preferably mixed with the powder mixture; more preferably, the polymerizable liquid crystal compound is added to 5 vol% or more and 95 vol% or less of the capacity, and then the additives are added. After a container is charged with a powder mixture according to the present invention, the container may be subjected to stirring processes caused by motion of the container such as rotation or leaning during transportation and storage, which does not particularly cause problems.

(Powder mixture prepared with stirring)

Regarding a powder mixture according to the present invention, powders may be stirred to achieve homogeneity of the powders. The stirring can be performed with a mixing machine. Examples of the mixing machine include a vessel rotation system, a mechanical stirring system, a fluidization stirring system, a non-stirring system, and a high rate shear-impact system.

The vessel rotation system is a system configured such that various vessels such as a V-shaped vessel, a double-cone-shaped (conical) vessel, and a cylindrical vessel are rotated with a rotation shaft or an external driving apparatus; the rotation causes convection and stirring of the powders in such a vessel, and, preferably, mixing due to convection is dominantly caused. Incidentally, there are systems including rotation vessels within which stirring impellers are provided. These systems are impeller-equipped vessel rotation mixing machines, and are classified as vessel rotation systems. Impeller-equipped vessel rotation mixing machines exhibit higher stirring efficiency than vessel rotation mixing machines without impellers, hence are preferred as mixing machines. In the vessel rotation systems, the higher the rotation speed, the higher the mixing speed, which is preferable; however, the rotation speed more preferably provides a centrifugal force weaker than the gravity in order to enhance the stirring efficiency. A speed at which the centrifugal force causes powders to adhere to and be fixed on the inner wall of a rotation vessel is referred to as a critical rotation speed; the rotation speed is preferably 60 to 90% of the critical rotation speed, more preferably 50 to 80%. Compared with the other mechanical stirring system, fluidization stirring system, non-stirring system, and high rate shear-impact system, stirring with the vessel rotation system applies a weaker force to particles and is preferably used when, for example, deformation, deterioration, or frictional heat-induced deterioration of particles is not desired.

When a vessel rotation mixing machine that has a cylindrical vessel is used, the vessel is preferably rotated around the cylinder long axis direction while the vessel is shaken such that the cylinder long axis is inclined upward or downward in order to enhance the stirring efficiency. In order to enhance the stirring efficiency, most preferably, in addition to the rotation and the shaking, a stirring impeller within the cylinder is independently rotated to stir powders.

The mechanical stirring system is configured such that a mixing vessel is fixed, a stirring impeller attached within the vessel and having the shape of, for example, a paddle, a ribbon, or a screw is rotated to stir and disperse powders within the vessel. This system is classified as a system group that applies a relatively strong force to powders. Preferred systems are, for example, mechanical stirring systems such as ribbon mixers and paddle mixers, and vessel rotation machines equipped with high-speed stirring impellers. Even powders that have high adhesion and tend to agglomerate can be dispersed, and hence the system is suitable for dispersing and mixing of powders that tend to generate agglomerate.

The fluidization stirring system is configured such that a mixing vessel is fixed, airflow such as flowing air, swirl flow, or jet flow is passed from the lower portion of the vessel, to fluidize powders into jet to thereby cause convection and dispersion. The fluidization stirring system is a system group that applies a strong force to powders, and exerts the effects of shearing, compression, and grinding on particles constituting the powders. The system corresponds to, for example, a high-speed rotation pan machine, a high-speed rotation elliptic rotor machine, and a high-speed rotation impact machine.

The non-stirring system is configured such that the mixing machine itself is fixed, and powders are passed through the machine by gravity to thereby be dispersed and stirred.

The high rate shear-impact system is configured such that a rotation pan, an elliptic rotor, or an impact impeller being rotated more rapidly than mechanical stirring systems causes fine powders to be dispersed. The system applies very strong shear force and friction to powders.

Such various mixing machines have their optimal charge ratios defined in accordance with their systems. Such a charge ratio is defined as the ratio of the volume of powders charged to the total effective volume of a machine. In the case of vessel rotation mixing machines, the maximum charge ratio is preferably 60 vol% or 50 vol%, more preferably about 45 vol%, about 40 vol%, or about 30 vol%; in the case of mechanical stirring systems, the maximum charge ratio is preferably 80 vol% or 85%, more preferably about 70 vol%, about 65 vol%, or about 60 vol%.

At the time of stirring, great care is preferably taken in terms of charge position and charge order. When trace components are fine powders, in order to prevent the fine powders from having an agglomerate form, a machine having a mechanism of dispersing agglomerates is preferably selected; alternatively, agglomerates of the fine powders are preferably disintegrated and then mixed.

In powders contained as a population within a vessel, sampling is preferably performed so as to statistically reflect the component ratios of the population. However, in actual determination of component ratios, strictly statistical representatives are not necessarily required, and errors are admitted. Regarding the method of sampling, in the case of a deposited powder mixture or powders charged into a vessel, for example, a method using a spinning riffler, a chute riffler, a cone and quartering method, or appropriate sampling may be used; in the case of fluidized powders being transported with, for example, a conveyor, a vessel such as a scoop may be inserted into the fluidized powders to achieve sampling.

Examples of an analysis method of determining mixing ratios include liquid chromatography, gas chromatography, gel permeation chromatography, liquid chromatograph mass spectrometry, gas chromatograph mass spectrometry, NMR, IR, centrifugal separation, and sedimentation. In particular, the determination is preferably performed by liquid chromatography, gas chromatography, gel permeation chromatography, liquid chromatograph mass spectrometry, or gas chromatograph mass spectrometry.

(Container)

A container for storing a powder mixture according to the present invention may be selected from publicly known containers formed of, for example, glass, plastic, metal, alloy, or composite material. The container is preferably a light-shielding container; in the case of glass, the container is preferably light-shielded with brown color or an outer casing; in the case of plastic, the container is preferably opaque. The shape of the container can be selected from publicly known shapes: examples include cylindrical containers of 18 liters or more and 400 liters or less; what is called, drums; middle- or small-sized cans of 18 liters or more and less than 200 liters; 18-liter or 20-liter containers equipped with handles (bails or ring handles), namely pails; 18-liter square cans, screw cans and tubes, box containers, and bottles. In order to prevent leakage of the powder mixture and entry of moisture, outside air, wind and rain, and the like, the container preferably has a sealable structure, and is preferably sealed with a screw, a band, tightening of a screw, or a bolt, for example; more preferably, the container has an inner lid, and the inner lid is preferably equipped with a gasket in order to prevent the content from leaking. The container may or may not be formed so as to have an inner packaging. When the inner packaging is formed, preferably performed is, for example, chemical conversion treatment, electrolytic treatment, or oxidation treatment. In the case of performing chemical conversion treatment, preferred are zinc phosphate treatment and iron phosphate treatment. In order to further enhance the effect of chemical resistance, a synthetic resin coating material is preferably applied to the inner surface and baked. Preferred synthetic resin coating materials are epoxy-based materials and phenol-based materials.

In order to enhance impact resistance, compared with glass, preferred are plastic, metal, alloy, and composite materials; in the case of metal or alloy, its specific gravity (20 to 25°C, 1 atm) is preferably 10 g/$cm^3$ or less. In order to achieve a reduction in the weight, preferred are materials having low specific gravity: preferably 9.0 g/$cm^3$ or less, particularly preferably 3.0 g/$cm^3$ or less.

When the material is stainless steel, preferred examples include austenitic stainless steel materials, ferritic stainless steel materials, duplex (austenitic-ferritic) stainless steel materials, martensitic stainless steel materials, and precipitation hardening stainless steel materials.

Among various materials, aluminum is a highly advantageous material and hence is particularly suitable for the container of the powder mixture because, for example, aluminum has high corrosion resistance, causes less pollution in the environment, has high workability, high impact resistance, high resistance to deformation due to an external force, and a low specific gravity of 3.0 g/$cm^3$ or less. The aluminum used preferably has a purity of 95% or more, more preferably 99% or more, particularly preferably 99.5% or more. For example, aluminum manufactured by Tournaire is preferably used.

The atmosphere within the container preferably contains oxygen; the container is not preferably filled with an inert gas such as nitrogen or argon. The oxygen concentration as a volume ratio in terms of gases present within the container is preferably 1% to 40%, more preferably 5% to 35%, 10% to 30%, still more preferably 15% to 25%, particularly preferably 20% to 22%.

(Transportation conditions)

When a powder mixture according to the present invention is transported, it is preferably transported at temperatures lower than the melting points of the components of the powders. Preferably, the upper limit temperature applied to the powder mixture during transportation is preferably 2°C, 3°C, or 5°C lower than, more preferably 10°C lower than, the melting point of the lowest melting point component of a polymerizable liquid crystal compound in the powder mixture. The maximum temperature around the container during transportation is preferably 50°C or 45°C or less, more preferably 40°C, 35°C or less, or 30°C or less in order to maintain the powder form; and the time at the maximum temperature is preferably within 3 hours, 2 hours, or 1 hour in order to minimize changes in the powder form. The minimum temperature is not particularly limited, and may be below 0° centigrade. In order to monitor changes in the temperature during transportation, a small device having a temperature sensor and a storage medium such as a data logger may be used: for example, "ONDOTORI" (including its series products) from T&D Corporation.

(Storage conditions)

A powder mixture according to the present invention is preferably stored under a condition at a temperature or lower in which the powder mixture maintains the powder form. In particular, direct sunlight is preferably avoided and indoor storage is preferred in order to minimize temperature changes. Regarding temperature and humidity, preferred is storage at a temperature of 40°C or less and a humidity of 80% or less, preferably a temperature of 35°C or less and a humidity of 70% or less, particularly preferably a temperature of 30°C or less and a humidity of 65% or less.

(Method for preparing solution composition with powder mixture)

Regarding a method for preparing a solution composition with a powder mixture according to the present invention, it can be obtained by dissolving a powder mixture according to the present invention in a desired solvent. Such solvents usable are not limited, and can be selected from publicly known organic solvents. Such organic solvents may be used alone or in combination of two or more thereof.

Examples of the solvents include ester solvents, amide solvents, alcohol solvents, ether solvents, glycol monoalkyl ether solvents, aromatic hydrocarbon solvents, halogenated aromatic hydrocarbon solvents, aliphatic hydrocarbon solvents, halogenated aliphatic hydrocarbon solvents, alicyclic hydrocarbon solvents, ketone solvents, and acetate solvents.

The ester solvents are preferably alkyl acetate, ethyl trifluoroacetate, alkyl lactate, and γ-butyrolactone.

Specific examples of the alkyl acetate include methyl acetate, ethyl acetate, propyl acetate, butyl acetate, 3-methoxybutyl acetate, and methyl acetoacetate. Specific examples of the alkyl lactate include methyl lactate, ethyl lactate, and n-propyl lactate.

Specific examples of the amide solvents include N-methyl-2-pyrrolidone, N,N-dimethylacetamide, and N,N-dimethylformamide.

Specific examples of the alcohol solvents include methanol, ethanol, 1-propanol, 2-propanol, 1-methoxy-2-propanol, and n-butanol.

Specific examples of the ether solvents include ethylene glycol dimethyl ether, diethylene glycol dimethyl ether,

1,4-dioxane, and tetrahydrofuran (THF).

Preferred examples of the glycol monoalkyl ether solvents include ethylene glycol monoalkyl ether, diethylene glycol monoalkyl ether, triethylene glycol monoalkyl ether, propylene glycol monoalkyl ether, dipropylene glycol monoalkyl ether, ethylene glycol monoalkyl ether acetate, diethylene glycol monoalkyl ether acetate, triethylene glycol monoalkyl ether acetate, propylene glycol monoalkyl ether acetate, dipropylene glycol monoalkyl ether acetate, and diethylene glycol methyl ethyl ether.

Specific examples of the ethylene glycol monoalkyl ether include ethylene glycol monomethyl ether and ethylene glycol monobutyl ether. Specific examples of the propylene glycol monoalkyl ether include propylene glycol monobutyl ether. Specific examples of the dipropylene glycol monoalkyl ether include dipropylene glycol monomethyl ether. Specific examples of the ethylene glycol monoalkyl ether acetate include ethylene glycol monobutyl ether acetate. Specific examples of the triethylene glycol monoalkyl ether acetate include triethylene glycol monoethyl ether acetate. Specific examples of the propylene glycol monoalkyl ether acetate include propylene glycol monomethyl ether acetate, and propylene glycol monoethyl ether acetate. Specific examples of the dipropylene glycol monoalkyl ether acetate include dipropylene glycol monomethyl ether acetate, and diethylene glycol methyl ethyl ether.

Specific examples of the aromatic hydrocarbon solvents include benzene, toluene, xylene, anisole, mesitylene, ethylbenzene, n-propylbenzene, n-butylbenzene, and tetralin. Specific examples of the halogenated aromatic hydrocarbon solvents include chlorobenzene. Specific examples of the aliphatic hydrocarbon solvents include hexane and heptane. Specific examples of the halogenated aliphatic hydrocarbon solvents include chloroform, dichloromethane, dichloroethane, trichloroethane, trichloroethylene, and tetrachloroethylene. Specific examples of the alicyclic hydrocarbon solvents include cyclohexane and decalin.

Specific examples of the ketone solvents include acetone, methyl ethyl ketone, methyl isobutyl ketone, cyclohexanone, cyclopentanone, and methyl propyl ketone.

(Method for preparing nematic liquid crystalline composition with powder mixture)

Examples of the method for preparing a nematic liquid crystal composition with a powder mixture according to the present invention include a method of heating particles constituting a powder mixture according to the present invention to a temperature at which the particles form a nematic liquid crystal phase, and a method of heating the particles to a temperature (clearing point) at which the particles turn into an isotropic liquid and then cooling the liquid until it turns into nematic liquid crystal. In order to obtain a more homogeneous composition, preferred is the heating to an isotropic liquid and the subsequent cooling to the temperature providing nematic liquid crystal; the isotropic liquid is preferably shaken or stirred. The stirring is preferably performed with a stirring impeller. The nematic liquid crystal obtained by cooling from an isotropic liquid may be monotropic or enantiotropic, and may be formed in either of the processes.

(Cured product)

A nematic liquid crystal composition prepared by heating a powder mixture according to the present invention, or a solution composition prepared by dissolving a powder mixture according to the present invention in an organic solvent can be used to prepare a cured product. The cured product can be obtained by the following two production methods: the solution composition is applied to a substrate, dried to remove the organic solvent, and subsequently irradiated with an active energy ray to obtain a cured product; the nematic liquid crystal composition is irradiated with an active energy ray to obtain a cured product. Such a cured product may or may not have optical anisotropy; may include anisotropic regions in patterns; and may include anisotropic regions and non-anisotropic regions. The cured product may have the shape of a film, a block, or a desired shape using a mold, for example. Such cured products may be stacked.

(Optically anisotropic body)

A nematic liquid crystal composition prepared by heating a powder mixture according to the present invention, or a solution composition prepared by dissolving a powder mixture according to the present invention in a solution (hereafter, these two compositions will be referred to as a polymerizable liquid crystal composition) may be used to prepare an optically anisotropic body. The optically anisotropic body can be obtained by the following two production methods: the solution composition is applied to a substrate, dried to remove the organic solvent, and subsequently irradiated with an active energy ray to obtain an optically anisotropic body; the nematic liquid crystal composition is irradiated with an active energy ray to obtain an optically anisotropic body. Such an optically anisotropic body can be used as an optical device, a lenticular lens, a pickup lens, an optical film, a brightness enhancement film, an antireflective film, or a polarizing film. The optically anisotropic body includes a substrate, an alignment film as needed, and a polymer of the polymerizable liquid crystal composition that are sequentially stacked. Such stacking may be repeated to form a

bilayer or trilayer structure; an optically anisotropic body may be disposed between substrates. Alternatively, in order to provide an in-cell display, a color filter and a transparent electrode formed of, for example, ITO may be disposed on the optically anisotropic body.

(Retardation film)

An optical film obtained with a polymerizable liquid crystal composition using a powder mixture according to the present invention may be used as, for example, a material having a function equivalent to that of a retardation film or a compensation film. Specifically, when polymerization is caused such that the molecular long axes of the polymerizable liquid crystal compound in the polymerizable liquid crystal composition are oriented parallel to the substrate, the resultant cured product can be used as a retardation film of a positive A plate. When polymerization is caused such that the molecular long axes of the polymerizable liquid crystal compound are oriented perpendicular to the substrate, the resultant cured product can be used as a retardation film of a positive C plate. When polymerization is caused such that the polymerizable liquid crystal compound and a polymerizable chiral compound form helixes, and the helical axes are perpendicular to the substrate, the resultant cured product can be used as a retardation film of a negative C plate. Alternatively, when polymerization is caused such that the molecular length of the polymerizable liquid crystal compound is inclined at a certain angle with respect to the substrate (inclined orientation), the resultant cured product can be used as a retardation film of an O plate. Polymerization may be caused such that molecular long axes are perpendicular to the substrate in a near-interface region, and, toward the air interface, the orientation of molecular long axes gradually shifts to perpendicular to the substrate (hybrid orientation). Alternatively, a retardation film can be obtained as a result of polymerization into the shape of a lenticular lens. When a substrate has retardation, a retardation film is obtained that has birefringence of the sum of the birefringence of the substrate and the birefringence of the retardation film. In the retardation film, the birefringence of the substrate and the birefringence of the retardation film may have the same direction or different directions in the plane of the substrate. The film is applied in accordance with the application such as a liquid crystal device, a display, an optical element, an optical component, a coloring agent, security marking, a laser-induced emission member, an optical film, or a compensation film.

(Retardation patterning film)

A retardation patterning film includes, as with the optically anisotropic body, a substrate, an alignment film, and a polymer of a polymerizable liquid crystal composition that are sequentially stacked; and the film is patterned in the polymerization step so as to provide different retardations among regions. Examples of the patterning include linear patterning, grid patterning, circular patterning, and polygonal patterning. Such a pattern may have different orientation directions among regions. The film is applied in accordance with the application such as a liquid crystal device, a display, an optical element, an optical component, a coloring agent, security marking, a laser-induced emission member, an optical film, or a compensation film.

A method for obtaining a retardation patterning film having different orientations among regions is as follows: an alignment film is formed on a substrate; in an alignment treatment, while a polymerizable liquid crystal composition according to the present invention is applied and dried, the polymerizable liquid crystal composition is treated so as to be oriented in a pattern. Examples of the alignment treatment include fine rubbing treatment, treatment of irradiation with polarized ultraviolet-visible light through a photomask, and fine shape processing treatment. The alignment film may be selected from publicly known and commonly used alignment films. Examples include alignment films formed of a compound such as polyimide, polysiloxane, polyamide, poly(vinyl alcohol), polycarbonate, polystyrene, poly(phenylene ether), polyarylate, polyethyleneterephthalate, polyethersulfone, epoxy resin, epoxy acrylate resin, acrylic resin, a coumarin compound, a chalcone compound, a cinnamate compound, a fulgide compound, an anthraquinone compound, an azo compound, or an arylethene compound. A compound subjected to alignment treatment by fine rubbing is preferably a compound in which the alignment treatment or a heating step performed after the alignment treatment promotes crystallization of the material. A compound subjected to alignment treatment other than rubbing is preferably a photoalignment material.

(Substrate)

A substrate used for the optically anisotropic body is not particularly limited as long as the substrate is usually used for liquid crystal devices, displays, optical parts, and optical films, and is a material having such heat resistance that withstand heating during drying of the applied polymerizable liquid crystal composition. Examples of such a substrate include organic materials such as plastic substrates, ceramic substrates, paper, metal substrates, and glass substrates. In particular, when the substrate is an organic material, examples include cellulose derivatives, polyolefin, polyester, polycarbonate, polyacrylate (acrylic resin), polyarylate, polyethersulfone, polyimide, polyphenylene sulfide, poly(phenylene ether), nylon, and polystyrene. In particular, preferred are plastic substrates formed of polyester, polystyrene, polyacrylate, polyolefin, a cellulose derivative, polyarylate, or polycarbonate; more preferred are substrates formed of polyacrylate, polyolefin, or a cellulose derivative; particularly preferred are use of COP (cycloolefin polymer) as the polyolefin, use of TAC (triacetylcellulose) as the cellulose derivative, and use of PMMA (polymethyl methacrylate) as the polyacrylate. The substrate may have the shape of a flat plate, or may have a curved surface. Such a substrate may have, as needed, an electrode layer, an antireflective function, or a reflective function.

In order to enhance the coatability and adhesion of the polymerizable liquid crystal composition, such a substrate may be surface-treated. Examples of the surface treatment include ozone treatment, plasma treatment, corona treatment, and silane coupling treatment. In order to adjust light transmittance or reflectivity, on the surface of the substrate, an organic thin film, an inorganic oxide thin film, or a metal thin film may be formed by vapor deposition, for example. In order to provide optical added value, the substrate may be a lenticular lens, a pickup lens, a rod lens, an optical disc, a retardation film, a light diffusion film, or a color filter, for example. Of these, preferred are those providing higher added value, which are a lenticular lens, a pickup lens, a retardation film, a light diffusion film, and a color filter.

(Alignment treatment)

The substrate is usually subjected to alignment treatment or may be equipped with an alignment film, so that, during application of a polymerizable liquid crystal composition according to the present invention, the polymerizable liquid crystal composition is oriented. Examples of the alignment treatment include stretching treatment, rubbing treatment, polarized ultraviolet-visible light irradiation treatment, and ion beam treatment. When the alignment film is used, the alignment film is selected from publicly known and commonly used alignment films. Examples include alignment films formed of a compound such as polyimide, polysiloxane, polyamide, poly(vinyl alcohol), polycarbonate, polystyrene, poly(phenylene ether), polyarylate, polyethyleneterephthalate, polyethersulfone, epoxy resin, epoxy acrylate resin, acrylic resin, a coumarin compound, a chalcone compound, a cinnamate compound, a fulgide compound, an anthraquinone compound, an azo compound, or an arylethene compound. A compound subjected to rubbing as alignment treatment is preferably a compound in which the alignment treatment, or a heating step performed after the alignment treatment promotes crystallization of the material. A compound subjected to alignment treatment other than rubbing is preferably a photoalignment material.

(Coating)

Examples of a coating method for irradiation of a polymerizable liquid crystal composition with ultraviolet light to obtain an optically anisotropic body that is a coating film or a film include publicly known and commonly used methods such as an applicator method, a bar coating method, a spin coating method, a roll coating method, a direct gravure coating method, a reverse gravure coating method, a flexographic coating method, an inkjet method, a die coating method, a CAP coating method, a dip coating method, and a slit coating method. When the polymerizable liquid crystal composition is a solution composition, the applied composition is preferably dried, as needed, by heating or air blowing, for example.

(Polymerization method)

Examples of a method of polymerizing the polymerizable liquid crystal composition include a method of irradiation with an active energy ray and a thermal polymerization method. Preferred is the method of irradiation with an active energy ray because heating is not necessary and the reaction proceeds at room temperature; in particular, preferred is a method of irradiation of light such as ultraviolet light because of the simple operation. The presence of oxygen inhibits polymerization, and hence irradiation with ultraviolet light is preferably performed in the presence of an inert gas such as nitrogen or argon.

The temperature during the irradiation is a temperature at which the polymerizable liquid crystal compound maintains the liquid crystal phase; in order to avoid induction of thermal polymerization of the polymerizable liquid crystal compound, the temperature is preferably set at 30°C or less whenever possible. Incidentally, a liquid crystal composition composed of a liquid crystal compound exhibits a liquid crystal phase usually in the temperature increase process, within the range of C (solid phase)-N (nematic) transition temperature (hereafter, abbreviated as C-N transition temperature) to the N-I transition temperature. On the other hand, in the temperature decrease process, a thermodynamically non-equilibrium state is provided, and hence solidification may not occur even at or below the C-N transition temperature and the liquid crystal state may be maintained. This state is referred to as a supercooling state. In the present invention, the supercooling state is also regarded as being included in the state of maintaining the liquid crystal phase. Specifically, irradiation with ultraviolet light at 390 nm or less is preferred; most preferred is irradiation with light at wavelengths of 250 to 370 nm. However, when ultraviolet light at 390 nm or less causes, for example, decomposition of the polymerizable

composition, the polymerization treatment may be preferably performed with ultraviolet light at 390 nm or more. This light is preferably diffused light and is not polarized light. The intensity of irradiation with ultraviolet light is preferably in the range of 1 $mW/m^2$ to 10 $kW/m^2$, particularly preferably, in the range of 5 $mW/m^2$ to 2 $kW/m^2$. When the intensity of ultraviolet light is less than 1 $mW/m^2$, completion of polymerization takes a very long time. On the other hand, an intensity of more than 2 $kW/m^2$ tends to cause photodegradation of liquid crystal molecules in the polymerizable liquid crystal composition, or may cause generation of a large polymerization heat and an increase in the temperature during polymerization, which may cause a change in the order parameter of the polymerizable liquid crystal, resulting in deviation in the retardation of the polymerized film. The irradiation energy is preferably 5 mJ to 50 J, preferably 1 J to 20 J, preferably 3 J to 15 J, preferably 5 J to 10 J. Irradiation with ultraviolet light may be performed through a mask to polymerize only a specified region; subsequently, the orientation state of the unpolymerized region may be changed by application of an electric field, a magnetic field, or temperature, for example; and subsequently the unpolymerized region may be polymerized, to thereby obtain an optically anisotropic body having a plurality of regions having different orientation directions.

Alternatively, in the case of irradiation with ultraviolet light through a mask to polymerize only a specified region, in advance, the polymerizable liquid crystal composition in an unpolymerized state may be subjected to an electric field, a magnetic field, or a temperature, for example, to control the orientation, and, while this state is maintained, irradiation with light is performed through the mask to achieve polymerization. This also provides an optically anisotropic body having a plurality of regions having different orientation directions.

An optically anisotropic body obtained by polymerizing the polymerizable liquid crystal composition may be separated from the substrate and used alone as an optically anisotropic body, or may be used, without being separated from the substrate, as an optically anisotropic body. In particular, the optically anisotropic body, which is less likely to contaminate other members, is effectively used as a substrate on which layers are stacked, or as a body bonded to another substrate.

(Display device)

A display device that includes a cured product, an optically anisotropic body, a retardation film, or a retardation patterning film according to the present invention is effective for improvements in, for example, luminance, viewing angle dependence, and viewability. Examples of the display device effectively used include liquid crystal displays (liquid crystal display devices), EL (Electro Luminescence) displays (EL display devices), and quantum dot displays (quantum dot display devices).

Examples of a liquid crystal material used for liquid crystal displays include nematic liquid crystal, ferroelectric smectic liquid crystal, blue phase, and polymer-liquid crystal composite materials; preferably used are, for example, polymer-liquid crystal composite materials such as polymer dispersed liquid crystal and polymer network liquid crystal. In order to expand the liquid crystal temperature range, to control the pretilt angle, and to improve the response speed, a liquid crystal material containing a monomer is preferably used, and the monomer is preferably polymerized with ultraviolet light or with a combination of ultraviolet light and heat.

Liquid crystal displays (LCDs) using a cured product, an optically anisotropic body, a retardation film, or a retardation patterning film according to the present invention are preferably the following liquid crystal displays: TN (Twisted Nematic)-LCD, STN (Super Teisted Nematic)-LCD, VA (Vertical Alignmnet)-LCD, IPS (In Plane Switching)-LCD, FFS (Fringe Field Switching)-LCD, UB-FFS (Ultra-Brightness Fringe Field Switching), MVA (Multidomain Vertical Alignment)-LCD, PVA (Patterned Vertical Alignment)-LCD, FLC (Ferroelectric Liquid Crystal)-LCD, and DHFLC (Deformed Helix Ferroelectric Liquid Crystal).

Also preferred are the following liquid crystal displays that are stabilized with polymers: PSA (Polymer Sustained Alignment)-LCD, PS-VA (Polymer Stabilized Vertical Alignment)-LCD, PS-IPS (Polymer Stabilized In Plane Switching)-LCD, PS-FFS (Polymer Stabilized Fringe Field Switching), PSV-FLC (Polymer Stabilized V-shaped Ferroelectric Liquid Crystal)-LCD, BP (Blue Phase)-LCD, and a nano-phase separated liquid crystal display devices.

Examples of the EL display devices include organic EL, inorganic EL, and organic-inorganic hybrid EL. Luminescent materials for organic EL are preferably low-molecular-weight materials and high-molecular-weight materials, and preferably have a luminescent mode that is a phosphorescent mode or a fluorescent mode. Particularly preferred are high-molecular-weight luminescent materials that have a phosphorescent mode.

EXAMPLES

Hereinafter, the present invention will be described further in detail with reference to Examples; however, the present invention is not limited to these Examples.

(Preparation of powders used in Examples etc.)

[Chem. 78]

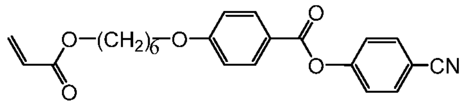

Compound 1

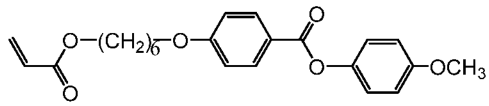

Compound 2

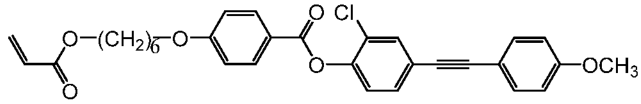

Compound 3

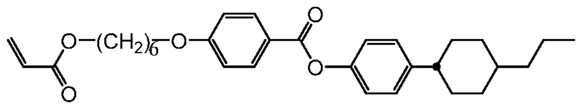

Compound 4

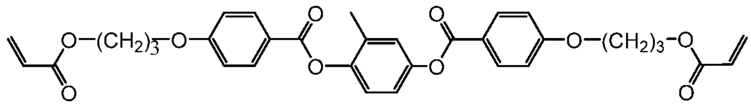

Compound 5

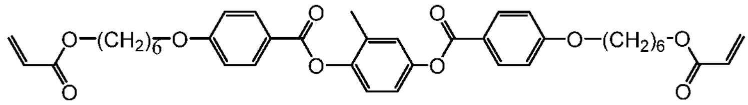

Compound 6

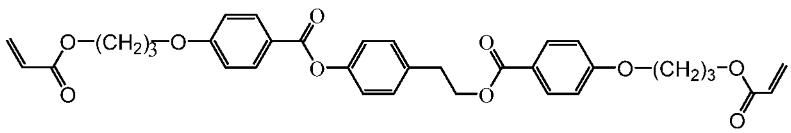

Compound 7

[Chem. 79]

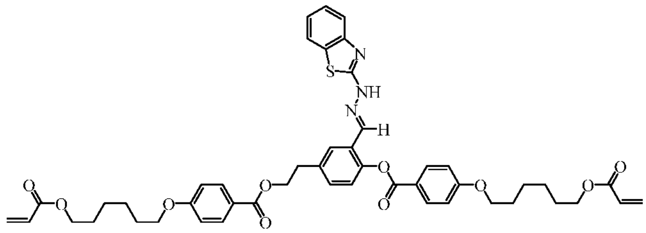

Compound 8

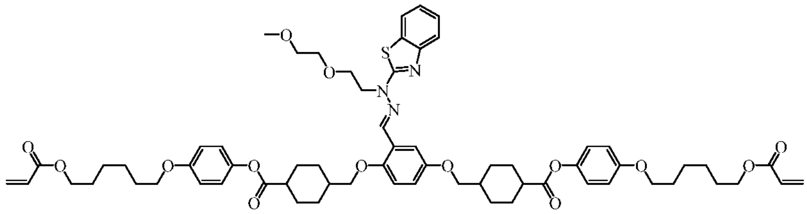

Compound 9

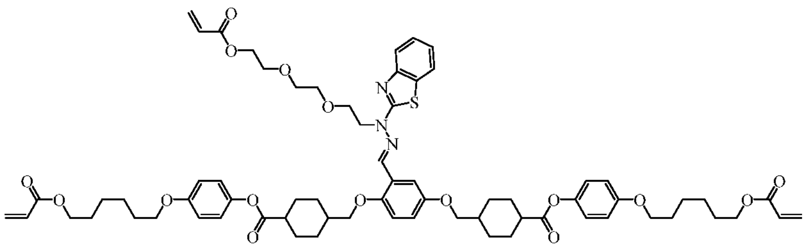

Compound 10

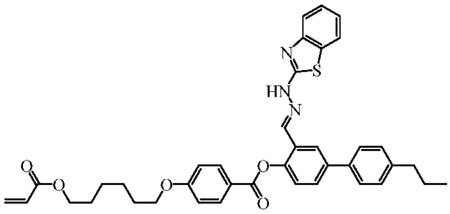

Compound 11

[Chem. 80]

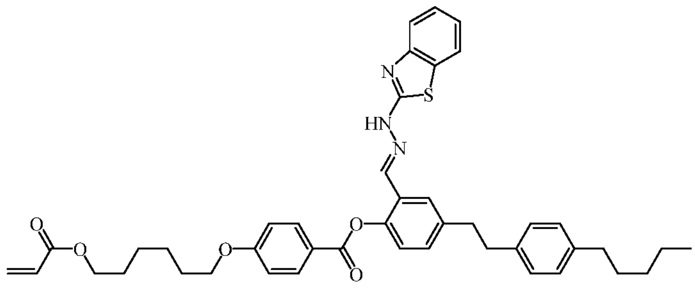

Compound 12

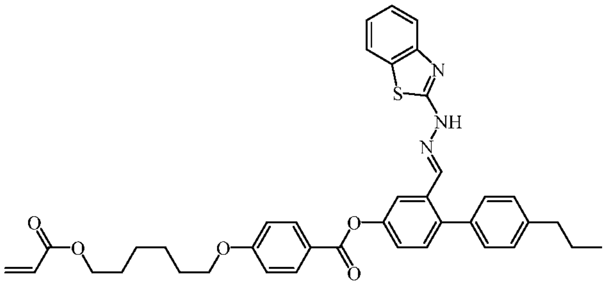

Compound 13

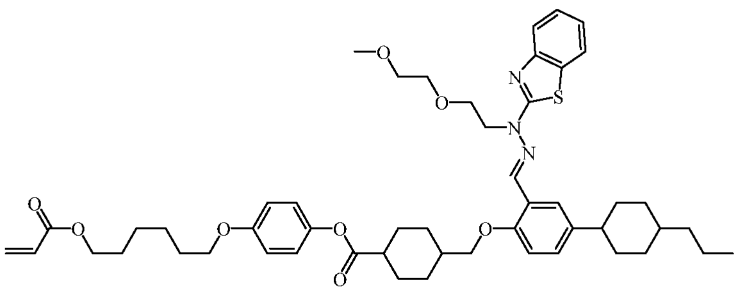

Compound 14

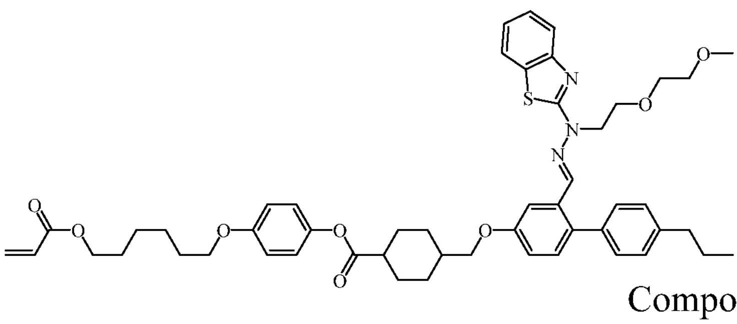

Compound 15

To a solution containing the above-described polymerizable liquid crystal compound Compound 1 synthesized by a publicly known method, dichloromethane having a weight of 2 times the amount of saturation dissolution was added, to thereby prepare Solution A-1. Methanol having a weight of 5 times that of the dichloromethane was cooled to 10°C; under stirring with a magnetic stirrer, the prepared Solution A-1 was dropped to precipitate white particles. The precipitated particles were isolated, and then dried to remove the remaining solvent at room temperature, to thereby obtain Powder (A1). Compounds 2 to 15 were also treated with the same process and under the same conditions as in Compound 1, to thereby obtain powders (A2) to (A15).

To a solution containing the above-described polymerizable liquid crystal compound Compound 1 synthesized by a publicly known method, dichloromethane having a weight of 3 times the amount of saturation dissolution was added, to thereby prepare Solution B-1. Methanol having a weight of 10 times that of the dichloromethane was cooled to -10°C; under stirring with a magnetic stirrer, the prepared Solution B-1 was dropped to precipitate white particles. The precipitated particles were isolated, and then dried to remove the remaining solvent at room temperature, to thereby obtain Powder

(B1). Compounds 2, 5, 6, 8, 12, and 13 were also respectively treated with the same process and under the same conditions as in Compound 1, to thereby obtain Powders (B2), (B5), (B6), (B8), (B12), and (B13) .

To a solution containing the above-described polymerizable liquid crystal compound Compound 1 synthesized by a publicly known method, dichloromethane having a weight equal to the amount of saturation dissolution was added, to thereby prepare Solution C-1. Methanol having a weight of 5 times that of the dichloromethane was maintained at 25°C; under stirring with a magnetic stirrer, the prepared Solution C-1 was dropped to precipitate white particles. The precipitated particles were isolated, and then dried to remove the remaining solvent at room temperature, to thereby obtain Powder (C1). Compounds 2, 5, 6, 8, 12, and 13 were also respectively treated with the same process and under the same conditions as in Compound 1, to thereby obtain Powders (C2), (C5), (C6), (C8), (C12), and (C13).

The above-described polymerizable liquid crystal compound Compound 1 synthesized by a publicly known method was used with reference to descriptions in Japanese Unexamined Patent Application Publication No. 2005-177596, to thereby prepare a powder serving as a raw material. Subsequently, the powder serving as a raw material was charged, at a high concentration of 1 mg/ml and in a suspension state, into a rectangular quartz cell serving as a treatment chamber, to thereby prepare a sample. To the bottom surface of the rectangular quartz cell, a piezo-oscillator was attached as an ultrasonic oscillator. Ultrasonic resonance treatment and photofragmentation treatment were simultaneously performed. After isolation, drying was performed to remove the remaining solvent at room temperature, to thereby obtain Powder (D1). Compounds 2 to 6 and 8 to 15 were also respectively treated with the same process and under the same conditions as in Compound 1, to thereby obtain Powders (D2) to (D6) and (D8) to (D15).

To a solution containing the above-described polymerizable liquid crystal compound Compound 1 synthesized by a publicly known method, dichloromethane in the amount of saturation dissolution was added, to thereby prepare Saturated solution E-1. To methanol having a weight 2 times that of the dichloromethane and being maintained at 25°C, the above-described dichloromethane solution E-1 was dropped; and then drying was slowly performed to remove the solvent, to thereby grow crystals. The precipitated particles were isolated, and subsequently dried to remove the remaining solvent at room temperature, to thereby obtain Powder (E1). Compounds 2 to 6 and 8 to 15 were also respectively treated with the same process and under the same conditions as in Compound 1, to thereby obtain Powders (E2) to (E6) and (E8) to (E15) .

Incidentally, the polymerizable liquid crystal compounds Compounds 1 to 15 constituting the Powders are polymerizable liquid crystal compounds that are solid under atmospheric pressure at 30°C.

(Preparation of powder mixtures)

The powders of components prepared above were mixed in accordance with ratios (mass%) described in the following Tables, to thereby obtain powder mixtures (Composition 1 to Composition 26 and Compositions 33 to 58) used in Examples 1 to 50 and 90 to 139.

[Table 1]

| | Composition 1 | Composition 2 | Composition 3 | Composition 4 | Composition 5 | Composition 6 |
|---|---|---|---|---|---|---|
| Compound 1 (A1) | 25.40 | 25.35 | 12.83 | 19.76 | 19.44 | |
| Compound 2 (A2) | 25.40 | 25.35 | 10.83 | | | |
| Compound 3 (A3) | | | | | | 71.45 |
| Compound 4 (A4) | | | | 31.03 | 38.89 | 4.80 |
| Compound 5 (A5) | 28.29 | 28.23 | 52.38 | 16.96 | 29.17 | 7.68 |
| Compound 6 (A6) | 8.50 | 8.48 | 11.26 | 19.76 | | 1.57 |
| Compound 7 (A7) | 10.00 | 10.00 | 10.00 | 10.00 | 10.00 | 10.00 |
| Chiral 1 | | | | | | 2.00 |
| IRGACURE 651<br>IRGACURE 907 | | | | | | |

(continued)

| | Composition 1 | Composition 2 | Composition 3 | Composition 4 | Composition 5 | Composition 6 |
|---|---|---|---|---|---|---|
| Lucirin TPO | 2.00 | | | | | |
| ESACURE KIP150 | | 2.00 | 2.00 | 2.00 | 2.00 | 2.00 |
| p-Methoxyphenol | 0.40 | 0.40 | 0.40 | 0.40 | 0.40 | 0.40 |
| Quino Power QS-10 | | | | | | |
| Phenothiazine | | | | | | |
| Fluorad FC171 | | | 0.10 | | | |
| IRGANOX 1076 | | | | | | |
| IRGASTAB FS 301 FF | | 0.20 | | | | |
| TINUVIN PS | | | 0.10 | | | |
| ADK STAB LA-46 | | | | | | |
| ADK STAB 1413 | | | | 0.10 | | |
| TINUVIN 120 | | | | | 0.10 | |
| TINUVIN 5050 | | | 0.10 | | | 0.10 |

[Table 2]

| | Composition 7 | Composition 8 | Composition 9 | Composition 10 | Composition 11 | Composition 12 |
|---|---|---|---|---|---|---|
| Compound 1 (A1) | 28.65 | 28.65 | 14.44 | 22.31 | 21.96 | |
| Compound 2 (A2) | 28.65 | 28.65 | 12.18 | | | |
| Compound 3 (A3) | | | | | | 80.90 |
| Compound 4 (A4) | | | | 35.04 | 43.91 | 5.43 |
| Compound 5 (A5) | 31.91 | 31.91 | 58.92 | 19.15 | 32.93 | 8.69 |
| Compound 6 (A6) | 9.58 | 9.58 | 12.67 | 22.31 | | 1.78 |
| Compound 7 (A7) | | | | | | |
| Chiral 1 | | | | | | 2.0 |
| IRGACURE 651 | | 1.00 | | | | |
| IRGACURE 907 | 1.00 | | | 1.00 | 1.00 | 1.00 |
| Lucirin TPO | | | 1.00 | | | |
| ESACURE KIP150 | | | | | | |
| p-Methoxyphenol | | 0.20 | 0.20 | 0.20 | 0.20 | 0.20 |
| Quino Power QS-10 | | | | | | |
| Phenothiazine | 0.20 | | | | | |

(continued)

| | Composition 7 | Composition 8 | Composition 9 | Composition 10 | Composition 11 | Composition 12 |
|---|---|---|---|---|---|---|
| Fluorad FC171<br>IRGANOX 1076<br>IRGASTAB FS 301 FF<br>TINUVIN PS<br>ADK STAB LA-46<br>ADK STAB 1413<br>TINUVIN 120<br>TINUVIN 5050 | | | 0.5<br>0.1 | | | |

[Table 3]

| | Composition 13 | Composition 14 |
|---|---|---|
| Compound 1 (B1)<br>Compound 2 (B2)<br>Compound 5 (B5)<br>Compound 6 (B6)<br>Compound 1 (C1)<br>Compound 2 (C2)<br>Compound 5 (C5)<br>Compound 6 (C6) | 28.65<br>28.65<br>31.91<br>9.58 | <br><br><br><br>28.65<br>28.65<br>31.91<br>9.58 |
| Chiral 1 | | |
| IRGACURE 651<br>IRGACURE 907<br>Lucirin TPO<br>ESACURE KIP150 | 1.00 | 1.00 |
| p-Methoxyphenol<br>Quino Power QS-10<br>Phenothiazine | 0.20 | 0.20 |
| Fluorad FC171<br>IRGANOX 1076<br>IRGASTAB FS 301 FF<br>TINUVIN PS<br>ADK STAB LA-46<br>ADK STAB 1413<br>TINUVIN 120<br>TINUVIN 5050 | | |

[Table 4]

| | Composition 15 | Composition 16 | Composition 17 | Composition 18 | Composition 19 | Composition 20 |
|---|---|---|---|---|---|---|
| Compound 1 (D1) | 28.65 | 28.65 | 14.44 | 22.31 | 21.96 | |

(continued)

| | Composition 15 | Composition 16 | Composition 17 | Composition 18 | Composition 19 | Composition 20 |
|---|---|---|---|---|---|---|
| Compound 2 (D2) | 28.65 | 28.65 | 12.18 | | | |
| Compound 3 (D3) | | | | | | 80.90 |
| Compound 4 (D4) | | | | 35.04 | 43.91 | 5.43 |
| Compound 5 (D5) | 31.91 | 31.91 | 58.92 | 19.15 | 32.93 | 8.69 |
| Compound 6 (D6) | 9.58 | 9.58 | 12.67 | 22.31 | | 1.78 |
| Compound 7 | | | | | | |
| Chiral 1 | | | | | | 2.00 |
| IRGACURE 651 | | 1.00 | | | | |
| IRGACURE 907 | 1.00 | | | 1.00 | 1.00 | 1.00 |
| Lucirin TPO | | | 1.00 | | | |
| ESACURE KIP150 | | | | | | |
| p-Methoxyphenol | | 0.20 | 0.20 | 0.20 | 0.20 | 0.20 |
| Quino Power QS-10 | | | | | | |
| Phenothiazine | 0.20 | | | | | |
| Fluorad FC171 | | | 0.50 | | | |
| IRGANOX 1076 | | | 0.10 | | | |
| IRGASTAB FS 301 FF | | | | | | |
| TINUVIN PS | | | | | | |
| ADK STAB LA-46 | | | | | | |
| ADK STAB 1413 | | | | | | |
| TINUVIN 120 | | | | | | |
| TINUVIN 5050 | | | | | | |

[Table 5]

| | Composition 21 | Composition 22 | Composition 23 | Composition 24 | Composition 25 | Composition 26 |
|---|---|---|---|---|---|---|
| Compound 1 (E1) | 28.65 | 28.65 | 14.44 | 22.31 | 21.96 | |
| Compound 2 (E2) | 28.65 | 28.65 | 12.18 | | | |
| Compound 3 (E3) | | | | | | 80.90 |
| Compound 4 (E4) | | | | 35.04 | 43.91 | 5.43 |
| Compound 5 (E5) | 31.91 | 31.91 | 58.92 | 19.15 | 32.93 | 8.69 |

(continued)

| | Composition 21 | Composition 22 | Composition 23 | Composition 24 | Composition 25 | Composition 26 |
|---|---|---|---|---|---|---|
| Compound 6 (E6) | 9.58 | 9.58 | 12.67 | 22.31 | | 1.78 |
| Compound 7 | | | | | | |
| Chiral 1 | | | | | | 2.00 |
| IRGACURE 651 | | 1.00 | | | | |
| IRGACURE 907 | 1.00 | | | 1.00 | 1.00 | 1.00 |
| Lucirin TPO | | | 1.00 | | | |
| ESACURE KIP150 | | | | | | |
| p-Methoxyphenol | | 0.20 | 0.20 | 0.20 | 0.20 | 0.20 |
| Quino Power QS-10 | | | | | | |
| Phenothiazine | 0.20 | | | | | |
| Fluorad FC171 | | | 0.50 | | | |
| IRGANOX 1076 | | | 0.10 | | | |
| IRGASTAB FS 301 FF | | | | | | |
| TINUVIN PS | | | | | | |
| ADK STAB LA-46 | | | | | | |
| ADK STAB 1413 | | | | | | |
| TINUVIN 120 | | | | | | |
| TINUVIN 5050 | | | | | | |

[Table 6]

| | Composition 33 | Composition 34 | Composition 35 | Composition 36 | Composition 37 | Composition 38 |
|---|---|---|---|---|---|---|
| Compound 8 (A8) | 50.00 | 20.00 | | | | |
| Compound 9 (A9) | 50.00 | | | 50.00 | | 50.00 |
| Compound 10 (A10) | | | 50.00 | 50.00 | 50.00 | |
| Compound 11 (A11) | | 55.00 | | | 55.00 | |
| Compound 12 (A12) | | | | | | |
| Compound 13 (A13) | | 25.00 | | | | |
| Compound 14 (A14) | | | 50.00 | | | 50.00 |
| Compound 15 (A15) | | | | | | |

(continued)

| | | | | | | |
|---|---|---|---|---|---|---|
| Chiral 1 | | | | | | |
| IRGACURE 907<br>IRGACURE OXE01<br>IRGACURE OXE02<br>IRGACURE OXE04 | 5.00 | <br>5.00 | <br><br>5.00 | <br><br><br>5.00 | 5.00 | 5.00 |
| p-Methoxyphenol<br>Quino Power QS-10<br>Phenothiazine | 0.10 | 0.10 | 0.10 | 0.10 | 0.10 | 0.10 |
| FTX-218<br>IRGANOX 1076<br>IRGASTAB FS 301 FF<br>TINUVIN PS<br>ADK STAB LA-46<br>ADK STAB 1413<br>TINUVIN 120<br>TINUVIN 5050 | | | 0.20 | | | |

[Table 7]

| | Composition 39 | Composition 40 | Composition 41 | Composition 42 | Composition 43 | Composition 44 |
|---|---|---|---|---|---|---|
| Compound 8 (A8)<br>Compound 9 (A9)<br>Compound 10 (A10)<br>Compound 11 (A11)<br>Compound 12 (A12)<br>Compound 13 (A13)<br>Compound 14 (A14)<br>Compound 15 (A15) | 25.00<br><br><br><br>25.00<br>50.00 | 20.00<br><br><br>55.00<br><br>25.00 | <br><br>50.00<br><br><br><br>50.00 | <br><br>50.00<br><br><br><br><br>50.00 | <br><br>50.00<br>55.00 | <br>50.00<br><br><br><br><br>50.00 |
| Chiral 1 | | | | | | 2.0 |
| IRGACURE 651<br>IRGACURE 907<br>Lucirin TPO | <br>5.00 | 5.00 | <br><br>5.00 | <br>5.00 | <br>5.00 | <br>5.00 |

(continued)

| | | | | | | |
|---|---|---|---|---|---|---|
| Chiral 1 | | | | | | 2.0 |
| ESACURE KIP150 | | | | | | |
| p-Methoxyphenol | | 0.20 | 0.20 | 0.20 | 0.20 | 0.20 |
| Quino Power QS-10 | | | | | | |
| Phenothiazine | 0.20 | | | | | |
| FTX-218 | | | 0.5 | | | |
| IRGANOX 1076 | | | 0.1 | | | |
| IRGASTAB FS 301 FF | | | | | | |
| TINUVIN PS | | | | | | |
| ADK STAB LA-46 | | | | | | |
| ADK STAB 1413 | | | | | | |
| TINUVIN 120 | | | | | | |
| TINUVIN 5050 | | | | | | |

[Table 8]

| | Composition 45 | Composition 46 |
|---|---|---|
| Compound 8 (B8) | 25.00 | |
| Compound 12 (B12) | 25.00 | |
| Compound 13 (B13) | 50.00 | |
| Compound 8 (C1) | | 25.00 |
| Compound 12 (C12) | | 25.00 |
| Compound 13 (C13) | | 50.00 |
| Chiral 1 | | |
| IRGACURE 651 | 5.00 | 5.00 |
| IRGACURE 907 | | |
| Lucirin TPO | | |
| ESACURE KIP150 | | |
| p-Methoxyphenol | 0.20 | 0.20 |
| Quino Power QS-10 | | |
| Phenothiazine | | |
| FTX-218 | | |
| IRGANOX 1076 | | |
| IRGASTAB FS 301 FF | | |
| TINUVIN PS | | |
| ADK STAB LA-46 | | |
| ADK STAB 1413 | | |
| TINUVIN 120 | | |
| TINUVIN 5050 | | |

[Table 9]

| | Composition 47 | Composition 48 | Composition 49 | Composition 50 | Composition 51 | Composition 52 |
|---|---|---|---|---|---|---|
| Compound 8 (D8) | 25.00 | 20.00 | | | | |
| Compound 9 (D9) | | | | | | 50.00 |
| Compound 10 (D10) | | | 50.00 | 50.00 | 50.00 | |
| Compound 11 (D11) | | 55.00 | | | 55.00 | |
| Compound 12 (D12) | 25.00 | | | | | |
| Compound 13 (D13) | 50.00 | 25.00 | | | | |
| Compound 14 (D14) | | | 50.00 | | | 50.00 |
| Compound 15 (D15) | | | | 50.00 | | |
| Chiral 1 | | | | | | 2.0 |
| IRGACURE 651 | | 5.00 | | | | |
| IRGACURE 907 | 5.00 | | | 5.00 | 5.00 | 5.00 |
| Lucirin TPO | | | 5.00 | | | |
| ESACURE KIP150 | | | | | | |
| p-Methoxyphenol | | 0.20 | 0.20 | 0.20 | 0.20 | 0.20 |
| Quino Power QS-10 | | | | | | |
| Phenothiazine | 0.20 | | | | | |
| FTX-218 | | | 0.5 | | | |
| IRGANOX 1076 | | | 0.1 | | | |
| IRGASTAB FS 301 | | | | | | |
| FF | | | | | | |
| TINUVIN PS | | | | | | |
| ADK STAB LA-46 | | | | | | |
| ADK STAB 1413 | | | | | | |
| TINUVIN 120 | | | | | | |
| TINUVIN 5050 | | | | | | |

[Table 10]

| | Composition 53 | Composition 54 | Composition 55 | Composition 56 | Composition 57 | Composition 58 |
|---|---|---|---|---|---|---|
| Compound 8 (E8) | 25.00 | 20.00 | | | | |
| Compound 9 (E9) | | | | | | 50.00 |

(continued)

| | Composition 53 | Composition 54 | Composition 55 | Composition 56 | Composition 57 | Composition 58 |
|---|---|---|---|---|---|---|
| Compound 10 (E10) | | | 50.00 | 50.00 | 50.00 | |
| Compound 11 (E11) | | 55.00 | | | 55.00 | |
| Compound 12 (E12) | 25.00 | | | | | |
| Compound 13 (E13) | 50.00 | 25.00 | | | | |
| Compound 14 (E14) | | | 50.00 | | | 50.00 |
| Compound 15 (E15) | | | | 50.00 | | |
| Chiral 1 | | | | | | 2.0 |
| IRGACURE 651 | | 5.00 | | | | |
| IRGACURE 907 | 5.00 | | | 5.00 | 5.00 | 5.00 |
| Lucirin TPO | | | 5.00 | | | |
| ESACURE KIP150 | | | | | | |
| p-Methoxyphenol | | 0.20 | 0.20 | 0.20 | 0.20 | 0.20 |
| Quino Power QS-10 | | | | | | |
| Phenothiazine | 0.20 | | | | | |
| FTX-218 | | | 0.5 | | | |
| IRGANOX 1076 | | | 0.1 | | | |
| IRGASTAB FS 301 | | | | | | |
| FF | | | | | | |
| TINUVIN PS | | | | | | |
| ADK STAB LA-46 | | | | | | |
| ADK STAB 1413 | | | | | | |
| TINUVIN 120 | | | | | | |
| TINUVIN 5050 | | | | | | |

Incidentally, the chiral compound used was the following Chiral 1.

[Chem. 81]

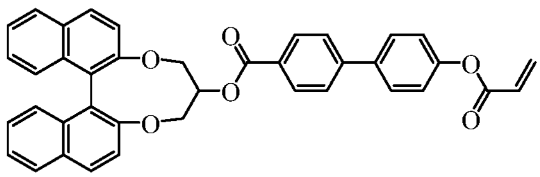

(Examples 1 to 12, Examples 90 to 101, and Comparative Examples 1 to 12)

A powder mixture satisfying the composition ratio of Composition 1 above and having a total weight of 500 g was charged into an aluminum container (manufactured by Tournaire, TYPE4™, 2.5 L), and stored for 90 days at 40°C.

After that, an organic solvent was added to the total amount of the stored powder mixture such that the mixing ratio of the powder mixture to the organic solvent (weight ratio) was 4:6, and mixed with a magnetic stirrer to prepare a solution composition (Example 1). Solution compositions used for Examples 2 to 6 and Examples 90 to 101 were prepared under the same conditions as above except that Composition 1 above was replaced by Compositions 2 to 6 and Compositions 33 to 38. The powder mixtures and the organic solvents used for preparing the solution compositions of Examples 1 to 6 and Examples 90 to 95 will be described in a Table below.

To an aluminum container (manufactured by Tournaire, TYPE4™, 2.5 L), an organic solvent was first added in such an amount that the mixing ratio of the powder mixture to the organic solvent (weight ratio) was 4:6. Subsequently, under stirring with a magnetic stirrer, the individual components constituting Composition 1 above were sequentially added by being dissolved. Thus, a solution composition was prepared and then stored for 90 days at 40°C, which was used as a comparative solution composition (Comparative Example 1). Comparative solution compositions used for Comparative Examples 2 to 6 were prepared under the same conditions as above except that Composition 1 above was replaced by Compositions 2 to 6. The powder mixtures and the organic solvents used for Comparative Examples 1 to 6 will be described in a Table below.

A powder mixture satisfying the composition ratio of Composition 1 above and having a total weight of 20 g was charged into a glass vial with a screw cap (manufactured by NICHIDEN-RIKA GLASS CO., LTD., SV-50A, 50 ml), and stored for 90 days at 40°C. After that, the total amount of the stored powder mixture was heated at 110°C, and stirred with a magnetic stirrer, to prepare a nematic liquid crystal composition (Example 7). Nematic liquid crystal compositions used for Examples 8 to 12 and Examples 96 to 101 were prepared under the same conditions as above except that Composition 1 above was replaced by Compositions 2 to 6 and Compositions 33 to 38.

One of individual components constituting Composition 1 above was charged into a glass vial with a screw cap (manufactured by NICHIDEN-RIKA GLASS CO., LTD., SV-50A, 50 ml), subsequently heated at 110°C, and stirred with a magnetic stirrer to provide a nematic liquid crystal composition. Subsequently, the remaining components were sequentially added one by one by being dissolved in the nematic liquid crystal. Thus, a nematic liquid crystal composition was prepared, and then stored for 90 days at 40°C, which was used as a comparative nematic liquid crystal composition (Comparative Example 7). Comparative nematic liquid crystal compositions used for Comparative Examples 8 to 12 were prepared under the same conditions as above except that Composition 1 above was replaced by Compositions 2 to 6.

(Evaluations of volatility and Re change of prepared solution compositions and nematic liquid crystal compositions)

(Measurement of volatility)

Changes in the weight were measured in the solution compositions and the nematic liquid crystal compositions of Examples 1 to 12, Examples 96 to 101, and Comparative Examples 1 to 12.

Good: weight change ratio of less than 0.01 wt%
Fair: weight change ratio of 0.01 wt% or more and less than 0.5%
Poor: weight change ratio of 0.5 wt% or more

(Evaluation of Re change)

After the measurement of changes in weight, the following method was used to prepare retardation films (optical films), and in-plane retardation (retardation, Re) was measured.

The solution compositions of Examples 1 to 6, Examples 90 to 95, and Comparative Examples 1 to 6 were each spin-coated (at 1,500 rpm for 30 seconds) on a glass substrate having a rubbed polyimide film. The film formed by spin-coating was annealed at 70°C for 30 seconds, and photopolymerized at 25°C by using a 20 mW/cm$^2$ high pressure mercury lamp for 60 seconds in a nitrogen atmosphere.

The nematic liquid crystal compositions of Examples 7 to 12, Examples 96 to 101, and Comparative Examples 7 to 12 were each injected at 70°C into a liquid crystal cell (cell gap: 1.6 um) having a polyimide alignment film, subsequently annealed at 70°C for 10 min, and then photopolymerized by being irradiated with ultraviolet light at 25°C by using a 20 mW/cm$^2$ high pressure mercury lamp for 60 seconds in a nitrogen atmosphere. Retardation value of the retardation film obtained by the polymerization was measured. A change of retardation was determined by comparison between a retardation immediately before storage for 90 days at 40°C and a retardation after the lapse of 90 days.

Good: change of retardation of less than 0.5 nm
Fair: change of retardation of 0.5 nm or more and less than 1 nm
Poor: change of retardation of 1 nm or more (Evaluation of polymerization products generated in prepared solution compositions and nematic liquid crystal compositions)

The amounts of polymerization products generated were measured in the solution compositions of Examples 1 to 6, Examples 90 to 95, and Comparative Examples 1 to 6, and in the nematic liquid crystal compositions of Examples 7 to 12, Examples 96 to 101, and Comparative Examples 7 to 12. The measurement was performed by GPC. Samples for the GPC measurement were prepared in the following manner. In the case of a nematic liquid crystal composition, 5 mg of the nematic liquid crystal composition was dissolved in 5 ml of THF to prepare a sample for GPC measurement. In the case of a solution composition, 12.5 mg of the solution composition was dissolved in 5 ml of THF to prepare a sample for GPC measurement. The polymerization products that were evaluated were polymer components having a molecular weight of 7,000 or more.

Good: polymerization product amount of less than 200 ppm
Fair: polymerization product amount of 200 ppm or more and less than 300 ppm
Poor: polymerization product amount of 300 ppm or more

The measurement results of Examples 1 to 12, Examples 90 to 101, and Comparative Examples 1 to 12 are described in the following Table.

[Table 11]

| | Composition | Form | Solvent | Volatility | Retardation | Polymerization product |
|---|---|---|---|---|---|---|
| Example 1 | Composition 1 | Solution | Toluene | Good | Good | Good |
| Example 2 | Composition 2 | Solution | Xylene | Good | Good | Good |
| Example 3 | Composition 3 | Solution | Cyclohexanone | Good | Good | Good |
| Example 4 | Composition 4 | Solution | Cyclopentanone | Good | Good | Good |
| Example 5 | Composition 5 | Solution | PGMEA | Good | Good | Good |
| Example 6 | Composition 6 | Solution | MEK | Good | Good | Good |
| Example 7 | Composition 1 | Nematic liquid crystal | None | Good | Good | Good |
| Example 8 | Composition 2 | Nematic liquid crystal | None | Good | Good | Good |
| Example 9 | Composition 3 | Nematic liquid crystal | None | Good | Good | Good |
| Example 10 | Composition 4 | Nematic liquid crystal | None | Good | Good | Good |
| Example 11 | Composition 5 | Nematic liquid crystal | None | Good | Good | Good |
| Example 12 | Composition 6 | Nematic liquid crystal | None | Good | Good | Good |
| Example 90 | Composition 33 | Solution | Cyclopentanone | Good | Good | Good |
| Example 91 | Composition 34 | Solution | Cyclopentanone | Good | Good | Good |
| Example 92 | Composition 35 | Solution | Cyclopentanone | Good | Good | Good |

(continued)

| | Composition | Form | Solvent | Volatility | Retardation | Polymerization product |
|---|---|---|---|---|---|---|
| Example 93 | Composition 36 | Solution | Cyclopentanone | Good | Good | Good |
| Example 94 | Composition 37 | Solution | Cyclopentanone | Good | Good | Good |
| Example 95 | Composition 38 | Solution | Cyclopentanone | Good | Good | Good |
| Example 96 | Composition 33 | Nematic liquid crystal | None | Good | Good | Good |
| Example 97 | Composition 34 | Nematic liquid crystal | None | Good | Good | Good |
| Example 98 | Composition 35 | Nematic liquid crystal | None | Good | Good | Good |
| Example 99 | Composition 36 | Nematic liquid crystal | None | Good | Good | Good |
| Example 100 | Composition 37 | Nematic liquid crystal | None | Good | Good | Good |
| Example 101 | Composition 38 | Nematic liquid crystal | None | Good | Good | Good |
| Comparative Example 1 | Composition 1 | Solution | Toluene | Fair | Fair | Poor |
| Comparative Example 2 | Composition 2 | Solution | Xylene | Fair | Fair | Poor |
| Comparative Example 3 | Composition 3 | Solution | Cyclohexanone | Fair | Fair | Poor |
| Comparative Example 4 | Composition 4 | Solution | Cyclopentanone | Fair | Fair | Poor |
| Comparative Example 5 | Composition 5 | Solution | PGMEA | Fair | Fair | Poor |
| Comparative Example 6 | Composition 6 | Solution | MEK | Fair | Fair | Poor |
| Comparative Example 7 | Composition 1 | Nematic liquid crystal | None | Good | Good | Poor |
| Comparative Example 8 | Composition 2 | Nematic liquid crystal | None | Good | Good | Poor |
| Comparative Example 9 | Composition 3 | Nematic liquid crystal | None | Good | Good | Poor |
| Comparative Example 10 | Composition 4 | Nematic liquid crystal | None | Good | Good | Poor |
| Comparative Example 11 | Composition 5 | Nematic liquid crystal | None | Good | Good | Poor |
| Comparative Example 12 | Composition 6 | Nematic liquid crystal | None | Good | Good | Poor |

As a result, in Example 1 to Example 12 and Example 90 to Example 101, after storage in the form of powder

mixture, in the case of turning the powder mixture into a solution composition by using an organic solvent and in the case of turning the powder mixture into a nematic liquid crystal composition, substantially no polymerization product was generated and substantially no retardation change was observed.

On the other hand, when the polymerizable liquid crystal compounds were each dissolved in an organic solvent and stored in the form of solution composition, a large amount of polymerization product was generated and change of retardation was also observed. During the storage, volatilization of the organic solvent was observed; this may cause a change in the concentration of the polymerizable liquid crystal compound contained in the solution, so that the optical film had a film thickness different from the originally expected thickness. Retardation value is represented by the film thickness multiplied by the birefringence, and thus Comparative Examples 1 to 6 had changes in retardation. In addition, also in the cases of storage in the nematic liquid crystal state, a large amount of polymerization product was generated.

(Examples 13 to 24, Examples 102 to 113, and Comparative Examples 13 to 24)

A powder mixture satisfying the composition ratio of Composition 1 above and having a total weight of 500 g was charged into an aluminum container (manufactured by Tournaire, TYPE4™, 2.5 L), and stored for 10 days at 0°C. After that, to the total amount of the stored powder mixture, an organic solvent was added such that the mixing ratio of the powder mixture to the organic solvent (weight ratio) was 4:6; and mixing was performed by stirring with a magnetic stirrer, to thereby prepare a solution composition (Example 13). Solution compositions used for Examples 14 to 18 and Examples 102 to 107 were prepared under the same conditions as above except that Composition 1 above was replaced by Compositions 2 to 6 and Compositions 33 to 38. The powder mixtures and the organic solvents used in the preparation of solution compositions of Examples 13 to 18 and Examples 102 to 107 will be described in a Table below.

To an aluminum container (manufactured by Tournaire, TYPE4™, 2.5 L), an organic solvent was first added in such an amount that the mixing ratio of a powder mixture and the organic solvent (weight ratio) was 4:6. Subsequently, under stirring with a magnetic stirrer, the individual components constituting Composition 1 above were sequentially added one by one by being dissolved. Thus, a solution composition was prepared and then stored for 10 days at 0°C, and used as a comparative solution composition (Comparative Example 13). Comparative solution compositions used for Comparative Examples 14 to 18 were prepared under the same conditions as above except that Composition 1 above was replaced by Compositions 2 to 6. The powder mixtures and the organic solvents used in Comparative Examples 13 to 18 will be described in a Table below.

A powder mixture satisfying the composition ratio of Composition 1 above and having a total weight of 20 g was charged into a glass vial with a screw cap (manufactured by NICHIDEN-RIKA GLASS CO., LTD., SV-50A, 50 ml), and stored for 10 days at 0°C. After that, the total amount of the stored powder mixture was heated at 110°C, and stirred with a magnetic stirrer to thereby prepare a nematic liquid crystal composition (Example 19). Nematic compositions used for Examples 20 to 24 and Examples 108 to 113 were prepared under the same conditions as above except that Composition 1 above was replaced by Compositions 2 to 6 and Compositions 33 to 38.

One of individual components constituting Composition 1 above was charged into a glass vial with a screw cap (manufactured by NICHIDEN-RIKA GLASS CO., LTD., SV-50A, 50 ml), subsequently heated at 110°C, and stirred with a magnetic stirrer to provide a nematic liquid crystal composition. Subsequently, the remaining components were sequentially added one by one by being dissolved in the nematic liquid crystal. Thus, a nematic liquid crystal composition was prepared, subsequently stored for 10 days at 0°C, and used as a comparative nematic liquid crystal composition (Comparative Example 19). Comparative nematic liquid crystal compositions used for Comparative Examples 20 to 24 were prepared under the same conditions as above except that Composition 1 above was replaced by Compositions 2 to 6.

(Evaluation of precipitate in prepared solution compositions and nematic liquid crystal compositions)

(Precipitate of solution compositions and nematic liquid crystal compositions)

The solution compositions obtained in Example 13 to Example 18, Examples 102 to 107, and Comparative Example 13 to Comparative Example 18, and the nematic liquid crystal compositions obtained in Example 19 to Example 24, Examples 108 to 113, and Comparative Example 19 to Comparative Example 24 were individually moved into graduated cylinders (solution compositions: 200 ml, nematic liquid crystals: 50 ml); and volume-based crystal precipitation ratios of the solution compositions and the nematic liquid crystal compositions were measured by visual inspection.

Good: no precipitation observed by visual inspection
Fair: less than 10 vol% of precipitation observed by visual inspection
Poor: 10 vol% or more of precipitation observed by visual inspection

The measurement results of Examples 13 to 24, Examples 102 to 113, and Comparative Examples 13 to 24

are described in the following Table.

[Table 12]

| | Composition | Form | Solvent | Precipitation |
|---|---|---|---|---|
| Example 13 | Composition 1 | Solution | Toluene | Good |
| Example 14 | Composition 2 | Solution | Xylene | Good |
| Example 15 | Composition 3 | Solution | Cyclohexanone | Good |
| Example 16 | Composition 4 | Solution | Cyclopentanone | Good |
| Example 17 | Composition 5 | Solution | PGMEA | Good |
| Example 18 | Composition 6 | Solution | MEK | Good |
| Example 19 | Composition 1 | Nematic liquid crystal | None | Good |
| Example 20 | Composition 2 | Nematic liquid crystal | None | Good |
| Example 21 | Composition 3 | Nematic liquid crystal | None | Good |
| Example 22 | Composition 4 | Nematic liquid crystal | None | Good |
| Example 23 | Composition 5 | Nematic liquid crystal | None | Good |
| Example 24 | Composition 6 | Nematic liquid crystal | None | Good |
| Example 102 | Composition 33 | Solution | Cyclopentanone | Good |
| Example 103 | Composition 34 | Solution | Cyclopentanone | Good |
| Example 104 | Composition 35 | Solution | Cyclopentanone | Good |
| Example 105 | Composition 36 | Solution | Cyclopentanone | Good |
| Example 106 | Composition 37 | Solution | Cyclopentanone | Good |
| Example 107 | Composition 38 | Solution | Cyclopentanone | Good |
| Example 108 | Composition 33 | Nematic liquid crystal | None | Good |
| Example 109 | Composition 34 | Nematic liquid crystal | None | Good |
| Example 110 | Composition 35 | Nematic liquid crystal | None | Good |
| Example 111 | Composition 36 | Nematic liquid crystal | None | Good |
| Example 112 | Composition 37 | Nematic liquid crystal | None | Good |
| Example 113 | Composition 38 | Nematic liquid crystal | None | Good |
| Comparative Example 13 | Composition 1 | Solution | Toluene | Poor |
| Comparative Example 14 | Composition 2 | Solution | Xylene | Poor |
| Comparative Example 15 | Composition 3 | Solution | Cyclohexanone | Poor |
| Comparative Example 16 | Composition 4 | Solution | Cyclopentanone | Poor |
| Comparative Example 17 | Composition 5 | Solution | PGMEA | Poor |
| Comparative Example 18 | Composition 6 | Solution | MEK | Poor |
| Comparative Example 19 | Composition 1 | Nematic liquid crystal | None | Poor |
| Comparative Example 20 | Composition 2 | Nematic liquid crystal | None | Poor |
| Comparative Example 21 | Composition 3 | Nematic liquid crystal | None | Poor |
| Comparative Example 22 | Composition 4 | Nematic liquid crystal | None | Poor |
| Comparative Example 23 | Composition 5 | Nematic liquid crystal | None | Poor |
| Comparative Example 24 | Composition 6 | Nematic liquid crystal | None | Poor |

As a result, in Example 13 to Example 24 and Example 102 to Example 113, after storage in the form of powder mixture, in the case of turning the powder mixture into a solution composition by using an organic solvent and in the case of turning the powder mixture into a nematic liquid crystal composition, no precipitate was observed.

On the other hand, in the cases of dissolving polymerizable liquid crystal compounds in organic solvents and storing the compounds in the form of solution composition and in the cases of storing polymerizable liquid crystal compounds in the form of nematic liquid crystal, large amounts of precipitates were generated.

(Examples 25 to 50 and Examples 114 to 139)

(Various measurements of powder mixtures)

A powder mixture satisfying the composition ratio of Composition 1 above and having a total weight of 500 g was charged into an aluminum container (manufactured by Tournaire, TYPE4™, 2.5 L), and stored for 90 days at 25°C. Thus, a powder mixture used in Example 25 was prepared. In each of measurements, freely selected different portions of the powder mixture were sampled and measured 20 times, and the average of the measured values was determined as the value.

Powder mixtures used for Examples 26 to 50 and Examples 114 to 139 were prepared under the same conditions as above except that Composition 1 above was replaced by Compositions 2 to 26 and Compositions 33 to 58 above, and similarly measured in the following manner.

(Measurement of crystallites of powder mixtures)

The size of crystallites of powder mixtures was measured with a powder X-ray diffractometer X'Pert Pro (manufactured by PANalytical). The measurement conditions were as follows: a CuKα tube was used; X-ray output = 45 KV, 40 mA; the detector used was a semiconductor array detector X'Celerator; scanning range 2θ = 4° to 35°; measurement time = 150 seconds. From the measurement data, a half width was calculated with a data processing software X'Pert High Score (manufactured by PANalytical); and the size of crystallites was determined with the Scherrer equation.

(Measurement of particle diameter D50 of powder mixtures)

The particle diameter $D_{50}$ (median diameter) was measured with a Microtrac MT-3000 from NIKKISO CO., LTD. by a dynamic light scattering method in wet measurement. A powder mixture was grounded with an agate mortar; subsequently, 5 g of a methanol-water solvent mixture (methanol:water = 3:1) was added relative to 1 g of the powder mixture; and ultrasonic dispersion was performed for 15 minutes to prepare a measurement sample. A solvent used for the measurement was a methanol-water solvent mixture (methanol:water = 3:1).

(Measurement of bulk density of powder mixtures)

A powder mixture was naturally dropped from a glass funnel (discharge port diameter: 1.2 cm) into a 50 ml graduated cylinder until the volume reached 25 ml. Subsequently, the weight of the sample inserted was divided by the volume to determine the bulk density.

(Evaluations of solubility/meltability of powder mixtures)

Regarding the solubility of a powder mixture in a solvent, to a 200 ml beaker, the powder mixture (10 g) in an aluminum container and 50 ml of acetone were added and, under stirring with a stirrer (200 rpm), the solubility was visually observed.

(Solubility in solvent)

Good: dissolved in shorter than 2 min
Fair: dissolved in 2 min or longer and shorter than 5 min
Poor: dissolved in 5 min or longer

Regarding the meltability of a powder mixture under heating, a powder mixture (10 g) in an aluminum container was placed into a brown sample vial, heated in an oven at 110°C, and not the powder state but the state of melting into

high-fluidity nematic liquid crystal or isotropic liquid was visually observed.

(Meltability under heating)

Good: melted in shorter than 15 min
Fair: melted in 15 min or longer and shorter than 30 min
Poor: melted in 30 min or longer

(Evaluation of handleability of powder mixtures)

From an aluminum container (manufactured by Tournaire, TYPE4™, 2.5 L) containing 500 g of a powder mixture, 100 g of the powder was directly separated onto powder paper by leaning the aluminum container; and the handleability was evaluated on the basis of visually determined probability of raising of powder.

Good: low probability of raising determined by visual inspection
Fair: no occurrence of raising, by visual inspection, during handling with care and caution
Poor: high probability of raising determined by visual inspection

(Adhesion of powder mixtures to containers)

Regarding adhesion of powder mixtures to storage containers, 500 g of a powder mixture was charged into an aluminum container (manufactured by Tournaire, TYPE4™, 2.5 L); the aluminum container was shaken 30 times; the aluminum container was then leaned to take out the powder mixture from the aluminum container; and then the weight of the powder mixture adhering to the aluminum container was used to evaluate the adhesion.

Good: adhesion of less than 0.1 wt%

Fair: adhesion of 0.1 wt% or more and less than 0.2 wt%

Poor: adhesion of 0.2 wt% or more

The results are described in the following Tables.

[Table 13]

| | Composition | Form | Crystallites (nm) | D50 (um) | Bulk density (g/cm$^3$) | Meltability (heating) | Solubility (solvent) | Handleability | Adhesion |
|---|---|---|---|---|---|---|---|---|---|
| Example 25 | Composition 1 | Powder | 45 | 86 | 0.37 | Good | Good | Good | Good |
| Example 26 | Composition 2 | Powder | 36 | 65 | 0.41 | Good | Good | Good | Good |
| Example 27 | Composition 3 | Powder | 58 | 110 | 0.34 | Good | Good | Good | Good |
| Example 28 | Composition 4 | Powder | 46 | 90 | 0.36 | Good | Good | Good | Good |
| Example 29 | Composition 5 | Powder | 52 | 103 | 0.35 | Good | Good | Good | Good |
| Example 30 | Composition 6 | Powder | 39 | 67 | 0.40 | Good | Good | Good | Good |
| Example 31 | Composition 7 | Powder | 43 | 83 | 0.38 | Good | Good | Good | Good |
| Example 32 | Composition 8 | Powder | 42 | 80 | 0.38 | Good | Good | Good | Good |
| Example 33 | Composition 9 | Powder | 55 | 107 | 0.34 | Good | Good | Good | Good |
| Example 34 | Composition 10 | Powder | 41 | 87 | 0.37 | Good | Good | Good | Good |
| Example 35 | Composition 11 | Powder | 48 | 100 | 0.35 | Good | Good | Good | Good |
| Example 36 | Composition 12 | Powder | 37 | 64 | 0.41 | Good | Good | Good | Good |
| Example 37 | Composition 13 | Powder | 23 | 20 | 0.62 | Good | Good | Good | Good |
| Example 38 | Composition 14 | Powder | 89 | 257 | 0.25 | Good | Good | Good | Good |
| Example 39 | Composition 15 | Powder | 4 | 0.23 | 0.97 | Good | Good | Fair | Fair |
| Example 40 | Composition 16 | Powder | 4 | 0.21 | 1.00 | Good | Good | Fair | Fair |
| Example 41 | Composition 17 | Powder | 7 | 0.30 | 0.88 | Good | Good | Fair | Fair |
| Example 42 | Composition 18 | Powder | 6 | 0.27 | 0.91 | Good | Good | Fair | Fair |
| Example 43 | Composition 19 | Powder | 5 | 0.22 | 0.98 | Good | Good | Fair | Fair |
| Example 44 | Composition 20 | Powder | 8 | 0.40 | 0.80 | Good | Good | Fair | Fair |
| Example 45 | Composition 21 | Powder | 832 | 2520 | 0.11 | Fair | Fair | Good | Good |
| Example 46 | Composition 22 | Powder | 628 | 1890 | 0.13 | Fair | Fair | Good | Good |
| Example 47 | Composition 23 | Powder | 1053 | 3200 | 0.11 | Fair | Fair | Good | Good |
| Example 48 | Composition 24 | Powder | 502 | 1500 | 0.14 | Fair | Fair | Good | Good |
| Example 49 | Composition 25 | Powder | 761 | 2300 | 0.12 | Fair | Fair | Good | Good |

(continued)

| | Composition | Form | Crystallites (nm) | D50 (um) | Bulk density (g/cm$^3$) | Meltability (heating) | Solubility (solvent) | Handleability | Adhesion |
|---|---|---|---|---|---|---|---|---|---|
| Example 50 | Composition 26 | Powder | 891 | 2700 | 0.11 | Fair | Fair | Good | Good |

[Table 14]

| | Composition | Form | Crystallites (nm) | D50 (um) | Bulk density ($g/cm^3$) | Meltability (heating) | Solubility (solvent) | Handleability | Adhesion |
|---|---|---|---|---|---|---|---|---|---|
| Example 114 | Composition 33 | Powder | 48 | 94 | 0.36 | Good | Good | Good | Good |
| Example 115 | Composition 34 | Powder | 38 | 77 | 0.39 | Good | Good | Good | Good |
| Example 116 | Composition 35 | Powder | 60 | 123 | 0.33 | Good | Good | Good | Good |
| Example 117 | Composition 36 | Powder | 47 | 93 | 0.36 | Good | Good | Good | Good |
| Example 118 | Composition 37 | Powder | 54 | 113 | 0.34 | Good | Good | Good | Good |
| Example 119 | Composition 38 | Powder | 41 | 84 | 0.37 | Good | Good | Good | Good |
| Example 120 | Composition 39 | Powder | 46 | 91 | 0.36 | Good | Good | Good | Good |
| Example 121 | Composition 40 | Powder | 42 | 74 | 0.39 | Good | Good | Good | Good |
| Example 122 | Composition 41 | Powder | 57 | 120 | 0.33 | Good | Good | Good | Good |
| Example 123 | Composition 42 | Powder | 42 | 90 | 0.36 | Good | Good | Good | Good |
| Example 124 | Composition 43 | Powder | 50 | 110 | 0.34 | Good | Good | Good | Good |
| Example 125 | Composition 44 | Powder | 39 | 81 | 0.38 | Good | Good | Good | Good |
| Example 126 | Composition 45 | Powder | 26 | 21 | 0.60 | Good | Good | Good | Good |
| Example 127 | Composition 46 | Powder | 90 | 259 | 0.25 | Good | Good | Good | Good |
| Example 128 | Composition 47 | Powder | 7 | 0.26 | 0.93 | Good | Good | Fair | Fair |
| Example 129 | Composition 48 | Powder | 5 | 0.24 | 0.95 | Good | Good | Fair | Fair |
| Example 130 | Composition 49 | Powder | 8 | 0.33 | 0.85 | Good | Good | Fair | Fair |
| Example 131 | Composition 50 | Powder | 8 | 0.30 | 0.88 | Good | Good | Fair | Fair |
| Example 132 | Composition 51 | Powder | 8 | 0.32 | 0.86 | Good | Good | Fair | Fair |
| Example 133 | Composition 52 | Powder | 9 | 0.43 | 0.78 | Good | Good | Fair | Fair |
| Example 134 | Composition 53 | Powder | 845 | 2532 | 0.11 | Fair | Fair | Good | Good |
| Example 135 | Composition 54 | Powder | 637 | 1900 | 0.13 | Fair | Fair | Good | Good |
| Example 136 | Composition 55 | Powder | 1069 | 3215 | 0.11 | Fair | Fair | Good | Good |
| Example 137 | Composition 56 | Powder | 507 | 1506 | 0.14 | Fair | Fair | Good | Good |
| Example 138 | Composition 57 | Powder | 777 | 2315 | 0.12 | Fair | Fair | Good | Good |

(continued)

| | Composition | Form | Crystallites (nm) | D50 (um) | Bulk density (g/cm$^3$) | Meltability (heating) | Solubility (solvent) | Handleability | Adhesion |
|---|---|---|---|---|---|---|---|---|---|
| Example 139 | Composition 58 | Powder | 903 | 2713 | 0.11 | Fair | Fair | Good | Good |

The results have demonstrated the following: use of a powder mixture having crystallites, a particle diameter (distribution), and a bulk density that satisfy specified ranges provides a powder mixture having high solubility/meltability, high handleability, and causes less adhesion to containers or the like.

(Examples 51 to 62 and Examples 140 to 151)

(Addition of polymerization inhibitor to powders)

Reprecipitation was performed as in the method of obtaining Powders (A1) to (A6) except for addition of 3,000 ppm of p-methoxyphenol to dichloromethane solutions containing the polymerizable liquid crystal compounds compounds 1 to 6, to thereby prepare Powders (F1) to (F15) containing a trace amount of the polymerization inhibitor in the polymerizable liquid crystal compounds. Solution compositions of Examples 51 to 56 and Examples 140 to 145 and nematic liquid crystal compositions of Examples 57 to 62 and Examples 146 to 151 were respectively prepared under the same conditions as in Example 1 and Example 7 except that Compositions 27 to 32 and Compositions 59 to 64 were used. The polymerization inhibitor content of Powders (F1) to (F15) was determined by GPC measurement. Specifically, 5 mg of Powders (F1) to (F15) were each dissolved in 5 ml of a THF solution using p-methoxyphenol as an internal standard to prepare samples for GPC measurement. The p-methoxyphenol content was determined with a calibration curve.

(Evaluation of polymerization product of prepared solution compositions and nematic liquid crystal compositions)

The amounts of polymerization products generated were measured in the solution compositions of Example 51 to Example 56 and Examples 140 to 145 and in the nematic liquid crystal compositions of Example 57 to Example 62 and Examples 146 to 151. The measurement was performed by GPC. Samples for the GPC measurement were prepared in the following manner. In the case of a nematic liquid crystal composition, 5 mg of the nematic liquid crystal composition was dissolved in 5 ml of THF to prepare a sample for GPC measurement. In the case of a solution composition, 12.5 mg of the solution composition was dissolved in 5 ml of THF to prepare a sample for GPC measurement. The polymerization products that were evaluated were polymer components having a molecular weight of 7,000 or more.

Excellent: less than 100 ppm of polymerization product

Good: 100 ppm or more and less than 200 ppm of polymerization product

[Table 15]

| | MEHQ content of polymerizable liquid crystal compound (ppm) | Composition 27 | Composition 28 | Composition 29 | Composition 30 | Composition 31 | Composition 32 |
|---|---|---|---|---|---|---|---|
| Compound 1 (F1) | 45 | 25.40 | 28.65 | 14.44 | 22.31 | 21.96 | |
| Compound 2 (F2) | 40 | 25.40 | 28.65 | 12.18 | | | |
| Compound 3 (F3) | 52 | | | | | | 80.90 |
| Compound 4 (F4) | 60 | | | | 35.04 | 43.91 | 5.43 |
| Compound 5 (F5) | 53 | 28.29 | 31.91 | 58.92 | 19.15 | 32.93 | 8.69 |
| Compound 6 (F6) | 57 | 8.50 | 9.58 | 12.67 | 22.31 | | 1.78 |
| Compound 7 (F7) | 61 | 10.00 | | | | | |
| Chiral 1 | | | | | | | 2.00 |
| IRGACURE 651 | | | 1.00 | | | | |
| IRGACURE 907 | | | | | 1.00 | 1.00 | 1.00 |
| Lucirin TPO | | 2.00 | | 1.00 | | | |
| ESACURE KIP150 | | | | | | | |
| p-Methoxyphenol (separately added) | | 0.40 | 0.20 | 0.20 | 0.20 | 0.20 | 0.20 |
| Fluorad FC171 | | | | 0.50 | | | |
| IRGANOX 1076 | | | | 0.10 | | | |

[Table 16]

| | MEHQ content of polymerizable liquid crystal compound (ppm) | Composition 59 | Composition 60 | Composition 61 | Composition 62 | Composition 63 | Composition 64 |
|---|---|---|---|---|---|---|---|
| Compound 8 (F8) | 48 | 25.00 | 20.00 | | | | |
| Compound 9 (F9) | 38 | | | | | | 50.00 |
| Compound 10 (F10) | 53 | | | 50.00 | 50.00 | 50.00 | |
| Compound 11 (F11) | 64 | | 55.00 | | | 55.00 | |
| Compound 12 (F12) | 54 | 25.00 | | | | | |
| Compound 13 (F13) | 56 | 50.00 | 25.00 | | | | |
| Compound 14 (F14) | 52 | | | 50.00 | | | 50.00 |
| Compound 15 (F15) | 66 | | | | 50.00 | | |
| Chiral 1 | | | | | | | 2.00 |
| IRGACURE 651 | | | 1.00 | | | | |
| IRGACURE 907 | | | | | 1.00 | 1.00 | 1.00 |
| Lucirin TPO | | 2.00 | | 1.00 | | | |
| ESACURE KIP150 | | | | | | | |
| p-Methoxyphenol (separately added) | | 0.40 | 0.20 | 0.20 | 0.20 | 0.20 | 0.20 |
| FTX-218 | | | | 0.50 | | | |
| IRGANOX 1076 | | | | 0.10 | | | |

[Table 17]

| | Composition | Form | Solvent | Polymerization product |
|---|---|---|---|---|
| Example 51 | Composition 27 | Solution | Toluene | Excellent |
| Example 52 | Composition 28 | Solution | Xylene | Excellent |
| Example 53 | Composition 29 | Solution | Cyclohexanone | Excellent |
| Example 54 | Composition 30 | Solution | Cyclopentanone | Excellent |
| Example 55 | Composition 31 | Solution | PGMEA | Excellent |
| Example 56 | Composition 32 | Solution | MEK | Excellent |
| Example 57 | Composition 27 | Nematic liquid crystal | None | Excellent |
| Example 58 | Composition 28 | Nematic liquid crystal | None | Excellent |
| Example 59 | Composition 29 | Nematic liquid crystal | None | Excellent |
| Example 60 | Composition 30 | Nematic liquid crystal | None | Excellent |
| Example 61 | Composition 31 | Nematic liquid crystal | None | Excellent |
| Example 62 | Composition 32 | Nematic liquid crystal | None | Excellent |
| Example 140 | Composition 59 | Solution | Cyclopentanone | Excellent |
| Example 141 | Composition 60 | Solution | Cyclopentanone | Excellent |
| Example 142 | Composition 61 | Solution | Cyclopentanone | Excellent |
| Example 143 | Composition 62 | Solution | Cyclopentanone | Excellent |
| Example 144 | Composition 63 | Solution | Cyclopentanone | Excellent |
| Example 145 | Composition 64 | Solution | Cyclopentanone | Excellent |
| Example 146 | Composition 59 | Nematic liquid crystal | None | Excellent |
| Example 147 | Composition 60 | Nematic liquid crystal | None | Excellent |
| Example 148 | Composition 61 | Nematic liquid crystal | None | Excellent |
| Example 149 | Composition 62 | Nematic liquid crystal | None | Excellent |
| Example 150 | Composition 63 | Nematic liquid crystal | None | Excellent |
| Example 151 | Composition 64 | Nematic liquid crystal | None | Excellent |
| Comparative Example 25 | Composition 27 | Solution | Toluene | Poor |
| Comparative Example 26 | Composition 28 | Solution | Xylene | Poor |
| Comparative Example 27 | Composition 29 | Solution | Cyclohexanone | Poor |
| Comparative Example 28 | Composition 30 | Solution | Cyclopentanone | Poor |
| Comparative Example 29 | Composition 31 | Solution | PGMEA | Poor |
| Comparative Example 30 | Composition 32 | Solution | MEK | Poor |
| Comparative Example 31 | Composition 27 | Nematic liquid crystal | None | Poor |
| Comparative Example 32 | Composition 28 | Nematic liquid crystal | None | Poor |
| Comparative Example 33 | Composition 29 | Nematic liquid crystal | None | Poor |
| Comparative Example 34 | Composition 30 | Nematic liquid crystal | None | Poor |
| Comparative Example 35 | Composition 31 | Nematic liquid crystal | None | Poor |
| Comparative Example 36 | Composition 32 | Nematic liquid crystal | None | Poor |

The results have demonstrated the following: powders composed of polymerizable liquid crystal compounds

are prepared so as to contain a polymerization inhibitor, to thereby suppress generation of polymerization products, compared with cases where powders composed of polymerizable liquid crystal compounds are prepared so as not to contain any polymerization inhibitor.

(Examples 63 to 76 and Examples 152 to 165)

(Evaluation of influence of residual solvent)

In order to examine the influence of the residual solvent of powder, powders having different residual solvent contents were prepared by adjusting drying time. Specifically, during preparation of powder mixtures of Composition 7 and Composition 33 above, powders of Compound 1, Compound 2, Compound 5, Compound 6, Compound 8, Compound 12, Compound 13, Irg907, phenothiazine, and p-methoxyphenol satisfying the ratios in the above-described Tables were spread over trays, and dry air at 40°C was passed over the powders to dry the powders. Powder mixtures of Examples 63 to 69 and Examples 152 to 158 having different residual solvent contents of powders were prepared under the same conditions except that the drying time was adjusted. The obtained powder mixtures of Examples 63 to 69 and Examples 152 to 158 were evaluated in terms of adhesion as in Examples 25 to 50 and Examples 114 to 139.

In addition, nematic liquid crystal compositions of Examples 70 to 76 and Examples 159 to 165 were prepared so as to have different residual solvent contents of powders. Incidentally, the nematic liquid crystal compositions were prepared under the same conditions as the conditions for preparing the nematic liquid crystal composition of Example 7 above. The obtained nematic liquid crystals of Examples 70 to 76 and Examples 159 to 165 were evaluated in terms of foaming in a vacuum state (25°C, 50 Pa).

(Foaming)

Excellent: substantially no foaming observed by visual inspection

Good: small amount of foaming observed by visual inspection

Poor: large amount of foaming observed by visual inspection

[Table 18]

| | Drying time of powder (hr) | Residual solvent of powder (ppm) | Adhesion |
|---|---|---|---|
| Example 63 | 144 | 210 | Excellent |
| Example 64 | 70 | 1641 | Excellent |
| Example 65 | 35 | 5200 | Excellent |
| Example 66 | 26 | 7812 | Good |
| Example 67 | 23 | 9420 | Good |
| Example 68 | 15 | 14556 | Fair |
| Example 69 | 10 | 23681 | Fair |
| Example 152 | 144 | 205 | Excellent |
| Example 153 | 70 | 1647 | Excellent |
| Example 154 | 35 | 5231 | Excellent |
| Example 155 | 26 | 7822 | Good |
| Example 156 | 23 | 9415 | Good |
| Example 157 | 15 | 14560 | Fair |
| Example 158 | 10 | 23696 | Fair |

[Table 19]

| | Form | Drying time of powder (hr) | Residual solvent of powder (ppm) | Foaming |
|---|---|---|---|---|
| Example 70 | Nematic liquid crystal | 144 | 210 | Excellent |
| Example 71 | Nematic liquid crystal | 70 | 1641 | Excellent |
| Example 72 | Nematic liquid crystal | 35 | 5200 | Excellent |
| Example 73 | Nematic liquid crystal | 26 | 7812 | Good |
| Example 74 | Nematic liquid crystal | 23 | 9420 | Good |
| Example 75 | Nematic liquid crystal | 15 | 14556 | Fair |
| Example 76 | Nematic liquid crystal | 10 | 23681 | Fair |
| Example 159 | Nematic liquid crystal | 144 | 210 | Excellent |
| Example 160 | Nematic liquid crystal | 70 | 1641 | Excellent |
| Example 161 | Nematic liquid crystal | 35 | 5200 | Excellent |
| Example 162 | Nematic liquid crystal | 26 | 7812 | Good |
| Example 163 | Nematic liquid crystal | 23 | 9420 | Good |
| Example 164 | Nematic liquid crystal | 15 | 14556 | Fair |
| Example 165 | Nematic liquid crystal | 10 | 23681 | Fair |

The results have demonstrated the following: a decrease in the residual solvent content of a powder (powder mixture) enables a reduction in the amount of adhesion to a container or the like, which enables, for example, a reduction in the loss of weight caused during transfer; in addition, a decrease in the residual solvent content of a powder (powder mixture) enables a reduction in the solvent content in nematic liquid crystal, which enables a reduction in defoaming caused by evaporation of the residual solvent during the defoaming process.

(Examples 77 to 89 and Examples 166 to 178)

(Stirring of powder mixtures)

Powder mixtures having been stirred were prepared in the following manner. Powders satisfying the same composition ratio as in Composition 1 were charged into a stirring impeller-equipped vessel rotation mixer (rocking mixer manufactured by AICHI ELECTRIC CO., LTD., RMD-10(s), volume: 10 L) such that the powders occupied about 40% of the volume of the cylindrical vessel. The stirring was performed for 180 min such that the stirring impeller was rotated at 70 Hz, the cylindrical vessel was rotated at a rate of 19 $min^{-1}$, and the cylindrical vessel was rocked at 11 $min^{-1}$.

(Evaluation of mixing state)

The mixing state of powder mixtures obtained by stirring was determined by measuring the component ratios by liquid chromatography. Sampling of the stirred powder mixtures was performed in the following manner: such a stirred powder mixture was quartered by a cone and quartering method; from the mixture, sampling of 2 g was performed to obtain Compositions 1-A to D and Compositions 33-A to D. The stirred powder mixtures 1-A to D and the stirred mixtures 33-A to D were each (2 g) dissolved in 100 ml of acetonitrile, and the resultant solution was diluted 10-fold and used as a measurement sample for checking the composition ratio. Separately, Powder mixture 1-E and Composition 33-E were prepared on a scale of 2 g so as to satisfy the same composition ratios as in Composition 1 and Composition 33, and dissolved in 100 ml of acetonitrile; and the resultant solutions were diluted 10-fold and used as reference measurement samples. The analysis results by liquid chromatography are described in the following Tables. It has been demonstrated that the stirred powder mixtures have homogeneously mixed components.

[Table 20]

| | Composition 1-A | Composition 1-B | Composition 1-C | Composition 1-D |
|---|---|---|---|---|
| Compound 1 (A1) | 25.50 | 25.35 | 25.52 | 25.22 |

(continued)

| | Composition 1-A | Composition 1-B | Composition 1-C | Composition 1-D |
|---|---|---|---|---|
| Compound 2 (A2)<br>Compound 3 (A3)<br>Compound 4 (A4)<br>Compound 5 (A5)<br>Compound 6 (A6)<br>Compound 7 (A7) | 25.36<br><br><br>28.32<br>8.52<br>10.05 | 25.47<br><br><br>28.30<br>8.46<br>10.02 | 25.38<br><br><br>28.23<br>8.52<br>9.99 | 25.46<br><br><br>28.32<br>8.52<br>10.05 |
| Chiral 1 | | | | |
| IRGACURE 651<br>IRGACURE 907<br>Lucirin TPO<br>ESACURE KIP150 | 2.02 | 1.99 | 2.04 | 2.03 |
| p-Methoxyphenol | 0.39 | 0.43 | 0.42 | 0.37 |

[Table 21]

| | Composition 33-A | Composition 33-B | Composition 33-C | Composition 33-D |
|---|---|---|---|---|
| Compound 8 (A8)<br>Compound 9 (A9)<br>Compound 10 (A10)<br>Compound 11 (A11)<br>Compound 12 (A12)<br>Compound 13 (A13)<br>Compound 14 (A14)<br>Compound 15 (A15) | 25.10<br><br><br><br>24.96<br>50.03 | 24.95<br><br><br><br>25.07<br>50.01 | 25.12<br><br><br><br>24.98<br>49.94 | 24.82<br><br><br><br>25.06<br>50.03 |
| Chiral 1 | | | | |
| IRGACURE 651<br>IRGACURE 907<br>Lucirin TPO<br>ESACURE KIP150 | 3.02 | 2.99 | 3.04 | 3.03 |
| p-Methoxyphenol | 0.09 | 0.11 | 0.12 | 0.08 |

Solution compositions of Example 77 to Example 85 and Example 166 to Example 174 were prepared under the same conditions as the conditions for preparing the solution composition of Example 1 except that the stirred powder mixtures (Composition 1-A to Composition 1-D and Composition 33-A to Composition 33-D) were used. Incidentally, the organic solvents used will be described in a Table below. In addition, solution compositions of Example 86 to Example 89 and Examples 175 to 178 were prepared under the same conditions as the conditions for preparing the nematic liquid crystal composition of Example 7 except that the stirred powder mixtures (Composition 1-A to Composition 1-D and Composition 33-A to Composition 33-D) were used.

[Table 22]

| | Composition | Form | Solvent | Volatility | Retardation | Polymerization product |
|---|---|---|---|---|---|---|
| Example 77 | Composition 1-A | Solution | Toluene | Good | Good | Good |
| Example 78 | Composition 1-A | Solution | Xylene | Good | Good | Good |

(continued)

| | Composition | Form | Solvent | Volatility | Retardation | Polymerization product |
|---|---|---|---|---|---|---|
| Example 79 | Composition 1-A | Solution | Cyclohexanone | Good | Good | Good |
| Example 80 | Composition 1-A | Solution | Cyclopentanone | Good | Good | Good |
| Example 81 | Composition 1-A | Solution | PGMEA | Good | Good | Good |
| Example 82 | Composition 1-A | Solution | MEK | Good | Good | Good |
| Example 83 | Composition 1-B | Solution | Cyclohexanone | Good | Good | Good |
| Example 84 | Composition 1-C | Solution | Cyclohexanone | Good | Good | Good |
| Example 85 | Composition 1-D | Solution | Cyclohexanone | Good | Good | Good |
| Example 86 | Composition 1-A | Nematic liquid crystal | None | Good | Good | Good |
| Example 87 | Composition 1-B | Nematic liquid crystal | None | Good | Good | Good |
| Example 88 | Composition 1-C | Nematic liquid crystal | None | Good | Good | Good |
| Example 89 | Composition 1-D | Nematic liquid crystal | None | Good | Good | Good |
| Example 166 | Composition 33-A | Solution | Cyclopentanone | Good | Good | Good |
| Example 167 | Composition 33-A | Solution | Cyclopentanone | Good | Good | Good |
| Example 168 | Composition 33-A | Solution | Cyclopentanone | Good | Good | Good |
| Example 169 | Composition 33-A | Solution | Cyclopentanone | Good | Good | Good |
| Example 170 | Composition 33-A | Solution | Cyclopentanone | Good | Good | Good |
| Example 171 | Composition 33-A | Solution | Cyclopentanone | Good | Good | Good |
| Example 172 | Composition 33-B | Solution | Cyclopentanone | Good | Good | Good |
| Example 173 | Composition 33-C | Solution | Cyclopentanone | Good | Good | Good |
| Example 174 | Composition 33-D | Solution | Cyclopentanone | Good | Good | Good |

(continued)

| | Composition | Form | Solvent | Volatility | Retardation | Polymerization product |
|---|---|---|---|---|---|---|
| Example 175 | Composition 33-A | Nematic liquid crystal | None | Good | Good | Good |
| Example 176 | Composition 33-B | Nematic liquid crystal | None | Good | Good | Good |
| Example 177 | Composition 33-C | Nematic liquid crystal | None | Good | Good | Good |
| Example 178 | Composition 33-D | Nematic liquid crystal | None | Good | Good | Good |

In the Table above, volatility, retardation, and polymerization product were evaluated under the same conditions as in Example 1. The results have demonstrated that use of stirred powder mixtures provides the same advantages as use of unstirred powder mixtures.

## Claims

**1.** A powder mixture comprising two or more polymerizable liquid crystal compounds in powder that are solid under atmospheric pressure at 30°C or less and that each have at least one polymerizable functional group,
wherein a content of the two or more polymerizable liquid crystal compounds is 70 mass% or more,
wherein the two or more polymerizable liquid crystal compounds are each represented by a general formula (I) and/or selected from compounds represented by general formulas (1) to (7)

$$P^1\text{-}(Sp^1\text{-}X^1)_{q1}\text{-}MG\text{-}R^2 \qquad (I)$$

(where $P^1$ represents a polymerizable functional group,
$Sp^1$ represents an alkylene group having 1 to 18 carbon atoms, hydrogen atoms in the alkylene group may be substituted by at least one halogen atom or CN, a single $CH_2$ group or two or more non-adjacent $CH_2$ groups in the alkylene group may each be independently substituted by -O-, -COO-, - OCO-, or -OCO-O-,
$X^1$ represents -O-, -S-, $-OCH_2-$, $-CH_2O-$, -CO-, -COO-, - OCO-, -CO-S-, -S-CO-, -O-CO-O-, -CO-NH-, -NH-CO-, $-SCH_2-$, $- CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $- CH_2CH_2-COO-$, $-CH_2CH_2-OCO-$, $-COO-CH_2-$, $-OCO-CH_2-$, $-CH_2-COO-$, $- CH_2-OCO-$, -CH=CH-, -N=N-, -CH=N-N=CH-, -CF=CF-, -C≡C-, or a single bond (provided that $P^1$-$Sp^1$ and $Sp^1$-$X^1$ do not include direct bonds between hetero atoms),
q1 represents 0 or 1,
MG represents a mesogenic group, and
$R^2$ represents a hydrogen atom, a halogen atom, a cyano group, or a linear or branched alkyl group having 1 to 12 carbon atoms, the alkyl group may be linear or branched, a single $-CH_2-$ or two or more non-adjacent $-CH_2-$ of the alkyl group may each be independently substituted by -O-, -S-, - CO-, -COO-, -OCO-, -CO-S-, -S-CO-, -O-CO-O-, -CO-NH-, -NH-CO-, -CH=CH-COO-, -CH=CH-OCO-, -COO-CH=CH-, -OCO-CH=CH-, -CH=CH-, -CF=CF-, or -C≡C-, or $R^2$ represents a group represented by a general formula (I-a)

$$-(X^2\text{-}Sp^2)_{q2}\text{-}P^2 \qquad (I\text{-}a)$$

(where $P^2$ represents a reactive functional group,
$Sp^2$ represents the same as that defined as $Sp^1$,
$X^2$ represents the same as that defined as $X^1$ (provided that $P^2$-$Sp^2$ and $Sp^2$-$X^2$ do not include direct bonds between hetero atoms), and

$q^2$ represents 0 or 1))

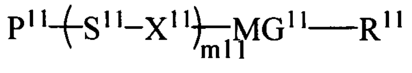
(1)

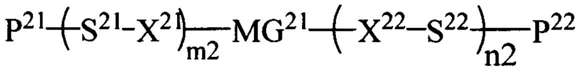
(2)

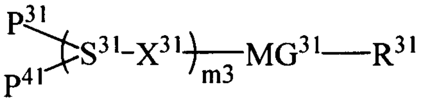
(3)

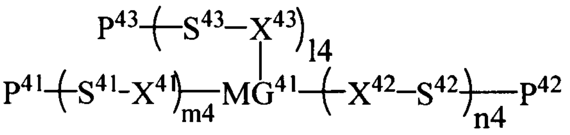
(4)

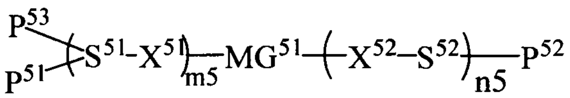
(5)

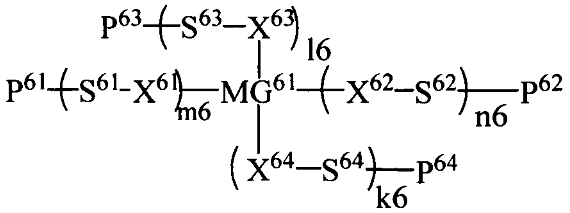
(6)

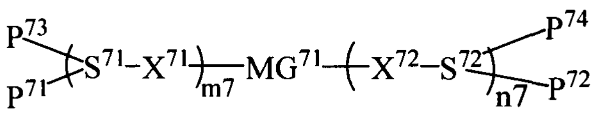
(7)

(in the general formulas (1) to (7), $P^{11}$ to $P^{74}$ represent a polymerizable group; $S^{11}$ to $S^{72}$ represent a spacer group or a single bond, where a plurality of each of $S^{11}$ to $S^{72}$ are present, the plurality of each of $S^{11}$ to $S^{72}$ may be the same or different; $X^{11}$ to $X^{72}$ represent -O-, -S-, $-OCH_2-$, $-CH_2O-$, - CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $- OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, - C≡C-, or a single bond, where a plurality of each of $X^{11}$ to $X^{72}$ are present, the plurality of each of $X^{11}$ to $X^{72}$ may be the same or different (provided that each P-(S-X)- bond does not include -O-O-); $MG^{11}$ to $MG^{71}$ each independently represent a formula (a),

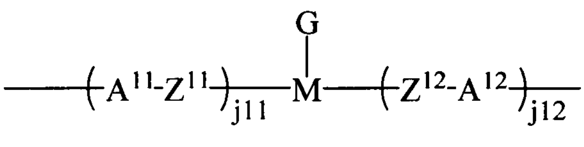
(a)

(where $A^{11}$ and $A^{12}$ each independently represent a 1,4-phenylene group, a 1,4-cyclohexylene group, a pyridine-2,5-diyl group, a pyrimidine-2,5-diyl group, a naphthalene-2,6-diyl group, a naphthalene-1,4-diyl group, a tetrahydronaphthalene-2,6-diyl group, a decahydronaphthalene-2,6-diyl group, or a 1,3-dioxane-2,5-diyl group; $A^{11}$ and $A^{12}$ each may be unsubstituted or may be substituted by at least one $L^1$; when a plurality of each of

$A^{11}$ and/or $A^{12}$ are present, the plurality of each of $A^{11}$ and/or $A^{12}$ may be the same or different,
$Z^{11}$ and $Z^{12}$ each independently represent -O-, -S-, $-OCH_2-$, $-CH_2O-$, $-CH_2CH_2-$, -CO-, -COO-, -OCO-, -CO-S-, -S-CO-, -O-COO-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-,-CH=N-, -N=CH-, -CH=N-N=CH-, -CF=CF-, -C≡C-, or a single bond; when a plurality of each of $Z^{11}$ and/or $Z^{12}$ are present, the plurality of each of $Z^{11}$ and/or $Z^{12}$ may be the same or different,
M represents a group selected from the following formula (M-1) to formula (M-11)

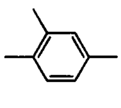
(M-1)
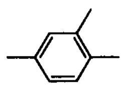
(M-2)
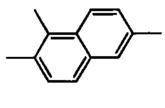
(M-3)
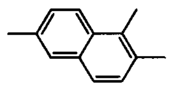
(M-4)
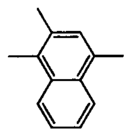
(M-5)
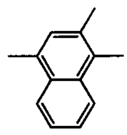
(M-6)

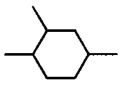
(M-7)
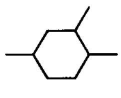
(M-8)
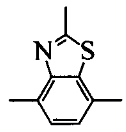
(M-9)
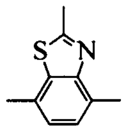
(M-10)
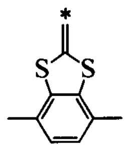
(M-11)

M may be unsubstituted or may be substituted by at least one $L^1$,
G represents the following formula (G-1) to formula (G-6)

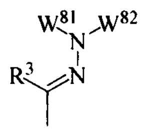
(G-1)
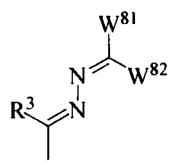
(G-2)
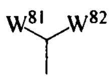
(G-3)
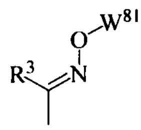
(G-4)
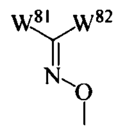
(G-5)
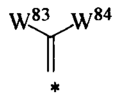
(G-6)

(where $R^3$ represents a hydrogen atom or an alkyl group having 1 to 20 carbon atoms; the alkyl group may be linear or branched; any hydrogen atom in the alkyl group may be substituted by a fluorine atom; a single $-CH_2-$ or two or more non-adjacent $-CH_2-$ in the alkyl group may each be independently substituted by -O-, -S-, -CO-, -COO-, -OCO-, - CO-S-, -S-CO-, -O-CO-O-, -CO-NH-, -NH-CO-, or -C≡C-,
$W^{81}$ represents a group having at least one aromatic group and having 5 to 30 carbon atoms, and the group may be unsubstituted or substituted by at least one $L^1$,
$W^{82}$ represents a hydrogen atom or a linear or branched alkyl group having 1 to 20 carbon atoms in which a single - $CH_2-$ or two or more non-adjacent $-CH_2-$ may each be independently substituted by -O-, -S-, -CO-, -COO-, -OCO-, - CO-S-, -S-CO-, -O-CO-O-, -CO-NH-, -NH-CO-, -CH=CH-COO-, - CH=CH-OCO-, -COO-CH=CH-, -OCO-CH=CH-, -CH=CH-, -CF=CF-, or - C≡C-, and any hydrogen atom in the alkyl group may be substituted by a fluorine atom; alternatively, $W^{82}$ may represent a group having at least one aromatic group and having 2 to 30 carbon atoms; alternatively, $W^{82}$ may represent a group represented by $P^W-(Sp^W-X^W)_{kW}-$, where $P^W$ represents a polymerizable group, preferred polymerizable groups are the same as preferred polymerizable groups for $P^{11}$ to $P^{74}$ below, where $Sp^W$ represents a spacer group or a single bond, preferred spacer groups are the same as preferred spacer groups for $S^{11}$ to $S^{72}$ below, when a plurality of $Sp^W$ are present, the plurality of $Sp^W$ may be the same or different, where $X^W$ represents -O-, -S-, $-OCH_2-$, $-CH_2O-$, -CO-, -COO-,-OCO-, -CO-S-, -S-CO-, -O-CO-O-, -CO-NH-, -NH-CO-, $-SCH_2-$,$-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, - $CH_2CH_2-COO-$, $-CH_2CH_2-OCO-$, $-COO-CH_2-$, $-OCO-CH_2-$, $-CH_2-COO-$, - $CH_2-OCO-$, -CH=CH-, -N=N-, -CH=N-N=CH-, -CF=CF-, -C≡C-, or a single bond, when a plurality of $X^w$ are present, the plurality of $X^w$ may be the same or different (provided that $P^W-(Sp^W-X^W)_{kW}-$ does not include -O-O- bond), where kW represents an integer of 0 to 10, and $W^{81}$ and $W^{82}$ may be linked together to form the same ring structure,

$W^{83}$ and $W^{84}$ each independently represent a halogen atom, a cyano group, a hydroxy group, a nitro group, a carboxyl group, a carbamoyloxy group, an amino group, a sulfamoyl group, a group having at least one aromatic group and having 5 to 30 carbon atoms, an alkyl group having 1 to 20 carbon atoms, a cycloalkyl group having 3 to 20 carbon atoms, an alkenyl group having 2 to 20 carbon atoms, a cycloalkenyl group having 3 to 20 carbon atoms, an alkoxy group having 1 to 20 carbon atoms, an acyloxy group having 2 to 20 carbon atoms, or an alkylcarbonyloxy group having 2 to 20 carbon atoms; a single $-CH_2-$ or two or more non-adjacent $-CH_2-$ in the alkyl group, cycloalkyl group, alkenyl group, cycloalkenyl group, alkoxy group, acyloxy group, and alkylcarbonyloxy group may each be independently substituted by -O-, -S-, -CO-, -COO-, -OCO-, -CO-S-, -S-CO-, -O-CO-O-,-CO-NH-, -NH-CO-, or -C≡C-; when M above is selected from the formula (M-1) to the formula (M-10), G is selected from the formula (G-1) to the formula (G-5); when M represents the formula (M-11), G represents the formula (G-6),

$L^1$ represents a fluorine atom, a chlorine atom, a bromine atom, an iodine atom, a pentafluorosulfuranyl group, a nitro group, an isocyano group, an amino group, a hydroxyl group, a mercapto group, a methylamino group, a dimethylamino group, a diethylamino group, a diisopropylamino group, a trimethylsilyl group, a dimethylsilyl group, a thioisocyano group, or an alkyl group having 1 to 20 carbon atoms; the alkyl group may be linear or branched, any hydrogen atom may be substituted by a fluorine atom; a single $-CH_2-$ or two or more non-adjacent $-CH_2-$ in the alkyl group may each be independently substituted by a group selected from -O-, -S-, -CO-, -COO-, -OCO-, -CO-S-, -S-CO-, -O-CO-O-, -CO-NH-, -NH-CO-, -CH=CH-COO-, -CH=CH-OCO-, -COO-CH=CH-, -OCO-CH=CH-, - CH=CH-, -CF=CF-, and -C≡C-; when the compound includes a plurality of $L^1$, the plurality of $L^1$ may be the same or different,
j11 represents an integer of 1 to 5; j12 represents an integer of 1 to 5; and j11 + j12 represents an integer of 2 to 5.), $R^{11}$ and $R^{31}$ represent a hydrogen atom, a fluorine atom, a chlorine atom, a bromine atom, an iodine atom, a pentafluorosulfuranyl group, a cyano group, a nitro group, an isocyano group, a thioisocyano group, or an alkyl group having 1 to 20 carbon atoms; the alkyl group may be linear or branched; any hydrogen atom in the alkyl group may be substituted by a fluorine atom; a single $-CH_2-$ or two or more non-adjacent $-CH_2-$ in the alkyl group may each be independently substituted by -O-, -S-, -CO-, -COO-, -OCO-, - CO-S-, -S-CO-, -O-CO-O-, -CO-NH-, -NH-CO-, or -C≡C-; m11 represents an integer of 0 to 8; and m2 to m7, n2 to n7, l4 to l6, and k6 each independently represent an integer of 0 to 5).

2. The powder mixture according to Claim 1, comprising the at least one polymerizable liquid crystal compound represented by the general formula (I) where R2 is a group represented by the general formula (I-a).

3. The powder mixture according to any one of Claim 1 to Claim 2, comprising at least one additive.

4. The powder mixture according to any one of Claim 1 to Claim 3, wherein the powder mixture has a residual solvent content of 1 ppm to 10,000 ppm.

5. A solution composition comprising the powder mixture according to any one of Claims 1 to 4 dissolved in an organic solvent.

6. A nematic liquid crystal composition comprising the powder mixture according to any one of Claims 1 to 5.

7. A cured product formed from the solution composition according to Claim 5.

8. A cured product formed from the nematic liquid crystal composition according to Claim 6.

9. An optical film formed from the solution composition according to Claim 5.

10. An optical film formed from the nematic liquid crystal composition according to Claim 6.

11. A display device comprising the cured product according to Claim 7.

12. A display device comprising the cured product according to Claim 7 or Claim 8.

13. A method for producing the powder mixture according to any one of Claim 1 to Claim 4 by mixing two or more polymerizable liquid crystal compounds in powder that are solid under atmospheric pressure at 30°C or less, as in claims 1 to 4, optionally with additives as in claim 3, either without stirring, or with stirring, to achieve homogeneity

of the powders.

**14.** A transportation method comprising carrying the powder mixture according to any one of Claim 1 to Claim 4 by aircraft, train, electric train, ship, or vehicle.

**15.** A method of storing the powder mixture according to any one of Claim 1 to Claim 4 at a temperature, or lower, in which the powder mixture maintains a powder form.

## Patentansprüche

**1.** Pulvermischung, die zwei oder mehr polymerisierbare Flüssigkristallverbindungen als Pulver umfasst, die unter Atmosphärendruck bei 30°C oder weniger fest sind und von denen jede wenigstens eine polymerisierbare funktionelle Gruppe hat,
wobei der Gehalt der zwei oder mehr polymerisierbaren Flüssigkristallverbindungen 70 Masse% oder mehr ist,
wobei die zwei oder mehr polymerisierbaren Flüssigkristallverbindungen jeweils durch eine allgemeine Formel (I) dargestellt werden und/oder aus Verbindungen, die durch die allgemeinen Formeln (1) bis (7) dargestellt werden, ausgewählt sind

$$\mathbf{P^1\text{-}(Sp^1\text{-}X^1)_{q1}\text{-}MG\text{-}R^2} \qquad \mathbf{(I)}$$

(worin $P^1$ eine polymerisierbare funktionelle Gruppe darstellt,
$Sp^1$ eine Alkylengruppe mit 1 bis 18 Kohlenstoffatomen darstellt, wobei Wasserstoffatome in der Alkylengruppe durch wenigstens ein Halogenatom oder CN ersetzt sein können, eine einzelne $CH_2$-Gruppe oder zwei oder mehr nichtbenachbarte $CH_2$-Gruppen in der Alkylengruppe jeweils unabhängig durch -O-, -COO-, -OCO- oder -OCO-O- ersetzt sein kann/können,
$X^1$ für -O-, -S-, -$OCH_2$-, -$CH_2O$-, -CO-, -COO-, -OCO-, -CO-S-, -S-CO-, -O-CO-O-, -CO-NH-, -NH-CO-, -$SCH_2$-, -$CH_2S$-, -$CF_2O$-, -$OCF_2$-, -$CF_2S$-, -$SCF_2$-, -CH=CH-COO-, -CH=CH-OCO-, -COO-CH=CH-, -OCO-CH=CH-, -COO-$CH_2CH_2$-, -OCO-$CH_2CH_2$-, -$CH_2CH_2$-COO-, -$CH_2CH_2$-OCO-, -COO-$CH_2$-, -OCO-$CH_2$-, -$CH_2$-COO-, -$CH_2$-OCO-, -CH=CH-, -N=N-, -CH=N-N=CH-, -CF=CF-, -C≡C- oder eine Einfachbindung steht (mit der Maßgabe, dass $P^1$-$Sp^1$ und $Sp^1$-$X^1$ keine direkten Bindungen zwischen Heteroatomen umfassen),
q1 für 0 oder 1 steht,
MG eine mesogene Gruppe darstellt und
$R^2$ für ein Wasserstoffatom, ein Halogenatom, eine Cyanogruppe oder eine lineare oder verzweigte Alkylgruppe mit 1 bis 12 Kohlenstoffatomen steht, wobei die Alkylgruppe linear oder verzweigt sein kann, ein einzelnes -$CH_2$- oder zwei oder mehr nichtbenachbarte -$CH_2$- der Alkylgruppe jeweils unabhängig durch -O-, -S-, -CO-, -COO-, -OCO-, -CO-S-, -S-CO-, -O-CO-O-, -CO-NH-, -NH-CO-, -CH=CH-COO-, -CH=CH-OCO-, -COO-CH=CH-, -OCO-CH=CH-, -CH=CH-, -CF=CF- oder -C=C- ersetzt sein kann/können, oder $R^2$ für eine Gruppe steht, die durch eine allgemeine Formel (I-a) dargestellt wird

$$\mathbf{\text{-}(X^2\text{-}Sp^2)_{q2}\text{-}P^2} \qquad \mathbf{(I\text{-}a)}$$

(wobei $P^2$ für eine reaktive funktionelle Gruppe steht,
$Sp^2$ dieselbe wie die, die als $X^1$ definiert ist, darstellt (mit der Maßgabe, dass $P^2$-$Sp^2$ und $Sp^2$-$X^2$ keine direkten Bindungen zwischen Heteroatomen umfassen) und
$q^2$ für 0 oder 1 steht))

$$P^{11}\!\left(S^{11}\text{-}X^{11}\right)_{m11}\!MG^{11}\!-\!R^{11} \qquad (1)$$

$$P^{21}\!\left(S^{21}\text{-}X^{21}\right)_{m2}\!MG^{21}\!\left(X^{22}\text{-}S^{22}\right)_{n2}\!P^{22} \qquad (2)$$

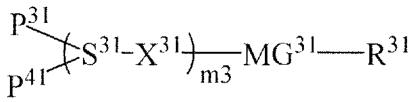

(3)

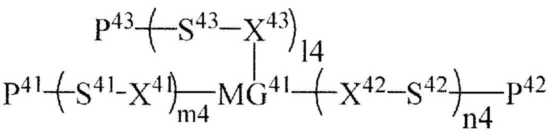

(4)

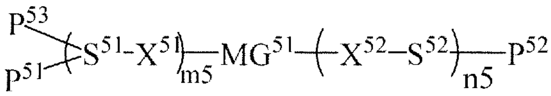

(5)

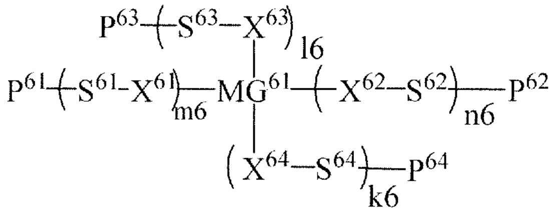

(6)

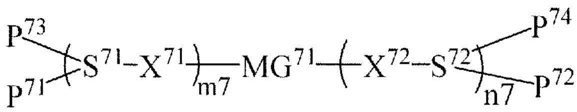

(7)

(in den allgemeinen Formeln (1) bis (7) stellen $P^{11}$ bis $P^{74}$ eine polymerisierbare Gruppe dar; stellen $S^{11}$ bis $S^{72}$ eine Spacergruppe oder eine Einfachbindung dar, wobei, wenn eine Vielzahl von jedem von $S^{11}$ bis $S^{72}$ vorhanden ist, die Vielzahl von jedem von $S^{11}$ bis $S^{72}$ die gleichen oder unterschiedliche sein kann; $X^{11}$ bis $X^{72}$ -O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, -C=C- oder eine Einfachbindung darstellen, wobei, wenn eine Vielzahl von jedem von $X^{11}$ bis $X^{72}$ vorhanden ist, die Vielzahl von jedem von $X^{11}$ bis $X^{72}$ die gleichen oder unterschiedliche sein kann (mit der Maßgabe, dass jede P-(S-X)-Bindung kein -O-O- umfasst); $MG^{11}$ bis $MG^{71}$ jeweils unabhängig eine Formel (a) darstellen

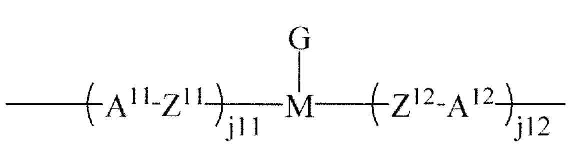

(a)

(wobei $A^{11}$ und $A^{12}$ jeweils unabhängig eine 1,4-Phenylengruppe, eine 1,4-Cyclohexylengruppe, eine Pyridin-2,5-diylgruppe, eine Pyrimidin-2,5-diylgruppe, eine Naphthalin-2,6-diylgruppe, eine Naphthalin-1,4-diylgruppe, eine Tetrahydronaphthalin-2,6-diylgruppe, eine Decahydronaphthalin-2,6-diylgruppe oder eine 1,3-Dioxan-2,5-diylgruppe darstellen; $A^{11}$ und $A^{12}$ jeweils unsubstituiert sein können oder mit wenigstens einem $L^1$ substituiert sein können; wenn eine Vielzahl von jedem von $A^{11}$ und/oder $A^{12}$ vorhanden ist, die Vielzahl von jedem von $A^{11}$ und $A^{12}$ die gleichen oder unterschiedliche sein können,

$Z^{11}$ und $Z^{12}$ jeweils unabhängig -O-, -S-, $-OCH_2-$, $-CH_2O-$, $-CH_2CH_2-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-, -N=CH-, -CH=N-N=CH-, -CF=CF-, -C≡C- oder eine Einfachbindung darstellen; wenn eine Vielzahl von jedem von $Z^{11}$ und/oder $Z^{12}$ vorhanden ist, die Vielzahl von jedem von $Z^{11}$ und/oder $Z^{12}$ die gleichen oder unterschiedliche sein können,

M eine Gruppe darstellt, ausgewählt aus den folgenden Formel (M-1) bis Formel (M-11)

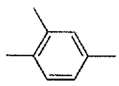
(M-1)
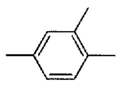
(M-2)
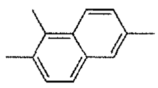
(M-3)
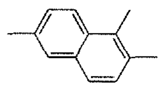
(M-4)
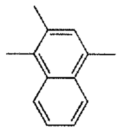
(M-5)
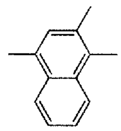
(M-6)

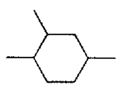
(M-7)
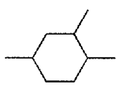
(M-8)
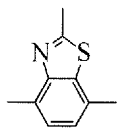
(M-9)
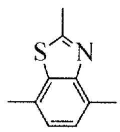
(M-10)
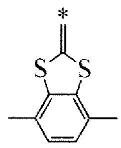
(M-11)

M unsubstituiert sein kann oder mit wenigstens einem $L^1$ substituiert sein kann,
G die folgenden Formel (G-1) bis Formel (G-6) darstellt

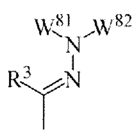
(G-1)
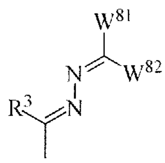
(G-2)
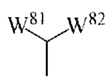
(G-3)
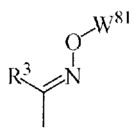
(G-4)
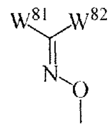
(G-5)
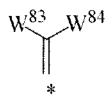
(G-6)

(wobei $R^3$ ein Wasserstoffatom oder eine Alkylgruppe mit 1 bis 20 Kohlenstoffatomen darstellt; die Alkylgruppe linear oder verzweigt sein kann; ein beliebiges Wasserstoffatom in der Alkylgruppe durch ein Fluoratom ersetzt sein kann; ein einzelnes $-CH_2-$ oder zwei oder mehr nichtbenachbarte $-CH_2-$ in der Alkylgruppe jeweils unabhängig durch -O-, -S-, -CO-, -COO-, -OCO-, -CO-S-, -S-CO-, -O-CO-O-, -CO-NH-, -NH-CO- oder -C≡C- ersetzt sein kann/können;
$W^{81}$ eine Gruppe darstellt, die wenigstens eine aromatische Gruppe hat und 5 bis 30 Kohlenstoffatome hat, und die Gruppe unsubstituiert oder mit wenigstens einem $L^1$ substituiert sein kann,
$W^{82}$ ein Wasserstoffatom oder eine lineare oder verzweigte Alkylgruppe mit 1 bis 20 Kohlenstoffatomen darstellt, in der ein einzelnes $-CH_2-$ oder zwei oder mehr nichtbenachbarte $-CH_2-$ unabhängig durch -O-, -S-, -CO-, -COO-, -OCO-, -CO-S-, -S-CO-, -O-CO-O-, -CO-NH-, -NH-CO-, -CH=CH-COO-, -CH=CH-OCO-, -COO-CH=CH-, -OCO-CH=CH-, -CH=CH-, -CF=CF- oder -C≡C- ersetzt sein kann/können, und ein beliebiges Wasserstoffatom in der Alkylgruppe durch ein Fluoratom ersetzt sein kann; alternativ $W^{82}$ eine Gruppe darstellen kann, die wenigstens eine aromatische Gruppe hat und die 2 bis 30 Kohlenstoffatome hat; alternativ $W^{82}$ eine durch $P^w-(Sp^w-X^w)_{kw}-$ dargestellte Gruppe darstellen kann, wobei $P^w$ eine polymerisierbare Gruppe darstellt, bevorzugte polymerisierbare Gruppen dieselben wie bevorzugte polymerisierbare Gruppen für $P^{11}$ bis $P^{74}$ unten sind, wobei $Sp^w$ eine Spacergruppe oder eine Einfachbindung darstellt, bevorzugte Spacergruppen dieselben wie bevorzugte Spacergruppen für $S^{11}$ bis $S^{72}$ unten sind, wobei, wenn eine Vielzahl von $Sp^w$ vorhanden ist, die Vielzahl von $Sp^w$ dieselben oder unterschiedliche sein kann, wobei $X^w$ für -O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, -C≡C- oder eine Einfachbindung steht, wenn eine Vielzahl von $X^w$ vorhanden ist, die Vielzahl von $X^w$ die gleichen oder unterschiedliche sein kann (mit der Maßgabe, dass $P^w-(Sp^w-X^w)_{kw}-$ keine -O-O-Bindung umfasst), wobei kW eine ganze Zahl von 0 bis 10 darstellt und $W^{81}$ und $W^{82}$ unter Bildung derselben Ringstruktur verknüpft sein können,
$W^{83}$ und $W^{84}$ jeweils unabhängig ein Halogenatom, eine Cyanogruppe, eine Hydroxygruppe, eine Nitrogruppe, eine Carboxylgruppe, eine Carbamoyloxygruppe, eine Aminogruppe, eine Sulfamoylgruppe, eine Gruppe, die wenigstens eine aromatische Gruppe hat und die 5 bis 30 Kohlenstoffatome hat, eine Alkylgruppe mit 1 bis 20 Kohlenstoffatomen, eine Cycloalkylgruppe mit 3 bis 20 Kohlenstoffatomen, eine Alkenylgruppe mit 2 bis 20 Kohlenstoffatomen, eine Cycloalkenylgruppe mit 3 bis 20 Kohlenstoffatomen, eine

Alkoxygruppe mit 1 bis 20 Kohlenstoffatomen, eine Acyloxygruppe mit 2 bis 20 Kohlenstoffatomen oder eine Alkylcarbonyloxygruppe mit 2 bis 20 Kohlenstoffatomen darstellen; wobei ein einzelnes $-CH_2-$ oder zwei oder mehr nichtbenachbarte $-CH_2-$ in der Alyklgruppe, Cycloalkylgruppe, Alkenylgruppe, Cycloalkenylgruppe, Alkoxygruppe, Acyloxygruppe und Alkylcarbonyloxygruppe jeweils unabhängig durch -O-, -S-, -CO-, -COO-, -OCO-, -CO-S-, -S-CO-, -O-CO-O-, -CO-NH-, -NH-CO- oder -C=C- ersetzt sein kann/können; wenn M oben aus der Formel (M-1) bis (M-10) ausgewählt ist, G aus der Formel (G-1) bis Formel (G-5) ausgewählt ist; wenn M die Formel (M-11) darstellt, dann G die Formel (G-6) darstellt,

$L^1$ ein Fluoratom, ein Chloratom, ein Bromatom, ein Iodatom, eine Pentafluorsulfuranylgruppe, eine Nitrogruppe, eine Isocyanogruppe, eine Aminogruppe, eine Hydroxylgruppe, eine Mercaptogruppe, eine Methylaminogruppe, eine Dimethylaminogruppe, eine Diethylaminogruppe, eine Diisopropylaminogruppe, eine Trimethylsilylgruppe, eine Dimethylsilylgruppe, eine Thioisocyanogruppe oder eine Alkylgruppe mit 1 bis 20 Kohlenstoffatomen darstellt; wobei die Alkylgruppe linear oder verzweigt sein kann, ein beliebiges Wasserstoffatom durch ein Fluoratom ersetzt sein kann; ein einzelnes $-CH_2-$ oder zwei oder mehr nichtbenachbarte $-CH_2-$ in der Alkylgruppe jeweils unabhängig durch eine Gruppe, ausgewählt aus -O-, -S-, -CO-, -COO-, -OCO-, -CO-S-, -S-CO-, -O-CO-O-, -CO-NH-, -NH-CO-, -CH=CH-COO-,-CH=CH-OCO-, -COO-CH=CH-, -OCO-CH=CH-, -CH=CH-, -CF=CF- und- C≡C- ersetzt sein kann/können; wenn die Verbindung eine Vielzahl von $L^1$ umfasst, die Vielzahl von $L^1$ die gleichen oder unterschiedliche sein kann,
j11 eine ganze Zahl von 1 bis 5 darstellt; j12 eine ganze Zahl von 1 bis 5 darstellt und j11 + j12 eine ganze Zahl von 2 bis 5 darstellen), $R^{11}$ und $R^{31}$ ein Wasserstoffatom, ein Fluoratom, ein Chloratom, ein Bromatom, ein Iodatom, eine Pentafluorsulfuranylgruppe, eine Cyanogruppe, eine Nitrogruppe, eine Isocyanogruppe, eine Thioisocyanogruppe oder eine Alkylgruppe mit 1 bis 20 Kohlenstoffatomen darstellen; wobei die Alkylgruppe linear oder verzweigt sein kann; ein beliebiges Wasserstoffatom in der Alkylgruppe durch ein Fluoratom ersetzt sein kann; ein einzelnes $-CH_2-$ oder zwei oder mehr nichtbenachbarte $-CH_2-$ in der Alkylgruppe jeweils unabhängig durch - O-, -S-,
-CO-, -COO-, -OCO-, -CO-S-, -S-CO-, -O-CO-O-, -CO-NH-,
-NH-CO- oder -C=C- ersetzt sein kann/können; m11 eine ganze Zahl von 0 bis 8 darstellt und m2 bis m7, n2 bis n7 14 bis 16 darstellen und k6 unabhängig eine ganze Zahl von 0 bis 5 darstellt).

**2.** Pulvermischung nach Anspruch 1, umfassend die wenigstens eine polymerisierbare Flüssigkristallverbindung, die durch die allgemeine Formel (I) dargestellt wird, wobei $R^2$ eine durch die allgemeine Formel (I-a) dargestellte Gruppe ist.

**3.** Pulvermischung nach einem der Ansprüche 1 bis 2, die wenigstens ein Additiv umfasst.

**4.** Pulvermischung nach einem der Ansprüche 1 bis 3, wobei die Pulvermischung einen Restlösungsmittelgehalt von 1 ppm bis 10.000 ppm hat.

**5.** Lösungszusammensetzung, umfassend die Pulvermischung nach einem der Ansprüche 1 bis 4 gelöst in einem organischen Lösungsmittel.

**6.** Nematische Flüssigkristallzusammensetzung, umfassend die Pulvermischung nach einem der Ansprüche 1 bis 5.

**7.** Gehärtetes Produkt, das aus der Lösungszusammensetzung nach Anspruch 5 gebildet wurde.

**8.** Gehärtetes Produkt, das aus der nematischen Flüssigkristallzusammensetzung nach Anspruch 6 gebildet wurde.

**9.** Optischer Film, gebildet aus der Lösungszusammensetzung nach Anspruch 5.

**10.** Optischer Film, gebildet aus der nematischen Flüssigkristallzusammensetzung nach Anspruch 6.

**11.** Displayvorrichtung, die das gehärtete Produkt nach Anspruch 7 umfasst.

**12.** Displayvorrichtung, die das gehärtete Produkt nach Anspruch 7 oder 8 umfasst.

**13.** Verfahren zur Herstellung der Pulvermischung nach einem der Ansprüche 1 bis 4 durch Mischen von zwei oder mehr polymerisierbaren Flüssigkristallverbindungen als Pulver, die unter Atmosphärendruck bei 30°C oder weniger fest sind, wie in Ansprüchen 1 bis 4, gegebenenfalls mit Additiven, wie in Anspruch 3, entweder ohne Rühren oder

unter Rühren, um Homogenität der Pulver zu erreichen.

**14.** Beförderungsverfahren, umfassend Tragen der Pulvermischung nach einem von Anspruch 1 bis Anspruch 4 mittels Flugzeug, Zug, elektrischem Zug, Schiff oder Fahrzeug.

**15.** Verfahren zur Lagerung der Pulvermischung nach einem von Anspruch 1 bis Anspruch 4 bei einer Temperatur oder niedriger, bei der die Pulvermischung eine Pulverform beibehält.

## Revendications

**1.** Mélange pulvérulent comprenant deux ou plus de deux composés cristallins liquides polymérisables en poudre qui sont solides sous pression atmosphérique à 30 °C ou moins et qui présentent chacun au moins un groupe fonctionnel polymérisable,
dans lequel une teneur des deux ou plus de deux composés cristallins liquides polymérisables est de 70 % en masse ou plus,
dans lequel les deux ou plus de deux composés cristallins liquides polymérisables sont représentés chacun par une formule générale (I) et/ou sélectionnés parmi des composés représentés par les formules générales (1) à (7)

$$P^1\text{-}(Sp^1\text{-}X^1)_{q1}\text{-}MG\text{-}R^2 \qquad (I)$$

(où $P^1$ représente un groupe fonctionnel polymérisable,
$Sp^1$ représente un groupe alkylène présentant 1 à 18 atomes de carbone, des atomes d'hydrogène dans le groupe alkylène peuvent être remplacés par au moins un atome d'halogène ou CN, un seul groupe $CH_2$ ou deux ou plus de deux groupes $CH_2$ non adjacents dans le groupe alkylène peuvent être remplacés chacun indépendamment par -O-, -COO-, -OCO- ou -OCO-O-,
$X^1$ représente -O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, -C=C-, ou une liaison simple (à condition que $P^1$-$Sp^1$ et $Sp^1$-$X^1$ n'incluent pas des liaisons directes entre des hétéroatomes),
q1 représente 0 ou 1,
MG représente un groupe mésogène, et
$R^2$ représente un atome d'hydrogène, un atome d'halogène, un groupe cyano, ou un groupe alkyle linéaire ou ramifié présentant 1 à 12 atomes de carbone, le groupe alkyle peut être linéaire ou ramifié, un seul $-CH_2-$ ou deux ou plus de deux $-CH_2-$ non adjacents du groupe alkyle peuvent être remplacés chacun indépendamment par -O-, -S-, -CO-, -COO-, -OCO-, -CO-S-, -S-CO-, -O-CO-O-, -CO-NH-, -NH-CO-, -CH=CH-COO-, -CH=CH-OCO-, -COO-CH=CH-, -OCO-CH=CH-, -CH=CH-, -CF=CF-, ou -C=C-, ou $R^2$ représente un groupe représenté par une formule générale (I-a)

$$-(X^2\text{-}Sp^2)_{q2}\text{-}P^2 \qquad (I\text{-}a)$$

(où $P^2$ représente un groupe fonctionnel réactif,
$Sp^2$ représente le même que celui défini comme $Sp^1$,
$X^2$ représente le même que celui défini comme $X^1$ (à condition que $P^2$-$Sp^2$ et $Sp^2$-$X^2$ n'incluent pas de liaisons directes entre des hétéroatomes), et
$q^2$ représente 0 ou 1))

$$P^{11}-\left(S^{11}-X^{11}\right)_{m11}-MG^{11}-R^{11} \qquad (1)$$

$$P^{21}-\left(S^{21}-X^{21}\right)_{m2}-MG^{21}-\left(X^{22}-S^{22}\right)_{n2}-P^{22} \qquad (2)$$

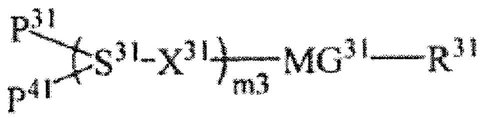

(3)

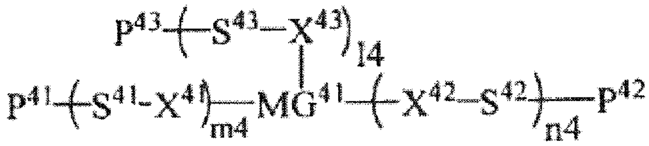

(4)

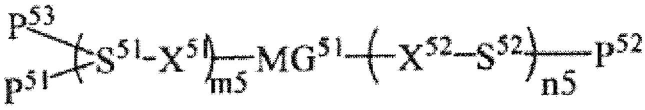

(5)

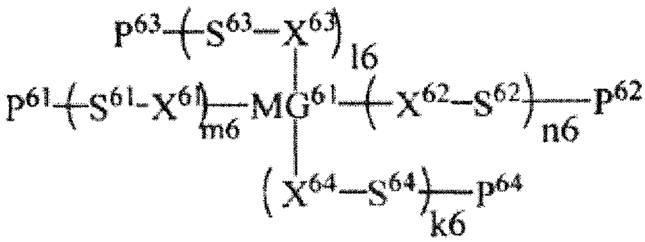

(6)

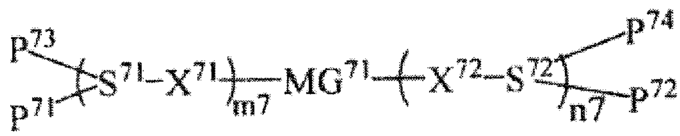

(7)

(dans les formules générales (1) à (7), $P^{11}$ à $P^{74}$ représentent un groupe polymérisable ; $S^{11}$ à $S^{72}$ représentent un groupe d'espacement ou une liaison simple, où une pluralité de chacun des $S^{11}$ à $S^{72}$ sont présents, la pluralité de chacun des $S^{11}$ à $S^{72}$ peuvent être identiques ou différents ; $X^{11}$ à $X^{72}$ représentent -O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, -C≡C-, ou une liaison simple, où une pluralité de chacun des $X^{11}$ à $X^{72}$ sont présents, la pluralité de chacun des $X^{11}$ à $X^{72}$ peuvent être identiques ou différents (à condition que chaque liaison P-(S-X)- n'inclut pas -O-O-) ; $MG^{11}$ à $MG^{71}$ représentent chacun indépendamment une formule (a),

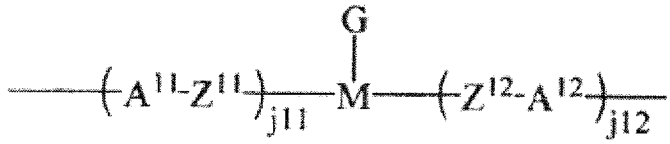

(a)

(où $A^{11}$ et $A^{12}$ représentent chacun indépendamment un groupe 1,4-phénylène, un groupe 1,4-cyclohexylène, un groupe pyridine-2,5-diyle, un groupe pyrimidine-2,5-diyle, un groupe naphtalène-2,6-diyle, un groupe naphtalène-1,4-diyle, un groupe tétrahydronaphtalène-2,6-diyle, un groupe décahydronaphtalène-2,6-diyle, ou un groupe 1,3-dioxane-2,5-diyle ; $A^{11}$ et $A^{12}$ peuvent chacun être non substitués ou peuvent être substitués avec au moins un $L^1$ ; quand une pluralité de chacun des $A^{11}$ et/ou $A^{12}$ sont présents, la pluralité de chacun des $A^{11}$ et/ou $A^{12}$ peuvent être identiques ou différents,

$Z^{11}$ et $Z^{12}$ représentent chacun indépendamment -O-, -S-, $-OCH_2-$, $-CH_2O-$, $-CH_2CH_2-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-, -N=CH-, -CH=N-N=CH-, -CF=CF-, -C=C-, ou une liaison simple ; quand une pluralité de chacun des $Z^{11}$ et/ou $Z^{12}$ sont

présents, la pluralité de chacun des $Z^{11}$ et/ou $Z^{12}$ peuvent être identiques ou différents,
M représente un groupe sélectionné parmi la formule (M-1) à la formule (M-11) suivantes

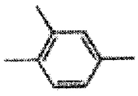
(M-1)
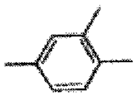
(M-2)
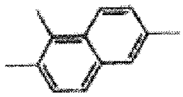
(M-3)
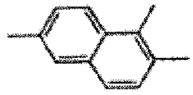
(M-4)
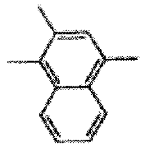
(M-5)
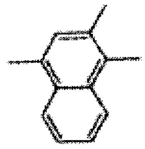
(M-6)

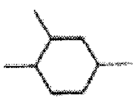
(M-7)
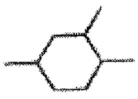
(M-8)
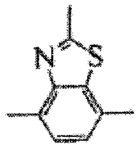
(M-9)
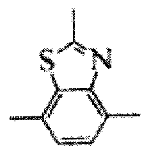
(M-10)
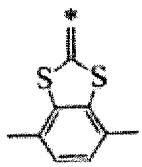
(M-11)

M peut être non substitué ou peut être substitué avec au moins un $L^1$,
G représente la formule (G-1) à la formule (G-6) suivantes

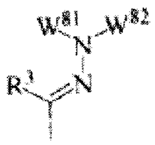
(G-1)
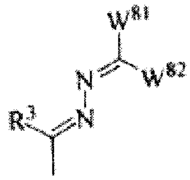
(G-2)
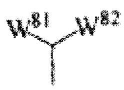
(G-3)
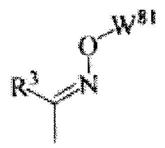
(G-4)
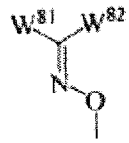
(G-5)
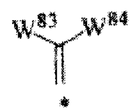
(G-6)

(où $R^3$ représente un atome d'hydrogène ou un groupe alkyle présentant 1 à 20 atomes de carbone ; le groupe alkyle peut être linéaire ou ramifié ; n'importe quel atome d'hydrogène dans le groupe alkyle peut être remplacé par un atome de fluor ; un seul $-CH_2-$ ou deux ou plus de deux $-CH_2-$non adjacents dans le groupe alkyle peuvent être remplacés chacun indépendamment par -O-, -S-, -CO-, -COO-, -OCO-, -CO-S-, -S-CO-, -O-CO-O-, -CO-NH-, -NH-CO-, ou -C≡C-,

$W^{81}$ représente un groupe présentant au moins un groupe aromatique et présentant de 5 à 30 atomes de carbone, et le groupe peut être non substitué ou substitué avec au moins un $L^1$,

$W^{82}$ représente un atome d'hydrogène ou un groupe alkyle linéaire ou ramifié présentant 1 à 20 atomes de carbone dans lequel un seul $-CH_2-$ ou deux ou plus de deux $-CH_2-$ non adjacents peuvent être remplacés chacun indépendamment par -O-, -S-, -CO-, -COO-, -OCO-, -CO-S-, -S-CO-, -O-CO-O-, -CO-NH-, -NH-CO-, -CH=CH-COO-, -CH=CH-OCO-, -COO-CH=CH-, -OCO-CH=CH-, -CH=CH-, -CF=CF-, ou -C=C-, et n'importe quel atome d'hydrogène dans le groupe alkyle peut être remplacé par un atome de fluor ; en variante, $W^{82}$ peut représenter un groupe présentant au moins un groupe aromatique et présentant 2 à 30 atomes de carbone ; en variante, $W^{82}$ peut représenter un groupe représenté par $P^w-(Sp^w-X^w)_{kw}-$, où $P^w$ représente un groupe polymérisable, des groupes polymérisables préférés sont les mêmes que des groupes polymérisables préférés pour $P^{11}$ à $P^{74}$ ci-dessous, où $Sp^w$ représente un groupe d'espacement ou une liaison simple, des groupes d'espacement préférés sont les mêmes que des groupes d'espacement préférés pour $S^{11}$ à $S^{72}$ ci-dessous, quand une pluralité de $Sp^w$ sont présents, la pluralité de $Sp^w$ peuvent être identiques ou différents, où $X^w$ représente -O-, -S-, $-OCH_2-$, $-CH_2O-$, -CO-, -COO-, -OCO-, -CO-S-, -S-CO-, -O-CO-O-, -CO-NH-, -NH-CO-, $-SCH_2-$, $-CH_2S-$, $-CF_2O-$, $-OCF_2-$, $-CF_2S-$, $-SCF_2-$, -CH=CH-COO-, -CH=CH-OCO-, -COO-CH=CH-, -OCO-CH=CH-, $-COO-CH_2CH_2-$, $-OCO-CH_2CH_2-$, $-CH_2CH_2-COO-$, $-CH_2CH_2-OCO-$, $-COO-CH_2-$, $-OCO-CH_2-$, $-CH_2-COO-$, $-CH_2-OCO-$, -CH=CH-, -N=N-, -CH=N-N=CH-, -CF=CF-, -C=C-, ou une liaison simple, quand une pluralité de $X^w$ sont présents, la pluralité de $X^w$ peuvent être identiques ou différents (à condition que $P^w-(Sp^w-X^w)_{kw}-$ n'inclut pas la liaison -O-O-), où kW représente un nombre entier allant de 0 à 10, et $W^{81}$ et $W^{82}$ peuvent être liés ensemble pour former la même structure cyclique,

$W^{83}$ et $W^{84}$ représentent chacun indépendamment un atome d'halogène, un groupe cyano, un groupe hydroxy, un groupe nitro, un groupe carboxyle, un groupe carbamoyloxy, un groupe amino, un groupe sulfamoyle, un groupe présentant au moins un groupe aromatique et présentant 5 à 30 atomes de carbone, un groupe alkyle présentant 1 à 20 atomes de carbone, un groupe cycloalkyle présentant 3 à 20 atomes de carbone, un groupe alcényle présentant 2 à 20 atomes de carbone, un groupe cycloalcényle présentant 3 à 20 atomes de carbone, un groupe alcoxy présentant 1 à 20 atomes de carbone, un groupe acyloxy présentant 2 à 20 atomes de carbone, ou un groupe alkylcarbonyloxy présentant 2 à 20 atomes de carbone ; un seul $-CH_2-$ ou deux ou plus de deux $-CH_2-$ non adjacents dans le groupe alkyle, le groupe cycloalkyle, le groupe alcényle, le groupe cycloalcényle, le groupe alcoxy, le groupe acyloxy, et le groupe alkylcarbonyloxy peuvent être remplacés chacun indépendamment par -O-, -S-, -CO-, -COO-, -OCO-, -CO-S-, -S-CO-, -O-CO-O-, -CO-NH-, -NH-CO-, ou -C≡C- ; quand M ci-dessus est sélectionné parmi la formule (M-1) à la formule (M-10), G est sélectionné parmi la formule (G-1) à la formule (G-5) ; quand M représente la formule (M-11), G représente la formule (G-6),

$L^1$ représente un atome de fluor, un atome de chlore, un atome de brome, un atome d'iode, un groupe pentafluorosulfuranyle, un groupe nitro, un groupe isocyano, un groupe amino, un groupe hydroxyle, un groupe mercapto, un groupe méthylamino, un groupe diméthylamino, un groupe diéthylamino, un groupe diisopropylamino, un groupe triméthylsilyle, un groupe diméthylsilyle, un groupe thioisocyano, ou un groupe alkyle présentant 1 à 20 atomes de carbone ; le groupe alkyle peut être linéaire ou ramifié, n'importe quel atome d'hydrogène peut être remplacé par un atome de fluor ; un seul $-CH_2-$ ou deux ou plus de deux $-CH_2-$ non adjacents dans le groupe alkyle peuvent être remplacés chacun indépendamment par un groupe sélectionné parmi -O-, -S-, -CO-, -COO-, -OCO-, -CO-S-, -S-CO-, -O-CO-O-, -CO-NH-, -NH-CO-, -CH=CH-COO-, -CH=CH-OCO-, -COO-CH=CH-, -OCO-CH=CH-, -CH=CH-, -CF=CF-, et -C≡C- ; quand le composé inclut une pluralité de $L^1$, la pluralité de $L^1$ peuvent être identiques ou différents,

j11 représente un nombre entier allant de 1 à 5 ; j12 représente un nombre entier allant de 1 à 5 ; et j11 + j12 représente un nombre entier allant de 2 à 5.), $R^{11}$ et $R^{31}$ représentent un atome d'hydrogène, un atome de fluor, un atome de chlore, un atome de brome, un atome d'iode, un groupe pentafluorosulfuranyle, un groupe cyano, un groupe nitro, un groupe isocyano, un groupe thioisocyano, ou un groupe alkyle présentant 1 à 20 atomes de carbone ; le groupe alkyle peut être linéaire ou ramifié ; n'importe quel atome d'hydrogène dans le groupe alkyle peut être remplacé par un atome de fluor ; un seul $-CH_2-$ ou deux ou plus de deux $-CH_2-$ non adjacents dans le groupe alkyle peuvent être remplacés chacun indépendamment par -O-, -S-, -CO-, -COO-, -OCO-, -CO-S-, -S-CO-, -O-CO-O-, -CO-NH-, -NH-CO-, ou -C=C- ; m11 représente un nombre entier allant de 0 à 8 ; et m2 à m7, n2 à n7, 14 à 16, et k6 représentent chacun indépendamment un nombre entier allant de 0 à 5).

**2.** Mélange pulvérulent selon la revendication 1, comprenant le au moins un composé cristallin liquide polymérisable représenté par la formule générale (I) où R2 est un groupe représenté par la formule générale (I-a).

**3.** Mélange pulvérulent selon l'une quelconque des revendications 1 à 2, comprenant au moins un additif.

**4.** Mélange pulvérulent selon l'une quelconque des revendications 1 à 3, dans lequel le mélange pulvérulent présente une teneur en solvant résiduel de 1 ppm à 10 000 ppm.

**5.** Composition de solution comprenant le mélange pulvérulent selon l'une quelconque des revendications 1 à 4 dissous dans un solvant organique.

**6.** Composition de cristaux liquides nématiques comprenant le mélange pulvérulent selon l'une quelconque des revendications 1 à 5.

**7.** Produit durci formé à partir de la composition de solution selon la revendication 5.

**8.** Produit durci formé à partir de la composition de cristaux liquides nématiques selon la revendication 6.

**9.** Film optique formé à partir de la composition de solution selon la revendication 5.

**10.** Film optique formé à partir de la composition de cristaux liquides nématiques selon la revendication 6.

**11.** Dispositif d'affichage comprenant le produit durci selon la revendication 7.

**12.** Dispositif d'affichage comprenant le produit durci selon la revendication 7 ou la revendication 8.

**13.** Procédé de production du mélange pulvérulent selon l'une quelconque des revendications 1 à 4 en mélangeant deux ou plus de deux composés cristallins liquides polymérisables en poudre qui sont solides sous pression atmosphérique à 30 °C ou moins, comme dans les revendications 1 à 4, facultativement avec des additifs comme dans la revendication 3, soit sans agitation, soit avec agitation, pour obtenir une homogénéité des poudres.

**14.** Procédé de transport comprenant un transport du mélange pulvérulent selon l'une quelconque des revendications 1 à 4 par aéronef, train, train électrique, bateau, ou véhicule.

**15.** Procédé de stockage du mélange pulvérulent selon l'une quelconque des revendications 1 à 4 à une température, ou moins, à laquelle le mélange pulvérulent conserve une forme pulvérulente.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011158671 A
- JP 2009061451 A
- JP 2009001802 A
- WO 2014169984 A1
- JP 2013527259 A
- WO 2014192627 A1
- JP 2011508048 A
- WO 2008007650 A1
- JP 2014520196 A
- WO 2015045441 A1
- WO 2016114252 A1
- WO 2016114253 A1
- EP 1760068 A1
- JP 7294735 A
- JP 8003111 A
- JP 8029618 A
- JP 11080090 A
- JP 11116538 A
- JP 11148079 A
- JP 2004002373 A
- JP 2004099446 A
- US 2400877 A
- JP 11193287 A
- JP 2001158788 A
- JP 2006052669 W
- JP 2007269639 A
- JP 2007269640 A
- JP 2009084178 A
- JP 8239666 A
- JP 2004504285 W
- JP 2007248945 A
- JP 2005177596 A


### Non-patent literature cited in the description


- **SHIRAKI YOICHI.** Powder physics. *Journal of the Japanese Society of Soil Physics,* vol. 17
- Handbook of Liquid Crystals. Wiley-VCH Verlag GmbH & Co. KGaA, 1998
- **KIKAN KAGAKU SOSETSU.** CHEMISTRY OF LIQUID CRYSTAL. 1994
- **DREYERJ. F.** *Phys. and Colloid Chem.,* 1948, vol. 52, 808
- **DREYER J. F.** The Fixing of MolecularOrientation. *Journal de Physique,* 1969, vol. 4, 114
- LightPolarization from Films of Lyotropic Nematic Liquid Crystals. **J.LYDON.** Chromonics" in "Handbook of Liquid Crystals Vol. 2B: Low MolecularWeight Liquid Crystals II. Willey-VCH, 1998, 981-1007
- **A. V. LVASHCHENKO.** Dichroic Dyes for Liquid Crystal Display. CRC Press, 1994
- Novel Development of Functional Dye Market. CMC Publishing Co., Ltd, 1994, 1
- *NATURE,* 30 November 1995, vol. 35, 467-469
- *NATURE,* 02 April 1998, vol. 392, 476-479